(19) Europäisches Patentamt
European Patent Office
Office européen des brevets

(11) Publication number: 0 334 496 A2

(12) # EUROPEAN PATENT APPLICATION

(21) Application number: 89301920.8

(51) Int. Cl.[4]: G06F 13/40 , G06F 13/42

(22) Date of filing: 27.02.89

(30) Priority: 16.03.88 US 169017

(43) Date of publication of application: 27.09.89 Bulletin 89/39

(84) Designated Contracting States: DE GB

(71) Applicant: CROSFIELD ELECTRONICS LIMITED
De La Rue House 3/5 Burlington Gardens
London W1A 1DL(GB)

(72) Inventor: Ballard, Robert Stonewall
2825 Rosemont Drive
West Linn Oregon 97068(US)

(74) Representative: Skone James, Robert Edmund et al
GILL JENNINGS & EVERY 53-64 Chancery Lane
London WC2A 1HN(GB)

(54) ## High data bandwidth synchronous interconnect bus structure protocol.

(57) A modularly expandable computing system having a high bandwidth data bus structure including a high-speed synchronous interconnecting bus (52) and a corresponding signal protocol. The bus, protocol and system provide the maximum process data transfer of contiguous sequences of 8, 32-bit data word which can be transferred from a bus master (54) to a slave device (54) in sequence of two data frames, wherein address and control information of the first frame is overlapped with the data transfer provided in a second frame of a previously addressed data transfer device.

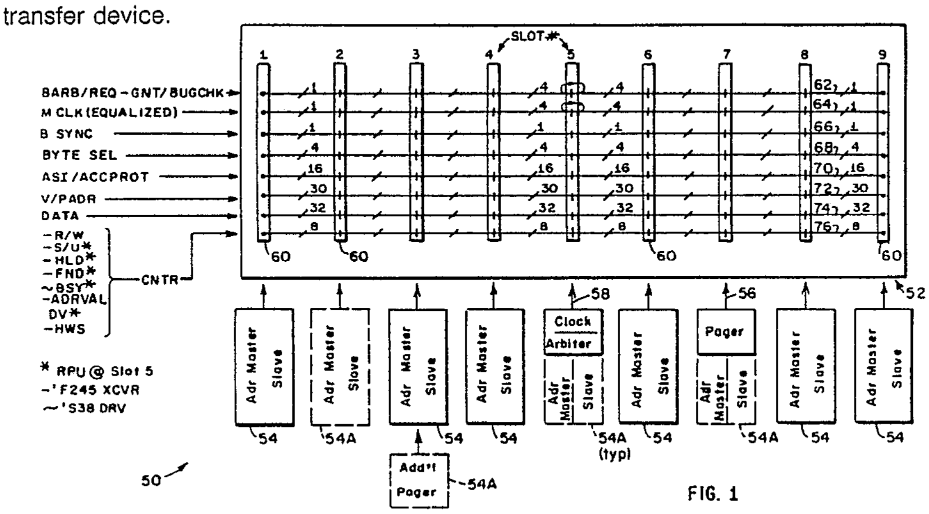


FIG. 1

EP 0 334 496 A2

Xerox Copy Centre

# High Data Bandwidth Synchronous Interconnect Bus Structure Protocol

The present invention relates to a high data bandwidth synchronous interconnect bus structure and protocol and, in particular, a computing system incorporating the high data bandwidth synchronous interconnect bus to provide a high bandwidth computational system.

In computing systems which require particular repetitive processing of massive amounts of data, such as encountered with computing systems associated with visual or graphic signal processing, a critical requirement is to provide the sufficient real time processing to provide the data to compose an image of sufficient detail and provide the changes associated with image motion or recomputation. In such graphic computing systems, signals are transferred between memories, control computers and graphic image raster operation processors, as are known in the art as Raster Ops. However, as the detail of the image and the preciseness and nature of the graphic process operations increase, the bandwidth of the signals transferred increases dramatically, where bandwidth is substantially defined as the product of the number of bits which represent the processed data and the period over which the represented data is to be transferred. While a high bandwidth data transfer may be provided in a specific, unchanging structure, the requirements of processing systems require a flexibility and a modularity to permit system modification and expansion to accommodate changes in the image processing, and to accommodate increased data storage and data flow.

In a system configured to provide a specific high bandwidth data transfer, the addition of processing elements which share the bus structure over which the data is transferred, typically cause a substantial and intolerable reduction in the processing capacity of the system which may be reflected as an undesirable decrease in system bandwidth which more than offsets the enhancement provided by the additional elements to the system. Moreover, attempts to augment the system by incorporating additional hardware which achieves a specific data transfer through non-data bus directed communications, i.e., DMA data transfer, provides an unrealistic solution as such transfers create unique and difficult to handle system programming situations, reduce system modularity and flexibility and may be only indirectly accessible by the high-speed image processing elements.

Therefore, there remains a need for a unitary, high data bandwidth bus and protocol which will serve the connected modular hardware elements to provide a computational system having a high data bandwidth and high data processing capacity and which capacity is relatively insensitive to hardware expansion.

The present invention comprises a high-speed synchronous back plane bus, SIB, which provides a shared communication path for all system processors, memory, and input-output (I/O) device controllers). The SIB transfers blocks of data grouped as 8 words of 32 bits each. The SIB supports address granularity to each data block for memory accesses and to each byte for separate, hardware register data transfers. The SIB address space comprises a virtual address space of $2^{16}$ segments, each comprising $2^{32}$ 8-bit bytes, which provides the physical (as distinct from virtual) memory address space of $2^{32}$ bytes, and a hardware register address space of $2^{28}$ bytes, where such registers are used to establish system parameters outside the data path. Each device connected to the SIB has a unique base address for its hardware registers, which is derived from its backplane slot number.

Errors in board function, e.g., memory parity errors, are detected in the present invention and flagged to the requesting master unit so that the data transfer process is aborted and thereafter retried.

The protocol of the SIB bus provides data transfers over a two-frame sequence wherein the first frame provides the virtual address and control signal transfer and the second frame provides the physical address and the actual data transfer between the devices designated as master and slave on the SIB bus. According to the present invention, the signals corresponding to each frame occur on independent signal leads or different portions of the frame so that frame one of one data transfer can be independent and overlap in time the signal transfer of frame two, providing the necessary system bandwidth.

The physical implementation of the SIB provides substantially slot-independent allocation of system elements such as the processors, the raster-op and memories, wherein the number of system elements may be expanded to several slots or positions on the SIB, and may also provide multiple functions on each SIB slot. The only exceptions to the slot independent structure of the SIB are the clock generating and the arbiter circuits. The clock generating circuit is provided in the preferred embodiment in a centrally located position, such as in slot position 5 in a nine-slot backplane structure. The clock generating circuit, as well as other circuits connected to the SIB backplane provide an approximate 75 ohm impedance with uniform clock signal path length to provide equalized clock timing signals. In particular, the signal lines on the SIB are unterminated, so that successful data transfer requires at least one reflection of signals from the end of the unterminated SIB to provide the necessary voltage level change on the SIB signal lines to clearly establish the desired signal state.

Included in the slot-independent structure of the bus protocol, the system incorporates a virtual address to physical address mapping device, called a pager, which provides translation of virtual address signals to physical address signals of the physical elements received in the system slots by virtue of look-up table information provided in hardware registers by the software operating system. Moreover, the present invention provides SIB protocol and a system structure to accommodate one or more pager elements which may be disposed in any slot position in the SIB, and may be deployed independently or in combination with another system functional elements, to provide the maximum system flexibility and modular expandability.

Therefore, a system including the SIB bus according to the present invention provides a high data bandwidth signal transfer being flexible in structure and modularly expandable to accommodate additional or different system elements.

These and further features of the present invention will be further appreciated by reading the following detailed description of the invention, together with the drawing, wherein:

Fig. 1 is a simplified schematic showing the general disposition of the SIB and the system elements received therein, including the signals which flow on the SIB in particular groupings;

Fig. 2 is a timing diagram showing the signal timing for a data transfer in the present invention;

Figs. 3-8 are a sequence of block diagrams showing SIB signals in a data transfer between a bus master and a slave device according to one embodiment of the present invention;

Figs. 9 and 10 show a flow of signals which when combined with Figs. 3 through 5 provide a hardware space data transfer sequence according to one embodiment of the present invention;

Fig. 11 is a schematic diagram showing the clock generation and typical device clock circuit according to one embodiment of the present invention;

Fig. 11A is a schematic diagram showing typical logic elements associated with signal transfers from the SIB of other element circuits and functions;

Fig. 12 is a schematic diagram showing the logic associated with the signal transfers provided in Figs. 3 and 4;

Fig. 13 is a schematic diagram showing the logic elements associated with the data transfer of Fig. 5;

Fig. 14 is a schematic diagram showing the logic elements for the data transfer of Fig. 6;

Fig. 15 is a schematic diagram showing the data transfers associated with Figs. 7 and 8;

Fig. 16 is a schematic diagram showing the logic elements associated with the data transfer of Figs. 9 and 10; and

Fig. 17 is a drawing showing the planar structure of the SIB backplane and, in particular, the equalized clock distribution paths.

Further illustration of the present invention is provided in Appendix 1 and Appendix 2 comprising, respectively, additional timing diagrams for data transfer and detailed schematic diagrams of the circuitry connected to the SIB bus providing the protocol of the SIB signals. It is believed that Appendices 1 and 2 are not necessary for a complete understanding of the invention by a person skilled in the art.

A block diagram 50 of the processing system including the serial interconnect bus (SIB) backplane 52 is shown in Fig. 1. The SIB comprises signal lines energized according to a protocol described in conjunction with the timing diagram 80 in Fig. 2. The SIB backplane 52 provides a simplified schematic of the SIB signal lines in relation to a 9-slot computing system where the connector slots 60 have positions numbered sequentially 1 through 9, where slot 5 occupies the center position. However, the features of the present invention are applicable to a larger number of connecting slots which are configured to conform to the details of the present invention provided below.

The SIB provides a computing system with the above-mentioned high data bandwidth while offering a system modular expandability and flexibility in positioning of the system elements. For instance, a device which takes command of the SIB structure to provide a data transfer is called a "bus master," while the designated receiving element is labeled a "slave device." Typically, bus masters and slave devices are often the same device 54 but provide selectively different functions at various times in the system process.

In the specification, signals defined in specific cells of the SIB protocol are said to be "active" or "valid." SIB signals at other times may be spurious or unrelated to the particular operation discussed. Also, the arbiter is required to be in slot 5. This feature allows multiple boards to be populated with arbitration logic but effectively only the one plugged into slot 5 is activated due to backplane wiring. Valid signals are asserted to a "true" or "negated" state.

According to the block diagram 50 at Fig. 1, the address and slave elements 54 may be selectably positioned in any slot in the SIB backplane structure 52 and can vary in number of devices. Typically, a system may be initially configured with a minimum number of units, e.g., CPU, memory, I/O interface and pager, adding a larger number of units to the available slots for particular user purposes.

A further feature of the present invention is that the SIB may accommodate several units on a single plug-in board (received by a single slot) in several slots of the SIB as illustrated by the combination of the pager with an optional address master/slave (slot 7), and also by the optional address master/slave on the clock/arbiter unit 58, and the optional additional pager 56A to the address master/slave of slot 3.

According to the present invention, the computing system including the SIB bus and signal protocol accesses the actual logical, or physical, 30-bit address of the slave device by initially providing a 46-bit virtual address, which is translated or mapped into the physical address through the user of a pager, 56, which may also be disposed at various slot positions in the SIB structure for the pager element 56 provides a larger virtual memory address space ($2^{48}$) to be related to a specific address space of the slave device, as is known in the industry as typically comprising one of several forms of memory table look-up devices which are applicable to the system having SIB structure described in this patent application. Furthermore, the SIB structure according to the present invention accommodates more than one pager 56, such as optional additional pager 56A in the system according to the present invention, all of which may operate without conflict.

The sole exception to the slot-independent structure of the computing system is the position of the clock and arbiter circuits of unit 58. In addition to the common signals sent to all slot locations, the SIB protocol requires the arbitration signals when bus access is requested. The arbitration signals are received and processed by an arbiter discussed below, in slot 5. The signal paths providing the arbitration signals comprise separate or private arbitration signal paths from each connector slot 60 to slot position 5, including an arbitration signal on the SIB backplane which originates from any units in slot 5 (in addition to the clock generator and the arbiter) and is returned again to the arbiter in slot 5.

Similarly, the SIB according to the present invention provides time equalized clock signals 62 to each slot, wherein private clock lines are sent to each slot from slot 5, including a clock signal which originates from slot 5, and is returned to slot 5 on the SIB backplane 52. The clock signals provided by the clock circuit in unit 58 in slot position 5 are time equalized, and include propagation time equalized path lengths of substantially uniform physical lengths disposed on the backplane 52 and discussed in more detail in reference to Fig. 17, discussed below.

The SIB structure and protocol provides high bandwidth data transfer between the data processing elements contained in the address master and slave units 54. In addition to the signal transfers related to the processing of data, as well as a separate transfer of information to hardware space registers which are directly addressed (with a physical address) by the bus masters, bypassing the pager element. The signal transfers to the hardware space registers are reserved for nonsignal data transfers, wherein such hardware registers typically establish other system parameter and identification information, such as the identity, revision number and processing status on each of the boards in the system slots and the mapping information contained within the mapping memory of the pager 56. Such hardware space information is processed by the system programming at the selection of the hardware registers is indicated by the assertion of a control signal on the hardware space (HWS) signal path.

Other control signals include a read-write control signal (R/W) which operates in a manner known in the art to indicate the read or write of the data transferred over the SIB. A supervisor/user (S/U) signal providing signal bus transfer control in response to signals originated by the user's operating system, or the system supervisor, and a hold signal (HLD) which, when asserted by a bus master in cell 5 indicates and keeps control of the bus as long as asserted in cell 5. When a virtual address is located within the range of the pager mapping area, a found signal (FND) is asserted by the pager during a virtual space access to indicate that a slave device was found, and is received by the address master. It is also asserted by a hardware space (HWS) slave to indicate that a slave device is responding to the HWS address. Simultaneously, the busy signal (BSY) may be driven by the HWS slave to indicate that the device cannot respond. The pager asserts a busy check (BGCK) signal to indicate it has found a mapping. When more than one pager modules are used in any system, each uses its own BARB line to transmit a BGCK signal. If more than one BGCK signal is received during a particular frame, indicating a virtual to physical address mapping has been found in more than one pager, an error would be generated which would force the system to halt. The validity of the address and data signals are confirmed by a addressed valid (ADRV) and data valid (DV) signals provided in response to the corresponding address and data signals provided on the SIB. The DV signal is provided by memory units for reads and writes, both to indicate data errors on reads, and to indicate that a memory actually responded for both reads and writes. For a SIB read operation DV is asserted during frame 2, cell 5 to frame 3, cell ∅, and for a SIB write operation DV is asserted from cell 2, frame 2, to cell 9, frame 2, and indicates the absence of uncorrectable errors (master read) and that a memory unit is actually reading the data. If the DV is negated at any time during this period, the data transferred is regarded as flawed. The control signals are indicated as as aggregate group of signals, 76 in Fig. 1.

The substantial portion of the virtual address is provided on the same SIB signal leads 72 (V/PADR) which provides the subsequent physical address signal from the pager to the slave device. The virtual address space is augmented by a 16-bit signal path to provide the full 46-bit virtual address space, with the path labeled (ASI/ACCPROT, 70) which also provides access protect data flow control of the present system.

The data transfer of the present invention is directed to the transfer of a eight contiguous 32-bit data words. However, the transfers to the hardware registers are more finely addressable by providing the selection of individual 8-bit data bytes from among a single 32-bit data word transmitted during a HWS transfer with a 4-bit byte select (BYTESEL) signal on paths 68.

In addition to the control, address and data signals identified above, the present invention provides the previously-mentioned arbitration control to permit only a specified single bus master to assume command of the SIB. Thus, the arbitration signal leads 62 (BARB) accommodates the bus request from each requesting address master, providing a corresponding grant signal from the arbiter circuit upon allowance of that bus request by the arbiter. In addition, a bug check (BGCK) signal is provided by the pager to the arbiter to confirm the arbiter operation illustrated in Fig. 6, discussed below.

The clock circuit of unit 58 provides a time equalized 60.0 nS clock signal to each of the slots on leads 64 including slot 5 having a minimum time skew or time offset of the clock in any connector slot 60 relative to any other connector slot 60. As is illustrated in Fig. 2, the data transfer timing diagram 80 illustrates two frames 98, 99 or a data transfer wherein each frame comprises 12 pulses of the 60 nS clock, and synchronized by a clock synchronization (SYNC) signal on lead 66 indicating the first clock (cell) period in each frame, identified as cell ∅. Therefore, the convention in this description describes a signal transfer as comprising two frames, each comprising 12 cells of time period.

Thus any data transfer has a two frame transfer period which begins at a first frame, e.g., 98, beginning with the sync signal 82A, after which a bus master requests control (BUSREQ) of the bus at 83A in cell 2 of frame 1. The arbiter responds with a bus grant (BUSGNT) signal at 84A. The bus master provides a virtual address on the bus at 87A and asserts the W/R signal and S/U signal at 89A and 90A in cell 5 of frame 1 as well as asserting a hold HLD, ADDR and ADRVLD. The virtual address is received by a pager which also receives the address valid signal (ADRVLD) at 85A and the hold signal (HLD) at 91A, also in cell 5 of frame 1. The pager produces a mapped physical address at 88B and asserts the found (FND) signal, the ACCPROT signal, and the BGCK signal at 92B, 93B, 94B and 95B, respectively, in cell ∅ of frame 2. Generally, the FND signal is asserted by the one potential slave that finds that its address maps to the address on the SIB. If no potential slave finds a translation for the address, FND will be seen as negated by the master, which performs the equivalent of an address fault trap. Hardware space addresses do not need to be translated and FND is still used with the same timing to serve as a "register exists" signal, being asserted by the addressed slave (as determined by slot number). Simultaneously, the W/R signal is valid again at 89B to the device addressed by the physical address, and a physical address valid signal is produced at 86B by the pager, indicating a valid physical address signal.

When the slave has received proper signalling in cell ∅ of frame 2, the requested data transfer is provided in eight contiguous cells, 97 illustrated as cells 4-11 in the second frame, 99, for a data read function, according to one of the signal transfers according to the protocol of the present invention. When the data is transmitted by the addressed slave device, the device provides internal process and data checking, or for a read when the slave transmits the data, the addressed slave issues a data valid signal at 96B if the requested function of process is provided by the slave device, such checking includes parity checking and other system process checking as is known in the art. Although shown as a elongated pulse, the D signal at 96B corresponds to the data transfer of each previous cell. Thus for the valid transfer of eight cells of data, the D signal would be asserted for eight contiguous cells, as is shown in Fig. 2.

According to one feature of the present invention, the address signals of one data transfer frame may be overlapped with the data signals of a previous data transfer frame. For instance, the signals 92A, 93A, 94A, 95A, 96A and 97A are a result of the addressing and control signals provided by a previous frame, not shown, while the signals 82B, 83B, 84B, 85B, 86C, 87B, 88C, 89C and D, 90B, 91B, 92C, 93C, 94C and 95C, corresponds to signals of the next frame of data transfer and the signals 82C and 83C correspond to a still further subsequent frame of data transfer.

Data transfers involve as few as two and as many as four separate system units in a signal transfer. Figs. 3-8 illustrate signal transfer between system elements in a data transfer between a bus master and a designated slave unit. Similarly, a transfer of data to or from hardware registers is illustrated by Figs. 9 and 10, which substitute for Figs. 5 and 8, respectively, in the sequence of Figs. 3-8.

A bus master 53, which may be located in any of the slots of the SIB backplane 52 as shown in Fig. 1, requests the bus by asserting a valid bus request signal to the arbiter 58, in frame 1, cell 1, as shown in Fig. 3. The arbiter, discussed below with regard to Fig. 12, selects among all contending bus masters and issues a single bus grant signal to one of the requesting bus masters, as illustrated in Fig. 4, at frame 1, cell 3 on the BARB paths 62.

Having received a bus grant signal, the successful bus master then issues a virtual address for the desired slave on the V/PADR signal leads 72 and the ASI signal paths 70 to the pager 56, together with valid control signals R/W, S/U, HLD, HWS and ADRVAL asserted by the bus master on the signal paths illustrated in Fig. 1 in frame 1, cell 5 as illustrated in the timing diagram.

Next, in frame 2, cell Ø, the pager 56 issues a BGCK signal to the arbiter 58 as well as a FND and ACCPROT signal to the bus master 53. Simultaneously, the pager 56 issues a physical address to the slave unit 55 on the V/PADR leads 72. Furthermore, the pager also drives R/W for the slave. Therefore, the signals illustrated in Fig. 6 are produced on the appropriate signal leads or paths illustrated in Fig. 1.

After the physical address is provided to all slots including the slave 55, each receiving physical space addressed device compares bits <27:24> with its slot number to indicate an address match. The remaining address bits select a location within the slave memory according to a board-defined mapping function which may not use all bits. Assuming an address within the slave memory is provided, the data transfer according to Figs. 7 or 8 may proceed. A write data transfer from the bus master 53 to the slave 55 is determined according to the corresponding state of the W/R signal, wherein according to Fig. 7 a contiguous transfer of eight, 32-bit words occurs in frame 2, cells 1-8 from the bus master to the slave 55. The slave 55 provides a DV signal in cells 2-9, confirming the presence of a slave device. The absence of a DV signal indicates the fault condition of a pager mapping to a non-existent physical address

The read data transfer is illustrated in Fig. 8, which comprises a contiguous transfer of eight 32-bit words from the slave 55 to the bus master 53 during cells 4-11 of frame 2. The data parity and unit functions of the slave unit 55 are confirmed by a valid DV signal asserted for an 8-cell period from frame 2, cell 5 through frame 3, cell Ø on the appropriate signal lead 20, illustrated in Fig. 1.

The data transfers to and from hardware registers also provided in the present invention wherein such data transfers comprise substantially the same sequence of signal illustrated above with regard to Figs. 3, 4 and 5, with the exception that no address is provided on the ASI signal paths in frame 1, cell 5. Instead, as illustrated in Fig. 9, cell 5 of frame 1 provides for the transfer of byte select signals and for the receipt at each addressed hardware space register, unique to each unit and each connector slot 60 in Fig. 1, wherein such information is provided by "hard-wired" address encoded by particular pins of the backplane, illustrated in Fig. 17, discussed below. Specifically, particular bits (24-27) of the physical address signal are compared to the 4-bit slot number value. An address valid signal is generated by the master and placed on the SIB to indicate a valid address on the SIB bus. The slave asserts a FND during cell Ø of frame 2 if the address signals compare.

The write data transfer to the hardware register is provided in cell 1 of frame 2. Similarly, a read transfer is provided in cell 4 of frame 2 from the hardware register to the bus master. As is illustrated in Figs. 9 and 10, the access to the hardware registers are typically made at the direction of program control of the CPU 51 through a bus master 53, and used in conjunction with particular software operating system requirements. The hardware registers typically reside on each unit of the computing system, and permit the operating system to interrogate each slot and communicate with a known device without customizing the software for a particular arrangement of units in the system SIB connector slots. Hardware registers include registers data corresponding to the unit identification, system diagnostics, slot numbers, pager mapping memories, the version and engineering change order (ECO) number interrupt registers (related to the generation of a nonmaskable interrupt) and access to a board information Prom, including such information as board type, function, variant, serial number, device independent registers to support software system configuration, and device dependent registers such as the pager mapping memories.

Further details of the present invention are provided in a simplified schematic Fig. 11 which shows the clock signal generation and typical unit regeneration operable on the SIB according to the present invention, and the schematic drawings of Figs. 12-16 correspond to the various time portions of the data transfers illustrated in Figs. 3-10, according to the timing diagram of Fig. 2 relative to the slots 60 on the SIB backplane 52 of Fig. 1.

The schematic of the clock distribution circuitry 100 clock generator circuit in unit 58 in slot 5 and a typical unit shown in a typical slot 7, is shown in Fig. 11 wherein a clock oscillator 101 provides a 30 nS clock signal to a divider 102 which produces a 60 nS signal which is received by a clock driver 103 which receives the same 60 nS signal from the divider 102 and provides a common connected 104 output signal therefrom. The output signal from the lead 104 passes through a separate series resistor 105 to the edge of the unit board, which when received by the SIB backplane 52 and shows as signal 81 in Fig. 2, is distributed on the backplane 52 by individual (private) clock signal leads 64A, B, C, D, E, F, G, H and J, wherein such leads have a substantially uniform length to provide a time equalized signal path to each slot in the SIB backplane 52. The time equalized clock signal paths are described in more detail with respect to Fig. 17, below. The time equalized clock signal paths 64A-64J on the SIB backplane 52 are not themselves terminated. According to one aspect of the present invention, minimum time skew between the received clock signals is provided by passing the clock signal which is generated in slot 5 to the SIB backplane 52 and back on to the circuitry in card 5, which includes the generation of the sync signal, and other clock driven signals which may appear on the circuit board received in slot 5. In the clock circuit of slot 5, the clock signal is received by three buffer elements 110, 111 and 112 which serve to buffer the received signal, and provide a uniform time delay of the received clock signals relative to other clock signals in the circuits of the unit in slot 5 of elsewhere in the system, such as a slave in slot 7, illustrated in Fig. 11. The buffered signal from the logic element 112, typically a part number 74AS804A (or 74AS804B) manufactured by Texas Instrument or equivalent, is received by a modular 12 counter 113 whose output signal is received by a 1-of-12 decoder 113 which, in conjunction with the modular 12 counter 112 produces one sync signal for every 12 clock signals provided by the logic element 112. The output of the decoder 113 is received by a driver 114 which is connected to the SIB backplane sync lead 64 to be received by any unit plugged into the SIB backplane.

The thusly generated clock signals are received by the units in each connector slot 60 as exemplified in Fig. 11 by a typical device 54 shown in slot 7 and receiving the corresponding clock signal 64G from the clock circuit 58A or unit 58 in slot 5. According to the present invention, to maintain a uniform clock period throughout the system, the skew between the various clock signals provided in each typical device 54 is created from a single received clock signal, such as from lead 64G, and distributed through an equal number of logic gates. For circuits which require additional clock signals, parallel gate elements are connected to appropriate fan-out point (such as after the first gate 121) or by the addition of a second "first" gate while observing the requirements of clock loading, discussed further below. The clock circuitry in each device typically includes a free-running clock receiver circuit 120 and a gated clock receiver circuit 124 to provide a gated clock signal having a rising edge at the end of the listed cell. The free-running clock receiver circuit includes three logic elements 121, 122 and 123 serially connected to provide a buffered clock signal at the output of the logic element 123 without interrupt or control by other signals. A second branch of the free-running clock receiver circuit includes logic elements 127 and 128 such that the ouptut of the logic element 128 is accurately matched in time with the output of the logic element 123. The gated clock receiver circuit 124 includes a logic element 125 and 126 wherein element 126 receives a necessary controlling signal such as on lead 129 to enable the production of a clock signal at the output of the logic element 126. In the preferred embodiment, only last clock stage may be gated. The logic elements of the device 54 shown in Fig. 11 correspond to the same part number devices of the logic elements 110, 111 and 112 in the clock circuit of the unit 58A of Fig. 11. The clock signals produced are received by various circuits in the unit and, in particular, by the control signal decode circuit 140 and the timing state machine 145. The sync signal 115 is received through a bus transceiver 131, and the storage register 132 from the SIB to provide a sync signal to the control signal decode logic 140. Similarly, the SIB backplane control signal paths 76 are received by a transceiver 133 and stored in a register 134, to be received by the control signal decode circuit 140 and the timing state machine 145. The control signal decode circuit receives the buffered clock signal, the buffered sync signal and the buffered control signals, and decodes one or more internal clock signals corresponding to one or more cell time periods of any particular frame. For instance, as illustrated in Fig. 2, cells Ø, 1, 2, 4, 5, etc., correspond with particular signals which appear on the SIB. Therefore, the control signal decode circuit provides the necessary internal timing to provide the signals at the requisite cell time. Thus, the particular control signal decode circuit can be implemented by a variety of techniques known in the art to provide the protocol according to the present invention. Thus, to provide the appropriate cell clock signal, a clock enable signal is provided on lead 141 to the logic element 126 to provide a clock signal to the storage element 142, typically comprising a 74F374 logic element, whose signal is gated in under control of the control signal decode circuit 140. Moreover, a particular unit may include one or more of the cell clock signal circuitry thus described, or may provide multiple cell clock signals.

Further signals are provided to service the circuitry in each unit, such as the transceiver output enable and direction control, and other miscellaneous interface timing signals by the timing state machine 145. Typically, signals such as the direction signal to the transceiver is provided in conjunction to the function engaged by the device at any particular time. Thus, the timing state machine, in response to device unit control signals and clock signals from the logic element 128 and control signals from the register 134 produces the desired unit interface timing signals. Thus, two minimize the distraction away from the present invention, the particular implementation of the timing state machine may be made by techniques available to one of skill in the art, to comport with the protocol and other necessary characteristics of the SIB protocol and system according to the present invention.

Further detail of the transceiver and register pair, typically used throughout the embodiment of the present invention, such as transceiver 131 and 133, and registers 132, and 134 are provided in Fig. 11A. As indicated in Fig. 1, some signals are provided with an open collector drive circuit typically comprising a logic element 74S38 (by various manufacturers), shown in Fig. 11A as 136A and 136B, which operate in conjunction with a receive register 137 to transmit and receive the FND and BSY signal from the SIB. The drive signals for the logic elements 136A and 136B are provided through the register 138, which receives the necessary drive signals from circuitry, such as the mapping memory described with regard to Fig. 14 and other signal devices. The receive signal register 137 and transmit signal register 138 are controlled by clock and output enable signals produced by the timing state machine 145 or equivalent circuitry.

The bulk of the signals produced for distribution over the SIB, such as the BYTESEL, ASI/ACCPROT, the V/PADR, and the data signals are received and transmitted in each unit though a transceiver element 147 which receives signals to be transmitted from a register 148 from other system components, and stores the signals received by the transceiver 147 in a register 149, for use elsewhere in the unit. The registers 148 and 149 typically comprise part number 74F374, and the transceiver 147 typically comprises the part number 74F245, manufactured by Fairchild, or equivalent. The logic elements 147, 148 and 149 are controlled by signals, such as clock and output enable (CK and OE, respectively) provided elsewhere in the circuit such as the state machine 145, described above. For simplicity and consistency, the combination of a transceiver and register in a paired configuration described in Figs. 11-16 comprise circuitry substantially identical to the circuitry of Fig. 11A and may be adapted by one of skill in the art. In schematic drawings which show a single direction of data transfer from the data registers, only one of the two registers, 148 and 149, are involved. However, the other, unspecified register, is typically connected for use in an alternate data transfer mode most easily exemplified by the difference of data read or data write, wherein a data write mode, transferring data into a slave would involve the transceiver 147 and register 149 at the slave, and transceiver 147 and register 148 at the bus master. A change in mode to a read operation reverses the appearance of the registers 148 and 149 at the respective slave and bus master positions.

System arbitration is provided with the device and arbiter circuitry 150 of Fig. 12, read in conjunction with the system block diagram of Figs. 3 and 4, and the timing diagram of Fig. 2 provides an illustration of one embodiment of the present invention. A typical device 54, shown in slot 4, for example, receives bus request signals from the bus master 54A on lead 152 and a clocking signal 153 to a register 154 which stores the bus request signal, which is gated onto the BARB signal paths 62 by a gate 155 and a frame 1, cell 1 enable signal, produced by circuitry such as the control signal decode circuit 140, described above. Since the arbiter BARB signals are private, a separate signal path runs between each SIB bus slot 60 and slot 5, the resident location of the arbiter. Since the device 54 in Fig. 12 is in slot 4, line 62D is shown the signal received from the BARB signal path 62 is received by one of nine interface circuits 160, wherein the received signal passes through a buffer element 161 which typically comprises a hysteresis logic device, typically known in the art to provide a refined received signal, whose output is received by a register 162 and stored in the register according to a frame 1, cell 1 clock signal, generated in the manner discussed above with regard to Fig. 11. The register 162 output signal is received by the arbiter logic element 170, wherein all received 171 (of nine) bus request signals (from register 162 or its equivalent) are encoded into corresponding numbers. When multiple requests are substantially simultaneously received (during the same frame), the lowest requesting slot number is provided, 172, and compared to the previously served slot, 173, if the requesting slot number provided is not greater than the previously served slot number and other slot bus requests are present, 174, the next lowest requesting slot number is provided, 175, to be compared, 173. If the present requested slot number exceeds the last served slot number, a BUSGNT signal is generated, 176, and received by a register 163 in the buffer circuit 160 and is stored therein with a frame 1, cell 2 clock signal, produced according to the manner described above. Alternately, if all bus request slot numbers have been tried, 174, the lowest requesting slot number, 177, receives a BUSGNT signal 176. The resulting registered cell count signal (a 60 nS pulse) is placed on the BARB signal lead 62D from a F374 register 163 that is only asserted in frame 1, cell 3, which signal is received by a gating logic device 164, typically a part number 74S38, of various manufacturers. Registered cell counts (as distinguished from a gated cell clock), typically the output of a timing state machine, is the signal at the output of a register which is clocked with a free running clock. The old (served) slot number is then set equal to the slot number served, 178, so that the arbiter logic 170 serves subsequent requesting units in a first come, first serve basis, subject only that the next highest requesting unit has priority. Alternate manners of providing arbiter logic 170 is permissive within the scope of the present invention, which is not necessarily limited to the specific arbiter logic 170 described.

The bus grant signal provided by the arbiter logic to the register 163 and to the bus 62D through logic element 164 clocked by a cell 2 gated clock and enabled by a cell 3 registered cell count is received by a buffer 156 and stored in a register 157 at the receipt of a frame 1, cell 3 clock signal produced as described above. The bus grant signal stored in the register 157 is received by the unit, which proceeds to perform its next logical step, as may be determined.

In Fig. 13, the next stage of the SIB signal sequencing according to the present invention comprises placing a virtual address on the SIB wherein the ADR and ASI signal paths, which are energized with a virtual address through a register 202 and transceiver 204 clocked by a cell 4 gated clock and output enabled with a cell 5 registered cell count signal, provided by the circuitry discussed above. The virtual address signal is received by the virtual to physical mapping memory and logic block 210 residing in the pager 56. The virtual address is received by transceiver 211 in register 212 clocked by a frame 1, cell 5 gated clock signal, storing the received virtual address signal.

The mapping memory and logic 210 of the pager 56 transforms the virtual address to a physical address, and issues several control signals coincidental therewith, as illustrated in the schematic drawing 250 of Fig. 14, which illustrates the signal transfer of Fig. 6, discussed above. The pager operates as a look-up table wherein the virtual addresses are applied and the physical addresses are derived from the register 57 (Fig. 9) inside element 210 (Fig. 13) serving as the look-up table. The register 57 and thus the mapping of virtual to physical addresses is provided by loading information from a bus master (typically including the CPU 51). Active FND signals are provided by the mapping memory and logic circuit 210 through a register 215 clocked with a cell 11 gated clock signal, whose output is received by a gate 216 which places the signals on the FND line when a frame 2, cell Ø registered cell count signal is received. Similarly, BGCK and ACCPROT signals are generated by the mapping memory and logic circuit 210 and placed on the respective signal lines with a register 217 and transceiver 218, according to the receipt of a frame 1 cell 11 clock signal.

The BGCK signal is received by a transceiver 252 and register 254 to provide a "halt" signal which disables the SIB signal drivers as well as informing the master IOP that the SIB has been halted (causing a system reset) if more than one BGCK signal is received, indicating a hardware or software bug resulting from the simultaneous operation of more than one pager units for a particular virtual address request.

The ACCPROT signals are received by a transceiver 257 and register 258, which are stored in the register with the receipt of a frame 2, cell Ø clock signal.

The W/R signal is provided by the bus master 53 to the SIB through a register 261 and transceiver 262 upon receipt of a frame 1, cell 5 clock signal. The W/R signal is received at frame 1, cell 6 and stored in the pager through transceiver 221 and register pair 222 and echoed to the SIB upon receipt of a frame 1, cell 11 clock signal. One part of register 222, clocked with a frame 1, cell 11 gated clock, transceiver 221 and 235 enabled with a frame 2, cell Ø registered cell count, and register 236 is clocked with a cell 1 registered cell clock.

The mapping memory and logic circuit 210 provides the physical address to the SIB through register 224 and transceiver 225 while providing a valid address signal to the SIB and slave through register 227 driven with a cell 11 gated clock and transceiver 228 which is output enabled with a frame 2, cell Ø registered cell count signal.

The slave unit receives the physical address, the ACCPROT signal, the valid address and a W/R signal through transceivers 231, 233, 235, respectively, and are stored in registers 232, 234 and 236, clocked off of a frame 2, cell ∅ gated clock signal. The valid address signal and the W/R signal are used to control the timing and register, transceiver controlled signals according to the logic block 240. The details of the transceiver and register circuitry relates to Fig. 11, and the generation of the standard transceiver control signals, as well as other common logic signals, is provided in the typical structure shown in Fig. 11.

Specific logic elements relating to the data transfer previously discussed with regard to Figs. 7 and 8 are shown in Fig. 15. In the most typical arrangement, the bus master includes a CPU, data memory or other data source (or sync) 310 which initiates a data transfer to or from a memory or data source (or sync) 330 in the slave unit 54B. In one embodiment according to the present invention, the transfer of eight contiguous 32-bit data words is provided by a sequential transfer of data from the memory or CPU 310 to a registers 302 or from register 303, which provides the data transfer to the SIB data lines 74 illustrated in more detail in Fig. 11A. The transfer is controlled by logic 309 resident in the bus master, which provides data transfer control between the memory or CPU 310 and the registers 303 and 302, and including particular clock control of the register and transceivers to provide a write data stream during cells 1-8 of frame 2 and a read data stream during cells 4-11 of frame 2 to the corresponding slave bidirectional transceiver 321 and registers 322 and 323 to provide the data transfer to the memory or data source/sync 330 according to the operation defined by the particular slave unit 54B. The operation of the slave is monitored, which may include the parity of the data transferred in or out of the slave, by logic block 333, which provides a data valid signal to the SIB through registers 334 and transceiver 335 one clock period behind the clock period of the SIB data transfer. The data valid signal is received by the control logic 309 of the bus master 54A through transceiver 313 and register 314 which is clocked in a manner appropriate to capture the signal placed on the SIB signals during the particular cell periods described above.

Transfers to and from selected hardware space registers is provided in the logic of the schematic diagram 350 providing Fig. 16, which corresponds to the signal flows of Figs. 9 and 10, discussed above. Single 32-bit word data transfers are provided over the data leads 74 between the hardware register 360 in the bus master unit 54A and the hardware register 370 in the slave element. Alternately, any form of data source or data sync can function and structurally replace register 360. The hardware register in the slave 370 may be responsive to the particular slave unit function or type, and monitor signals. Moreover, the HWS registers function to initiate system or device operation, such as a diagnostic or initialization function. The signal path between the hardware register 360 and the SIB data path 74 is provided through a bidirectional transceiver 352 and registers 353 and 354, whereupon the data received from the SIB to the hardware register 360 is stored in the register 354 by a frame 2, cell 4 clock signal. The data path 74 is connected to the hardware register 370 through a bidirectional transceiver 372 and registers 373 and 374, wherein the data provided to the SIB from the hardware space register 370 is stored in the register 374 by a frame 2, cell 3 clock signal, while the data received from the SIB data paths are stored in the register 373 by a frame 2, cell 1 clock signal. A hardware space data transfer is provided by the address and byte select signals provided on the valid corresponding SIB signal paths 68 and 72, respectively, by exercise of the CPU 362 through the corresponding registers 363 and 364 upon receipt of a frame 1, cell 4 clock signal. The receipt of the thusly provided address and byte select signals is provided through a transceiver 376 and register 377 to a compare logic 380 upon receipt of a frame 1, cell 5 clock signal. Also received by the logic 380 is a four-bit slot number signal provided from the unique to each slot location 60 of the SIB backplane, according to a logic hardwired address provided in the backplane, discussed with regard to Fig. 17 below. Therefore, each slot has a unique slot number, which if successfully compared to a particular portion of the hardware space address signal provided on leads 68, will produce an enable signal to the hardware space register 370 to produce the FND and BSY signals on the SIB through the register 381 and open collector driver 382. Thus, the FND and BSY signals are received by register 365, and received by the CPU 362 upon receipt of a frame 2, cell ∅ clock signal. Further control of the hardware space data transfer is provided by the W/R signal originating in the bus master 54, typically under control of the CPU 362 through register 366 and transceiver 367 to a portion of the SIB control signal paths 666. Also provided by the CPU 362 through the register and transceiver 366 and 367, respectively, are valid HWS and ADRVAL signals, which are received with the W/R signal by transceiver 378 and register 379 upon receipt of a frame 1, cell 5 clock signal. The control signals are received by a control W/R logic lock 385, which controls the transceiver 372, registers 373 and 374, and the hardware space register 370.

The implementation of the SIB, together with the SIB protocol and interface devices discussed above, provides the necessary high data bandwidth according to the present invention is the particular disposition of the signal paths on the SIB backplane 52, as illustrated by the partially cutaway illustration 52A of the backplane of the present invention, with a literal representation of the substantially uniform length time-equalized clock signal paths 64A, B, C, D, E, F, G, H and J. Noting that the clock signal paths 64A-64J are made substantially uniform in length, and thus time delay characteristics, the clock signal paths include serpentine loops or other methods of accommodating the requirement that all clock signals provide a uniform clock signal delay. In particular, note that the clock signal which originates at the connector for slot 5 emerges from the slot and travels along path 64E, returning to the connector for slot 5.

Note further that the signal leads, such as data signal leads 74A, extend the length of the SIB backplane 52A without termination at either end or in any location therebetween, which with reference to a substantially uniform planar conductor 400 underlaying the signal conductors illustrated in Fig. 1, an unterminated transmission line is created for the SIB signals. Since the SIB backplane 52A typically comprises a multilayer circuit board having the signal paths on one surface and a planar conductive layer 400 or substantially planar conducted areas separated with a fiberglass layer 402, which may overlay yet further fiberglass and conductive layers 404, the conductive surface 400 is not necessarily uniform and without interruption to provide necessary ground plane characteristic to create the transmission line characteristics of the signal paths disposed thereupon. According to one aspect of the present invention, the transmission line-like signal paths exhibit a substantially 75 ohm characteristic. However, being unterminated, signal reflections occur at either end of the signal paths. The present invention advantageously incorporates by design the reflection to permit the signal driven in the bus master by the transceiver 147 of Fig. 11 to the corresponding transceiver 147 in a corresponding slave unit such that the reflection caused by an open circuit unterminated transmission line constructively adds with the previously energized signal level provided by the driving transceiver, providing the logical voltage level necessary to be established in the receiving transceiver 147 as the intended logical state. Thus, in the present invention, which provides a 60 nS clock signal, the desired worst case settling time for the signals transferred over the SIB lines, including at least one reflection is under 12 nS.

More specific rules regarding the SIB signal paths on the backplane 52 follow.

The SIB signals exist on a backplane having 9 PCB slots spaced at 1" intervals. Each PCB drives each signal via a track length of not more than 2". Hence total length of SIB = 12" maximum, and the SIB has a maximum of 7 stubs, none of which exceeds 2" in length.

The standard SIB transceiver is the Fairchild FAST device 76F245. Each board may drive and receive each SIB signal with a single 74F245 element B-port only, unless otherwise defined in this document.

The lines marked RPU are defined to have a resistive pull-up, and are assert low. This guarantees that these lines are not asserted when not driven in the cell(s) for which they are deemed valid. Resistor pull-up networks are located on the clock-arbiter board.

The BARB lines are private lines connected one from each slot, including slot 5, via the backplane to the clock-arbiter unit which is defined to be on the board in slot 5. These lines have identical resistive pull-up networks at each end. Each BARB line carries the functions of bus request, bus grant and bus check. Logically the SIB supports up to 15 boards, hence there are 15 BARB signals logically defined. However, the electrical implementation defined by this document permits only nine boards in order to maintain electrical integrity of the signals, hence only BARB <9:1>.L are defined here.

The SLOT lines give a hardwired board position indicator (slot number) and are defined as open circuit for logical 1 and closed circuit to 0 volts for logical Ø.

When asserted, HALT must be used by each module to disable all tristate drivers on the SIB. This prevents electrical damage to SIB drivers in the event of the same virtual page being mapped into two different pager modules.

The clock generation and distribution network is shown in Fig. 11. The clock is derived from a 30 nS crystal oscillator divided by 2 by the 74S112 and buffered by 6 74AS804A gates in a single package with all outputs common. It is then distributed across the backplane to all boards in such a manner that the path lengths to the receiver on each board are equal. Thereafter, it is buffered by three stages of 74AS804A gates each driving a number of delay lines (lengths of PCB track). It is intended that each gate should drive a load of 50 pF as near as possible so each gate is loaded by a capacitor the value of which depends on the gate and track loading. Note also that if a polarity-inverted clock is required then this may be generated by use of a 74AS808A in place of the normal 74AS804A in stage 3. If this technique is used, the designer must account for the fact that the 74AS808A has a maximum propagation delay 1.5 nS greater than that of the 74AS804A and that the worst-case skew with regard to the positive-edge clocks is increased by 1.5 nS in one direction only, i.e., in the direction of the negative-edge clock being later than the positive-edge clock.

Thus the SIB clock signal shown in Fig. 2 has a period of 60 nS and its negative-going edges define the boundaries of each cell. Since the clock distribution network on each board contains three inverting stages then at the output of the network the positive-going edge defines the cell boundary. The mid-cell edge is therefore negative-going at the output and occurs at 30 + or -5 nS with regard to the positive-going edge at the same gate output.

A 39 ohm series resistor is placed in each clock line on the clock generator board as near as possible to the source gates. Thus in the case of a depopulated backplane, reflections from the empty board slots do not interfere with the clock distribution. This ensures that both clock edges are monotonic in the switching threshold region. Rise and fall times of clock edges are not greater than 2.5 nS at any point at or beyond the receiving gate inputs on each board.

All tracks have an intrinsic (unloaded) impedance of 75 ohms. The outputs of the clock driving gates on the clock generator are connected together at a common star point. Track lengths from each output to the star point are a maximum of 0.5" and are equal to within 0.1". Track lengths from the star point to each resistor are a maximum of 0.5" and are equal to within 0.1". Track lengths from each resistor to the connector are a maximum of 2" and are equal in length to within 0.1".

Tracks on the backplane are a maximum of 5" and are equal in length to within 0.1". Tracks on each board from the backplane connector to the receiving (state A) gates (100) are a maximum of 2" and a minimum of 1.5". There are 2 stage A gates on each board. Both gates are in a single package and are star-connected to the track to the connector such that track lengths from each gate to the connector are substantially equal.

Thus, the total length of delay lines in the unit clock distribution circuit is 18 ± 3 inches which gives a delay of 3.3 ± 0.55 nS.

Lines are unterminated and are a maximum of: 8" long with up to 2 loads near the end: 6" long with up to 4 loads near the end: No load shall be more than 2" from the end of any track. It is permissible to star-connect the loads such that they are equidistant from the driver. In this case, the stub length (length of track) from the star point to each load shall not exceed 2". The value of (delay) lines of the unit clock distribution circuit for each load shall be calculated as the distance from the load to the driver.

The above rules apply to the clock distribution across the whole board, i.e., all non-SIB logic which uses the system clock, as well as the SIB logic itself, will use this clock distribution scheme. The rules are designed such that the Stage B gates (111) can be placed in the center of the board, from where the "B" leads can fan out in a radial manner to distribute the clock to all parts of the board.

Each gate may drive a maximum of: 4 delay lines, 8 gates, 60 pF (including gate input, track and trimmer capacitance).

The gates in a given stage in the clock driver chain may be implemented by gates in the same package. However, gates in separate stages must be in separate packages so that no package acts as a non-inverting element. This prevents self-oscillation of the component due to common-mode noise feedback.

No other signals are to handled by gates in the same package as a clock driving gate. This prevents mutual interference of clock and other signals due to common-mode noise.

Rules for tracking to VLSI devices will need to be calculated separately for each type of VLSI device used.

The inputs of all unused gates must be tied to OV.

To calculate the required value of trimming capacitor, the following equation must be used:

C = 50 - L.Co - N.Cg - Q.Co

where:

C = value of capacitor in pF.

L = total length of track driven by gate in inches.

Co = 2.6 pF (Track capacitance per inch).

N = total number of gate inputs driven by gate.

Cg = 4 pF (gate input capacitance).

Q = length of stub from gate to capacitor in inches.

Note that the capacitor must be connected to the gate output via a stub of length 3" + or - 1". This helps alleviate the common-mode noise by protecting the gate with some inductance.

Total delay by calculation from SIB clock to clock at the logic element is 11.55 nS ± 1.8 nS. The clock skew is defined as the maximum difference in arrival time of positive edges of two gated clocks on different boards which occur as the result of the same negative edge transition of SIB clock signal. Worst case clock skew by calculation is 5.6 nS. Other unaccountable system-wide effects may increase the clock skew beyond the calculated maximum. Allow another 50 percent for this, i.e., add 3 nS to the calculated maximum skew. Hence, the effective worst case clock skew is 8.6 nS.

The SIB comprises a backplane having 9 board slots spaced at 1" intervals, plus up to 9 boards each having one 74F245 element driving and receiving each SIB signal via a stub of not more than 2". Thus with a board at each end the total length of the SIB is 12" maximum with up to 7 x 2" stubs. The intrinsic impedance of all tracks is 75 ohms. This is reduced by the capacitive loading of connectors and 74F245's.

The bus is unterminated. This means that voltage doubling occurs when the voltage/current wavefront reaches the end of the bus. This characteristic is employed to overcome the fact that due to the low bus impedance the driver cannot sync sufficient current to drive the bus from high to low in a single transition. Multiple reflections are thus required to allow the bus to settle. The worst case settling time is 11.6 nS.

The SIB shares the bus transceivers among the master and slave units giving only one connection to the SIB ADDRESS/DATA/CONTROL lines per slot. For example, in a master board with a pager and HWS resources, the address transceivers, data transceivers and control transceivers shared (in common) although up to three different register pairs may be added. For example, the transceiver 252 in Fig. 15 is physically identical with 352 on a master board in Fig. 16 .

The signals with resistive pull-up have the following requirements. The SDVAL signal must settle in one cell time to high or low. The SDVAL signal is therefore driven by a 74F245 (or 74F243) device. RPU is implemented so that if the store module fails to respond to the physical address then the master which initiated the transfer automatically receives a data error. This permits DV to be driven by 74S38 open-collector gates. The ADRVAL and HLD signals have identical timing to the address signals and are therefore driven bY 74F245 devices. They have RPU to ensure that they are negated if in a given SIB frame the bus is not requested by any master (and therefore they are not driven). The FND and BSY signals are by definition driven simultaneously by every pager in the system. Therefore they must only be driven to the asserted state, never to the deasserted state, and hence are driven by 74S38 open-collector gates. The BARB lines must achieve the negated state in one cell time when the driver switches off to prevent a bug check from generating a spurious bus request in the next cell. Due to their unique timing with regard to the other signals it is more economical to drive these with an open-collector gate if possible. ACLOW and DCLOW signals are provided by open-collector gates on the PSU master I/O board. In order that they may be held asserted (i.e., pulled to OV) when DC power is not within tolerance, a "relay" may be used in parallel with the open-collector gate.

Fig. 11A shows the basic transceiver circuit for the open-collector RPU signals. The driver is the 74S38 open-collector buffer and the receiver is a straight 74F74 or 74F374 D-type. The load capacitance is 4 pF for the F374 input and 8 pF for the S38 output, giving a combined capacitance of 12 pF which is equivalent to that of the F245. The RPU resistor network is located on the arbiter board and gives a nominal termination of 495 ohms to 3.63 volts. The S38 current/voltage characteristic is similar to that of the F245 but without the extra knee caused by the diode feedback network. However, due to the effect of the termination network, the starting voltage is never more than 3.8 volts. In the case of the BARB lines, an identical resistor network is placed at each end of the line. This coupled with the fact that the net capacitance is much less for these lines gives the required fast rise time when the driver is switched off and permits use of an open-collector drive.

For the single-network case where all 9 slots have loads, worst case settling for the high-to-low transition in 11.6 nS.

For the low-to-high transition, using

$V = VA(a - \exp(-t/CR))$

the voltage reached in 4 cells = 240 nS is 3.2 volts min.

For the BARB lines there are only 2 loads such that the electrical characteristics are somewhat different. First, the impedance is higher at 56.9 ohms min. (loaded). This is seen by the driver in parallel with the 489 ohms (min.) of the terminator at the driving end, giving a load impedance of 50.97 ohms min. Drawing this on the Bergeron Diagram shown that the driver will pull its output to a safe low level at the first attempt and thus that the net will settle in one delay time T. The worst case value of T is 2.65 nS. For the low-to-high case, we need to know the time available for charging the bus. The delay from the clock to the driver turn-off point is 46.60 nS, including 8.60 nS clock skew. Hence, we have 13.40 nS to charge the bus. Using this in the equation in the previous paragraph, we get V = 2.22 volts worst case which gives a noise immunity of 220 mV min.

Signal bussing on each unit in one embodiment includes a 74F245 A-port at one end plus (normally) one output and one input of a 74F374 per module. To give satisfactory SIB timing, the board bus delay has to be kept within the range 0 to 5 nS and the line delay to within 0 to 4 nS. This leads to the following rules. The maximum track length of the bus is 8 inches. The maximum connectivity to the bus is three 74F374 outputs and three 74F374 inputs, i.e., three modules maximum or 42 pF maximum, including the 74F245 A-port. The maximum track length of 74F245 output enable lines is 6 inches. The maximum number of 74F245 enables per driver is six.

## Claims

1. A system interconnect bus for interconnecting a plurality of devices in a high bandwidth data processing system each device including a signal transfer means connected to the bus and having an impedance, the system interconnect bus comprising:
a plurality of unterminated signal paths, each having a specific impedance, and including connecting means therealong to provide access to the plurality of signal tracks; and
an unterminated section signal path disposed on at least one of the devices for connecting between the signal paths connecting means and the signal transfer means, wherein
the plurality of signal paths having connecting means are imperfectly terminated to provide a significant signal reflection at the ends thereof in response to a change in signal provided by said signal transfer means.

2. A system interconnect bus according to claim 1, having a preferred connection means including at least one set of private signal paths from the preferred connection means to each other connecting means along the system interconnect bus.

3. A system interconnect bus according to claim 2, wherein the private signal paths are time equalised to provide substantially uniform signal propagation from beginning to end.

4. A system interconnect bus according to claim 3, further including a private path from the preferred connection means to the preferred connection means wherein the respective signal used in the device connected to the system interconnect bus at the preferred connection means travel through said private path to be time equalised with the signals transferred through the other private paths.

5. A system interconnect bus according to any of claims 2 to 4, wherein the preferred connection means is located at the midpoint of the unterminated signal paths.

6. A system interconnect bus according to claim 5, comprising nine connection means, wherein the preferred connection means is the fifth connections means.

7. A system interconnect bus according to any of claims 2 to 6, wherein the private paths comprise at least one of a clock signal path and a bus arbitration signal path.

8. A unit for use in a high bandwidth data processing system having a plurality of such units interconnected by a common bus, each unit being removably connected to the common bus and comprising:
timing means responsive to clock and synchronising signals from the bus which define a frame time period, and providing a timing signal for use in the unit;
physical address means responsive to a physical address signal from the bus;
control means responsive to control signals from the common bus and the timing signal and providing unit control signals; and
data transfer means for providing a sequence of data words to the bus within a period defined by two of the synchronising signals according to the timing signal and the unit control signal.

9. A unit according to claim 8, further including one of a data source/sync, a memory and a hardware space register for providing the sequence of data words.

10. A unit according to claim 8 or claim 9, wherein the sequence of data words comprises a contiguous sequence of data words.

11. A unit according to any of claims 8 to 10, wherein the data transfer provides a sequence of eight data words.

12. A unit according to any of claims 8 to 11, wherein each data word comprises a plurality of bytes.

13. A high bandwidth data processing system having a plurality of devices interconnected with a system interconnect bus, the system comprising:
a first device including:
timing means providing synchronising signal,
virtual address transfer means providing a virtual address signal, and
data transfer means;
a second data device including:
timing means responsive to the synchronising signal,
physical address means responsive to a physical address signal within an address space, and
data transfer means;
and pager means for converting virtual address signals to physical address signals,
the system interconnect bus interconnecting the first device, the second device and the pager means wherein
the pager means is independently and separately disposed on the system interconnect bus and physically distinct from the first and second devices and wherein data transfer is effected between the first and second devices upon conversion by the pager means of the virtual address to a physical address within the address space.

14. A high bandwidth data processing system according to claim 13, comprising a plurality of the pager means, the system further including means for detecting simultaneous operation of at least two of the pager means.

15. A high bandwidth data processing system according to claim 13 or claim 14, further including arbiter means for selectively granting control of the system interconnect bus to a requesting first device.

16. A high bandwidth data processing system according to any of claims 13 to 16, further including clock means for generating a system clock and the synchronisation signal, wherein the system interconnect bus includes a plurality of clock data paths providing time equalised clock signals to the first device, the second device and the pager means.

17. A method of synchronously transferring data comprising the steps of:
providing a system clock signal from a clock means;
providing a sync signal from the clock means on the first (0) of every twelve system clock signals and define a frame as comprising twelve system clock signals sequentially 0-11;
providing a bus request signal from a first device on clock signal 1 of a first frame;
providing a bus grant signal from arbiter means clock signal 3 of the first frame in response to the bus request signal;
providing a virtual address signal from the first device on clock signal 5 of the first frame in response to the bus grant signal;
providing a physical address from a memory mapping means on clock signal 0 of a second frame following the first frame in response to the virtual address; and
providing a data transfer between the first device and a second device in the second frame.

18. A method according to claim 17, wherein the step of providing data comprises the step transferring data from the first device to the second device on clock signals 1 through 8, inclusive.

19. A method according to claim 17, wherein the step of providing data comprises the step of transferring data from the second device to the first device on clock signals 4 through 11, inclusive.

20. A method according to any of claims 17 to 19, further including the step of
providing at least one of an address valid signal, a read/write signal, a supervisor/user signal and a hold signal on clock signal 5 of the first frame.

21. A method according to any of claims 17 to 20, further including the step of
providing at least one of a physical address valid signal, a read/write signal, a found signal, a busy signal, an access protect signal and a bug check signal on clock signal 0 of the second frame.

22. A method according to any of claims 17 to 21, further including the step of
providing a data valid signal in response to the data transfer between the first device and the second device.

23. A method of synchronously transferring data comprising the steps of:
providing a system clock signal from a clock means;
providing a sync signal from the clock means on the first (0) of every twelve system clock signals and define a frame as comprising twelve system clock signals numbered sequentially 0-11;
providing a bus request signal from a first device on clock signal 1 of a first frame;
providing a bus grant signal from arbiter means clock signal 3 of the first frame in response to the bus request signal;
providing a hardware space signal and an address signal from the first device on clock signal 5 of the first frame; and
providing data transfer means between the first device and a second device on a second frame subsequent to the first frame.

24. A method according to claim 23, wherein the step of providing data transfer comprises the step of transferring data from the first device to the second device on clock signal 0.

25. A method according to claim 23 or claim 24, wherein the step of providing data transfer comprises the step of transferring data from the second device to the first device on clock signal 3.

Appendix 1

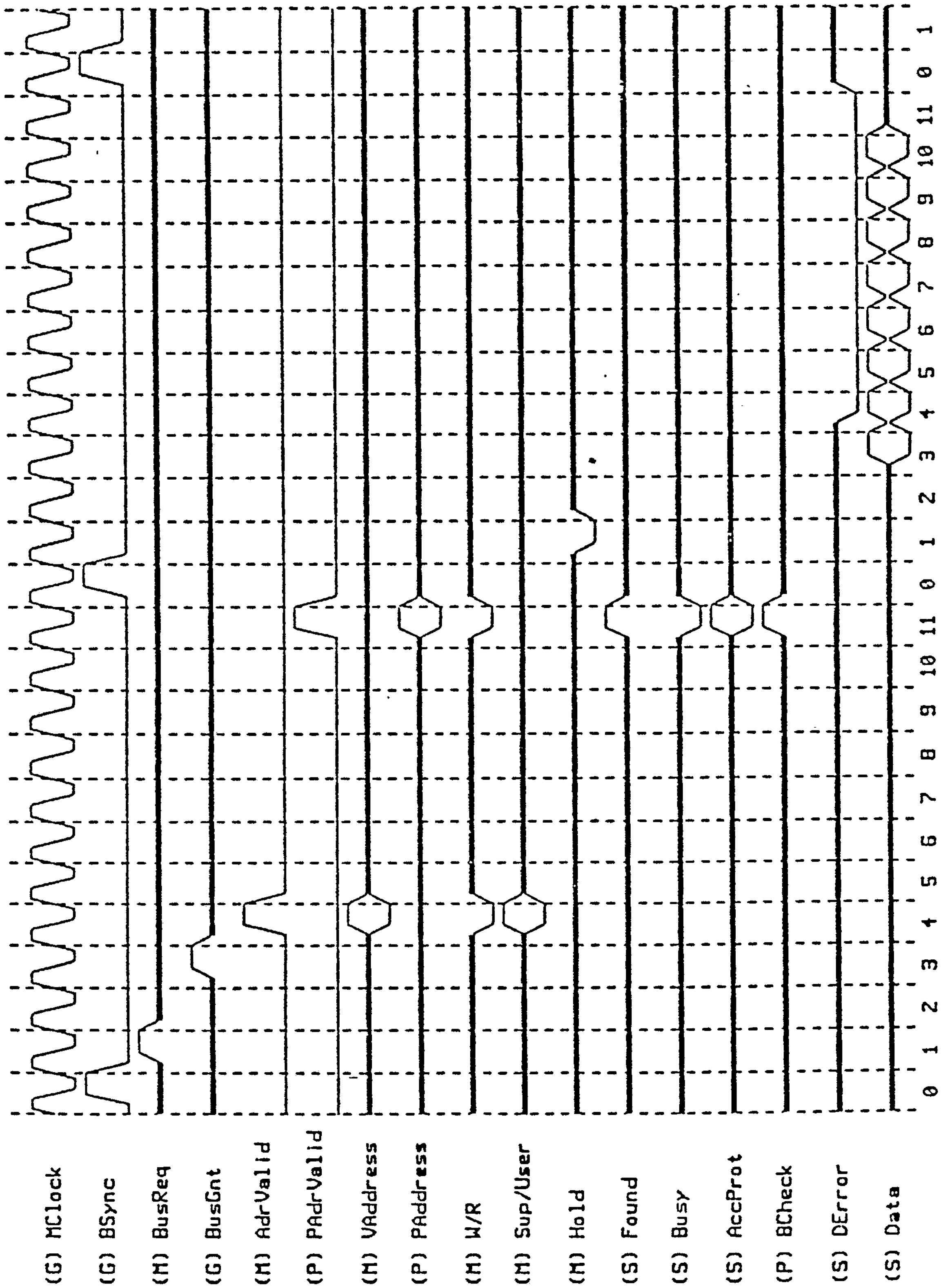


Virtual Space Read Cycle

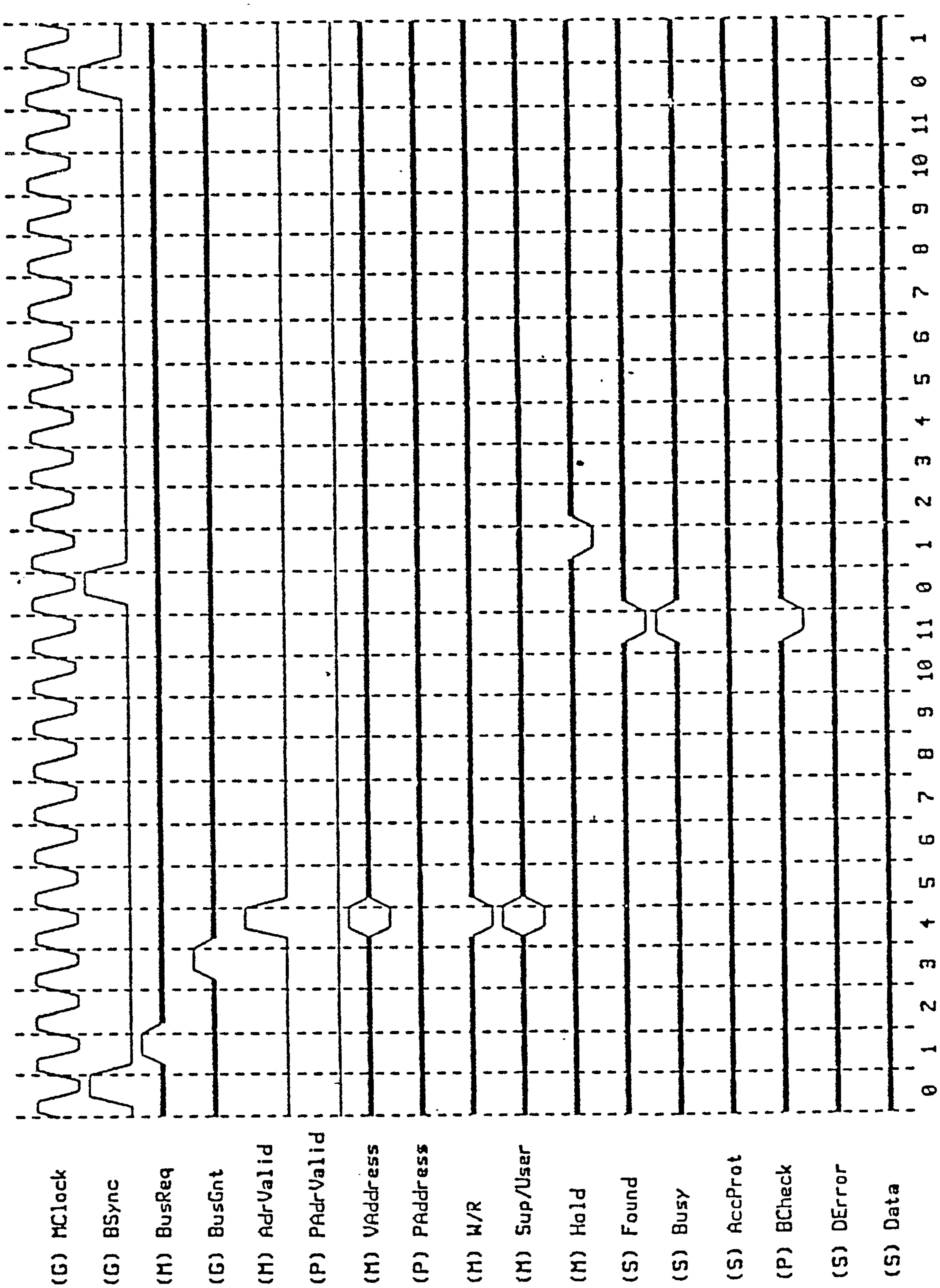


Virtual Space Read Cycle - With Busy

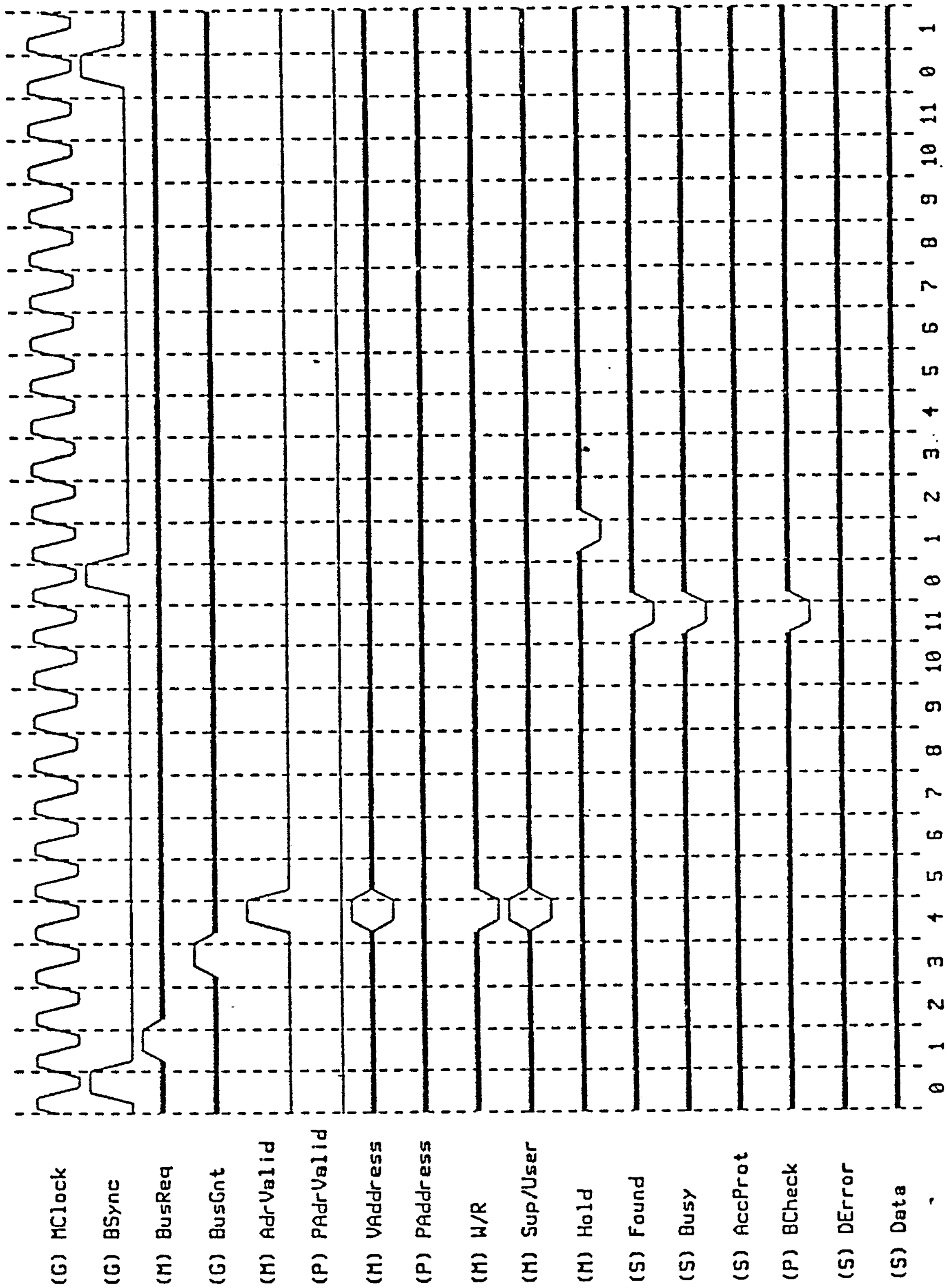


Virtual Space Read Cycle - With Not Found

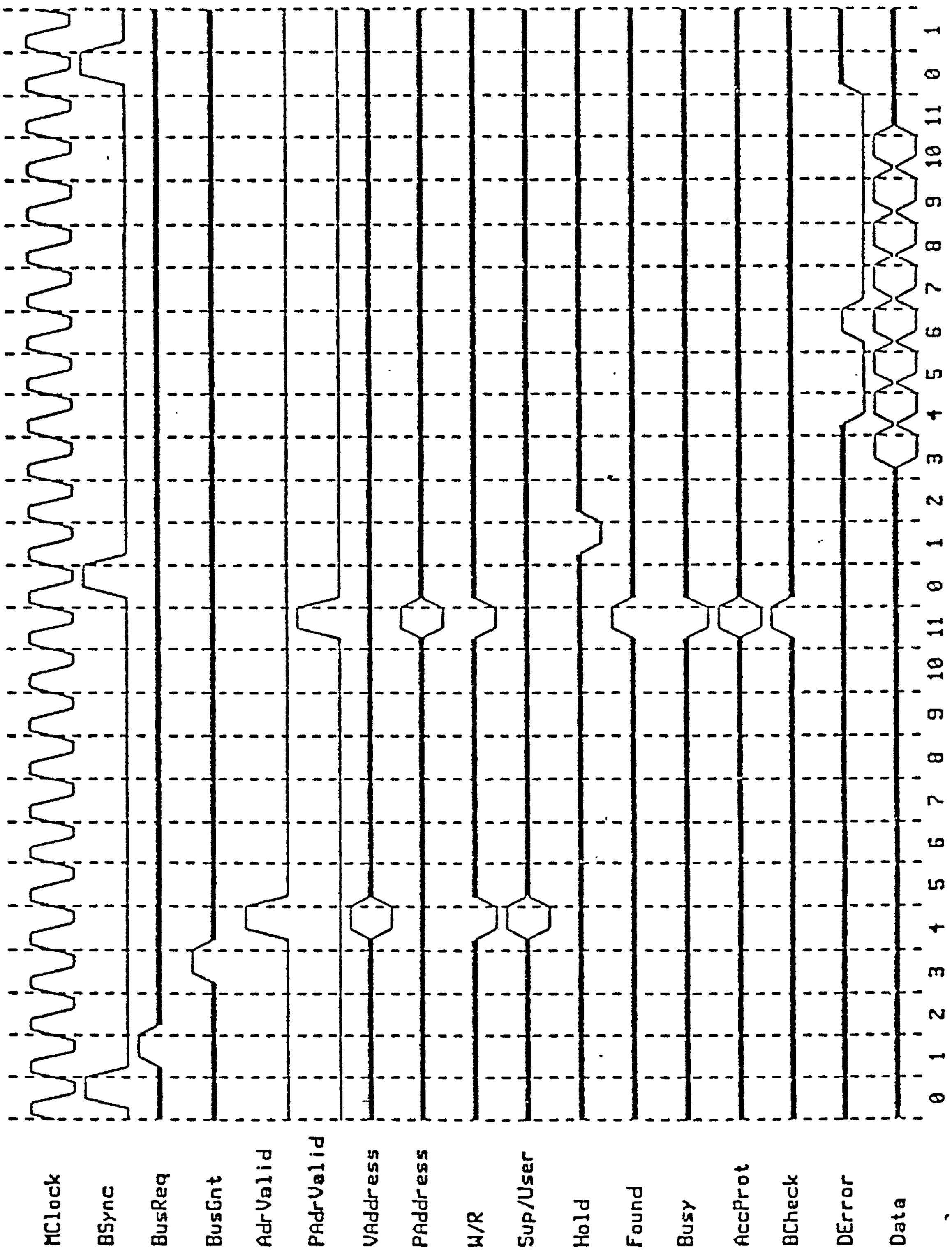


Virtual Space Read Cycle - With Data Error

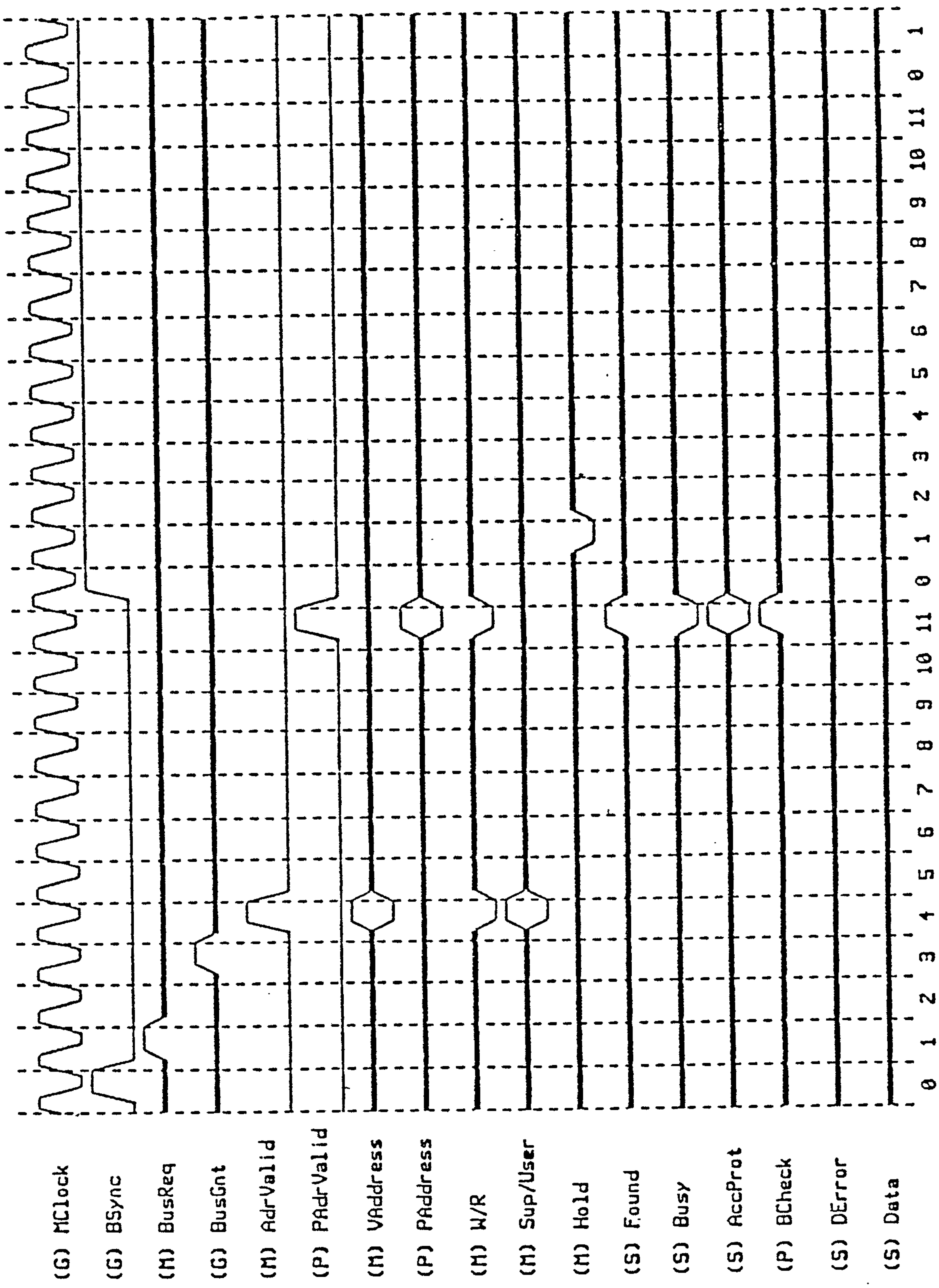


Virtual Space Read Cycle - WIth BugCheck Halt

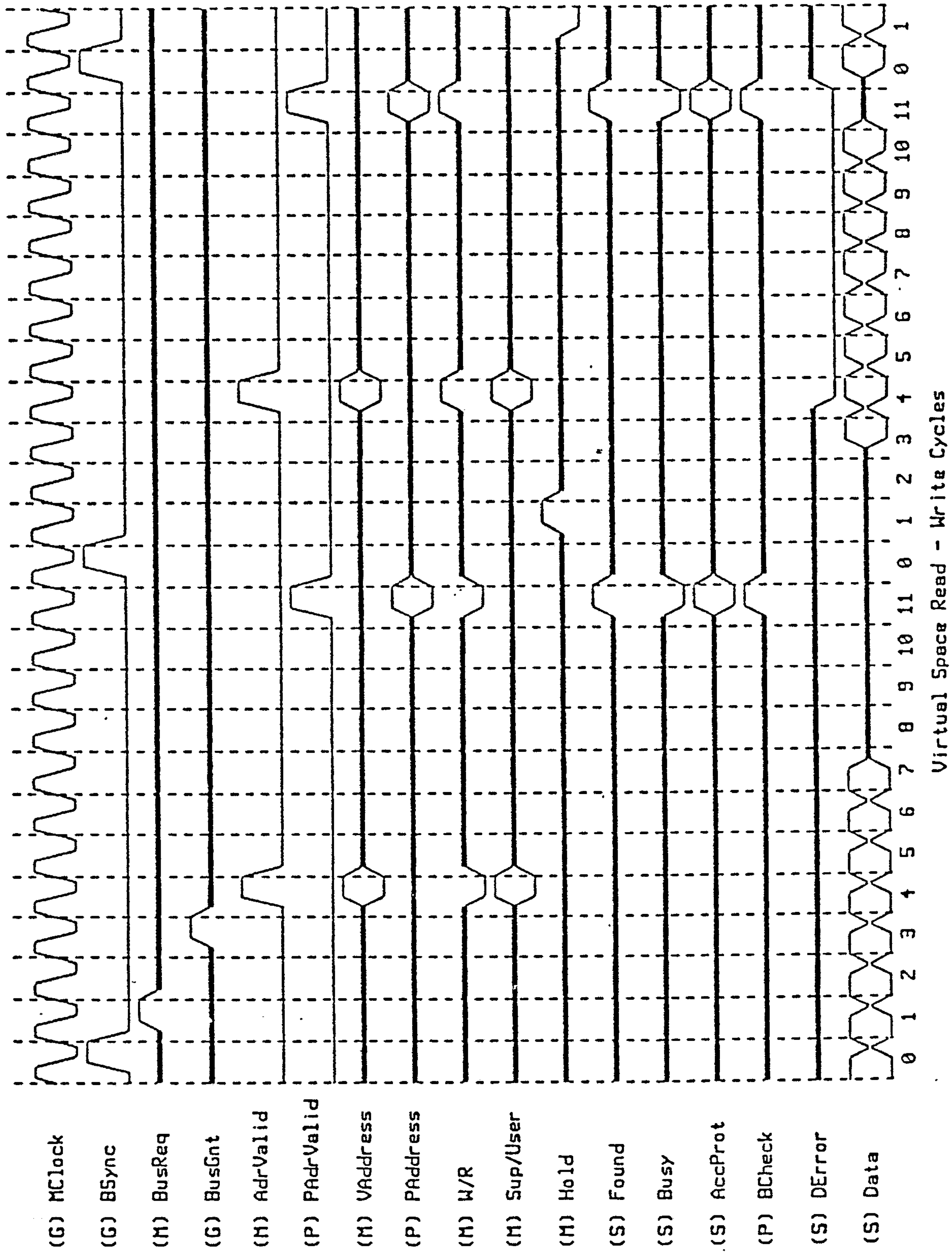
(G) MClock
(G) BSync
(M) BusReq
(G) BusGnt
(M) AdrValid
(P) PAdrValid
(M) VAddress
(P) PAddress
(M) W/R
(M) Sup/User
(M) Hold
(S) Found
(S) Busy
(S) AccProt
(P) BCheck
(S) DError
(S) Data
0 1 2 3 4 5 6 7 8 9 10 11 0 1 2 3 4 5 6 7 8 9 10 11 0 1
Virtual Space Read - Write Cycles

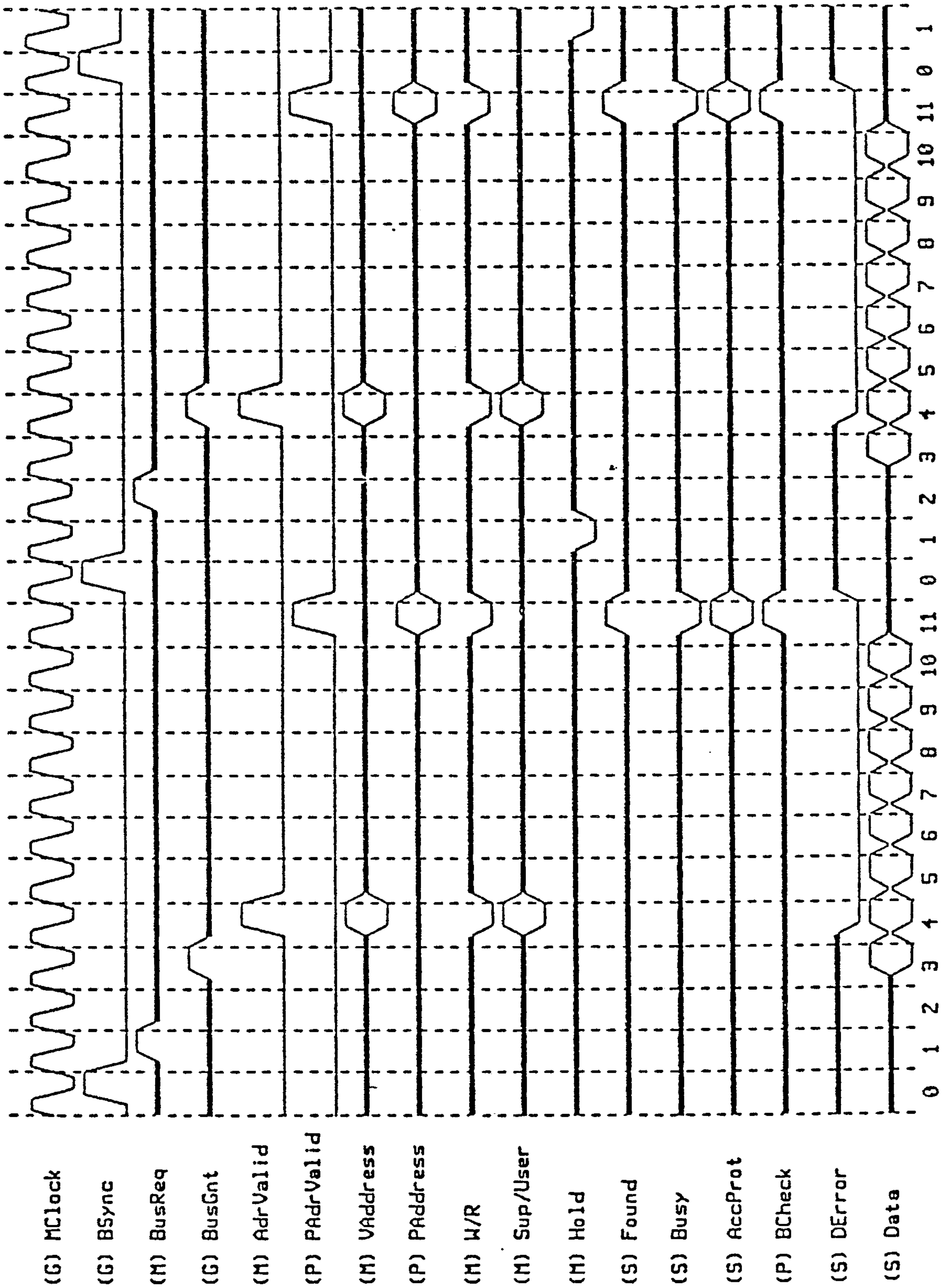


Two Virtual Space Read Cycles

SIB Timing Diagram

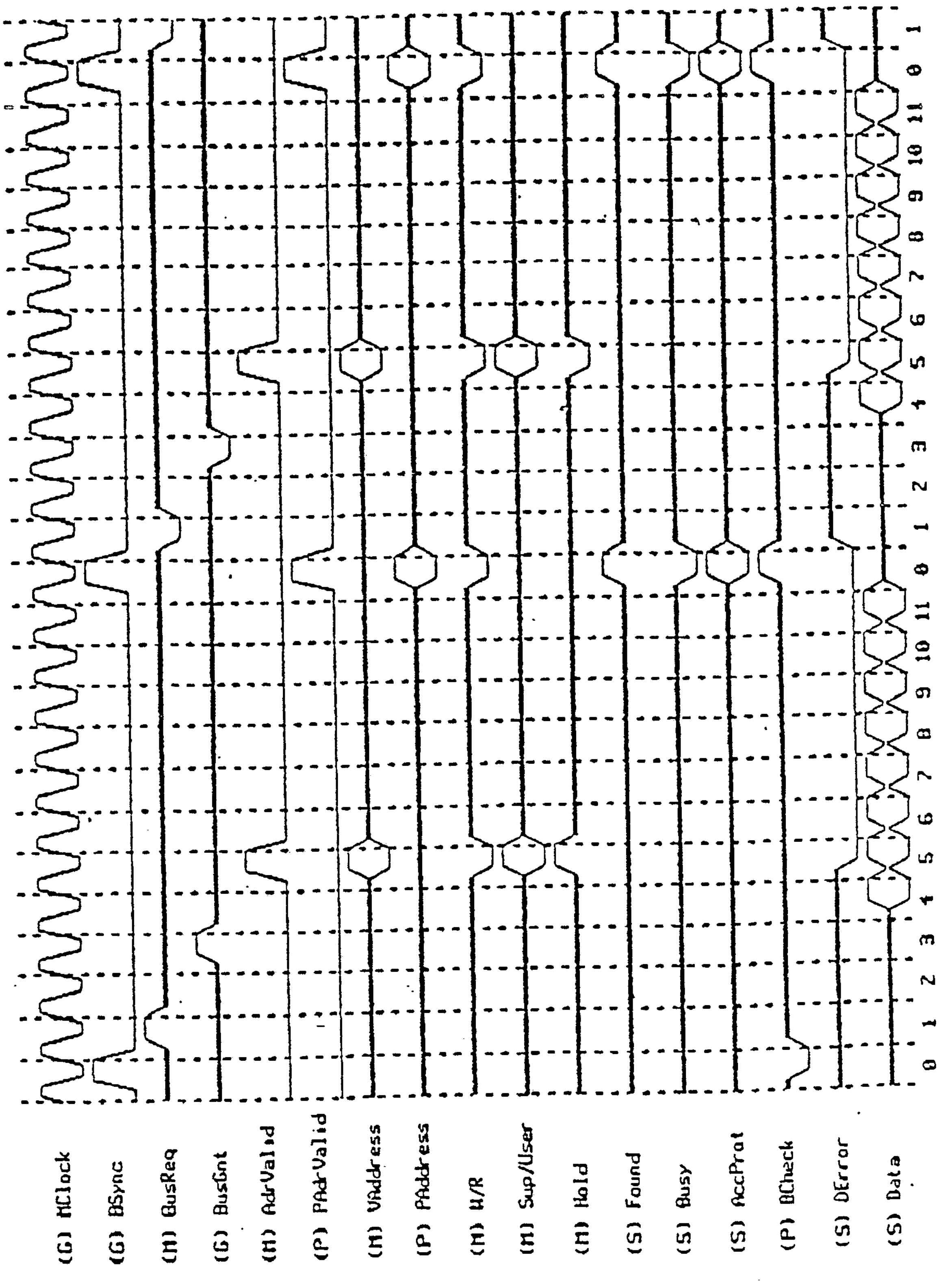


Two Virtual Space Read Cycles - with Hold

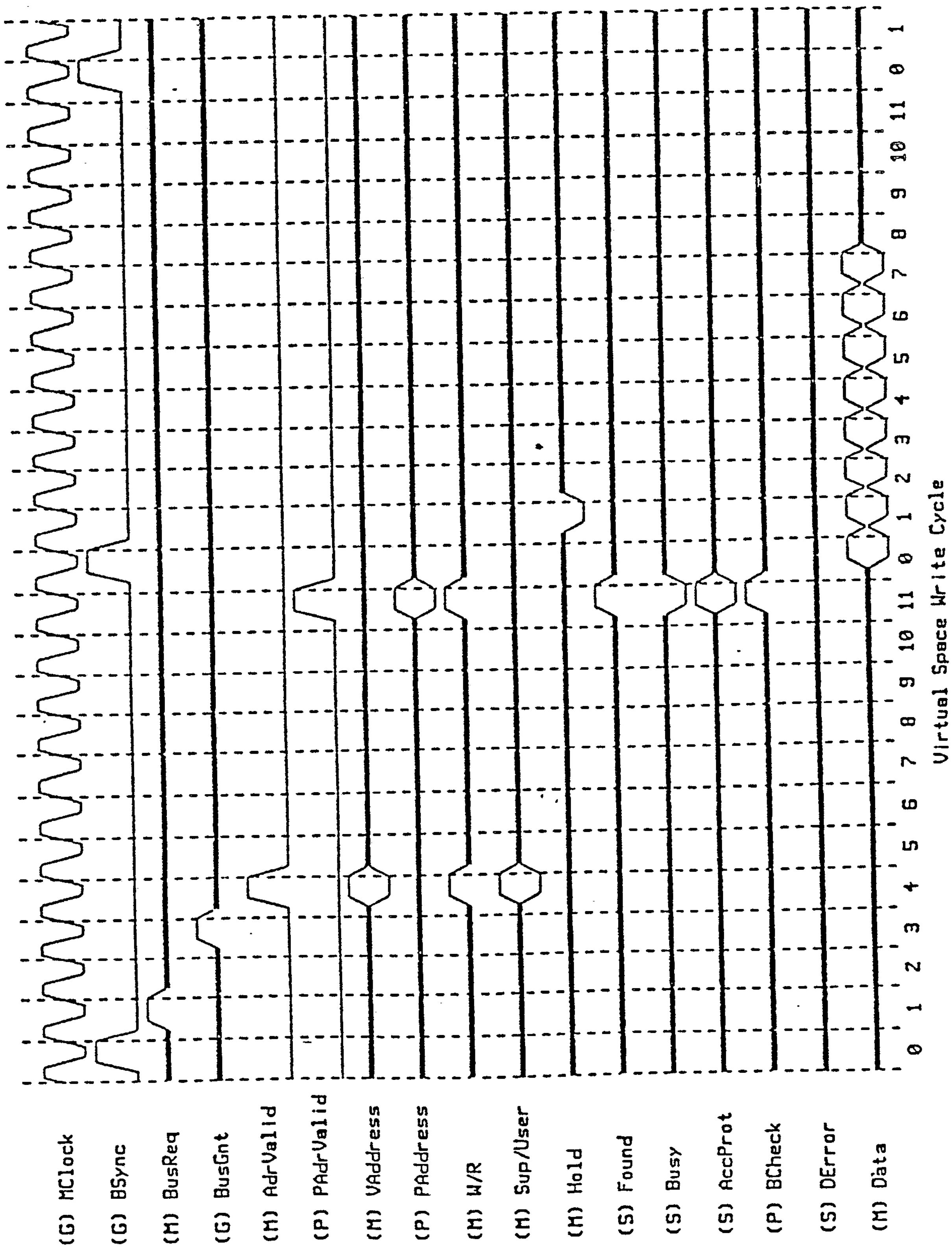
(G) MClock
(G) BSync
(M) BusReq
(G) BusGnt
(M) AdrValid
(P) PAdrValid
(M) VAddress
(P) PAddress
(M) W/R
(M) Sup/User
(M) Hold
(S) Found
(S) Busy
(S) AccProt
(P) BCheck
(S) DError
(M) Data
0 1 2 3 4 5 6 7 8 9 10 11 0 1 2 3 4 5 6 7 8 9 10 11 0 1
Virtual Space Write Cycle

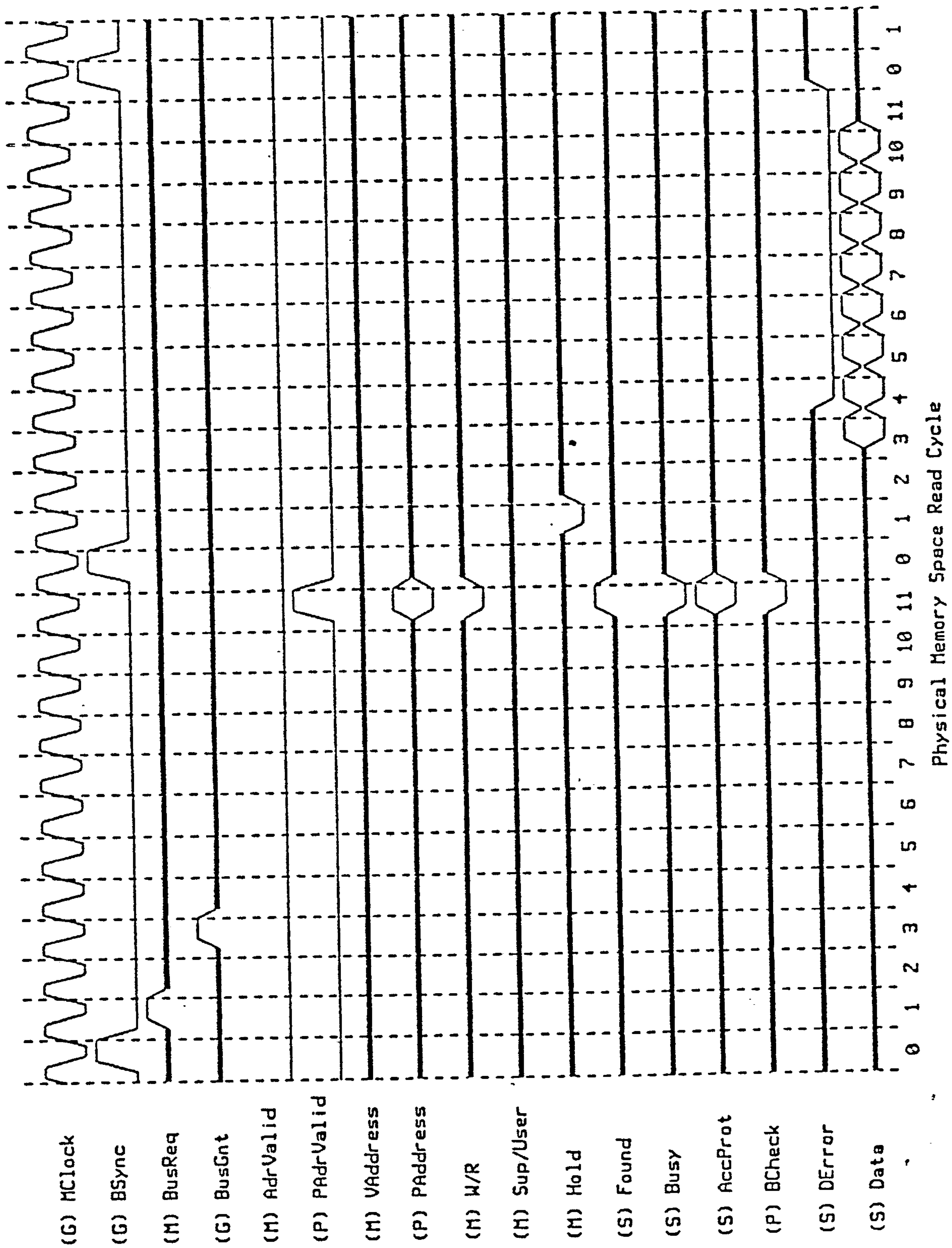
(G) MClock
(G) BSync
(M) BusReq
(G) BusGnt
(M) AdrValid
(P) PAdrValid
(M) VAddress
(P) PAddress
(M) W/R
(M) Sup/User
(M) Hold
(S) Found
(S) Busy
(S) AccProt
(P) BCheck
(S) DError
(S) Data
0 1 2 3 4 5 6 7 8 9 10 11 0 1 2 3 4 5 6 7 8 9 10 11 0 1
Physical Memory Space Read Cycle

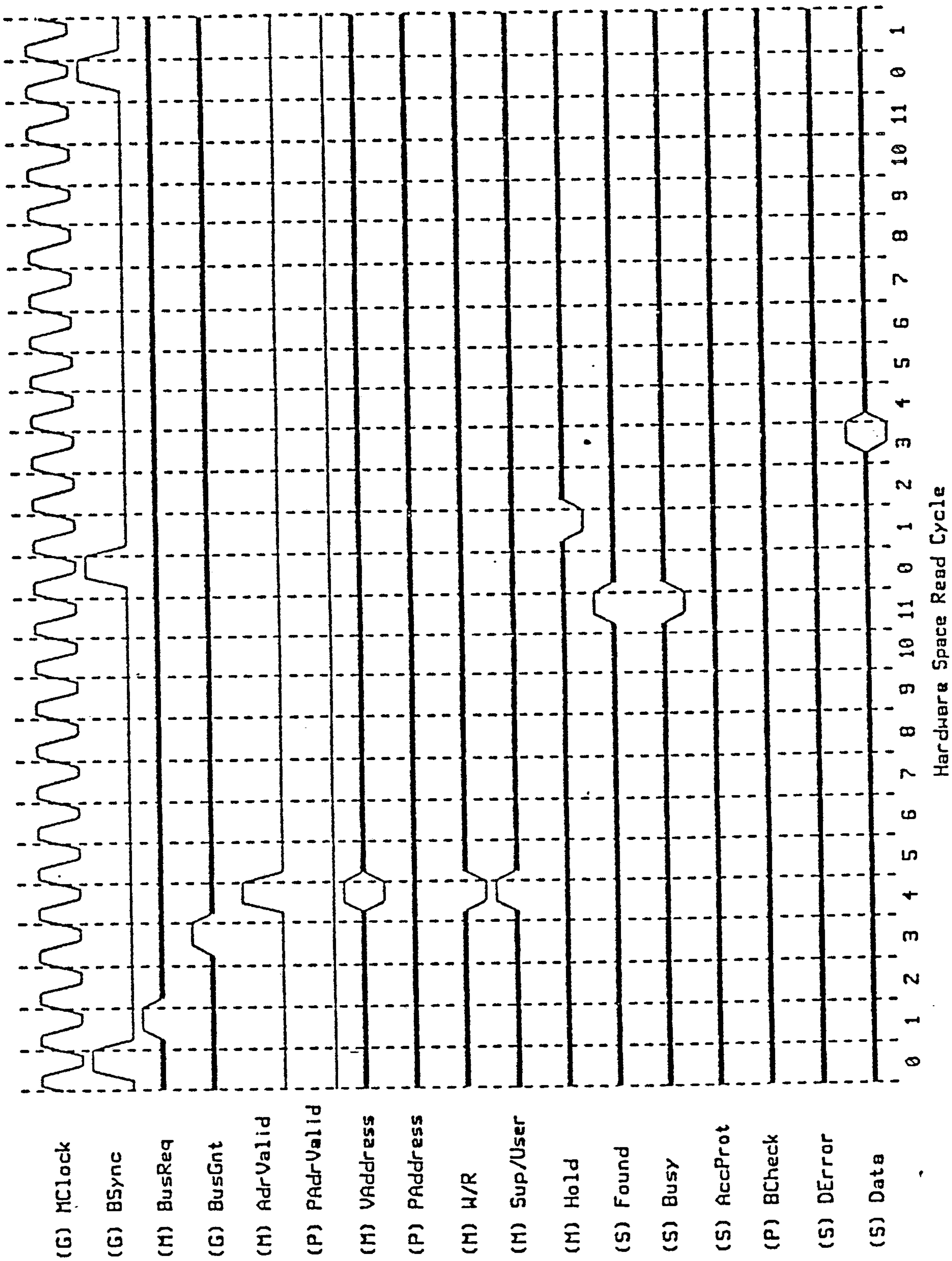
(G) MClock
(G) BSync
(M) BusReq
(G) BusGnt
(M) AdrValid
(P) PAdrValid
(M) VAddress
(P) PAddress
(M) W/R
(M) Sup/User
(M) Hold
(S) Found
(S) Busy
(S) AccProt
(P) BCheck
(S) DError
(S) Data
0 1 2 3 4 5 6 7 8 9 10 11 0 1 2 3 4 5 6 7 8 9 10 11 0 1
Hardware Space Read Cycle

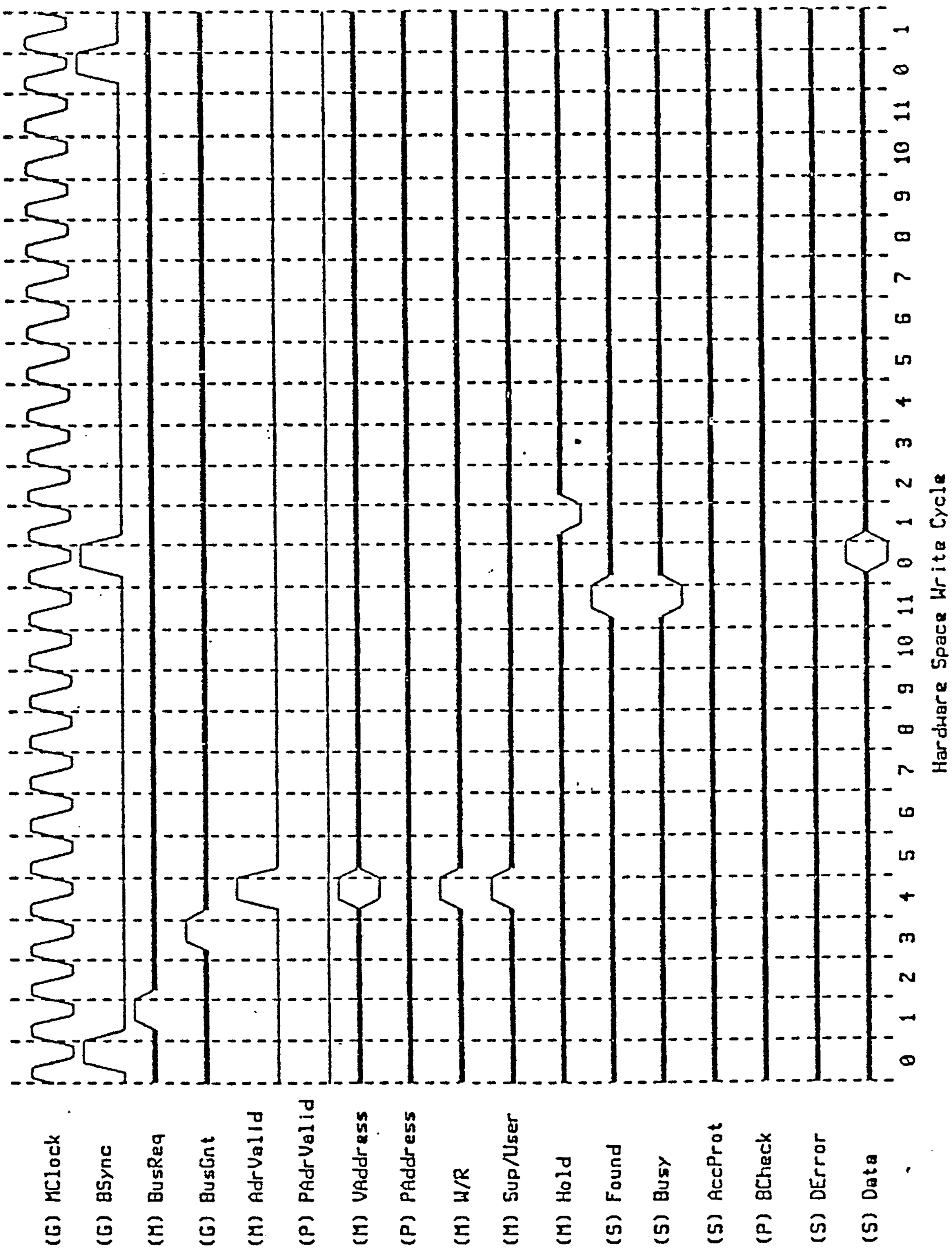
(G) MClock
(G) BSync
(M) BusReq
(G) BusGnt
(M) AdrValid
(P) PAdrValid
(M) VAddress
(P) PAddress
(M) W/R
(M) Sup/User
(M) Hold
(S) Found
(S) Busy
(S) AccProt
(P) BCheck
(S) DError
(S) Data
0 1 2 3 4 5 6 7 8 9 10 11 0 1 2 3 4 5 6 7 8 9 10 11 0 1
Hardware Space Write Cycle

Appendix 2

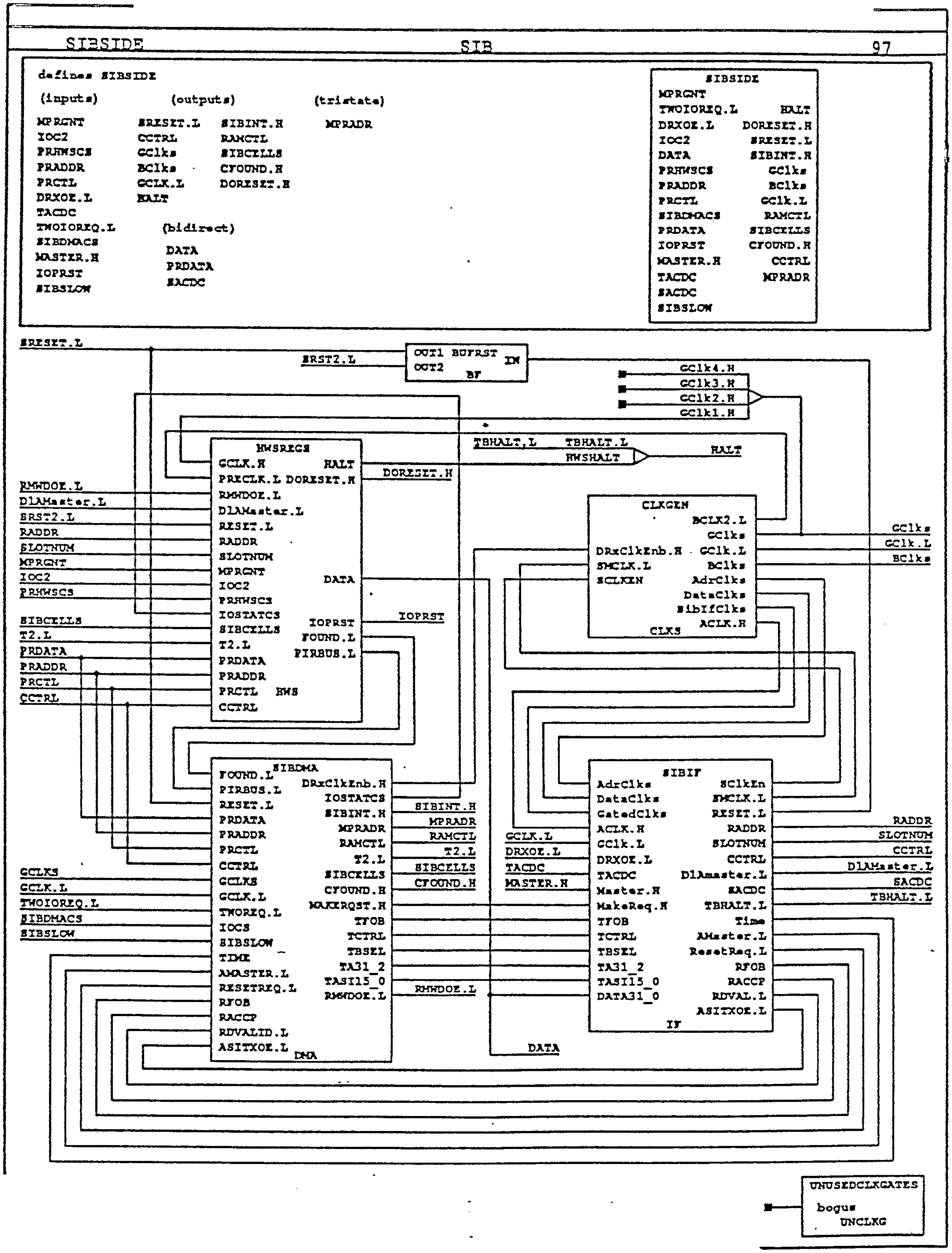
SIBSIDE
SIB
97
defines SIBSIDE
(inputs)
MPRGNT
IOC2
PRHWSCS
PRADDR
PRCTL
DRXOE.L
TACDC
TWOIOREQ.L
SIBDMACS
MASTER.H
IOPRST
SIBSLOW
(outputs)
SRESET.L
CCTRL
GClks
BClks
GCLK.L
HALT
SIBINT.H
RAMCTL
SIBCELLS
CFOUND.H
DORESET.H
(tristate)
MPRADR
(bidirect)
DATA
PRDATA
SACDC
SIBSIDE
MPRGNT
TWOIOREQ.L
HALT
DRXOE.L
DORESET.H
IOC2
SRESET.L
DATA
SIBINT.H
PRHWSCS
GClks
PRADDR
BClks
PRCTL
GClk.L
SIBDMACS
RAMCTL
PRDATA
SIBCELLS
IOPRST
CFOUND.H
MASTER.H
CCTRL
TACDC
MPRADR
SACDC
SIBSLOW
SRESET.L
SRST2.L
OUT1 BUFRST
OUT2
IN
BF
GClk4.H
GClk3.H
GClk2.H
GClk1.H
TBHALT.L
TBHALT.L
HWSHALT
HALT
HWSREGS
GCLK.H
HALT
PRECLK.L
DORESET.H
RMWDOE.L
D1AMaster.L
RESET.L
RADDR
SLOTNUM
MPRGNT
IOC2
DATA
PRHWSCS
IOSTATCS
IOPRST
SIBCELLS
FOUND.L
T2.L
FIRBUS.L
PRDATA
PRADDR
PRCTL
HWS
CCTRL
DORESET.H
RMWDOE.L
D1AMaster.L
SRST2.L
RADDR
SLOTNUM
MPRGNT
IOC2
PRHWSCS
SIBCELLS
T2.L
PRDATA
PRADDR
PRCTL
CCTRL
IOPRST
CLKGEN
BCLK2.L
GClks
DRxClkEnb.H
GClk.L
SMCLK.L
BClks
SCLKEN
AdrClks
DataClks
SibIfClks
ACLK.H
CLKS
GClks
GClk.L
BClks
SIBDMA
FOUND.L
DRxClkEnb.H
FIRBUS.L
IOSTATCS
RESET.L
SIBINT.H
PRDATA
MPRADR
PRADDR
RAMCTL
PRCTL
T2.L
CCTRL
SIBCELLS
GCLKS
CFOUND.H
GCLK.L
MAKERQST.H
TWOREQ.L
TFOB
IOCS
TCTRL
SIBSLOW
TBSEL
TIME
TA31_2
AMASTER.L
TASI15_0
RESETREQ.L
RMWDOE.L
RFOB
RACCP
RDVALID.L
ASITXOE.L
DMA
SIBINT.H
MPRADR
RAMCTL
T2.L
SIBCELLS
CFOUND.H
RMWDOE.L
GCLKS
GCLK.L
TWOIOREQ.L
SIBDMACS
SIBSLOW
GCLK.L
DRXOE.L
TACDC
MASTER.H
DATA
SIBIF
AdrClks
SClkEn
DataClks
SMCLK.L
GatedClks
RESET.L
ACLK.H
RADDR
GClk.L
SLOTNUM
DRXOE.L
CCTRL
TACDC
D1Amaster.L
Master.H
SACDC
MakeReq.H
TBHALT.L
TFOB
Time
TCTRL
AMaster.L
TBSEL
ResetReq.L
TA31_2
RFOB
TASI15_0
RACCP
DATA31_0
RDVAL.L
ASITXOE.L
IF
RADDR
SLOTNUM
CCTRL
D1AMaster.L
SACDC
TBHALT.L
UNUSEDCLKGATES
bogus
UNCLKG

defines BUFRST
(inputs in)
(outputs out1 out2)

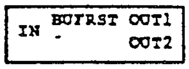


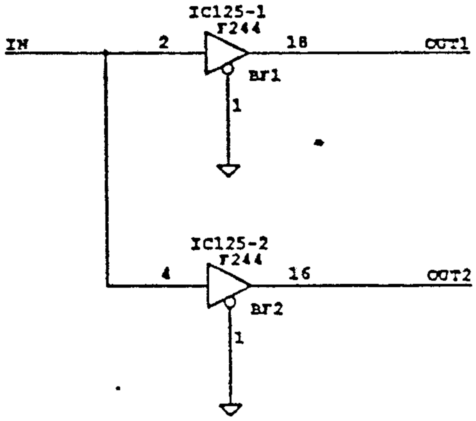

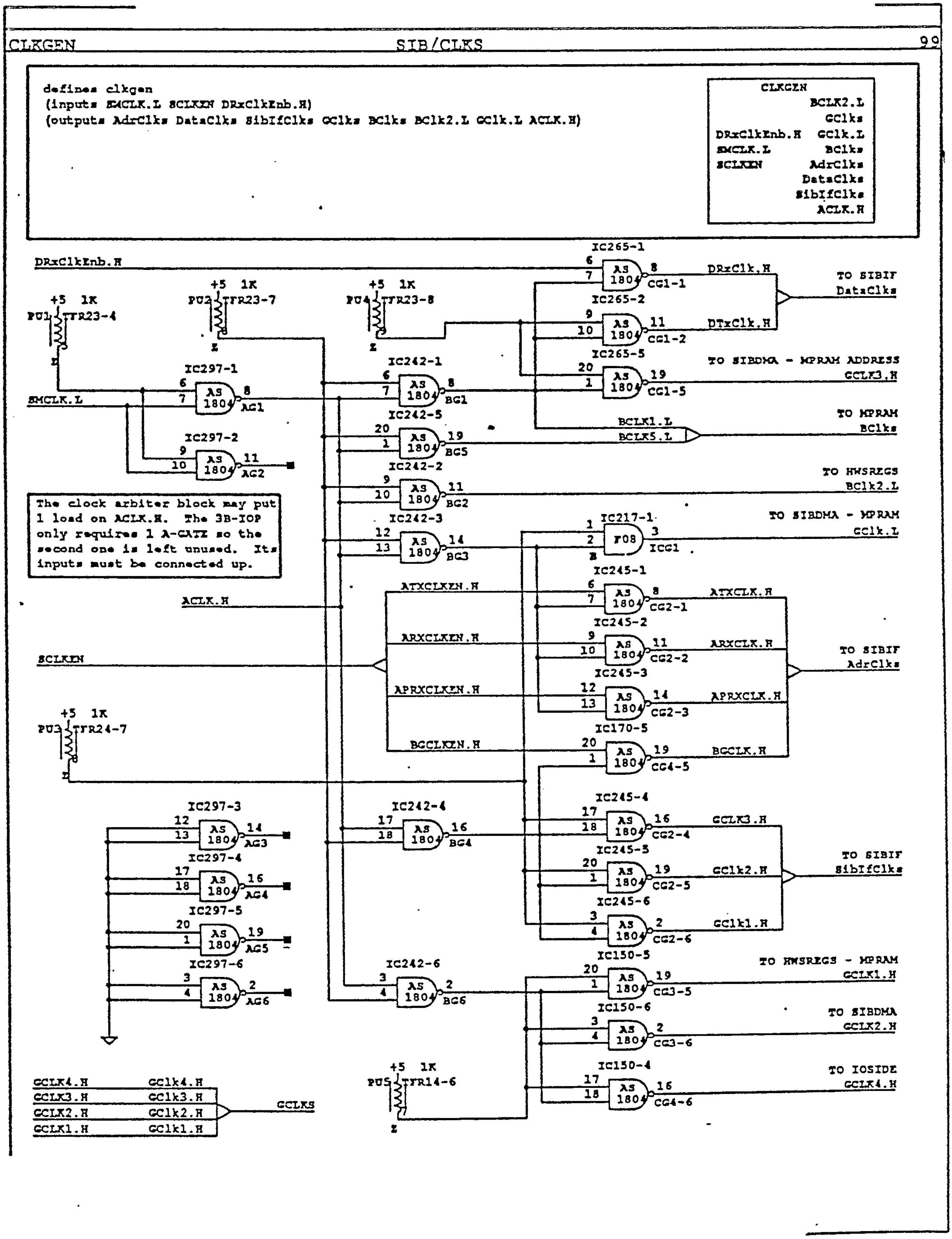
CLKGEN
SIB/CLKS
99
defines clkgen
(inputs SMCLK.L SCLKEN DRxClkEnb.H)
(outputs AdrClks DataClks SibIfClks GClks BClks BClk2.L GClk.L ACLK.H)
CLKGEN
BCLK2.L
GClks
DRxClkEnb.H
GClk.L
SMCLK.L
BClks
SCLKEN
AdrClks
DataClks
SibIfClks
ACLK.H
DRxClkEnb.H
IC265-1
DRxClk.H
TO SIBIF
DataClks
IC265-2
DTxClk.H
IC265-5
TO SIBDMA - MPRAM ADDRESS
GCLK3.H
+5 1K
PU1 TR23-4
PU2 TR23-7
PU4 TR23-8
IC297-1
SMCLK.L
IC242-1
IC242-5
BCLK1.L
BCLK5.L
TO MPRAM
BClks
IC297-2
IC242-2
TO HWSREGS
BClk2.L
The clock arbiter block may put 1 load on ACLK.H. The 3B-IOP only requires 1 A-GATE so the second one is left unused. Its inputs must be connected up.
IC242-3
IC217-1
F08
TO SIBDMA - MPRAM
GClk.L
IC245-1
ATXCLKEN.H
ATXCLK.H
ACLK.H
IC245-2
ARXCLKEN.H
ARXCLK.H
SCLKEN
TO SIBIF
AdrClks
IC245-3
APRXCLKEN.H
APRXCLK.H
PU3 TR24-7
IC170-5
BGCLKEN.H
BGCLK.H
IC297-3
IC242-4
IC245-4
GCLK3.H
IC297-4
IC245-5
GClk2.H
TO SIBIF
SibIfClks
IC297-5
IC245-6
GClk1.H
IC297-6
IC242-6
IC150-5
TO HWSREGS - MPRAM
GCLK1.H
IC150-6
TO SIBDMA
GCLK2.H
PU5 TR14-6
IC150-4
TO IOSIDE
GCLK4.H
GCLK4.H
GClk4.H
GCLK3.H
GClk3.H
GCLK2.H
GClk2.H
GCLK1.H
GClk1.H
GCLKS

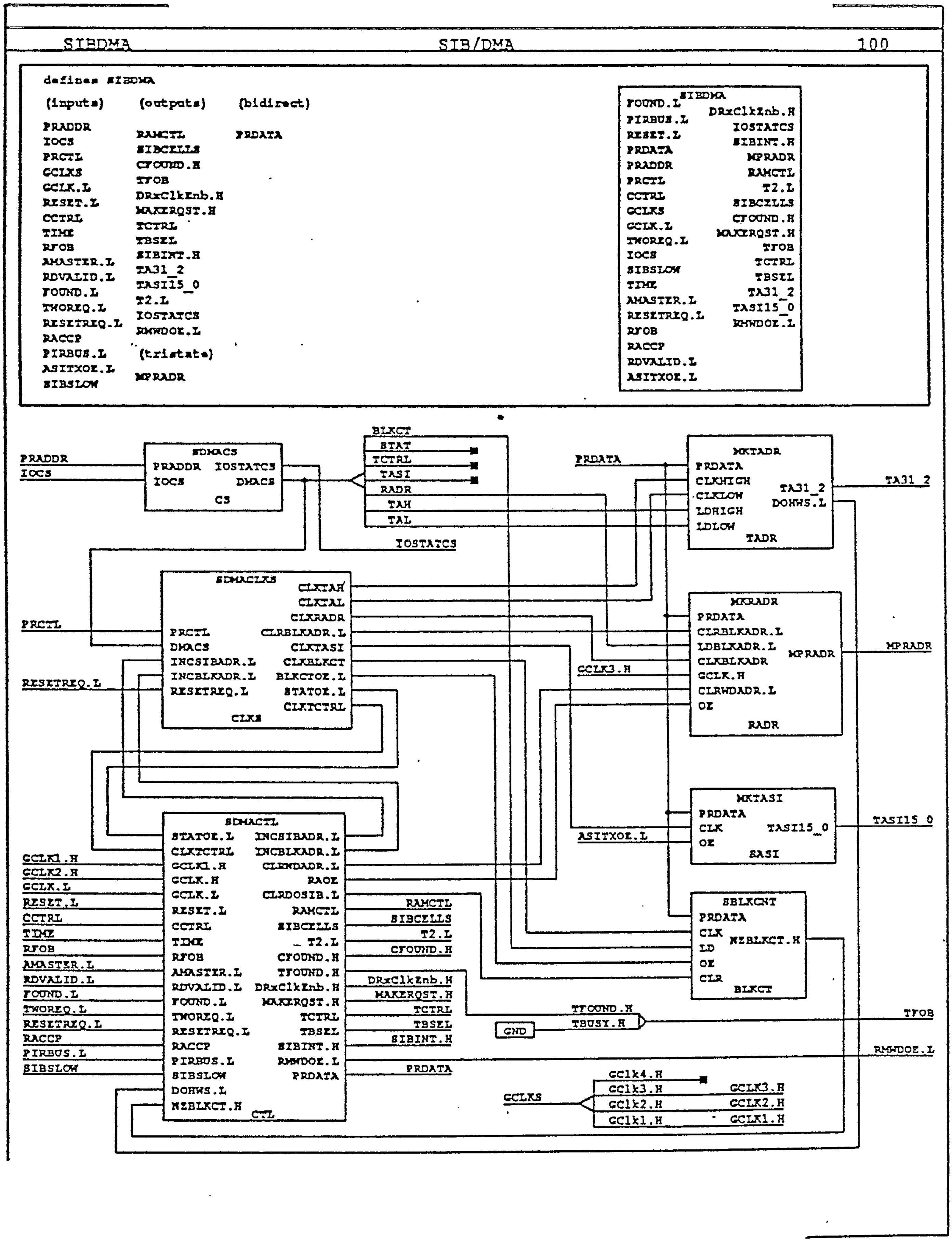
SIBDMA
SIB/DMA
100
defines SIBDMA
(inputs) (outputs) (bidirect)
PRADDR
IOCS
PRCTL
GCLKS
GCLK.L
RESET.L
CCTRL
TIME
RFOB
AMASTER.L
RDVALID.L
FOUND.L
TWOREQ.L
RESETREQ.L
RACCP
PIRBUS.L
ASITXOE.L
SIBSLOW
RAMCTL
SIBCELLS
CFOUND.H
TFOB
DRxClkEnb.H
MAKERQST.H
TCTRL
TBSEL
SIBINT.H
TA31_2
TASI15_0
T2.L
IOSTATCS
RMWDOE.L
(tristate)
MPRADR
PRDATA
SIBDMA
SDMACS
PRADDR IOSTATCS
IOCS DMACS
CS
BLKCT
STAT
TCTRL
TASI
RADR
TAH
TAL
IOSTATCS
MKTADR
PRDATA
CLKHIGH
CLKLOW
LDHIGH
LDLOW
TA31_2
DOHWS.L
TADR
SDMACLKS
CLKTAH
CLKTAL
CLKRADR
CLRBLKADR.L
CLKTASI
CLKBLKCT
BLKCTOE.L
STATOE.L
CLKTCTRL
PRCTL
DMACS
INCSIBADR.L
INCBLKADR.L
RESETREQ.L
CLKS
MKRADR
PRDATA
CLRBLKADR.L
LDBLKADR.L
CLKBLKADR
GCLK.H
CLRWDADR.L
OE
MPRADR
RADR
GCLK3.H
MKTASI
PRDATA
CLK
OE
TASI15_0
BASI
ASITXOE.L
SDMACTL
STATOE.L
CLKTCTRL
GCLK1.H
GCLK.H
GCLK.L
RESET.L
CCTRL
TIME
RFOB
AMASTER.L
RDVALID.L
FOUND.L
TWOREQ.L
RESETREQ.L
RACCP
PIRBUS.L
SIBSLOW
DOHWS.L
NZBLKCT.H
INCSIBADR.L
INCBLKADR.L
CLRWDADR.L
RAOE
CLRDOSIB.L
RAMCTL
SIBCELLS
T2.L
CFOUND.H
TFOUND.H
DRxClkEnb.H
MAKERQST.H
TCTRL
TBSEL
SIBINT.H
RMWDOE.L
PRDATA
CTL
GCLK1.H
GCLK2.H
SBLKCNT
PRDATA
CLK
LD
OE
CLR
NZBLKCT.H
BLKCT
TFOUND.H
TBUSY.H
GND
TFOB
GCLKS
GClk4.H
GClk3.H
GClk2.H
GClk1.H
GCLK3.H
GCLK2.H
GCLK1.H

SBLKCNT SIB/DMA/BLKCT 101

defines SBLKCNT
(inputs CLK LD OE CLR)
(outputs NZBLKCT.H)
(bidirect PRDATA)

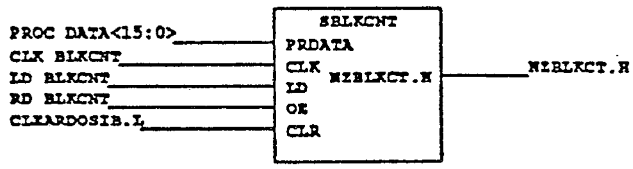


This counter contains the number of SIB data blocks that are to be transfered It is settable through the 80186's data bus with data bits <7:0> supplying the starting count. It is decremented after every SIB Reset Request pulse is issued. As long as the count value is not equal to zero SIB DMA requests wil continue to be made. A total of ( 256 * 32 = 8192 bytes ) may be transfered with one DMA request. The block counter is readable by the 80186 with data bits <7:0> and so the location of any data errors may be easily determined. Reading the counter will not effect the DMA transfer so the counter may be constantly polled while the DMA activity is going on. I don't advise doing this since the count value may be changing at the time it is being read. DOSIB.H will be active if the count value of either counter is nonzero.

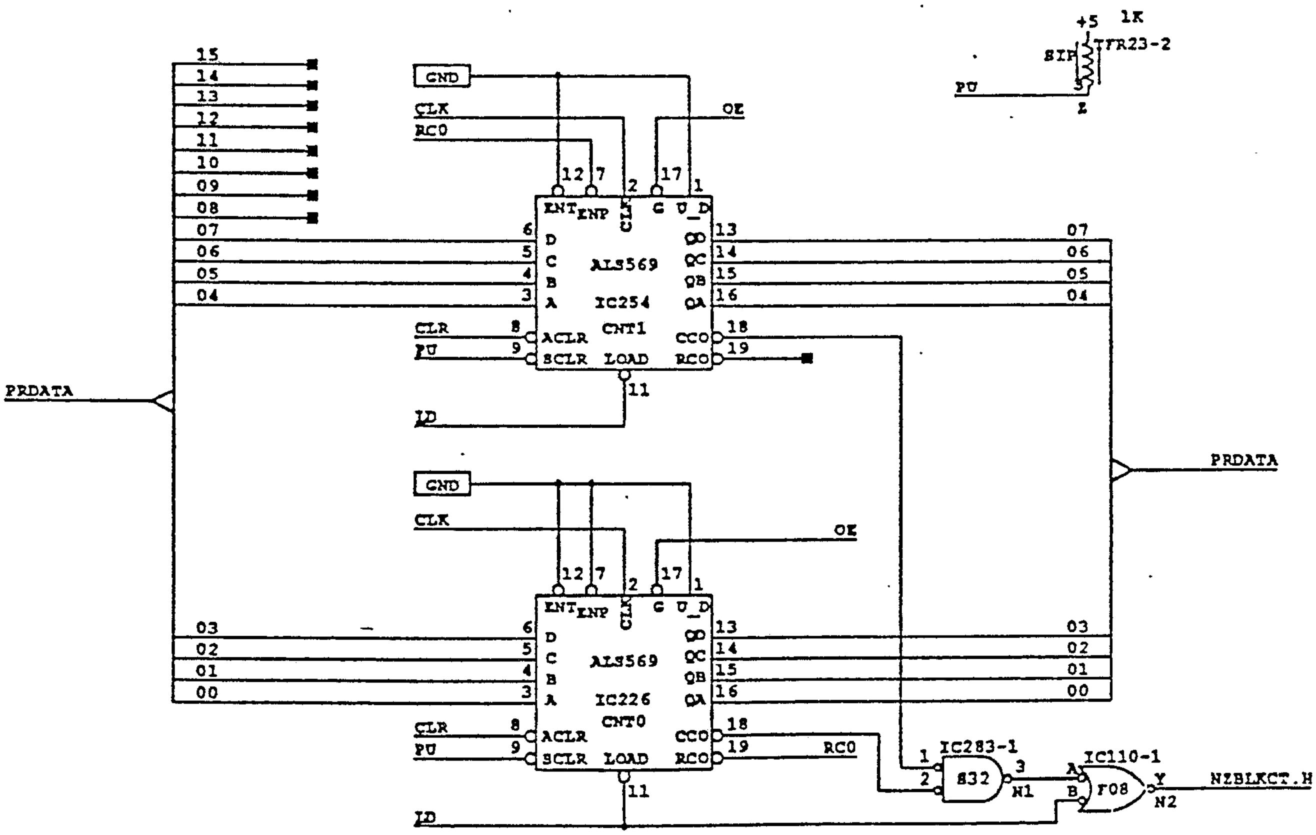

defines SDMACS
(inputs PRADDR IOCS)
(outputs DMACS IOSTATCS)

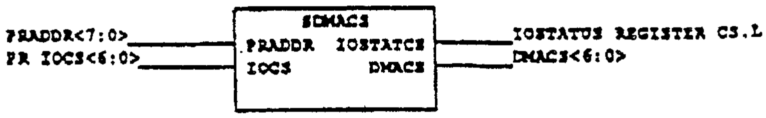


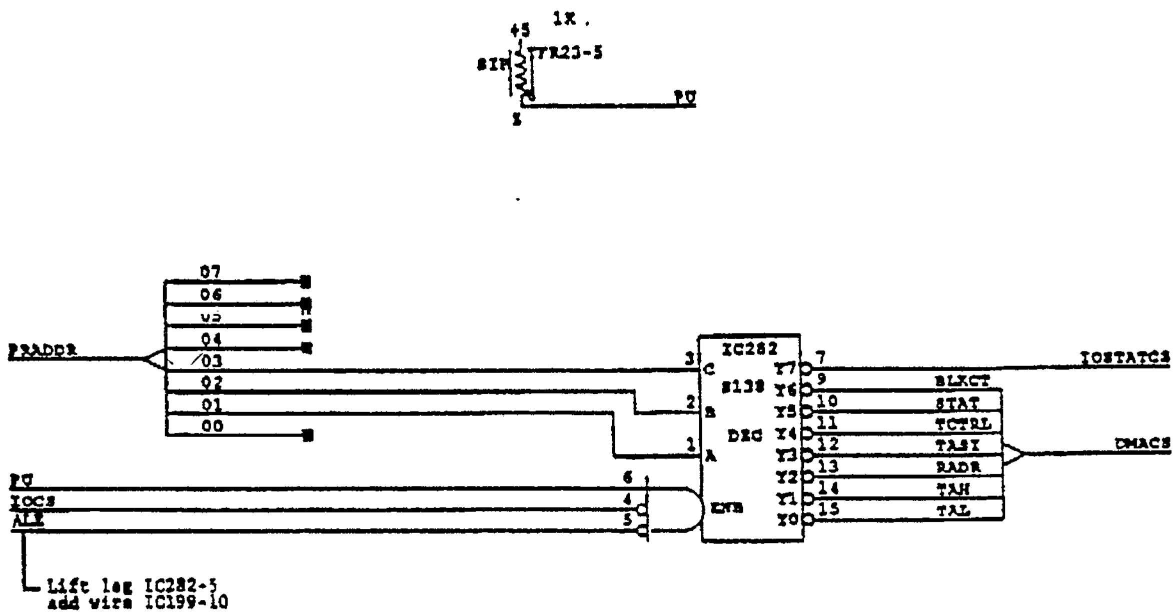


SIB DMA Chip Select Generation :

| | | |
|---|---|---|
| DMACS!TAL | : | SIB Transmit Address <16:02> (Write Only) |
| DMACS!TAH | : | SIB Transmit Address <31:17> (Write Only) |
| DMACS!RADR | : | SIB MultiPort Ram Address <11:0> (Write Only) |
| DMACS!TASI | : | SIB Transmit ASI <15:0> (Write Only) |
| DMACS!TCTRL | : | SIB Transmit Control Register (Write Only) |
| DMACS!STAT | : | SIB DMA Status Register (Read Only) |
| DMACS!BLXCT | : | SIB Transfer Count Register (Read/Write) |
| IOSTATCS | : | 3BIOP SIB HWS Status Register (Write Only) |

SDMACLKS SIB/DMA/CLKS 102

defines SDMACLKS

| (inputs) | (outputs) | |
|---|---|---|
| PRCTL | STATOE.L | CLKTASI |
| INCBLKADR.L | BLKCTOE.L | CLKRADR |
| DMACS | CLKBLKCT | CLKTAH |
| INCSIBADR.L | CLKTCTRL | CLKTAL |
| RESETREQ.L | CLRBLKADR.L | |

SDMACLKS

| | |
|---|---|
| | CLKTAH |
| | CLKTAL |
| | CLKRADR |
| PRCTL | CLRBLKADR.L |
| DMACS | CLKTASI |
| INCSIBADR.L | CLKBLKCT |
| INCBLKADR.L | BLKCTOE.L |
| RESETREQ.L | STATOE.L |
| | CLKTCTRL |

Output Definitions :

PRCLKTAL : Clock SIB Transmit Address <16:02>
PRCLKTAH : Clock SIB Transmit Address <31:17>
CLKRADR : Clock SIB MultiPort Ram Address <11:3>
CLKTASI : Clock SIB Transmit ASI <15:0>
CLKTCTRL : Clock SIB Transmit Control Register
CLKBLKCT : Clock SIB Block Count Register
BLKCTOE.L : Output Enable SIB Block Count Register
STATOE.L : Output Enable SIB Status Register

PAL Equations ( Active Low Outputs ) :

```
PRCLKTAL  = SIBCS|TAL * PRCTL|HWR.L
PRCLKTAH  = SIBCS|TAH * PRCTL|HWR.L
CLKRADR   = (SIBCS|RADR * PRCTL|HWR.L) + INCBLKADR.L
CLKTASI   = SIBCS|TASI * PRCTL|HWR.L
CLKTCTRL  = SIBCS|TCTRL * PRCTL|HWR.L
PRCLKBCT  = SIBCS|BLKCT * PRCTL|HWR.L
BLKCTOE.L = SIBCS|BLKCT * PRCTL|RD.L
STATOE.L  = SIBCS|STAT * PRCTL|RD.L
```

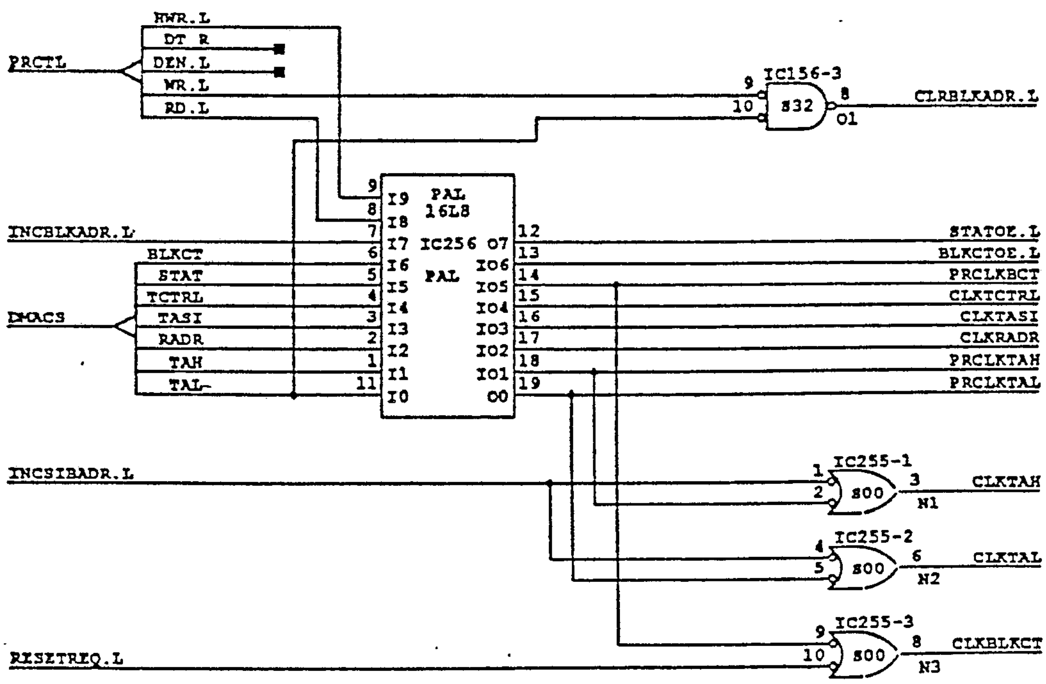

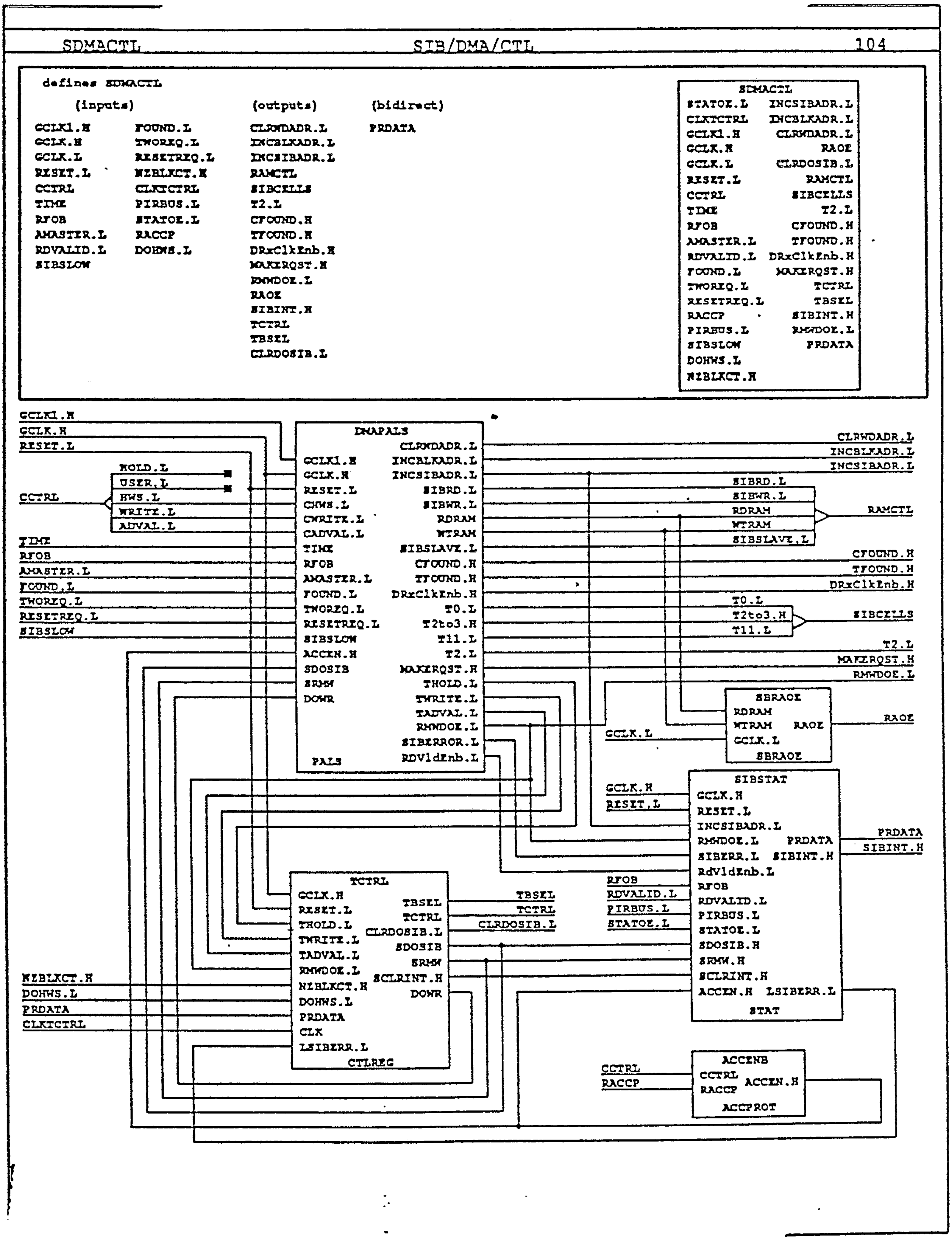
SDMACTL
SIB/DMA/CTL
104
defines SDMACTL
(inputs)
GCLK1.H
GCLK.H
GCLK.L
RESET.L
CCTRL
TIME
RFOB
AMASTER.L
RDVALID.L
SIBSLOW
FOUND.L
TWOREQ.L
RESETREQ.L
NZBLKCT.H
CLKTCTRL
PIRBUS.L
STATOE.L
RACCP
DOHWS.L
(outputs)
CLRWDADR.L
INCBLKADR.L
INCSIBADR.L
RAMCTL
SIBCELLS
T2.L
CFOUND.H
TFOUND.H
DRxClkEnb.H
MAKERQST.H
RMWDOE.L
RAOE
SIBINT.H
TCTRL
TBSEL
CLRDOSIB.L
(bidirect)
PRDATA
DMAPALS
PALS
TCTRL
CTLREG
SBRAOE
SIBSTAT
STAT
ACCENB
ACCPROT
HOLD.L
USER.L
HWS.L
WRITE.L
ADVAL.L
SIBRD.L
SIBWR.L
RDRAM
WTRAM
SIBSLAVE.L
T0.L
T2to3.H
T11.L
ACCEN.H
SDOSIB
SRMW
DOWR
THOLD.L
TWRITE.L
TADVAL.L
SIBERROR.L
RDV1dEnb.L
SCLRINT.H
LSIBERR.L
SIBERR.L
CLK

defines ACCENB
(inputs CCTRL RACCP)
(outputs ACCEN.H)

ACCENB
CCTRL ACCEN.H
RACCP

RACCP becomes valid in cell 1 of a SIB Transfer Frame. ACCEN.H is asserted from cells 1-6 if there is no access protection violation. It is always asserted if it is a Hardware Space Access (CCTRL!HWS.L asserted).

| CCTRL!WRITE.L | CCTRL!USER.L | ACCEN.H |
|---|---|---|
| 0 | 0 | = RACCP!USERWRITE |
| 0 | 1 | RACCP!SUPERWRITE |
| 1 | 0 | RACCP!USERREAD |
| 1 | 1 | RACCP!SUPERREAD |

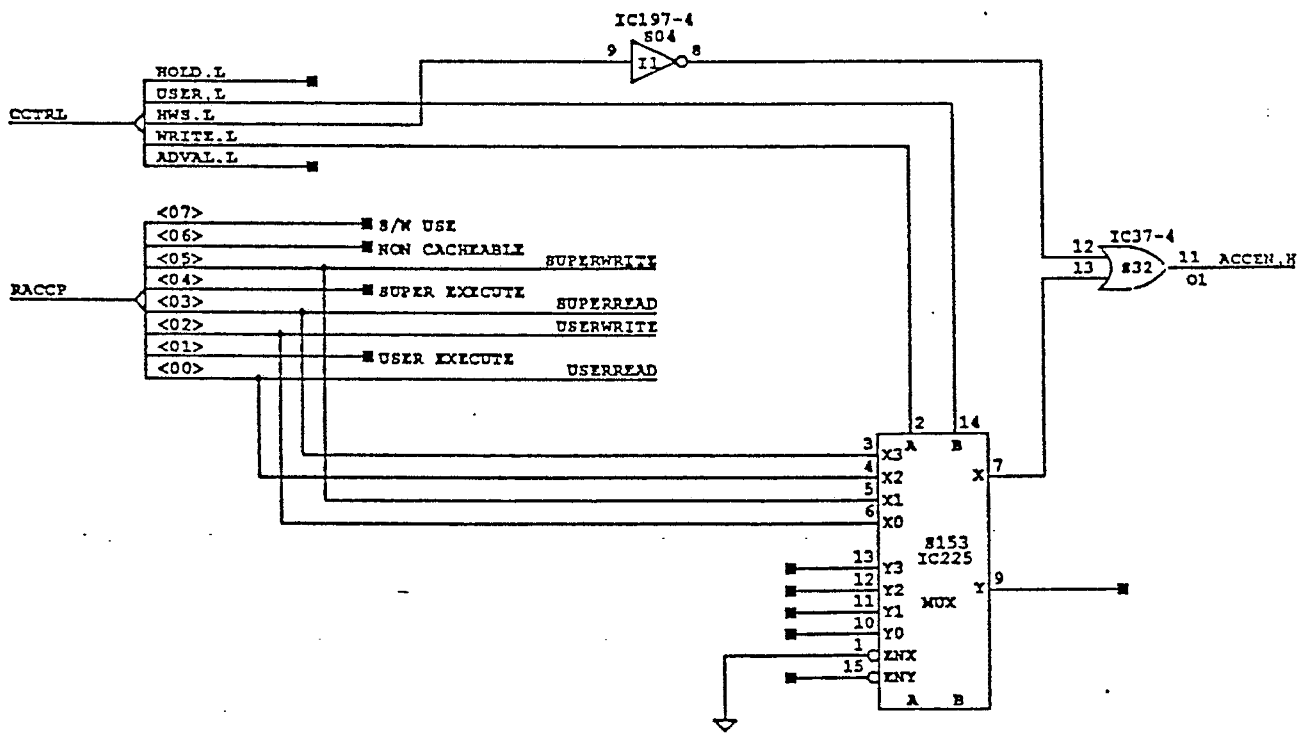

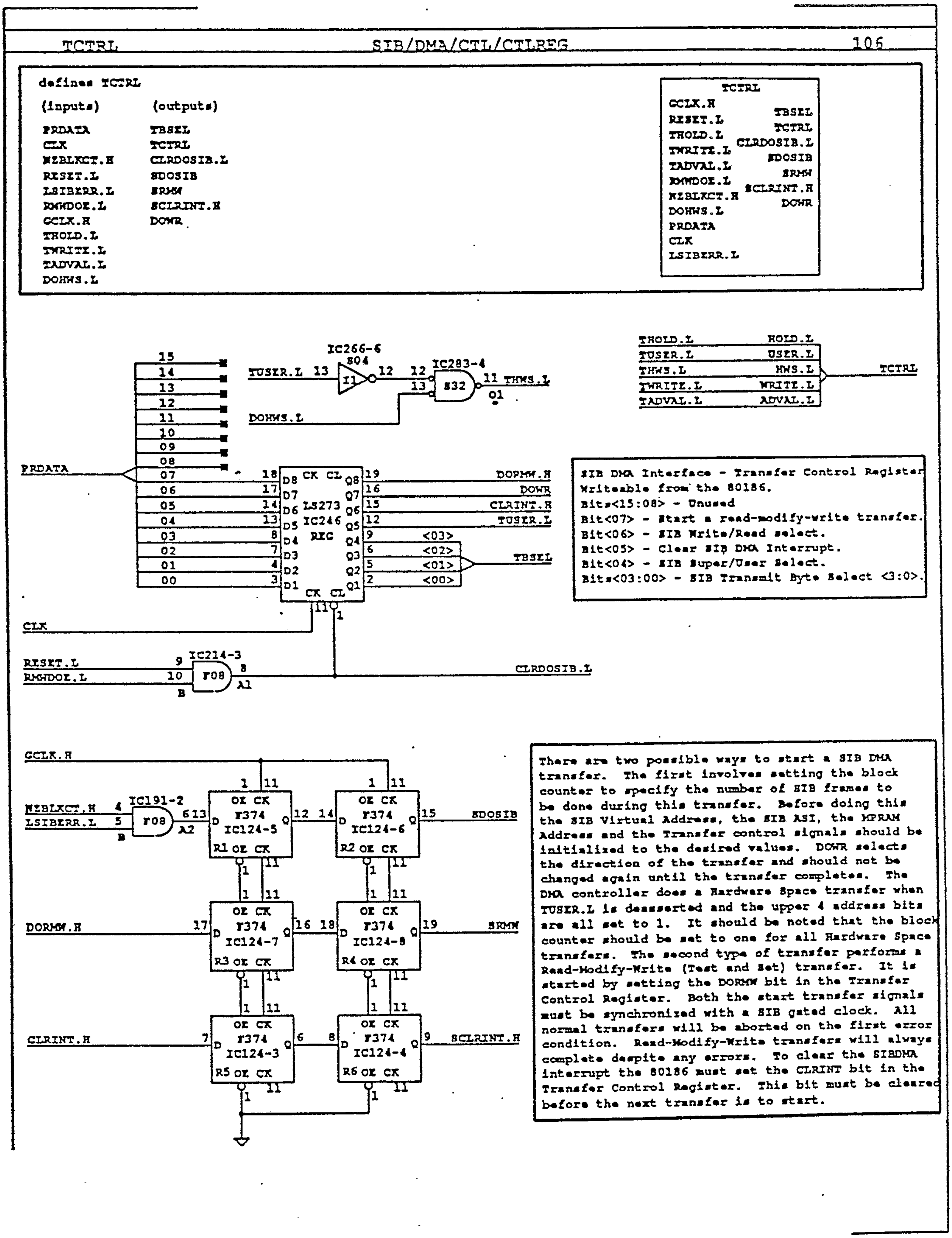
TCTRL
SIB/DMA/CTL/CTLREG
106
defines TCTRL
(inputs)
(outputs)
PRDATA
CLK
NZBLKCT.H
RESET.L
LSIBERR.L
RMWDOE.L
GCLK.H
THOLD.L
TWRITE.L
TADVAL.L
DOHWS.L
TBSEL
TCTRL
CLRDOSIB.L
SDOSIB
SRMW
SCLRINT.H
DOWR
TCTRL
GCLK.H
RESET.L
THOLD.L
TWRITE.L
TADVAL.L
RMWDOE.L
NZBLKCT.H
DOHWS.L
PRDATA
CLK
LSIBERR.L
TBSEL
TCTRL
CLRDOSIB.L
SDOSIB
SRMW
SCLRINT.H
DOWR
THOLD.L
TUSER.L
THWS.L
TWRITE.L
TADVAL.L
HOLD.L
USER.L
HWS.L
WRITE.L
ADVAL.L
TCTRL
IC266-6
IC283-4
TUSER.L
DOHWS.L
THWS.L
PRDATA
LS273
IC246
REG
DORMW.H
DOWR
CLRINT.H
TUSER.L
TBSEL
CLK
RESET.L
RMWDOE.L
IC214-3
F08
CLRDOSIB.L
SIB DMA Interface - Transfer Control Register
Writeable from the 80186.
Bits<15:08> - Unused
Bit<07> - Start a read-modify-write transfer.
Bit<06> - SIB Write/Read select.
Bit<05> - Clear SIB DMA Interrupt.
Bit<04> - SIB Super/User Select.
Bits<03:00> - SIB Transmit Byte Select <3:0>.
GCLK.H
NZBLKCT.H
LSIBERR.L
IC191-2
F08
F374
IC124-5
IC124-6
SDOSIB
DORMW.H
IC124-7
IC124-8
SRMW
CLRINT.H
IC124-3
IC124-4
SCLRINT.H
There are two possible ways to start a SIB DMA transfer. The first involves setting the block counter to specify the number of SIB frames to be done during this transfer. Before doing this the SIB Virtual Address, the SIB ASI, the MPRAM Address and the Transfer control signals should be initialized to the desired values. DOWR selects the direction of the transfer and should not be changed again until the transfer completes. The DMA controller does a Hardware Space transfer when TUSER.L is deasserted and the upper 4 address bits are all set to 1. It should be noted that the block counter should be set to one for all Hardware Space transfers. The second type of transfer performs a Read-Modify-Write (Test and Set) transfer. It is started by setting the DORMW bit in the Transfer Control Register. Both the start transfer signals must be synchronized with a SIB gated clock. All normal transfers will be aborted on the first error condition. Read-Modify-Write transfers will always complete despite any errors. To clear the SIBDMA interrupt the 80186 must set the CLRINT bit in the Transfer Control Register. This bit must be cleared before the next transfer is to start.

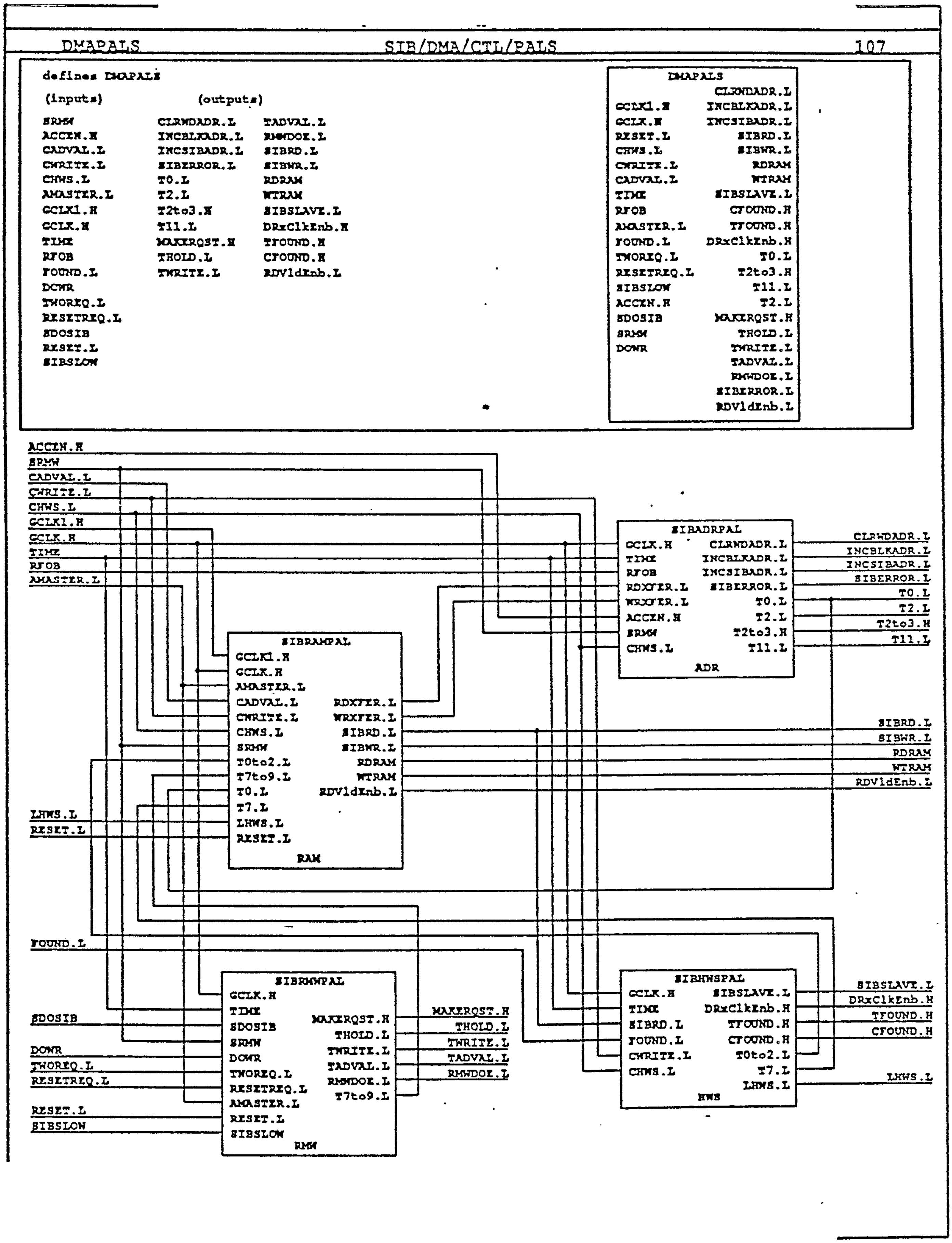
DMAPALS
SIB/DMA/CTL/PALS
107
defines DMAPALS
(inputs)
SRMW
ACCEN.H
CADVAL.L
CWRITE.L
CHWS.L
AMASTER.L
GCLK1.H
GCLK.H
TIME
RFOB
FOUND.L
DOWR
TWOREQ.L
RESETREQ.L
SDOSIB
RESET.L
SIBSLOW
(outputs)
CLRWDADR.L
INCBLKADR.L
INCSIBADR.L
SIBERROR.L
T0.L
T2.L
T2to3.H
T11.L
MAKERQST.H
THOLD.L
TWRITE.L
TADVAL.L
RMWDOE.L
SIBRD.L
SIBWR.L
RDRAM
WTRAM
SIBSLAVE.L
DRxClkEnb.H
TFOUND.H
CFOUND.H
RDV1dEnb.L
SIBADRPAL
ADR
SIBRAMPAL
RAM
SIBRMWPAL
RMW
SIBHWSPAL
HWS
RDXFER.L
WRXFER.L
T0to2.L
T7to9.L
T7.L
LHWS.L

defines SIBADRPAL

| (inputs) | (outputs) |
|---|---|
| TIME | CLRWDADR.L |
| RFOB | INCBLKADR.L |
| RDXFER.L | INCSIBADR.L |
| WRXFER.L | SIBERROR.L |
| ACCEN.H | T0.L |
| SRMW | T2.L |
| GCLK.H | T2to3.H |
| CHWS.L | T11.L |

| SIBADRPAL | |
|---|---|
| GCLK.H | CLRWDADR.L |
| TIME | INCBLKADR.L |
| RFOB | INCSIBADR.L |
| RDXFER.L | SIBERROR.L |
| WRXFER.L | T0.L |
| ACCEN.H | T2.L |
| SRMW | T2to3.H |
| CHWS.L | T11.L |

Output Defintions :

OCLRWDADR.L - Clear the low three bits of the MPRAM address counter. For a SIB Write Transfer CLRWDADR is asserted in cell 10. For a SIB Read Transfer CLRWDADR is asserted in cell 3.

INCBLKADR.L - Increment the block portion of the MPRAM address counter. For a SIB Write Transfer INCBLKADR is asserted in cell 8. For a SIB Read Transfer INCBLKADR is asserted in cell 1.

INCSIBADR.L - Increment the SIB virtual transfer address. Asserted in cell 2 of a succesful transfer frame unless this is a Read-Modify-Write operation.

SIBERROR.L - Asserted to flag a SIB transfer error. This includes a page fault and an access protection violation. The data valid are detected in the sibstat pal.

T0.L - Asserted for SIB cell 0.

T2to3.H - Asserted for SIB cells 2 and 3.

T11.L - Asserted for SIB cell 11.

T2.L - Asserted for SIB cells 2.

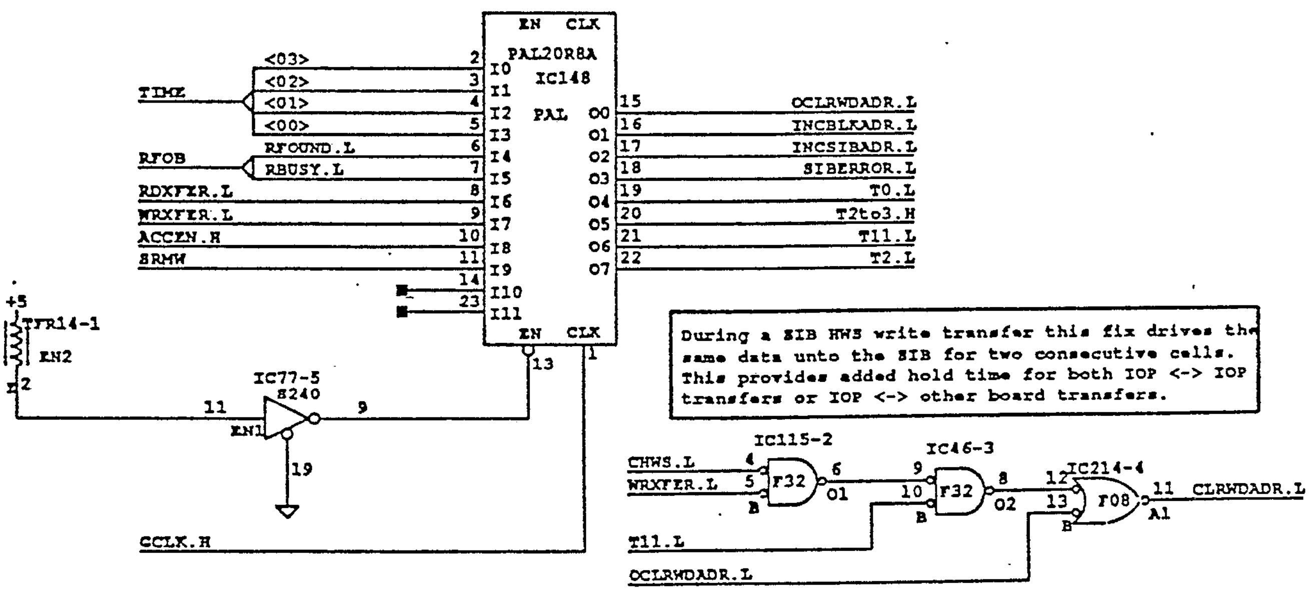

defines SIBHWSPAL

| (inputs) | (outputs) |
|---|---|
| TIME | SIBSLAVE.L |
| SIBRD.L | DRxClkEnb.H |
| FOUND.L | TFOUND.H |
| CWRITE.L | CFOUND.H |
| CHWS.L | T0to2.L |
| GCLK.H | T7.L |
| | LHWS.L |

| SIBHWSPAL | |
|---|---|
| GCLK.H | SIBSLAVE.L |
| TIME | DRxClkEnb.H |
| SIBRD.L | TFOUND.H |
| FOUND.L | CFOUND.H |
| CWRITE.L | T0to2.L |
| CHWS.L | T7.L |
| | LHWS.L |

Output Defintions :

SIBSLAVE.L - Asserted in SIB cells 11-3 if CFOUND is asserted. Indicates the IOP will act as a SIB Slave for this frame.

DRxClkEnb.L - SIB Receive Data Clock Enable. Asserted in SIB cells 4-0 for a Master Virtual Read. Asserted in SIB cell 4 for a Master Hardware Space Read. Asserted in SIB cell 1 for a Slave Hardware Space Write.

D1SIBRD.L - Asserted for SIB cells 3-1 for a frame in which the IOP is the the SIB Address Master for a read transfer.

LHWS.L - Asserted for SIB cells 1-0 if the current transfer frame is a Hardware Space Transfer.

TFOUND.H - Asserted for SIB cells 11 if FOUND.L is asserted.

CFOUND.H - Asserted for SIB cells 8-7 if FOUND.L was asserted in SIB cell 7. Its assertion indicates the IOP will be a SIB Slave during the next transfer frame.

T0to2.L - Asserted for SIB cells 0, 1, and 2.

T7.L - Asserted for SIB cell 7.

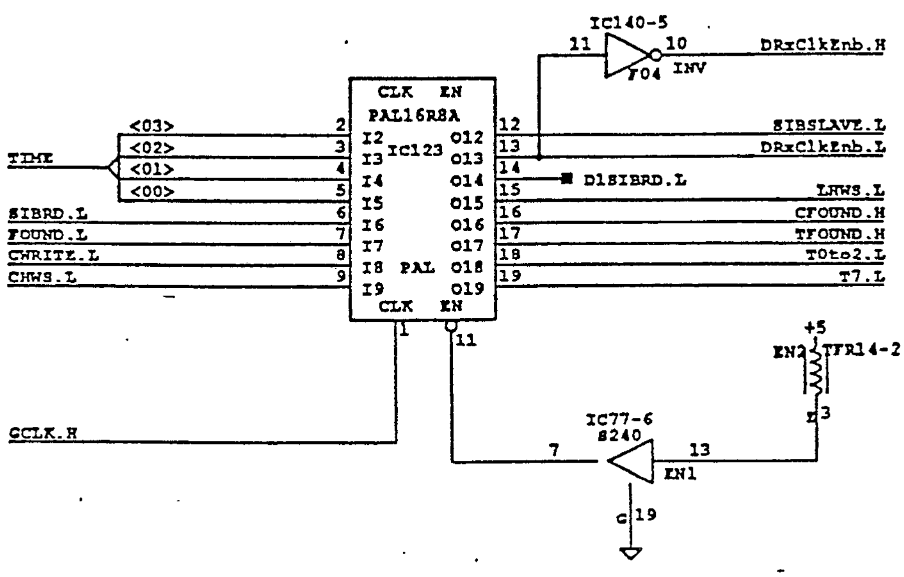

SIBRAMPAL    SIB/DMA/CTL/PALS/RAM    110

defines SIBRAMPAL

| (inputs) | (outputs) |
|---|---|
| AMASTER.L | RDXFER.L |
| CADVAL.L | WRXFER.L |
| CWRITE.L | SIBRD.L |
| CHWS.L | SIBWR.L |
| SRMW | RDRAM |
| T0to2.L | WTRAM |
| T7to9.L | RDVldEnb.L |
| T0.L | |
| T7.L | |
| LHWS.L | |
| RESET.L | |
| GCLK.H | |
| GCLK1.H | |

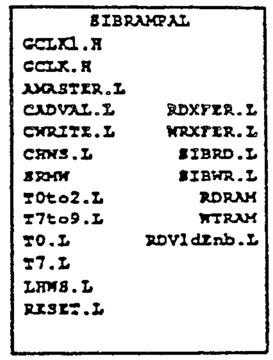


Output Defintions :

RDXFER.L - Asserted for SIB Cells 1 to 0 for a frame in which the IOP. is the SIB Address Master for a read transfer.

WRXFER.L - Asserted for SIB Cells 8 to 7 for a frame in which the IOP. is the SIB Address Master for a write transfer.

SIBRD.L - Asserted for SIB Cells 2 to 0 for a frame in which the IOP. is the SIB Address Master for a read transfer.

SIBWR.L - Asserted for SIB Cells 9 to 7 for a frame in which the IOP. is the SIB Address Master for a write transfer.

WTRAM - Asserted for SIB Cells 4 to 0 for a frame in which the IOP. is the SIB Address Master for a read transfer.

RDRAM - Asserted for SIB Cells 11 to 7 for a frame in which the IOP. is the SIB Address Master for a write transfer.

D1RDRAM - Asserted for SIB Cells 12 to 8 for a frame in which the IOP. is the SIB Address Master for a write transfer.

RDVldEnb.L - RDVldEnb.L is asserted for SIB cells in which RDVALID.L is asserted. A memory board should be asserting SDVALID.L one clock tick prior to this.
For a Master Virtual Read Transfer this is in SIB cells 6 to 1.
For a Master Virtual Write Transfer this is in SIB cells 3 to 10.

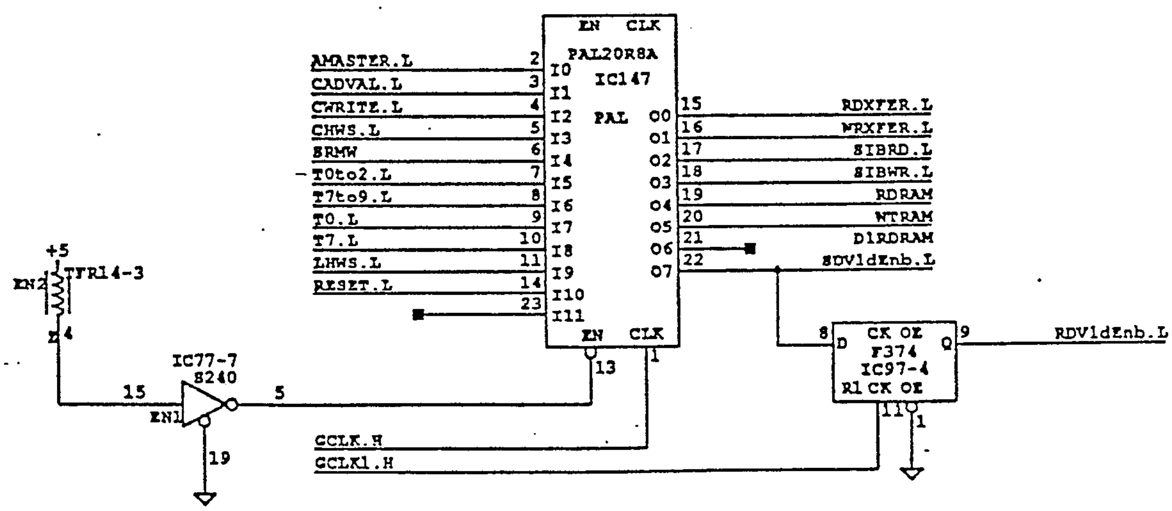

SIBRMWPAL SIB/DMA/CTL/PALS/RMW 111

defines SIBRMWPAL

| (inputs) | (outputs) |
|---|---|
| TIME | MAKERQST.H |
| SDOSIB | THOLD.L |
| SRMW | TWRITE.L |
| DOWR | TADVAL.L |
| TWOREQ.L | RMWDOE.L |
| RESETREQ.L | T7to9.L |
| AMASTER.L | |
| RESET.L | |
| GCLK.H | |
| SIBSLOW | |

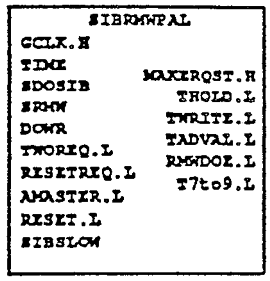


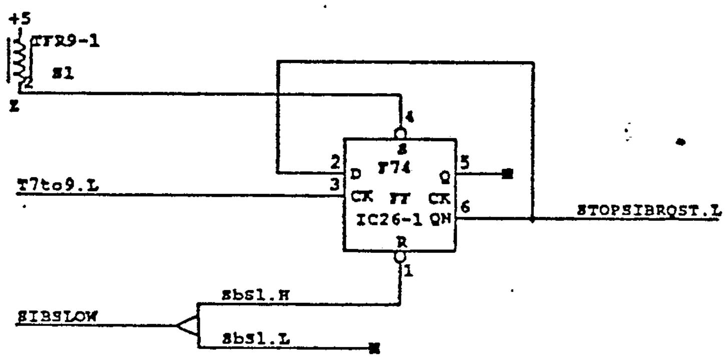


STOPSIBRQST.L is asserted every other SIB frame whenever Sbs1.H is asserted. Its purpose is to inhibit SIB accesses every other frame in order to free the MultiPort Ram for IO accesses. In particular it should be asserted in order to achieve the data transfer rates required for synchronous SCSI (2.5 MBytes/Second). Other than slowing the SIBDMA transfers it should not have any functional effect on the system.
Note : Due to its asynchronous nature SibSlow should not be asserted by the processor while a SIBDMA transfer is in progress.

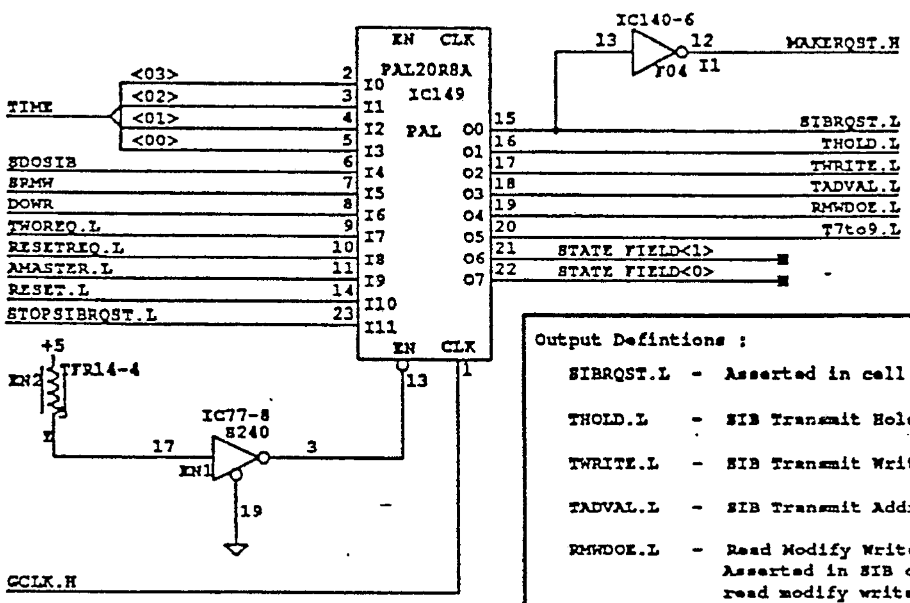


Output Defintions :

SIBRQST.L - Asserted in cell 0 to request a SIB Transfer.

THOLD.L - SIB Transmit Hold.

TWRITE.L - SIB Transmit Write.

TADVAL.L - SIB Transmit Address Valid.

RMWDOE.L - Read Modify Write Data Register Output Enable. Asserted in SIB cell 0 during write phase of a read modify write operation read modify write operation

T7to9.L - Asserted for SIB cells 7, 8, and 9.

Read-Modify-Write Request State Machine Control :
State Field<1:0> : 0 - Write State
1 - Hold State
2 - Read State
3 - Idle State

defines SBRAOE
(inputs RDRAM WTRAM CCLK.L)
(outputs RAOE)

| SBRAOE | |
|---|---|
| RDRAM | |
| WTRAM | RAOE |
| CCLK.L | |

RAOE enables the SIB MPRAM Address onto the shared Ram Address Bus.
RDRAM is asserted in cells 11 to 7 during a SIB Write when the IOP is master
WTRAM is asserted in cells 4 to 0 during a SIB Read when the IOP is master.
For a Master Write Transfer RAOE is asserted in cells 11.5 to 7.5.
For a Master Read Transfer RAOE is asserted in cells 4.5 to 0.5.

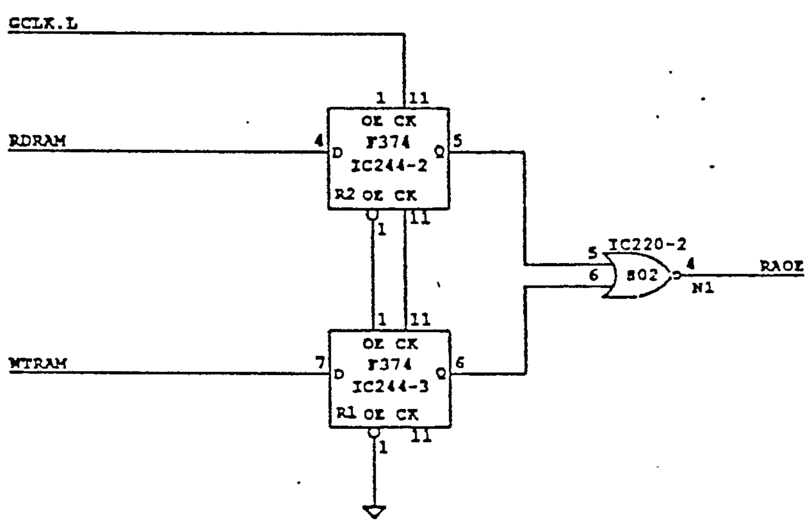

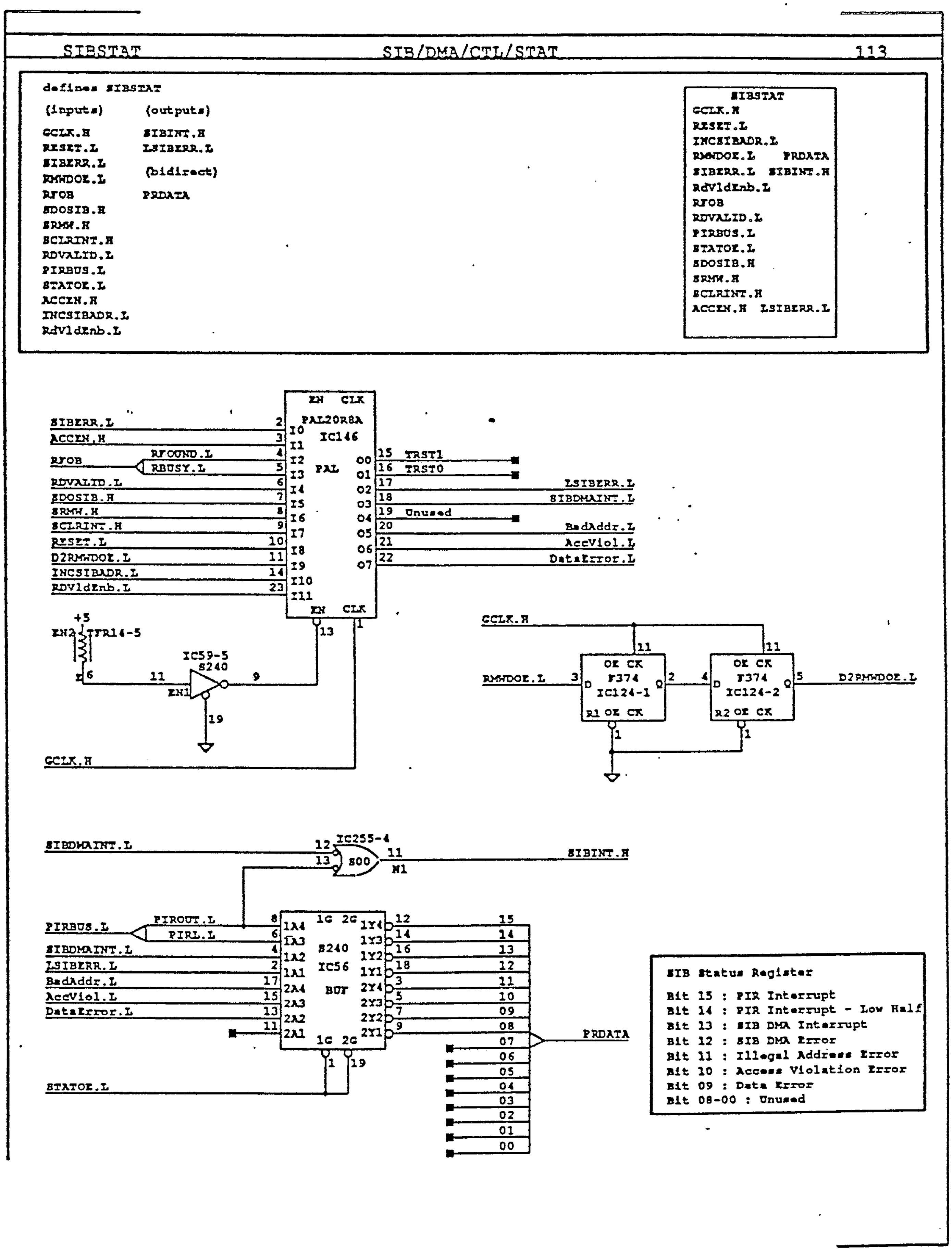

SIBSTAT
SIB/DMA/CTL/STAT
113
defines SIBSTAT
(inputs)
GCLK.H
RESET.L
SIBERR.L
RMWDOE.L
RFOB
SDOSIB.H
SRMW.H
SCLRINT.H
RDVALID.L
PIRBUS.L
STATOE.L
ACCEN.H
INCSIBADR.L
RdVldEnb.L
(outputs)
SIBINT.H
LSIBERR.L
(bidirect)
PRDATA
SIBSTAT
GCLK.H
RESET.L
INCSIBADR.L
RMWDOE.L PRDATA
SIBERR.L SIBINT.H
RdVldEnb.L
RFOB
RDVALID.L
PIRBUS.L
STATOE.L
SDOSIB.H
SRMW.H
SCLRINT.H
ACCEN.H LSIBERR.L
PAL20R8A
IC146
PAL
EN CLK
SIBERR.L
ACCEN.H
RFOB
RFOUND.L
RBUSY.L
RDVALID.L
SDOSIB.H
SRMW.H
SCLRINT.H
RESET.L
D2RMWDOE.L
INCSIBADR.L
RDVldEnb.L
TRST1
TRST0
LSIBERR.L
SIBDMAINT.L
Unused
BadAddr.L
AccViol.L
DataError.L
+5
EN2
FR14-5
IC59-5
S240
EN1
GCLK.H
F374
IC124-1
F374
IC124-2
RMWDOE.L
D2RMWDOE.L
IC255-4
S00
N1
SIBDMAINT.L
SIBINT.H
PIRBUS.L
PIROUT.L
PIRL.L
SIBDMAINT.L
LSIBERR.L
BadAddr.L
AccViol.L
DataError.L
S240
IC56
BUF
PRDATA
STATOE.L
SIB Status Register
Bit 15 : PIR Interrupt
Bit 14 : PIR Interrupt - Low Half
Bit 13 : SIB DMA Interrupt
Bit 12 : SIB DMA Error
Bit 11 : Illegal Address Error
Bit 10 : Access Violation Error
Bit 09 : Data Error
Bit 08-00 : Unused

MKRADR SIB/DMA/PADR 114

```
defines MKRADR
(inputs PRDATA CLRBLKADR.L LDBLKADR.L CLRWDADR.L
        CLKBLKADR GCLK.H OE)
(tristate MPRADR)
```

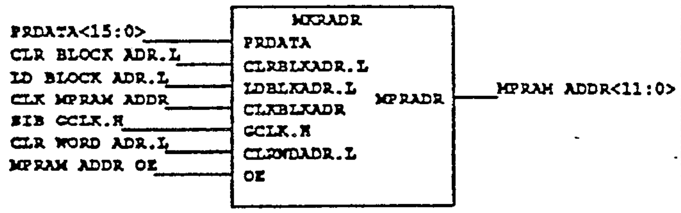


MPRADR is the MultiPort Ram Address for SIB DMA jobs. It selects one of 4K - 32 bit words. The address is latched with a free running SIB clock. The address is initialized with an 80186 write to the MultiPort Ram Address Counter. It is incremented for every SIB word that is transfered. The lower 3 bits of the address are not settable by the 80186 so DMA transfers must start on 8 word boundaries. MPRADR is cleared by writing the low word of the SIB Virtual Address Counter.

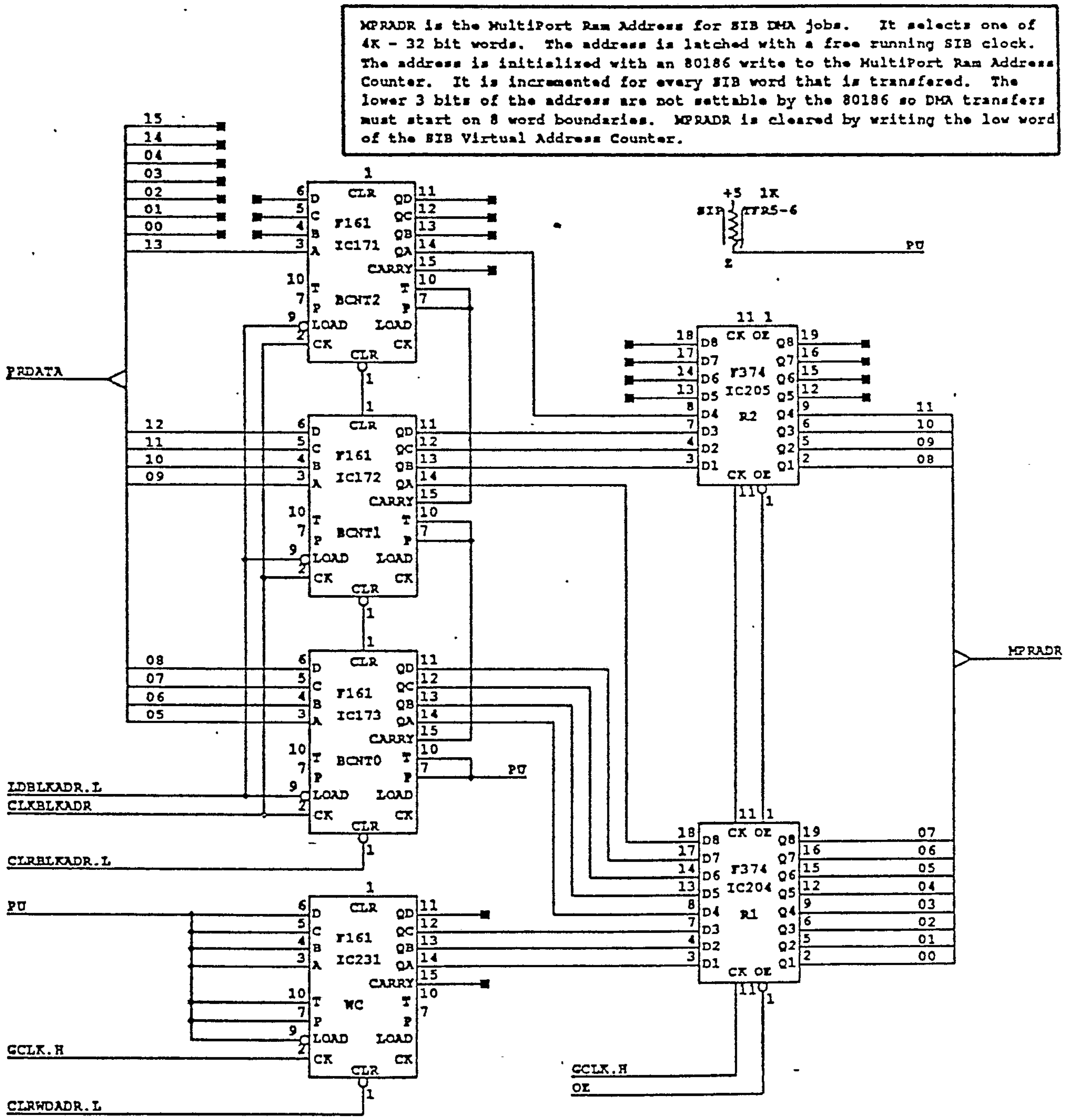

defines MKTASI
(inputs PRDATA CLK OE)
(tristate TASI15_0)

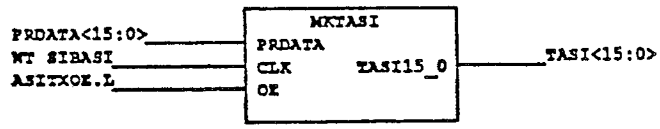


TASI15_0 is connected to the board bus of the SASI F245's. TASI15_0 is writeable by the 80186 and should remain constant for the duration of one SIB transfer ( which may be multiple blocks ). TASI15_0 is enabled onto the board bus with ASITXOE.L which is generated by the SIB controller.

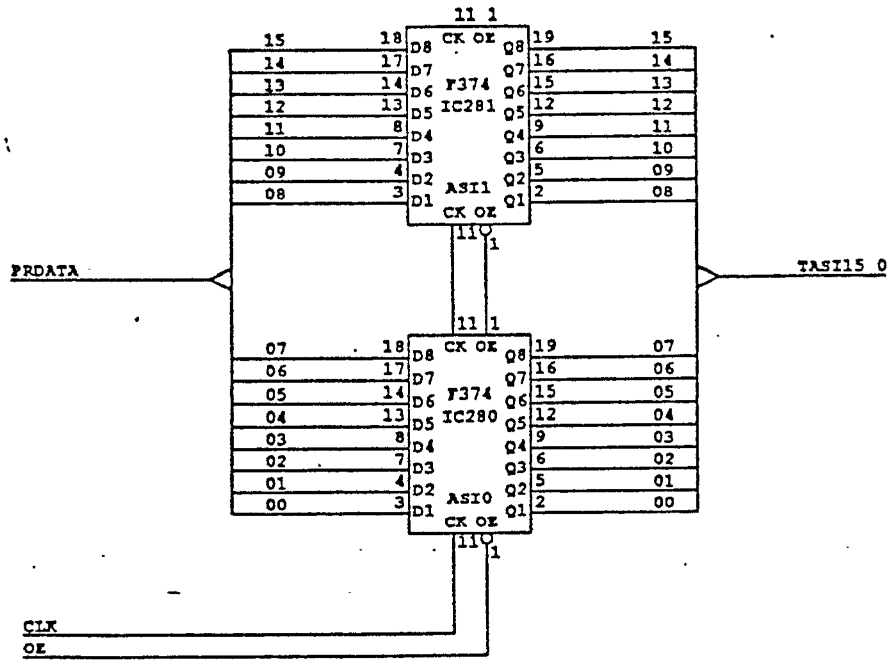

MKTADR SIB/DMA/TADR 116

defines MKTADR
(inputs PRDATA CLKHIGH CLKLOW LDHIGH LDLOW)
(outputs TA31_2 DOHWS.L)

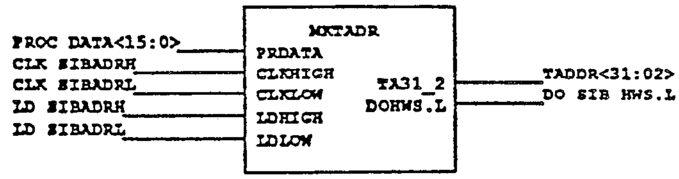


TA31_2 provides bits <31:02> of the SIB transmit address. TA31_2 is clocked into the TADDR F374's to go out onto the SIB during cell 3 of a SIB access frame.
The transmit address is incremented in cell 2 if a Master Data Cycle is in progress and there are no errors. ( i.e. , Found and -Busy). The initial transmit address is set up by the 80186 at two different 16 bit locations in its address space. The address mapping is as follows :

ADDR(TAH) : DATA<15:00> -> TA<31:16>
ADDR(TAL) : DATA<15:02> -> TA<15:02>
DATA<01:00> -> Unused

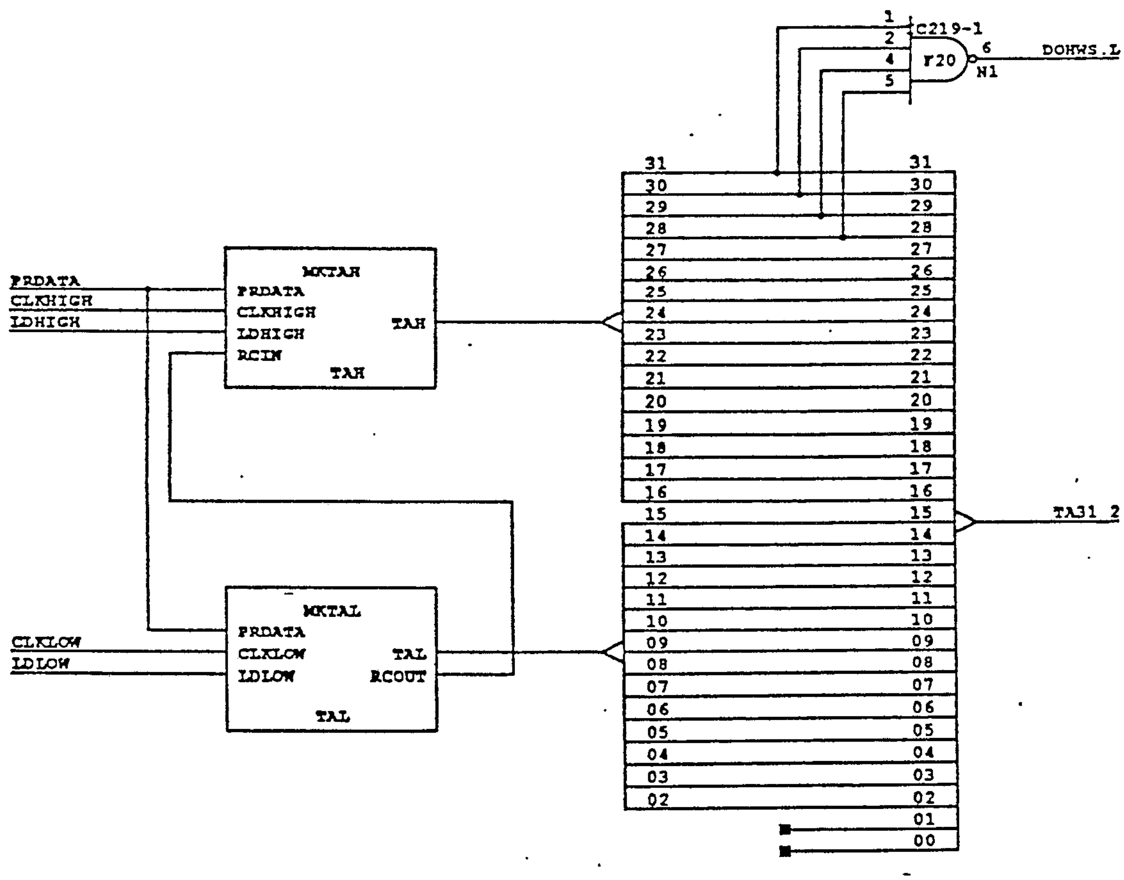

MKTAH SIB/DMA/TADR/TAH 117

defines MKTAH
(inputs PRDATA CLKHIGH LDHIGH RCIN)
(outputs TAH)

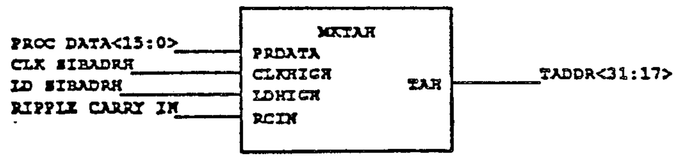


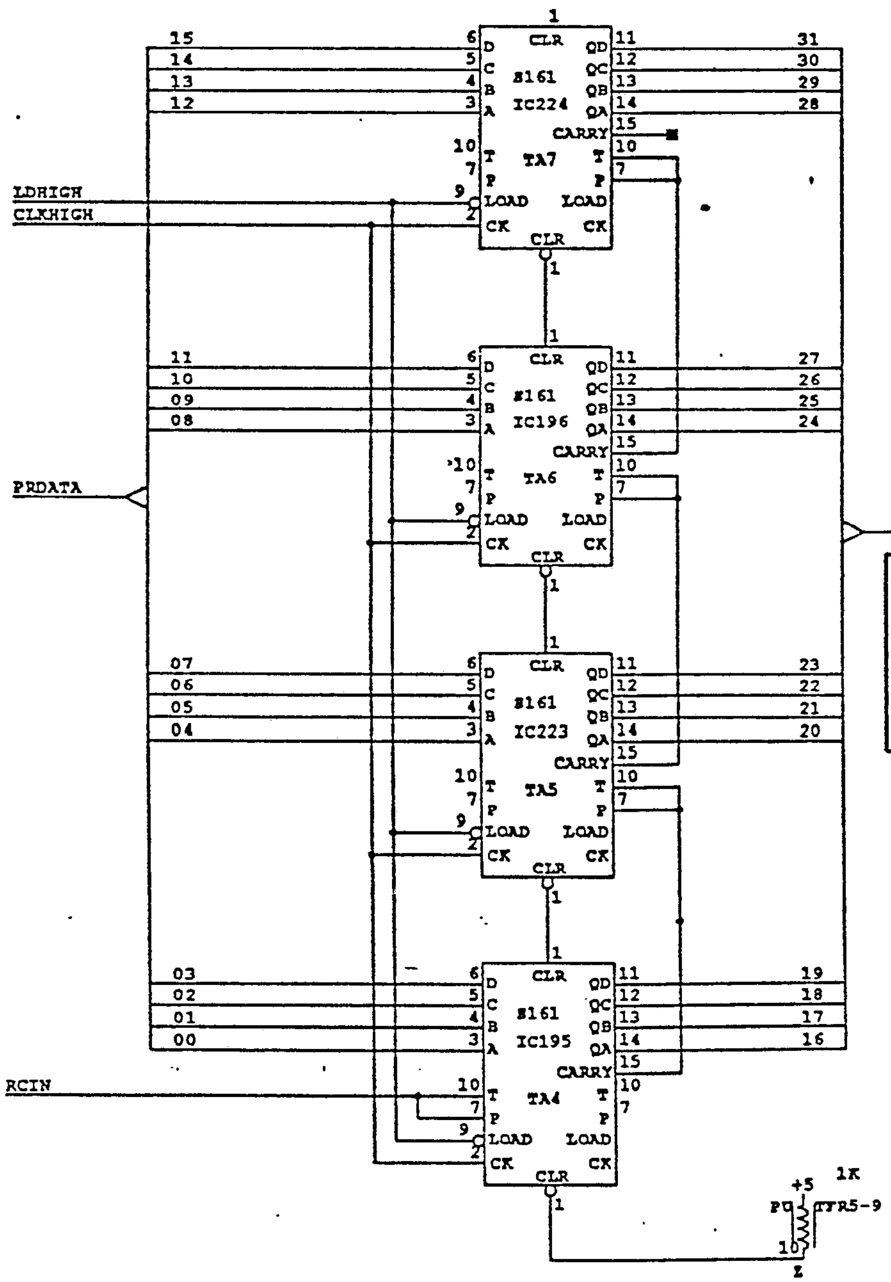


TAH provides bits <31:16> of the SIB Virtual Transmit address. The TADDR is incremented in cell 2 if a Master Data Cycle is in progress and there are no errors ( i.e., Found and -Busy). Note that TA<31:16> corresponds to 80186 data bits <15:00> when the upper TADDR bits See file MKTADR for an explanation.

defines MKTAL
(inputs PRDATA CLKLOW LDLOW)
(outputs TAL RCOUT)

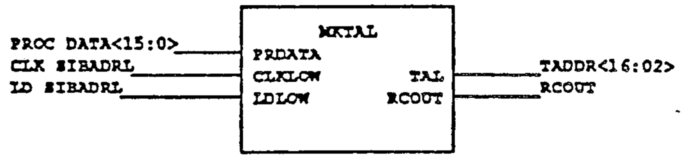


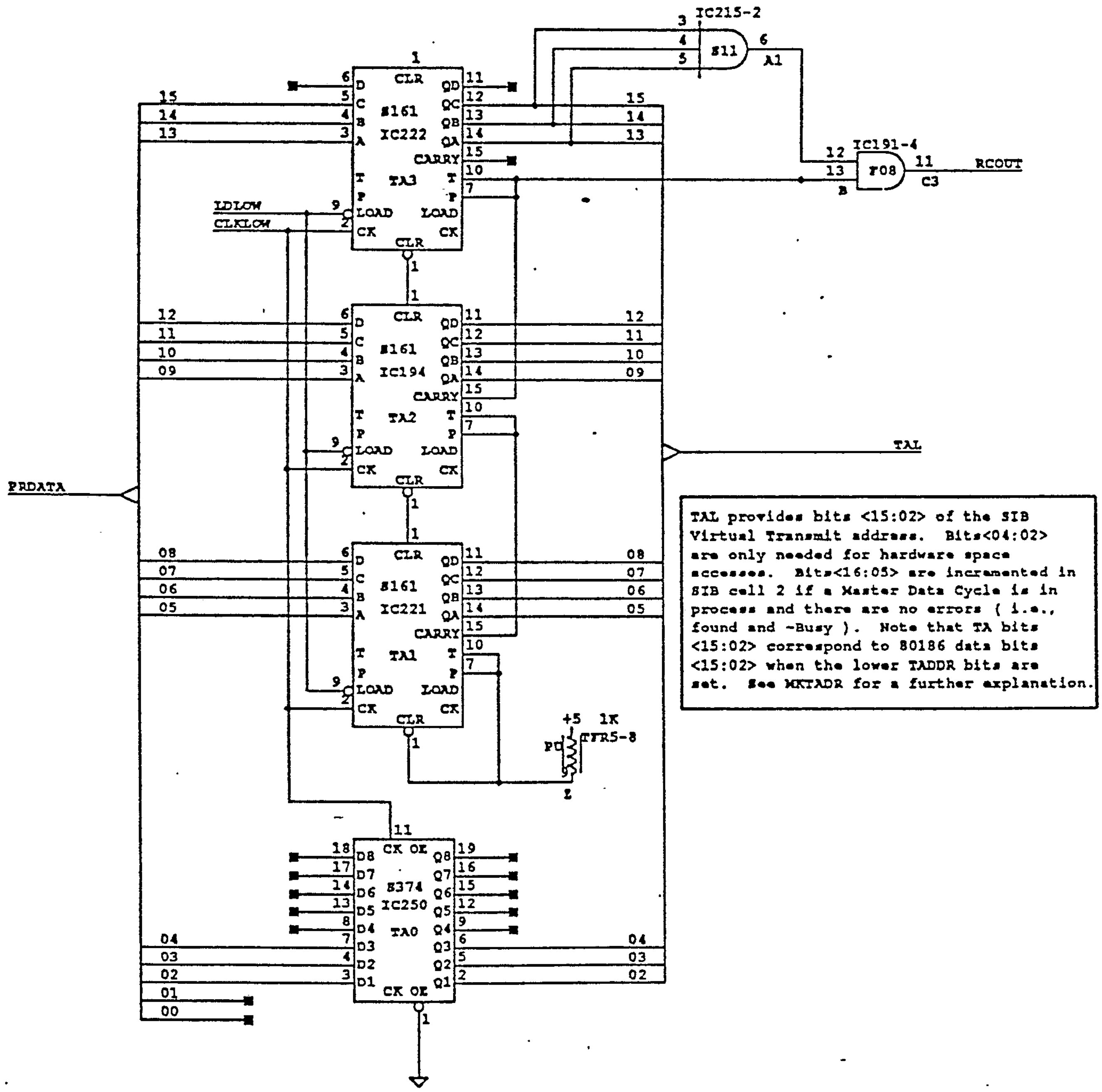


TAL provides bits <15:02> of the SIB Virtual Transmit address. Bits<04:02> are only needed for hardware space accesses. Bits<16:05> are incremented in SIB cell 2 if a Master Data Cycle is in process and there are no errors ( i.e., found and ~Busy ). Note that TA bits <15:02> correspond to 80186 data bits <15:02> when the lower TADDR bits are set. See MKTADR for a further explanation.

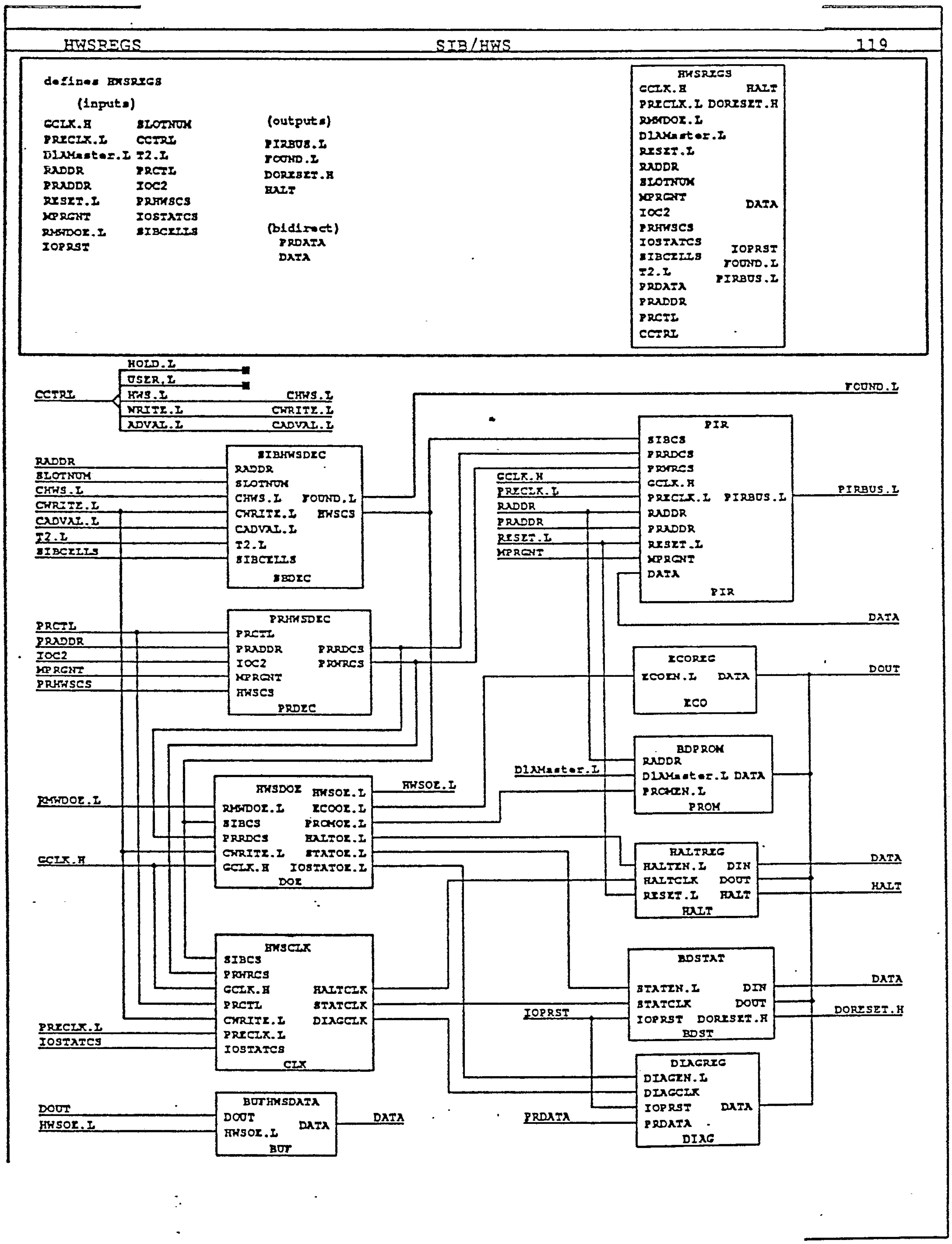

HWSREGS
SIB/HWS
119
defines HWSREGS
(inputs)
GCLK.H
PRECLK.L
D1AMaster.L
RADDR
PRADDR
RESET.L
MPRGNT
RMWDOE.L
IOPRST
SLOTNUM
CCTRL
T2.L
PRCTL
IOC2
PRHWSCS
IOSTATCS
SIBCELLS
(outputs)
FIRBUS.L
FOUND.L
DORESET.H
HALT
(bidirect)
PRDATA
DATA
HWSREGS
GCLK.H
HALT
PRECLK.L
DORESET.H
RMWDOE.L
D1AMaster.L
RESET.L
RADDR
SLOTNUM
MPRGNT
DATA
IOC2
PRHWSCS
IOSTATCS
IOPRST
SIBCELLS
FOUND.L
T2.L
FIRBUS.L
PRDATA
PRADDR
PRCTL
CCTRL
HOLD.L
USER.L
HWS.L
WRITE.L
ADVAL.L
CCTRL
CHWS.L
CWRITE.L
CADVAL.L
FOUND.L
SIBHWSDEC
RADDR
SLOTNUM
CHWS.L
CWRITE.L
CADVAL.L
T2.L
SIBCELLS
FOUND.L
HWSCS
SBDEC
FIR
SIBCS
PRRDCS
PRWRCS
GCLK.H
PRECLK.L
FIRBUS.L
RADDR
PRADDR
RESET.L
MPRGNT
DATA
FIR
FIRBUS.L
DATA
PRHWSDEC
PRCTL
PRADDR
IOC2
MPRGNT
PRHWSCS
PRRDCS
PRWRCS
HWSCS
PRDEC
ECOREG
ECOEN.L
DATA
ECO
DOUT
BDPROM
RADDR
D1AMaster.L
DATA
PROMEN.L
PROM
HWSDOE
HWSOE.L
RMWDOE.L
ECOOE.L
SIBCS
PROMOE.L
PRRDCS
HALTOE.L
CWRITE.L
STATOE.L
GCLK.H
IOSTATOE.L
DOE
HALTREG
HALTEN.L
DIN
HALTCLK
DOUT
RESET.L
HALT
DATA
HWSCLK
SIBCS
PRWRCS
GCLK.H
HALTCLK
PRCTL
STATCLK
CWRITE.L
DIAGCLK
PRECLK.L
IOSTATCS
CLK
BDSTAT
STATEN.L
DIN
STATCLK
DOUT
IOPRST
DORESET.H
BDST
DORESET.H
DIAGREG
DIAGEN.L
DIAGCLK
IOPRST
DATA
PRDATA
DIAG
BUFHWSDATA
DOUT
HWSOE.L
DATA
BUF

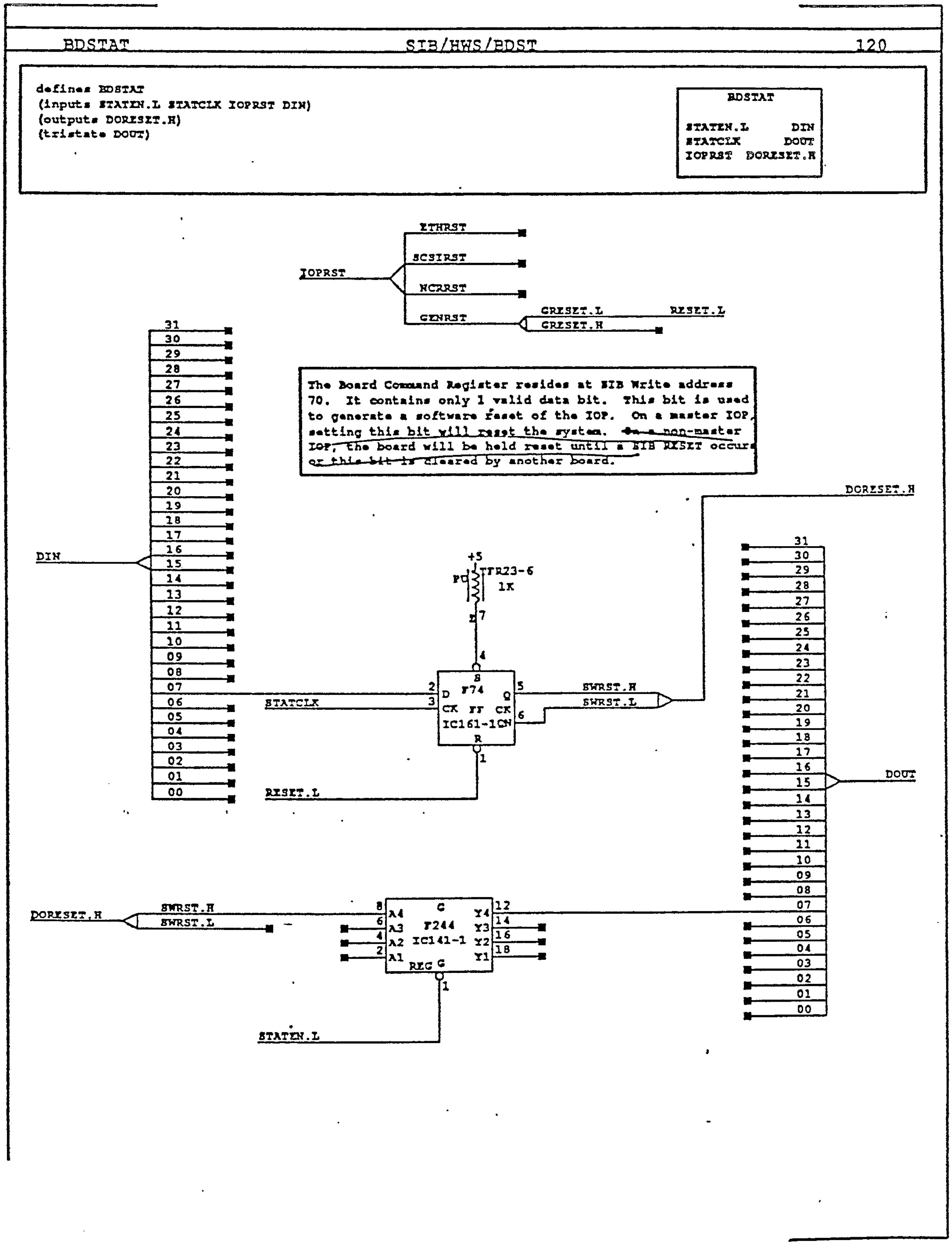
BDSTAT
SIB/HWS/BDST
120
defines BDSTAT
(inputs STATEN.L STATCLK IOPRST DIN)
(outputs DORESET.H)
(tristate DOUT)
BDSTAT
STATEN.L DIN
STATCLK DOUT
IOPRST DORESET.H
ETHRST
SCSIRST
NCRRST
GENRST
IOPRST
GRESET.L
RESET.L
GRESET.H
The Board Command Register resides at SIB Write address 70. It contains only 1 valid data bit. This bit is used to generate a software reset of the IOP. On a master IOP, setting this bit will reset the system. On a non-master IOP, the board will be held reset until a SIB RESET occurs or this bit is cleared by another board.
DIN
31 30 29 28 27 26 25 24 23 22 21 20 19 18 17 16 15 14 13 12 11 10 09 08 07 06 05 04 03 02 01 00
+5
PU
TR23-6
1K
F74
FF
IC161-1
STATCLK
RESET.L
SWRST.H
SWRST.L
DORESET.H
DOUT
DORESET.H
SWRST.H
SWRST.L
F244
IC141-1
REG
STATEN.L

defines BUFHWSDATA

(inputs DOUT HWSOK.L)
(tristate DATA)

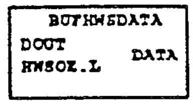


This block buffers the board data bus for the majority of the SIB's Hardware Space Registers. Since the PIR is 32 bits long and directly accessable by the 80186 it resides directly on the board data bus. DOUT is an 8 bit bus driven by the Board Prom, the ECO Register, the Footprint Register, the Command/Status Register, and the Halt Register The pullup on Bit 7 is used to set the most significant bit of the longword during Read-Modify-Write operations. For this case the buffe is enabled during SIB cell 0 of the Write Transfer Frame. The rest of the SIB block will be trashed for a Read-Modify-Write operation. The purpose of this data buffers is to keep the SIB's Board Data bus with a reasonably light load. It is needed because of the high number of items which reside on the most significant data byte.

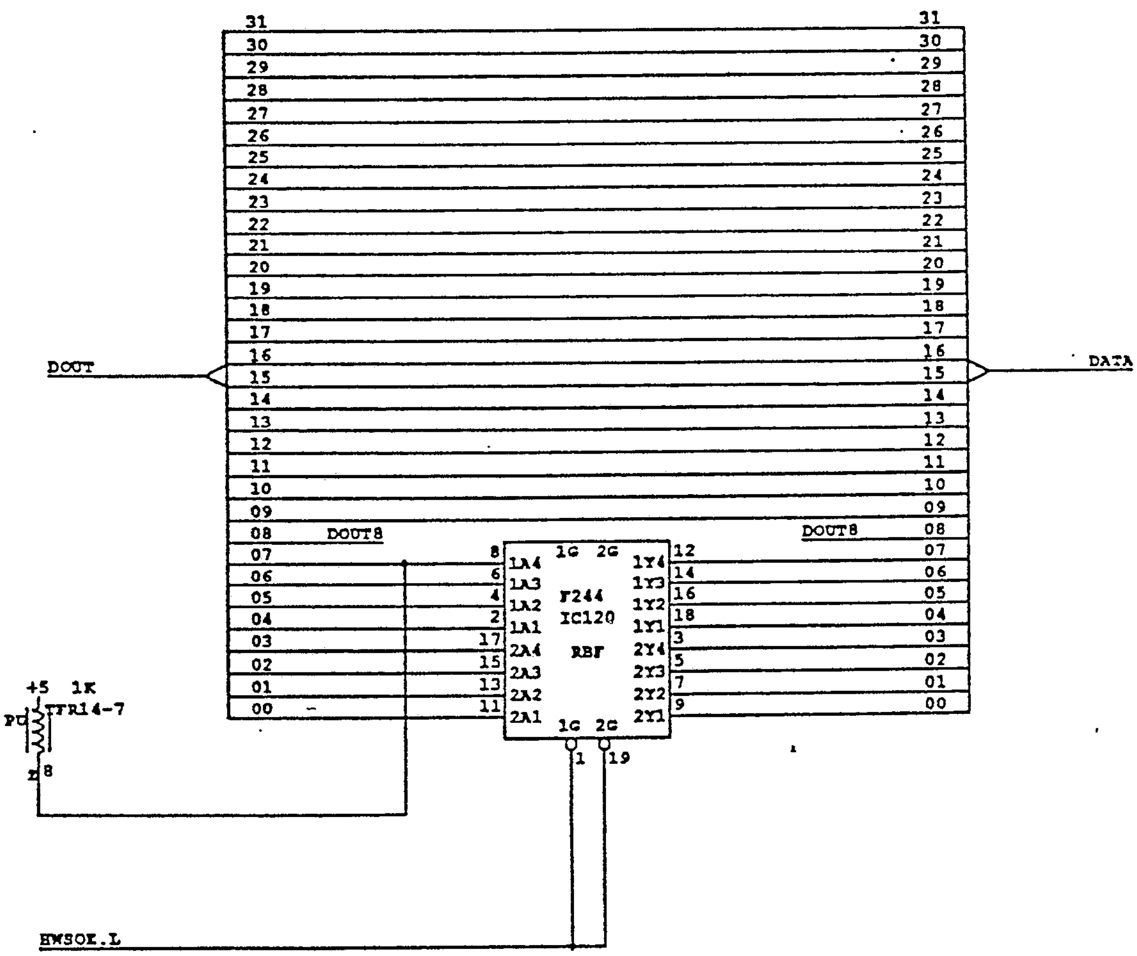

HWSCLK SIB/HWS/CLK 122

defines HWSCLK
(inputs SIBCS PRWRCS GCLK.H PRECLK.L PRCTL IOSTATCS CWRITE.L)
(outputs HALTCLK STATCLK DIAGCLK)

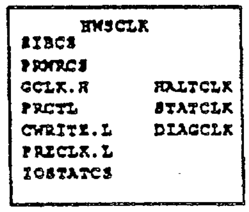


STATCLK is the clock for the SIB HWS Board Command/Status Register. It is asserted in SIB cell T3 if the IOP responds as a slave and the receive address selects the Board Status Register. HALTCLK is the clock for the SIB HWS Board Halt Register. It is asserted in SIB cell T3 if the IOP responds as a slave and the receive address selects the Board Halt Register. The Halt Register is not directly addressable by the 80186.

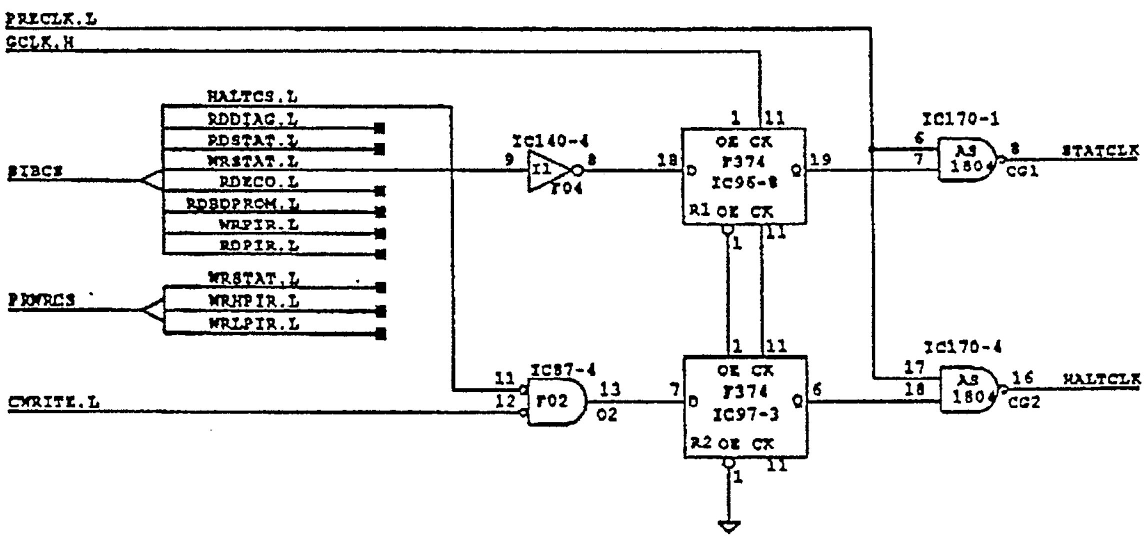


DIAGCLK is the clock for the SIB HWS Diagnostic Footprint Register. The Diagnostic footprint register is directly writeable by the 80186 and can only be read via the SIB. The signal IOSTATCS comes from the SIBDMA 80186 IOCS decoding. It should be programmed for 1 wait state with no external ready.

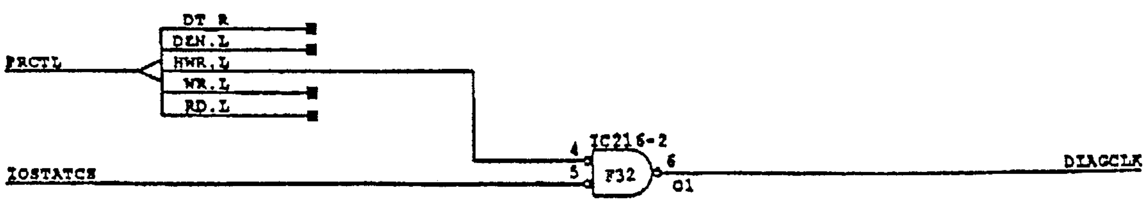

DIAGREG SIB/HWS/DIAG 123

defines DIAGREG
(inputs DIAGEN.L DIAGCLK PRDATA IOPRST)
(tristate DATA)

DIAGREG
DIAGEN.L
DIAGCLK
IOPRST DATA
PRDATA

The Diagnsotic Footprint Register is Read Only at SIB addresses 74 It is writeable by the 80186 directly. It is used as the Python's DDS Register. The upper four (4) bits (HD3) are used to specify the Slot Number being displayed. The DDS is cleared with a genera IOP Reset.

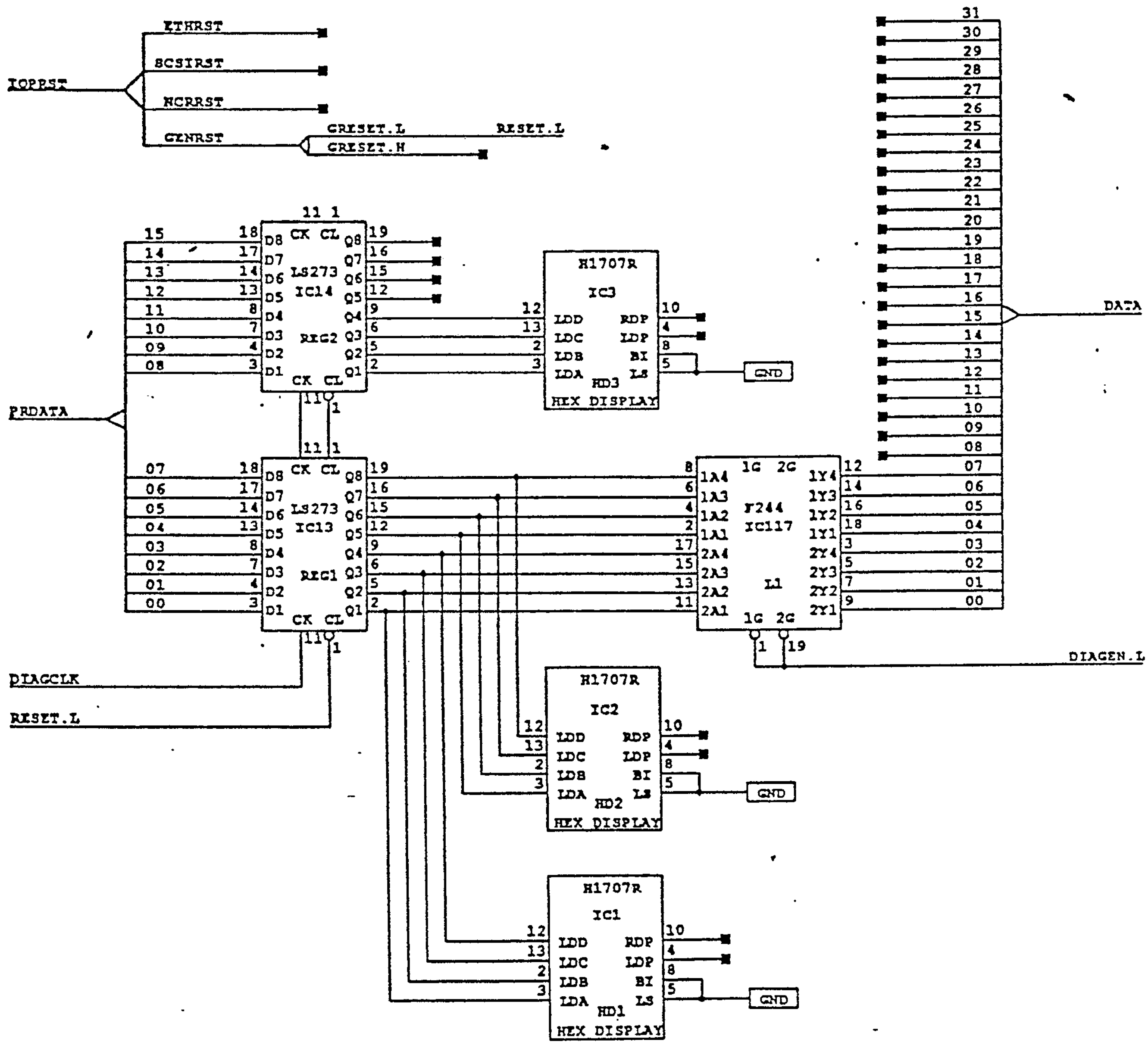

defines HWSDOE
(inputs RMWDOE.L SIBCS PRRDCS CWRITE.L GCLK.H)
(outputs HWSOE.L IOSTATOE.L STATOE.L HALTOE.L ECOOE.L PROMOE.L)

| HWSDOE | HWSOE.L |
|---|---|
| RMWDOE.L | ECOOE.L |
| SIBCS | PROMOE.L |
| PRRDCS | HALTOE.L |
| CWRITE.L | STATOE.L |
| GCLK.H | IOSTATOE.L |

This block generates the output enables for the SIB Hardware Space Registers
It includes the following signals :

- IOSTATOE.L - Diagnostic Footprint Register
- HALTOE.L - Board Halt Register
- STATOE.L - Board Status Register
- ECOOE.L - ECO Register
- PROMOE.L - Board Prom
- HWSOE.L - Any of the above signals active

As it is currently wired these signals are accessible from the SIB only. In order to have these directly accessable by the 80186 the corresponding chip select from PRRDCS would have to be gated in as is done for PIROE.L. All of the read chip selects become active for SIB cells 2 and 3. The corresponding output enable is valid in SIB cells 3 and 4 with the data from the selected register being placed on the SIB in cells 4 and 5.

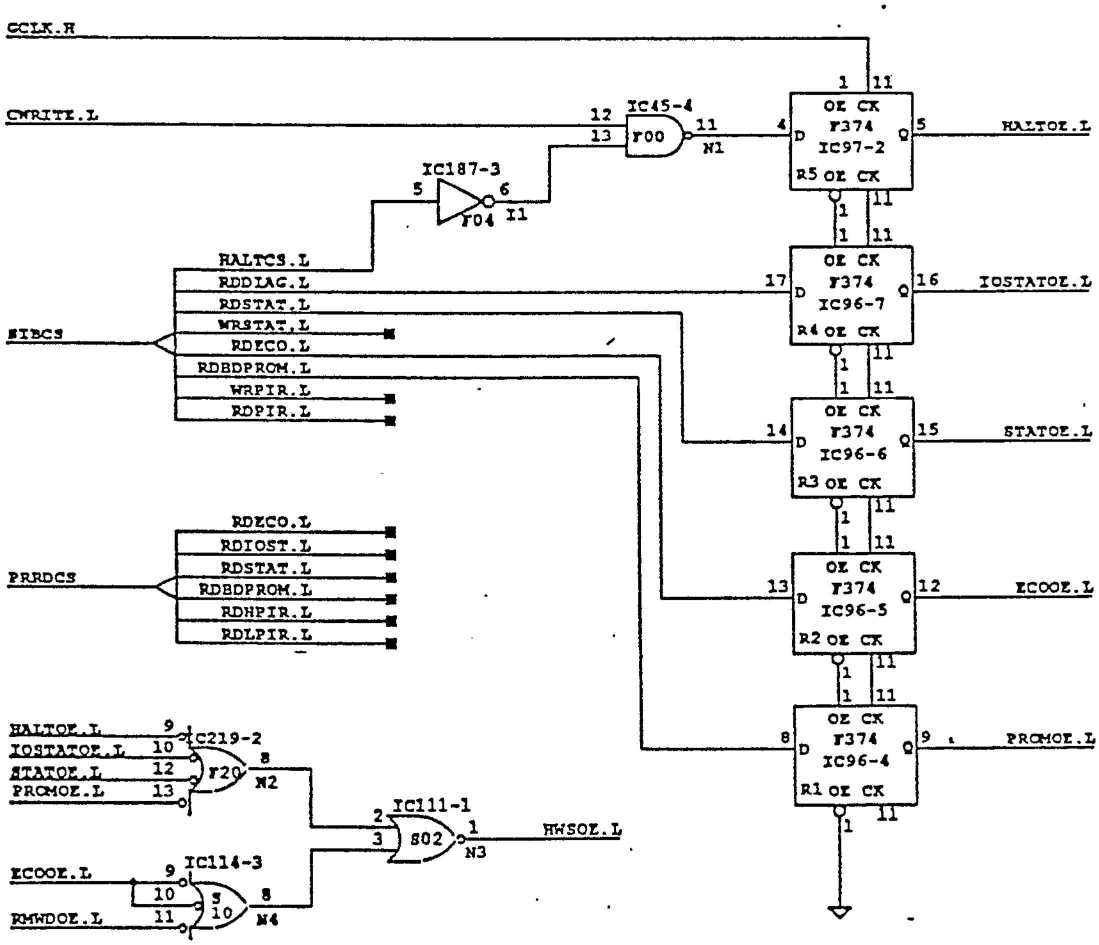

defines ECOREG
(inputs ECOEN.L)
(tristate DATA)

| ECOREG | |
|---|---|
| ECOEN.L | DATA |

The ECO Register is readable at SIB address 40.

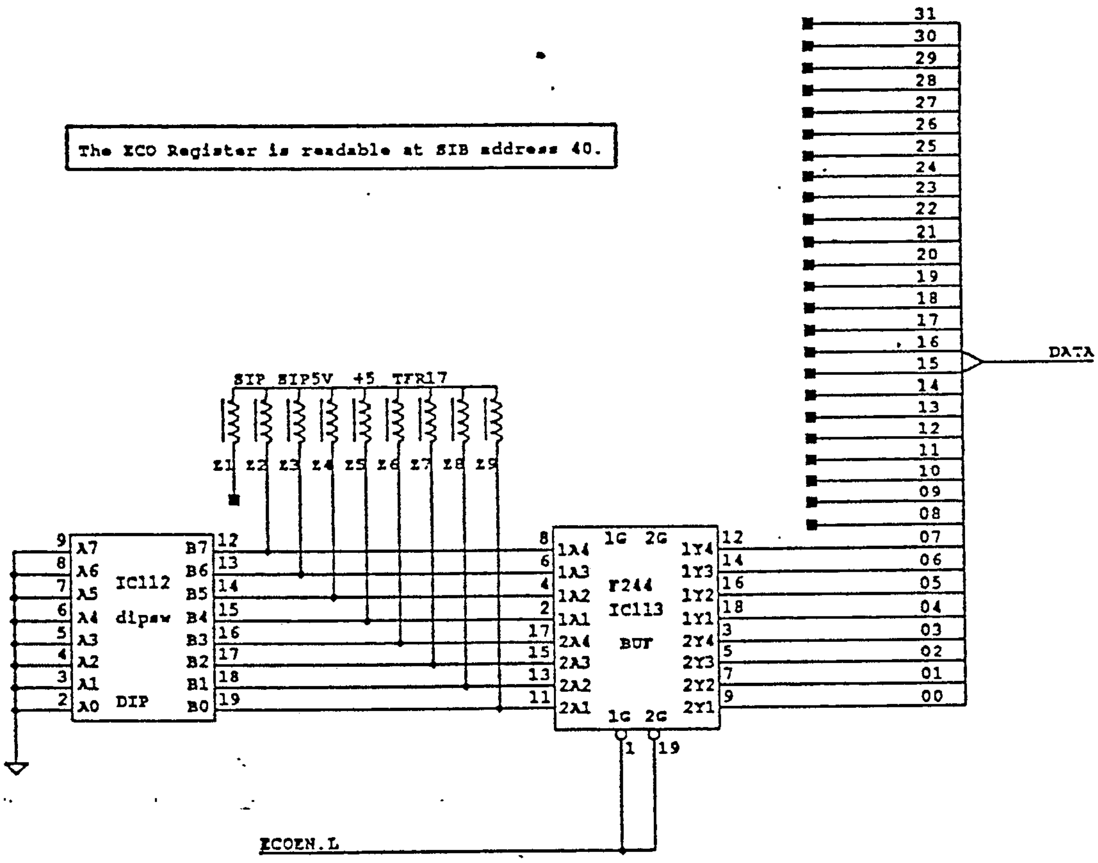

```
defines HALTREG
(inputs HALTEN.L HALTCLK RESET.L DIN)
(outputs HALT)
(tristate DOUT)
```

| HALTREG | |
|---|---|
| HALTEN.L | DIN |
| HALTCLK | DOUT |
| RESET.L | HALT |

The HALT register is located at SIB HWS ADDRESS 60. Setting this bit will generate a NMI - Non Maskable Interupt to the 80186.

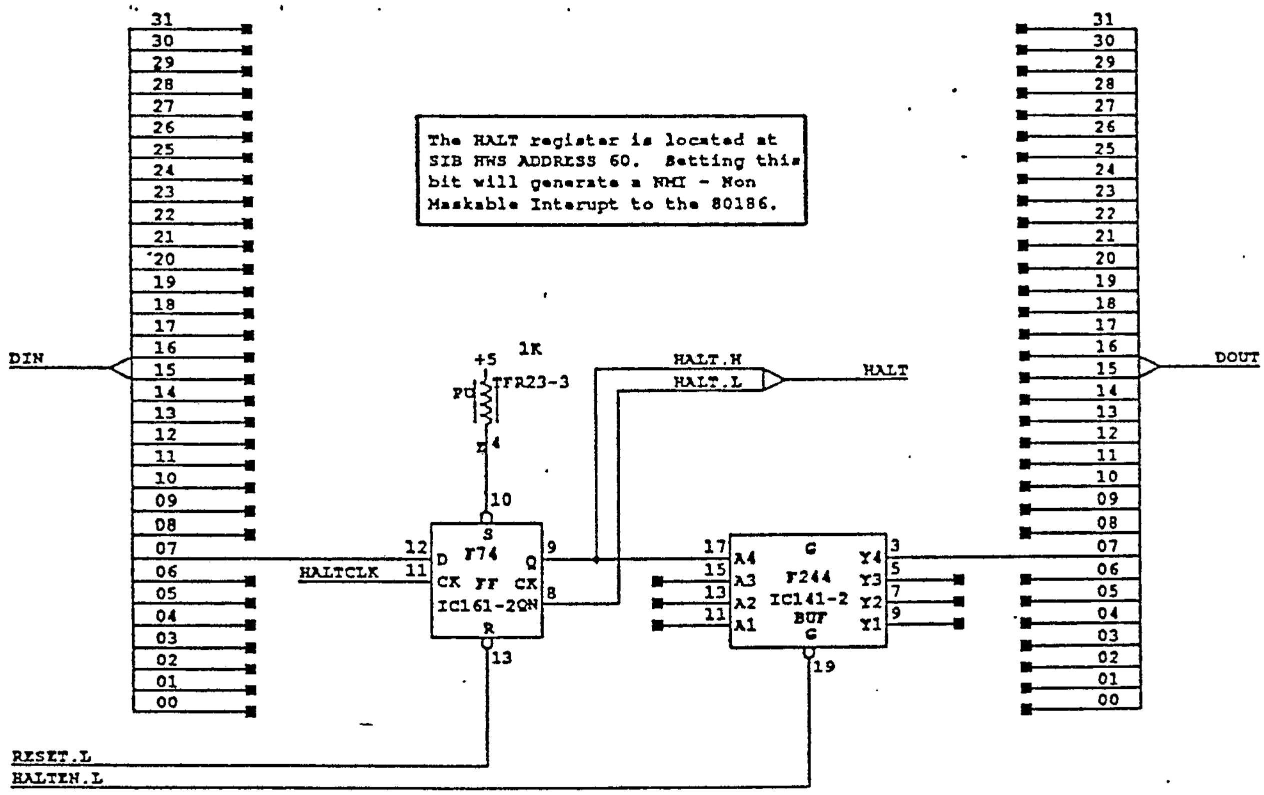

defines PIR

(inputs) (outputs PIRBUS.L)

SIBCS
PRRDCS
PRWRCS (bidirect DATA)
GCLK.H
PRECLK.L
RADDR
PRADDR
RESET.L
MPRGNT

PIR: SIBCS, PRRDCS, PRWRCS, GCLK.H, PRECLK.L, PIRBUS.L, RADDR, PRADDR, RESET.L, MPRGNT, DATA

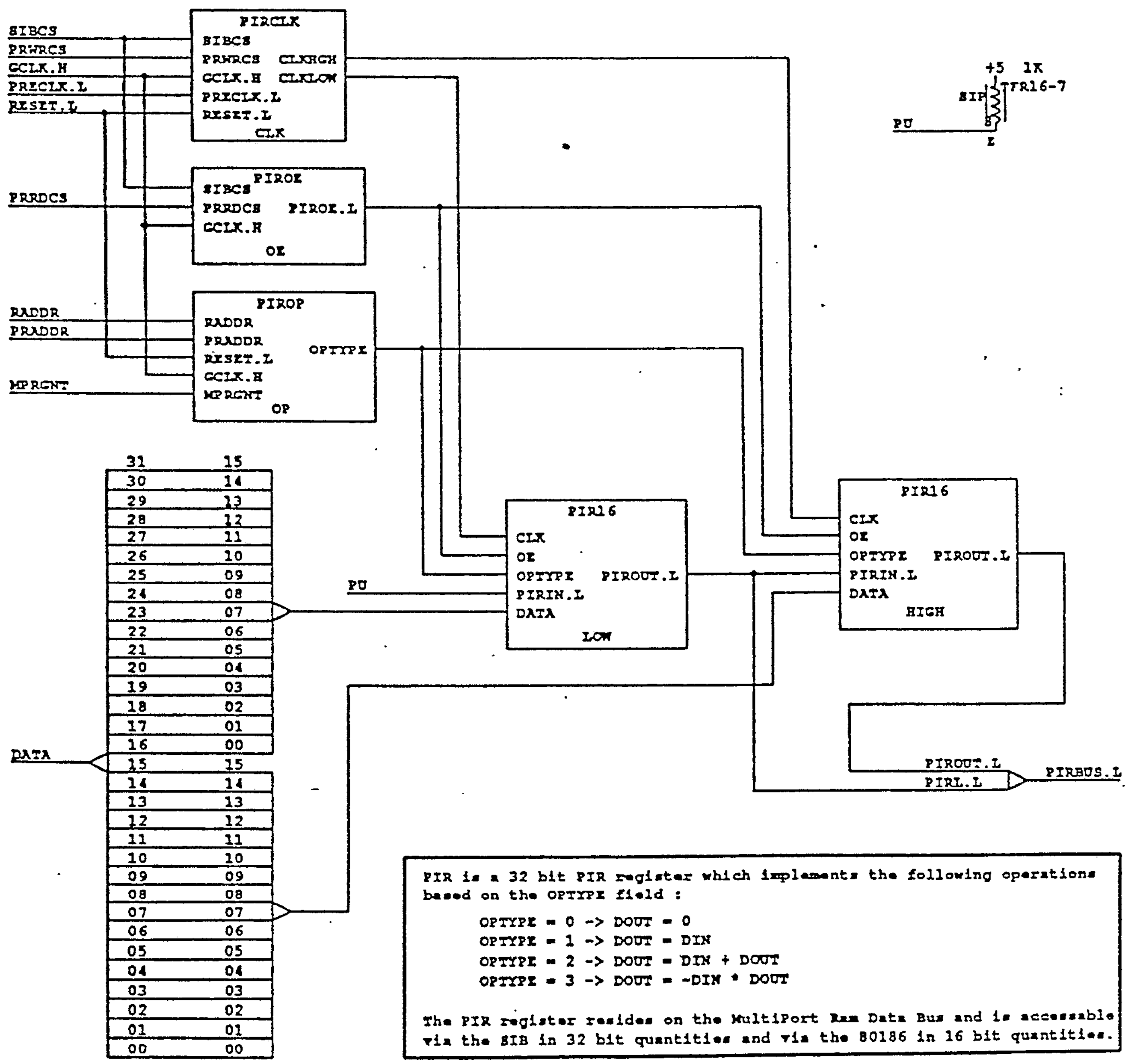


PIR is a 32 bit PIR register which implements the following operations based on the OPTYPE field :

OPTYPE = 0 -> DOUT = 0
OPTYPE = 1 -> DOUT = DIN
OPTYPE = 2 -> DOUT = DIN + DOUT
OPTYPE = 3 -> DOUT = ~DIN * DOUT

The PIR register resides on the MultiPort Ram Data Bus and is accessable via the SIB in 32 bit quantities and via the 80186 in 16 bit quantities.

defines PIRCLK

| (inputs) | (outputs) |
|---|---|
| SIBCS | CLKHGH |
| PRWRCS | CLKLOW |
| GCLK.H | |
| PRECLK.L | |
| RESET.L | |

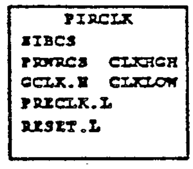


The PIR register resides on the MultiPort Ram Data Bus and is accessable via the SIB in 32 bit quantities and via the 80186 in 16 bit quantities.

For a SIB access of the PIR register WRPIR.L goes low in SIB cell 2. This creates a clock pulse in SIB cell 3 for both the low half and the high half of the PIR register.

For an IO side access WRLPIR.L or WRHPIR.L goes low in the first cell of an IO grant when the PIR register is selected. This creates a clock pulse during the second cell of an IO grant. WRLPIR.L selects the low 16 bits of the register and WRPIR.H selects the high 16 bits.

During a reset the PIR register needs to be reset which is accomplished by generating a clock pulse whenever RESET.L is low. Note that RESET.L must be synchronous to the SIB's clock.

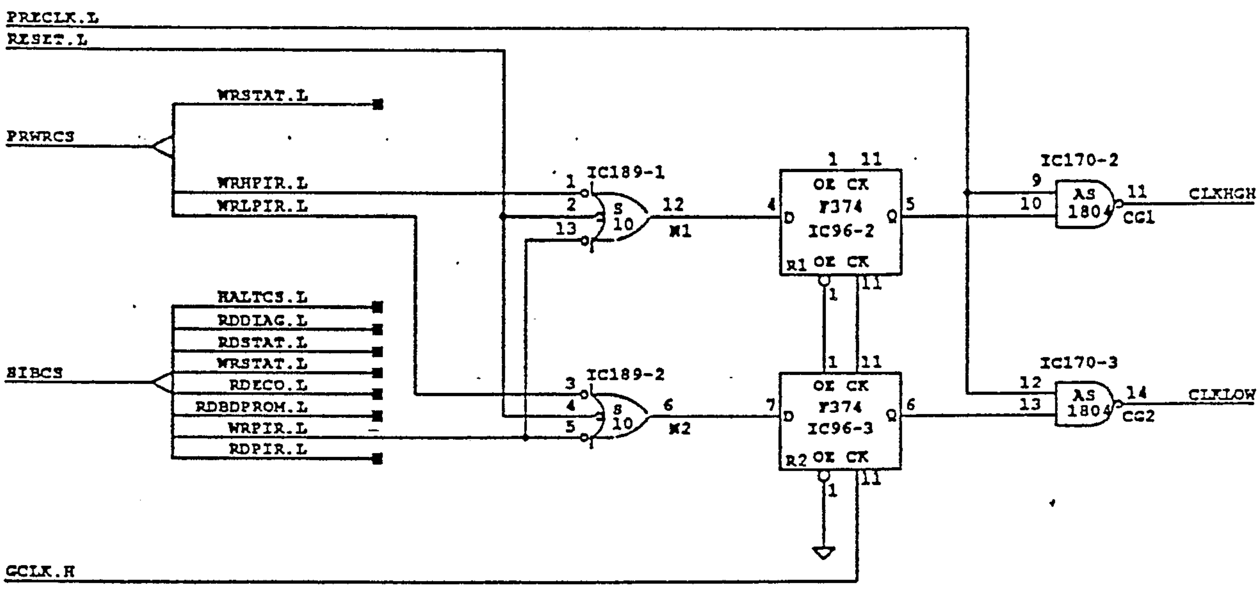

defines PIR16
(inputs CLK OE OPTYPE PIRIN.L P2/IO19 P1/IO19 P0/IO19)
(outputs PIROUT.L)
(bidirect DATA)

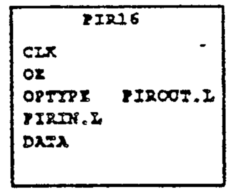


PIR16 is a 16 bit slice of the 32 bit PIR register. It implements the following operations based on the OPTYPE field :

OPTYPE = 0 -> DOUT = 0
OPTYPE = 1 -> DOUT = DIN
OPTYPE = 2 -> DOUT = DIN + DOUT
OPTYPE = 3 -> DOUT = -DIN * DOUT

The PIR register resides on the MultiPort Ram Data Bus and is accessable via the SIB in 32 bit quantities and via the 80186 in 16 bit quantities.

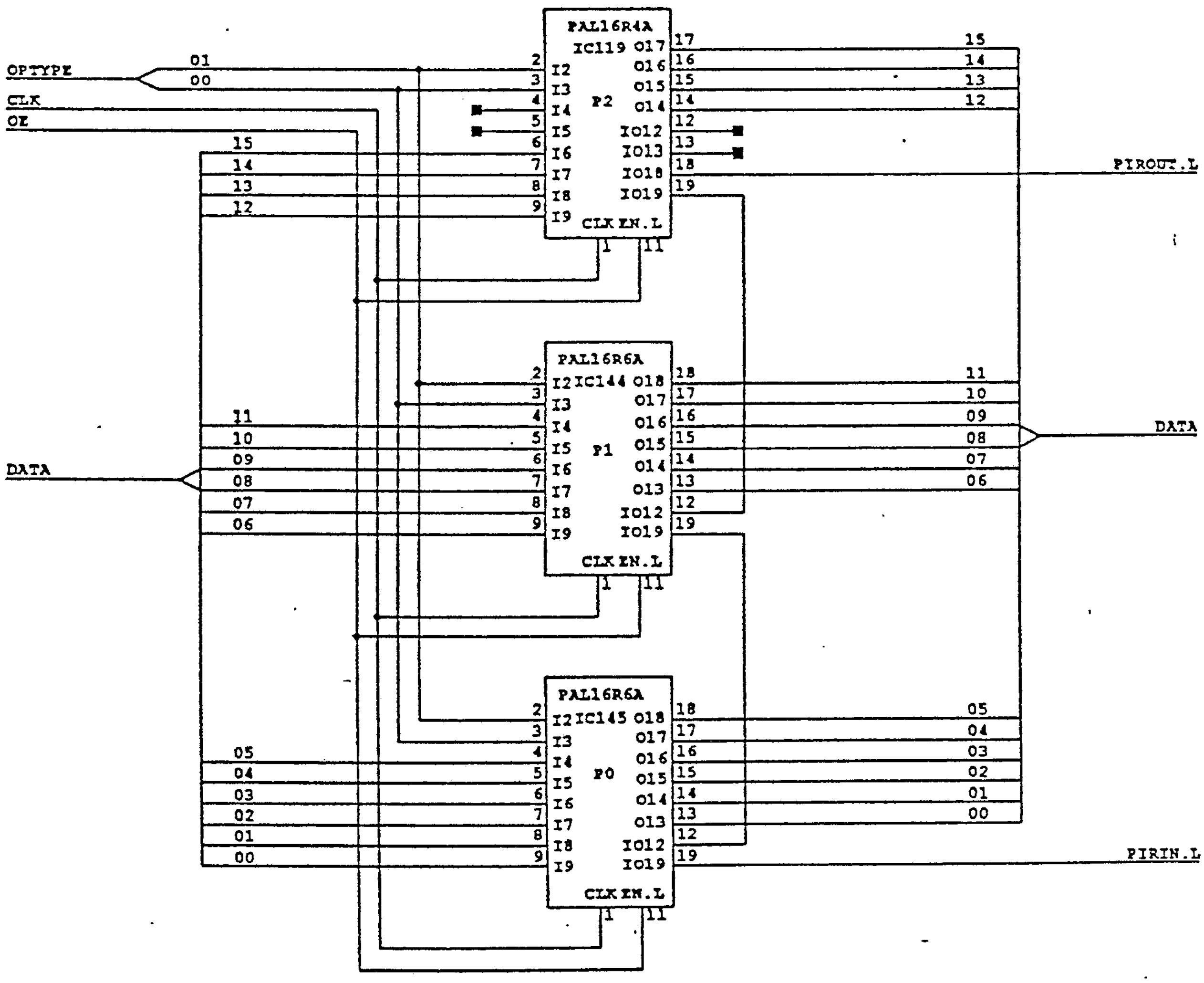

defines PIR16
(inputs CLK OE OPTYPE PIRIN.L P2/IO19 P1/IO19 P0/IO19)
(outputs PIROUT.L)
(bidirect DATA)

PIR16
CLK
OE
OPTYPE PIROUT.L
PIRIN.L
DATA

PIR16 is a 16 bit slice of the 32 bit PIR register. It implements the following operations based on the OPTYPE field :

OPTYPE = 0 -> DOUT = 0
OPTYPE = 1 -> DOUT = DIN
OPTYPE = 2 -> DOUT = DIN + DOUT
OPTYPE = 3 -> DOUT = ~DIN * DOUT

The PIR register resides on the MultiPort Ram Data Bus and is accessable via the SIB in 32 bit quantities and via the 80186 in 16 bit quantities.

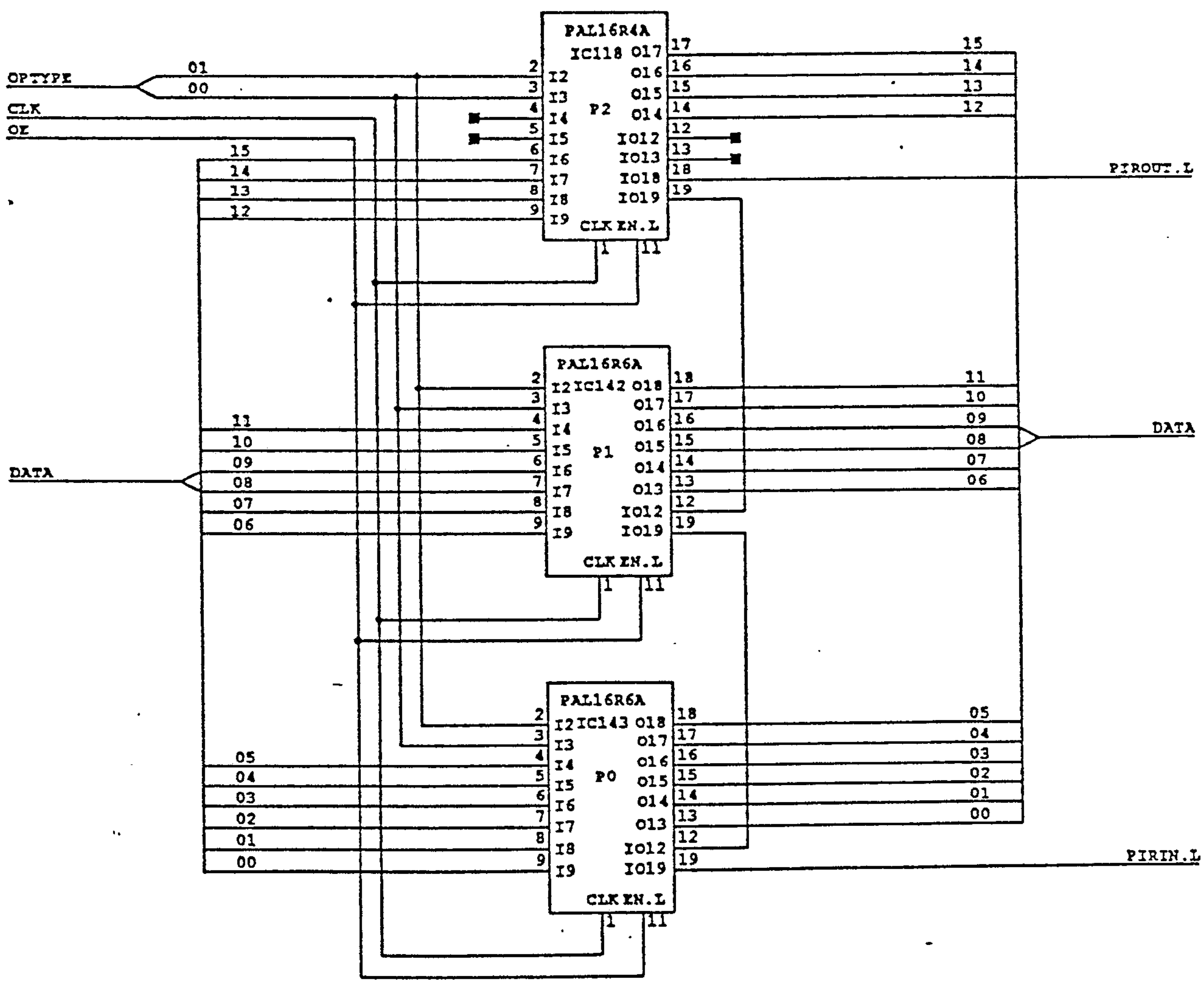

defines PIROE
(inputs SIBCS PRRDCS GCLK.H)
(outputs PIROE.L)

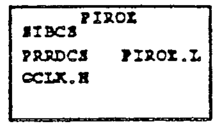


PIROE.L is the output enable for the PIR register which enables both the low and the high 16 bits onto the MultiPort Ram Data Bus. For a SIB read access in which the IOP responds as a slave and the PIR register is selected (Address 44-4C) RDPIR.L goes low for SIB cells 2 and 3. This drives PIROE.L active in cells 3 and 4 allowing the data to be driven unto the SIB in cells 4 and 5. For an 80186 access either the lower or the upper 16 bits of the PIR register will be read into the processor based on whether RDHPIR.L or RDLPIR.L is activated. The actual 16 bit to 32 bit multiplexing is done based on the state of the 80186's address bit 1. Care must be taken to generate the chip selects RDLPIR.L and RDHPIR.L accordingly.

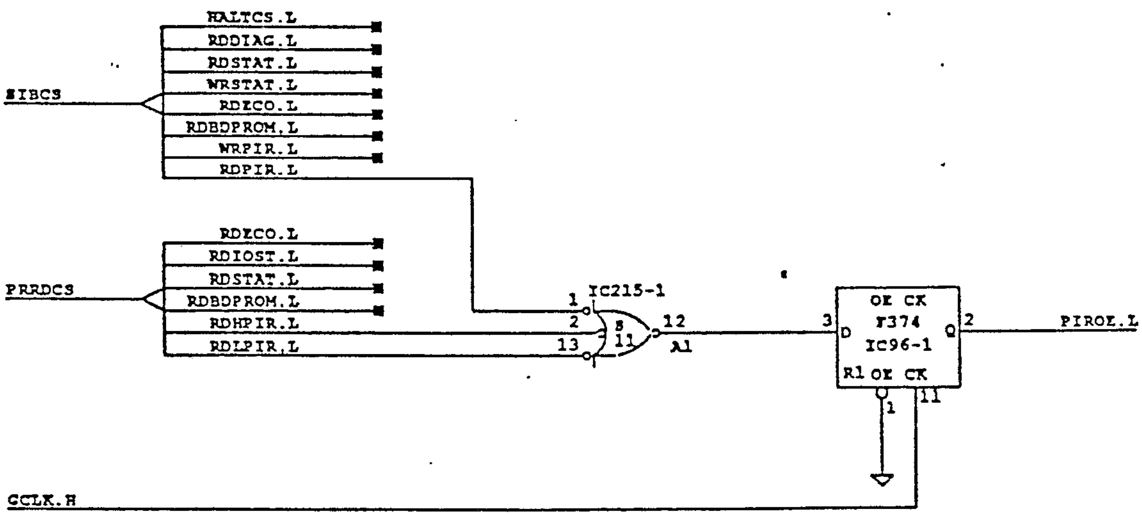

PIROP | SIB/HWS/PIR/OP | 132

defines PIROP
(inputs RADDR PRADDR RESET.L GCLK.H MPRGNT)
(outputs OPTYPE)

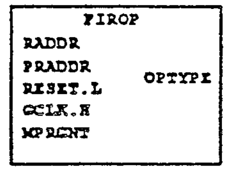


PIR is a 32 bit PIR register which implements the following functions based on the OPTYPE field :

OPTYPE = 0 -> DOUT = 0
OPTYPE = 1 -> DOUT = DIN
OPTYPE = 2 -> DOUT = DIN + DOUT
OPTYPE = 3 -> DOUT = -DIN * DOUT

A reset forces the optype field to = 0.
During a processor grant PRADDR|04 and PRADDR|05 are passed through as the OPTYPE field. Otherwise the SIB receive address bits RADDR|03 and RADDR|02 are passed through.

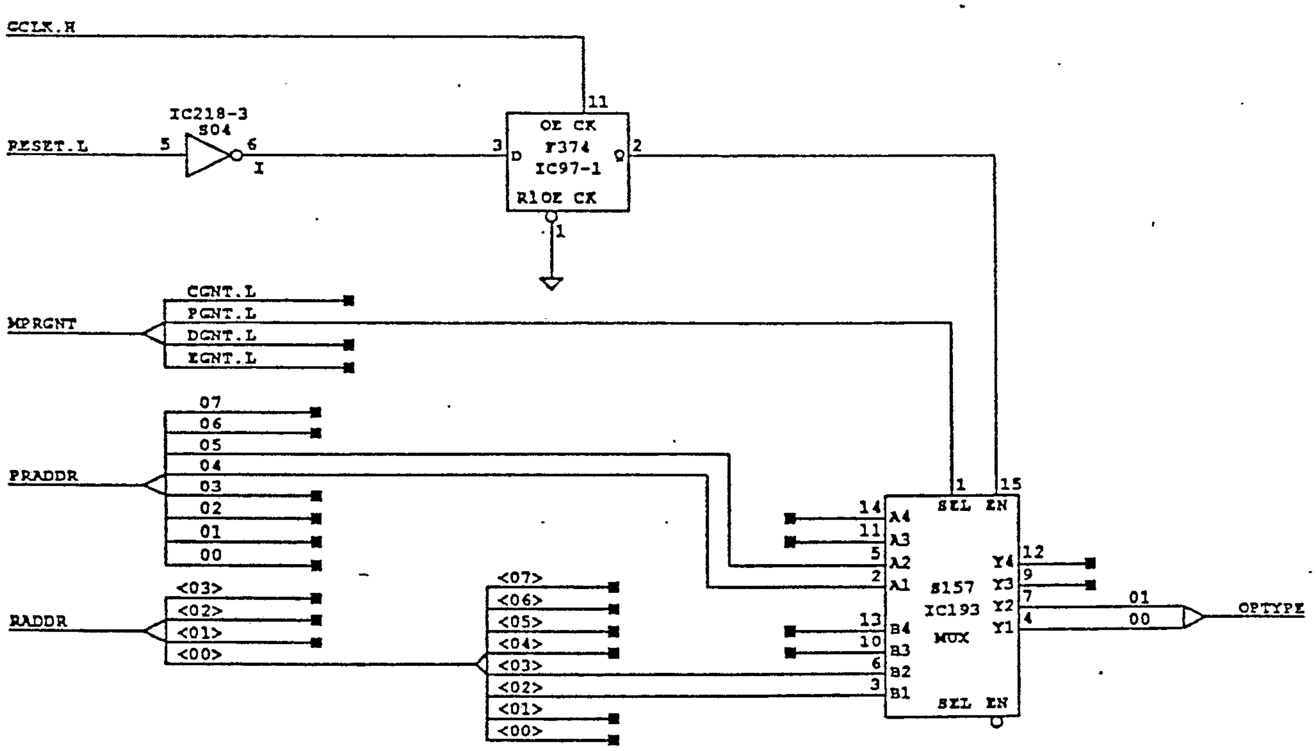

PRHWSDEC    SIB/HWS/PRDEC    133

defines PRHWSDEC
(inputs PRCTL PRADDR IOC2 MPRGNT HWSCS)
(outputs PRRDCS PRWRCS)

PRHWSDEC
PRCTL
PRADDR    PRRDCS
IOC2    PRWRCS
MPRGNT
HWSCS

This block generates the chip selects for an 80186 access of the SIB's Standard Hardware Space Register Set. This provides access to the following registers which are also accesible via the SIB :

- Board Information Prom - Read Only (RDBDPROM.L)
- ECO Register - Read Only (RDECO.L)
- PIR Register - Read/Write (RDHPIR.L,RDLPIR.L,WRHPIR.L,WRLPIR.L)
- Status Register - Read/Write (RDSTAT.L,WRSTAT.L)
- IO Status Register - Read Only (RDIOST.L)

The IO Status Register is writeable by the 80186 but not by the SIB. These registers share the MultiPort Ram Data Bus and so the 80186's access of them must go through the MPRAM control circuitry. For a read operation the read chip selects are active during the first cell of an IO Grant. They should be gated with the corresponding SIB chip selects and fed through an F374 to enable the selected register during the second cell of an IO Grant. For a write operation the write chip selects are active in the first cell of an IO Grant. They should be gated with the corresponding SIB chip selects and fed through an F374 to generate a clock enable for a write register clock.

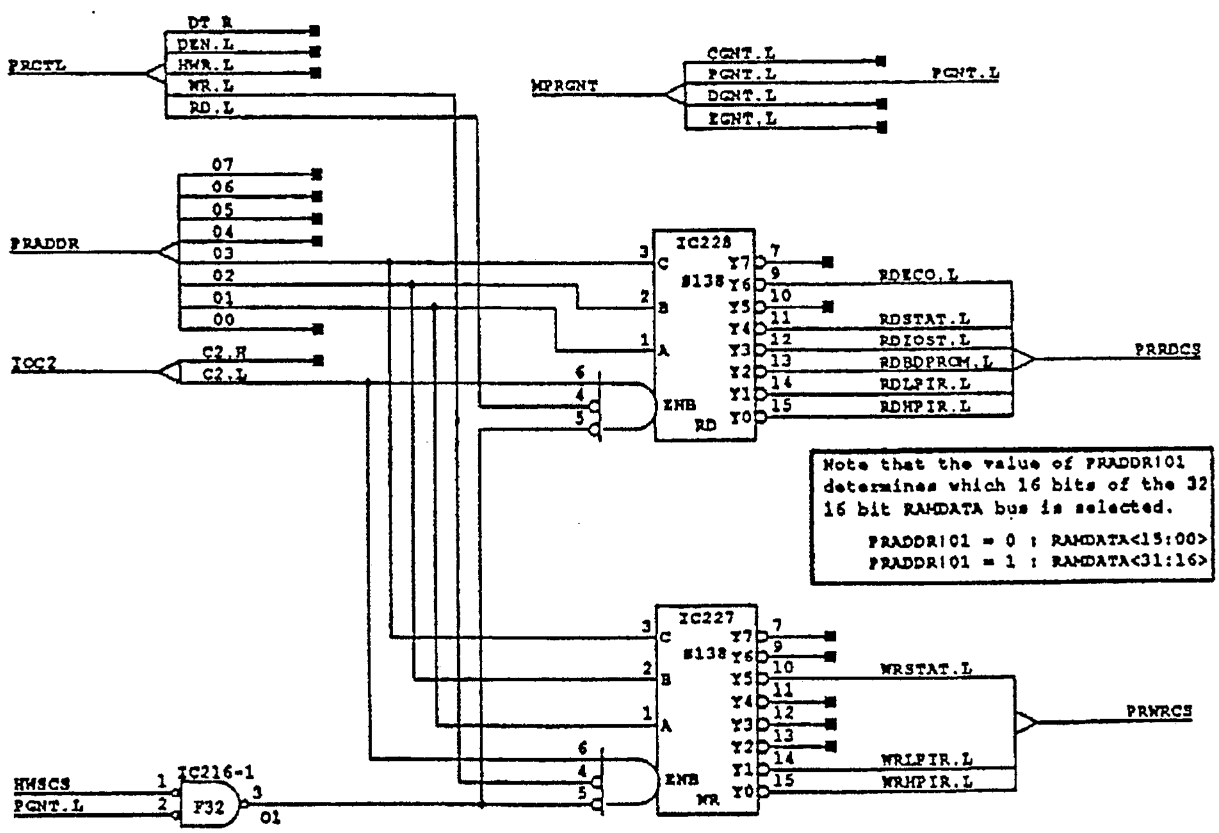


Note that the value of PRADDR|01 determines which 16 bits of the 32 16 bit RAMDATA bus is selected.

PRADDR|01 = 0 : RAMDATA<15:00>
PRADDR|01 = 1 : RAMDATA<31:16>

defines BDPROM
(inputs RADDR D1AMaster.L PROMEN.L)
(tristate DATA)

BDPROM
RADDR
D1AMaster.L DATA
PROMEN.L

The Board Information Prom is readable at SIB addresses 0-1C
It contains the following information :

Byte Address 0 - Board Type
Byte Address 4 - Function
Byte Address 8 - Variant
Byte Address C - Partition Number / Current Master
Byte Address 10 - Board Serial Number - MS Byte
Byte Address 14 - Board Serial Number - Byte 1
Byte Address 18 - Board Serial Number - Byte 2
Byte Address 1C - Board Serial Number - LS Byte

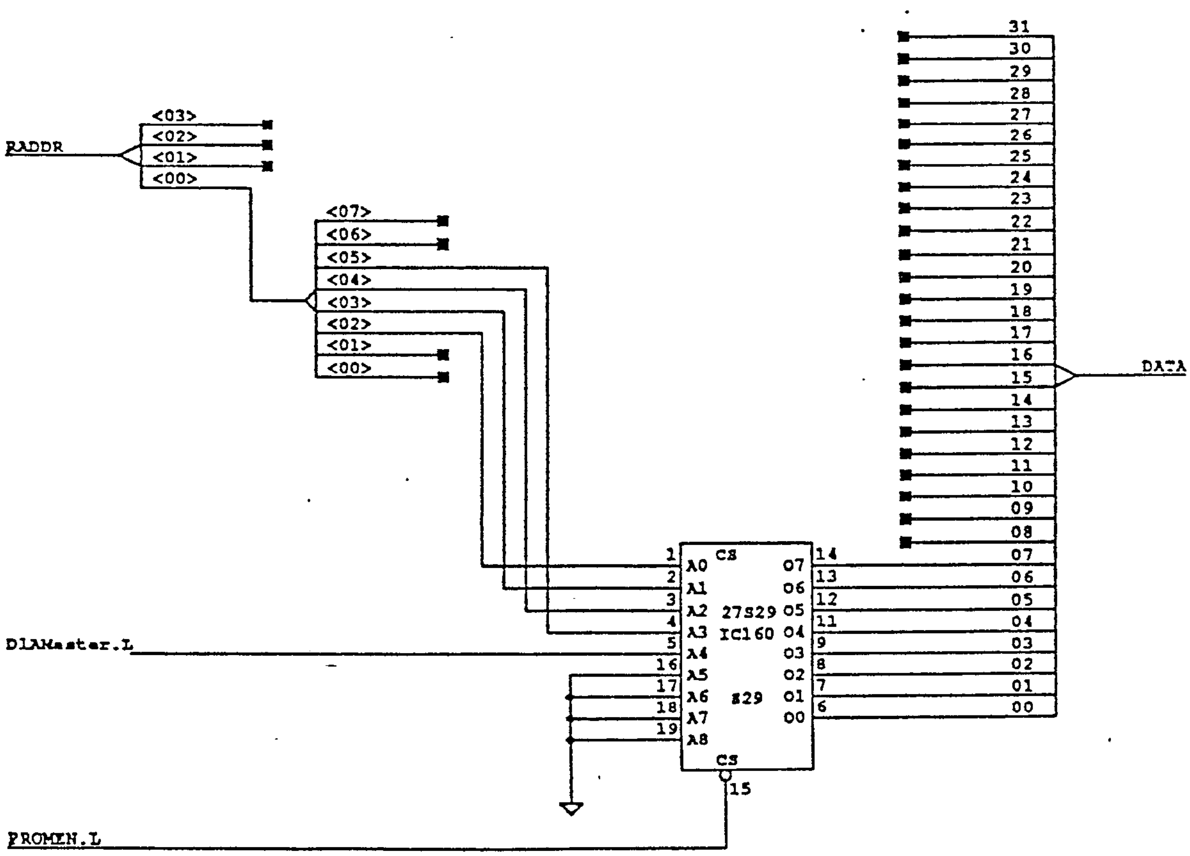

defines SIBHWSDEC
(inputs RADDR SLOTNUM CHWS.L CWRITE.L CADVAL.L SIBCELLS T2.L)
(outputs HWSCS FOUND.L)

SIBHWSDEC
RADDR
SLOTNUM
CHWS.L FOUND.L
CWRITE.L HWSCS
CADVAL.L
T2.L
SIBCELLS

This block provides the address decoding for the IOP's standard register set. The comparator F521 checks for a valid address match. If receive address bits 27-24 match the boards slot number and CHWS.L is asserted indicating a Hardware Space Access FOUND.L is asserted. The PAL decodes this address match into The read chip selects are asserted in SIB cells 2 and 3 and they are intended to be inputs to an F374 to output enable the selected register in SIB cells 3 and 4. The write chip selects are asserted in SIB cell 2 and are input to an F374 to generate a gated clock in SIB cell 3.

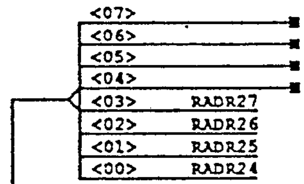


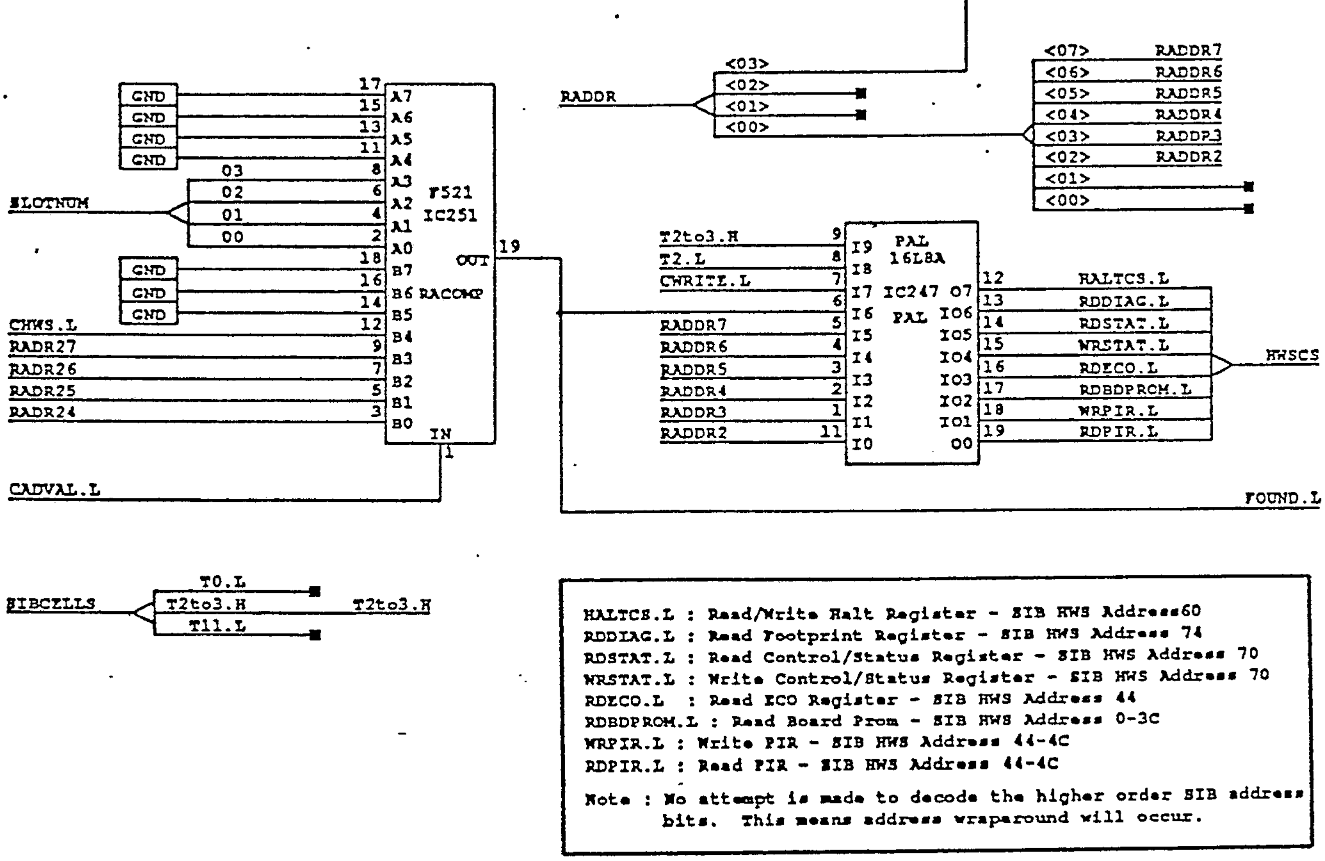


HALTCS.L : Read/Write Halt Register - SIB HWS Address60
RDDIAG.L : Read Footprint Register - SIB HWS Address 74
RDSTAT.L : Read Control/Status Register - SIB HWS Address 70
WRSTAT.L : Write Control/Status Register - SIB HWS Address 70
RDECO.L : Read ECO Register - SIB HWS Address 44
RDBDPROM.L : Read Board Prom - SIB HWS Address 0-3C
WRPIR.L : Write PIR - SIB HWS Address 44-4C
RDPIR.L : Read PIR - SIB HWS Address 44-4C

Note : No attempt is made to decode the higher order SIB address bits. This means address wraparound will occur.

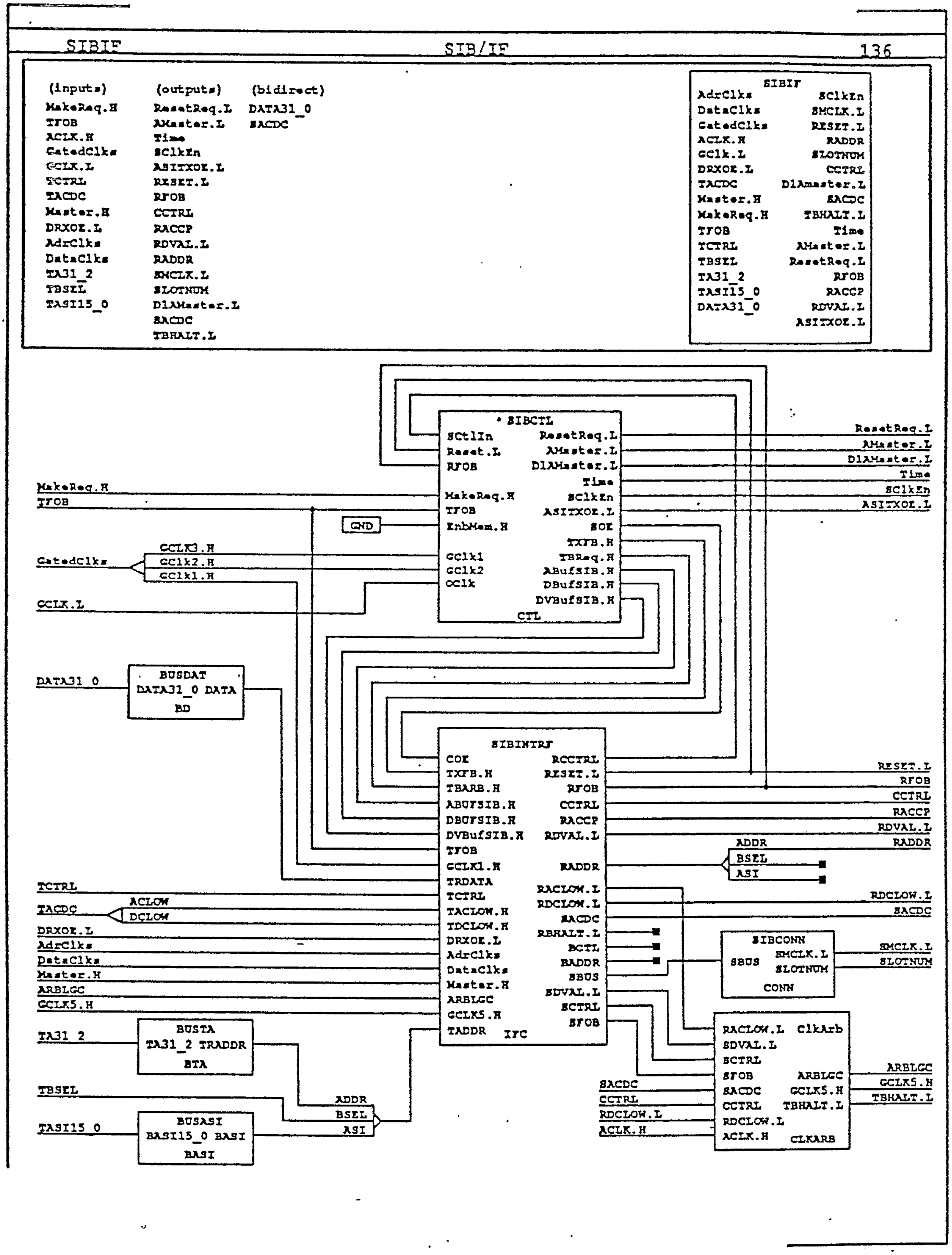
SIBIF
SIB/IF
136
(inputs)
MakeReq.H
TFOB
ACLK.H
GatedClks
GCLK.L
TCTRL
TACDC
Master.H
DRXOE.L
AdrClks
DataClks
TA31_2
TBSEL
TASI15_0
(outputs)
ResetReq.L
AMaster.L
Time
SClkEn
ASITXOE.L
RESET.L
RFOB
CCTRL
RACCP
RDVAL.L
RADDR
SMCLK.L
SLOTNUM
D1AMaster.L
SACDC
TBHALT.L
(bidirect)
DATA31_0
SACDC
SIBIF
SIBCTL
SIBINTRF
BUSDAT
BUSTA
BUSASI
SIBCONN
ClkArb
CLKARB
GND
CTL
IFC
BD
BTA
BASI
CONN

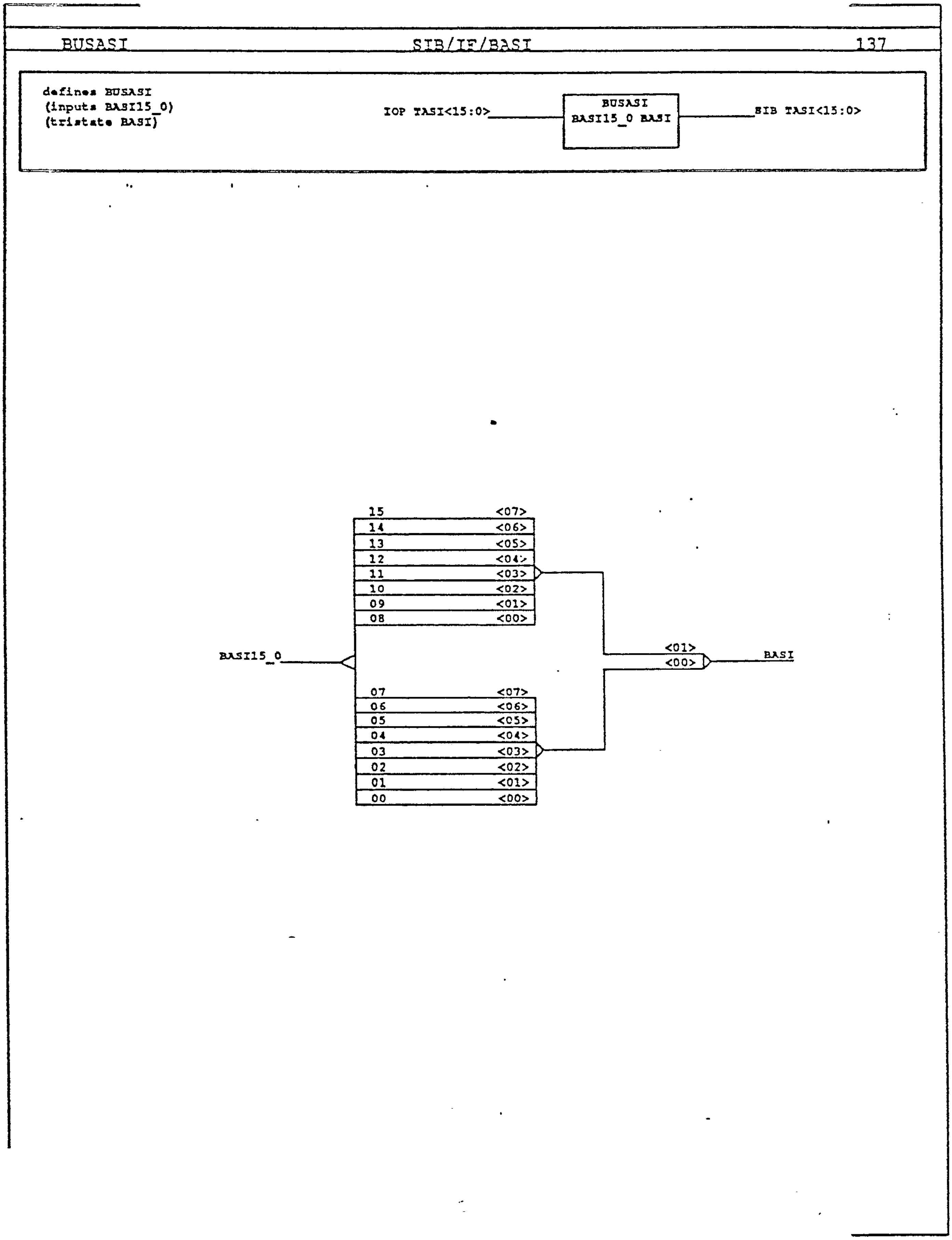
BUSASI
SIB/IF/BASI
137
defines BUSASI
(inputs BASI15_0)
(tristate BASI)
IOP TASI<15:0>
BUSASI
BASI15_0 BASI
SIB TASI<15:0>
15 <07>
14 <06>
13 <05>
12 <04>
11 <03>
10 <02>
09 <01>
08 <00>
BASI15_0
<01>
<00>
BASI
07 <07>
06 <06>
05 <05>
04 <04>
03 <03>
02 <02>
01 <01>
00 <00>

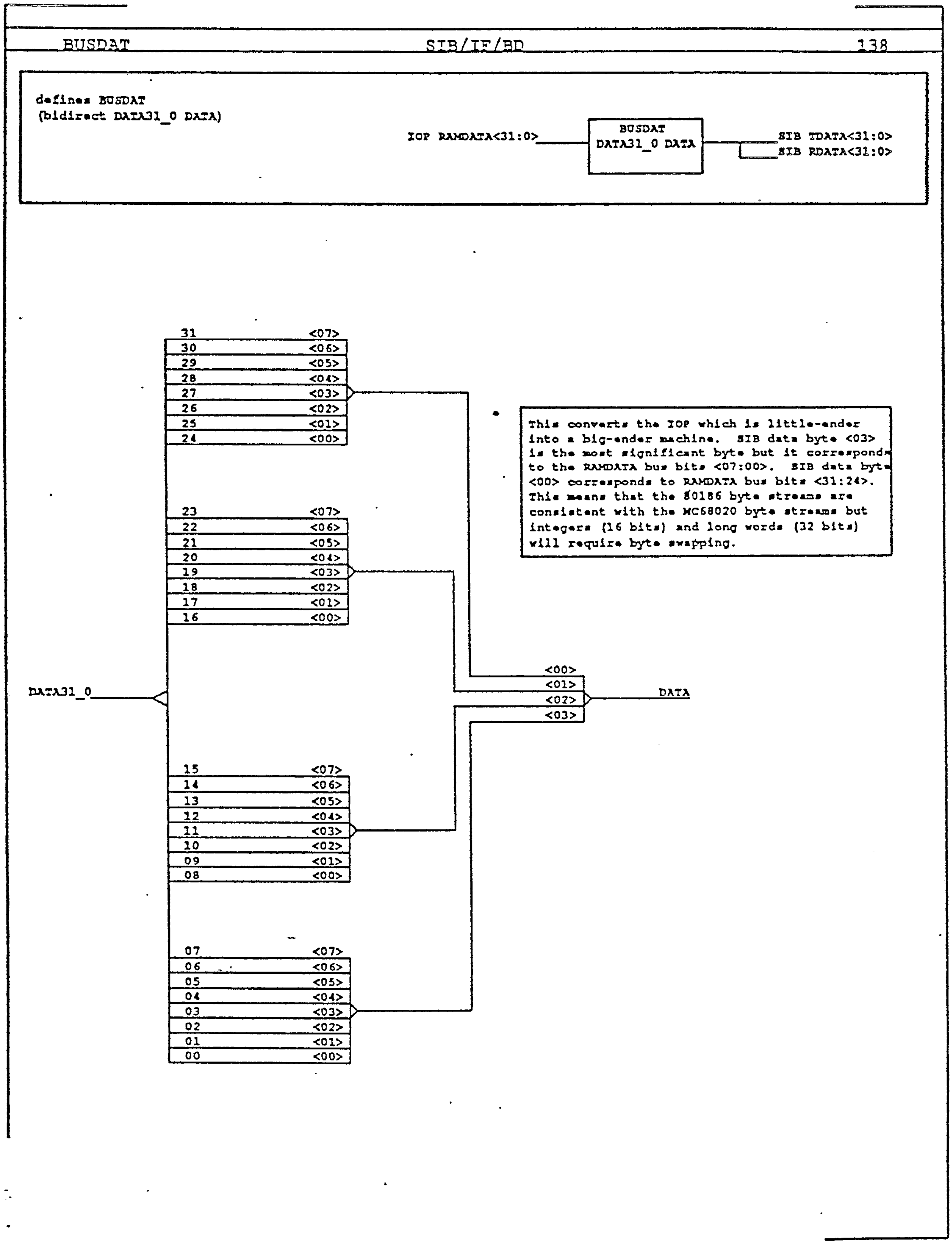
BUSDAT
SIB/IF/BD
138
defines BUSDAT
(bidirect DATA31_0 DATA)
IOP RAMDATA<31:0>
BUSDAT
DATA31_0 DATA
SIB TDATA<31:0>
SIB RDATA<31:0>
This converts the IOP which is little-ender into a big-ender machine. SIB data byte <03> is the most significant byte but it corresponds to the RAMDATA bus bits <07:00>. SIB data byte <00> corresponds to RAMDATA bus bits <31:24>. This means that the 80186 byte streams are consistent with the MC68020 byte streams but integers (16 bits) and long words (32 bits) will require byte swapping.
DATA31_0
DATA
<00>
<01>
<02>
<03>

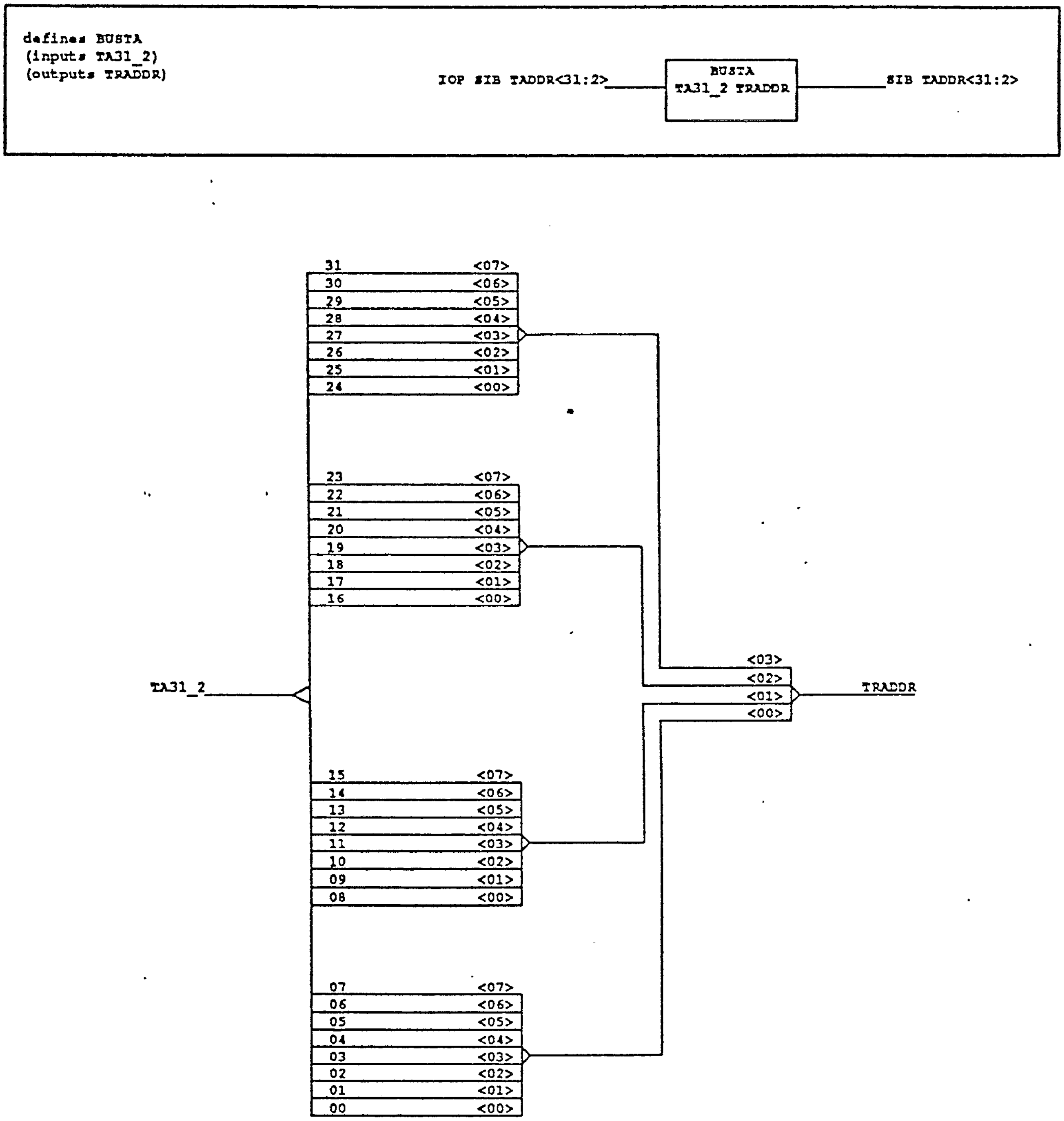

defines BUSTA
(inputs TA31_2)
(outputs TRADDR)
TOP SIB TADDR<31:2>
BUSTA
TA31_2 TRADDR
SIB TADDR<31:2>
TA31_2
TRADDR
31 <07>
30 <06>
29 <05>
28 <04>
27 <03>
26 <02>
25 <01>
24 <00>
23 <07>
22 <06>
21 <05>
20 <04>
19 <03>
18 <02>
17 <01>
16 <00>
15 <07>
14 <06>
13 <05>
12 <04>
11 <03>
10 <02>
09 <01>
08 <00>
07 <07>
06 <06>
05 <05>
04 <04>
03 <03>
02 <02>
01 <01>
00 <00>
<03>
<02>
<01>
<00>

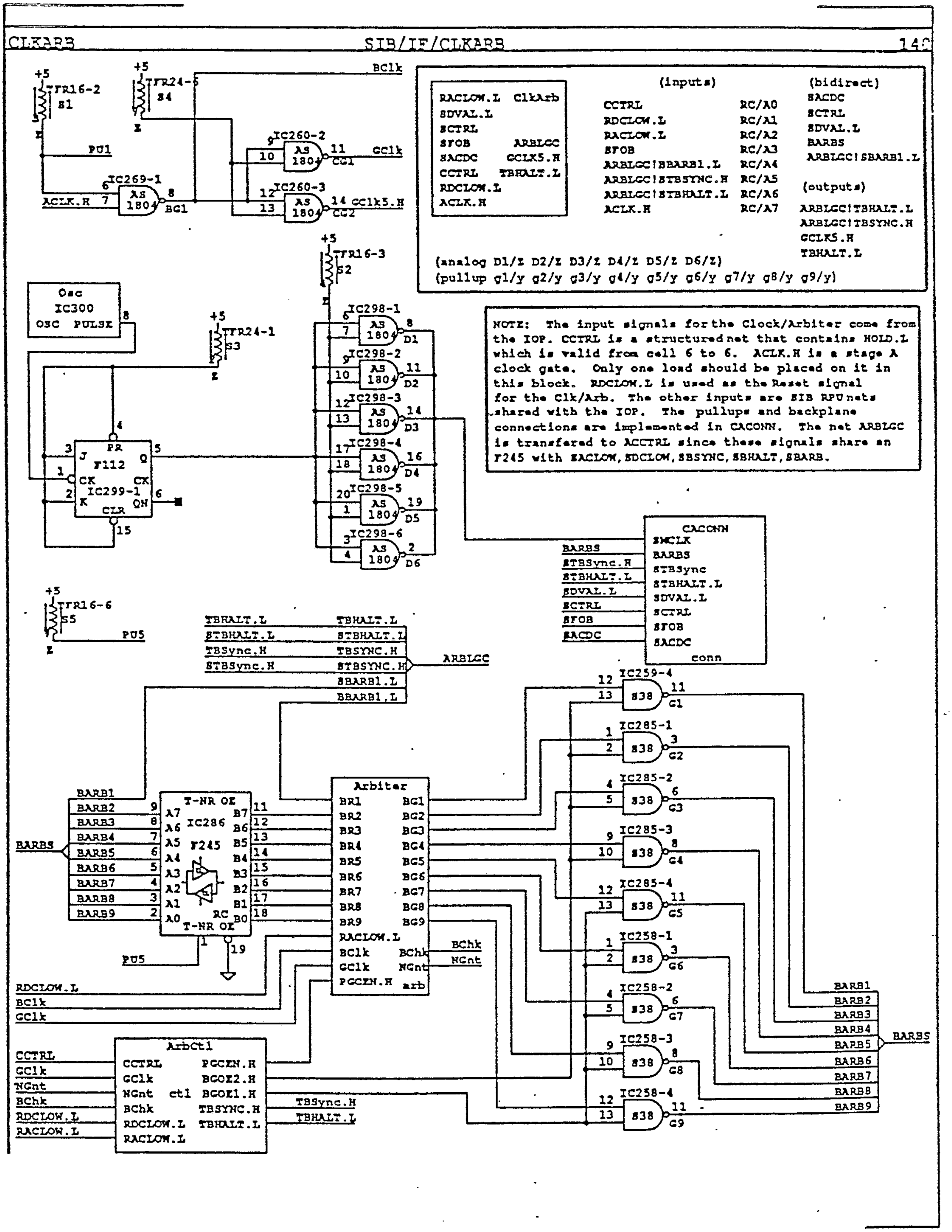

CLKARB
SIB/IF/CLKARB
140
BClk
+5
TR16-2
S1
TR24-5
S4
PU1
IC269-1
ACLK.H
AS 1804
BG1
IC260-2
GClk
IC260-3
GClk5.H
(inputs)
CCTRL RC/A0
RDCLOW.L RC/A1
RACLOW.L RC/A2
SFOB RC/A3
ARBLGC!SBARB1.L RC/A4
ARBLGC!STBSYNC.H RC/A5
ARBLGC!STBHALT.L RC/A6
ACLK.H RC/A7
(bidirect)
SACDC
SCTRL
SDVAL.L
BARBS
ARBLGC!SBARB1.L
(outputs)
ARBLGC!TBHALT.L
ARBLGC!TBSYNC.H
GCLK5.H
TBHALT.L
RACLOW.L ClkArb
SDVAL.L
SCTRL
SFOB ARBLGC
SACDC GCLK5.H
CCTRL TBHALT.L
RDCLOW.L
ACLK.H
(analog D1/Z D2/Z D3/Z D4/Z D5/Z D6/Z)
(pullup g1/y g2/y g3/y g4/y g5/y g6/y g7/y g8/y g9/y)
TR16-3
S2
Osc
IC300
OSC PULSE
TR24-1
S3
IC298-1
IC298-2
IC298-3
IC298-4
IC298-5
IC298-6
F112
IC299-1
PR
CLR
NOTE: The input signals for the Clock/Arbiter come from the IOP. CCTRL is a structured net that contains HOLD.L which is valid from cell 6 to 6. ACLK.H is a stage A clock gate. Only one load should be placed on it in this block. RDCLOW.L is used as the Reset signal for the Clk/Arb. The other inputs are SIB RPU nets shared with the IOP. The pullups and backplane connections are implemented in CACONN. The net ARBLGC is transfered to ACCTRL since these signals share an F245 with SACLOW, SDCLOW, SBSYNC, SBHALT, SBARB.
CACONN
SMCLK
BARBS
STBSync
STBHALT.L
SDVAL.L
SCTRL
SFOB
SACDC
conn
TR16-6
S5
PU5
TBHALT.L
STBHALT.L
TBSync.H
STBSync.H
TBSYNC.H
STBSYNC.H
SBARB1.L
BBARB1.L
ARBLGC
IC259-4
IC285-1
IC285-2
IC285-3
IC285-4
IC258-1
IC258-2
IC258-3
IC258-4
BARB1
BARB2
BARB3
BARB4
BARB5
BARB6
BARB7
BARB8
BARB9
BARBS
T-NR OE
IC286
F245
Arbiter
BR1 BG1
BR2 BG2
BR3 BG3
BR4 BG4
BR5 BG5
BR6 BG6
BR7 BG7
BR8 BG8
BR9 BG9
RACLOW.L
BClk BChk
GClk NGnt
PGCEN.H arb
BChk
NGnt
RDCLOW.L
BClk
GClk
ArbCtl
CCTRL PGCEN.H
GClk BGOE2.H
NGnt ctl BGOE1.H
BChk TBSYNC.H
RDCLOW.L TBHALT.L
RACLOW.L
TBSync.H
TBHALT.L
CCTRL
GClk
NGnt
BChk
RDCLOW.L
RACLOW.L

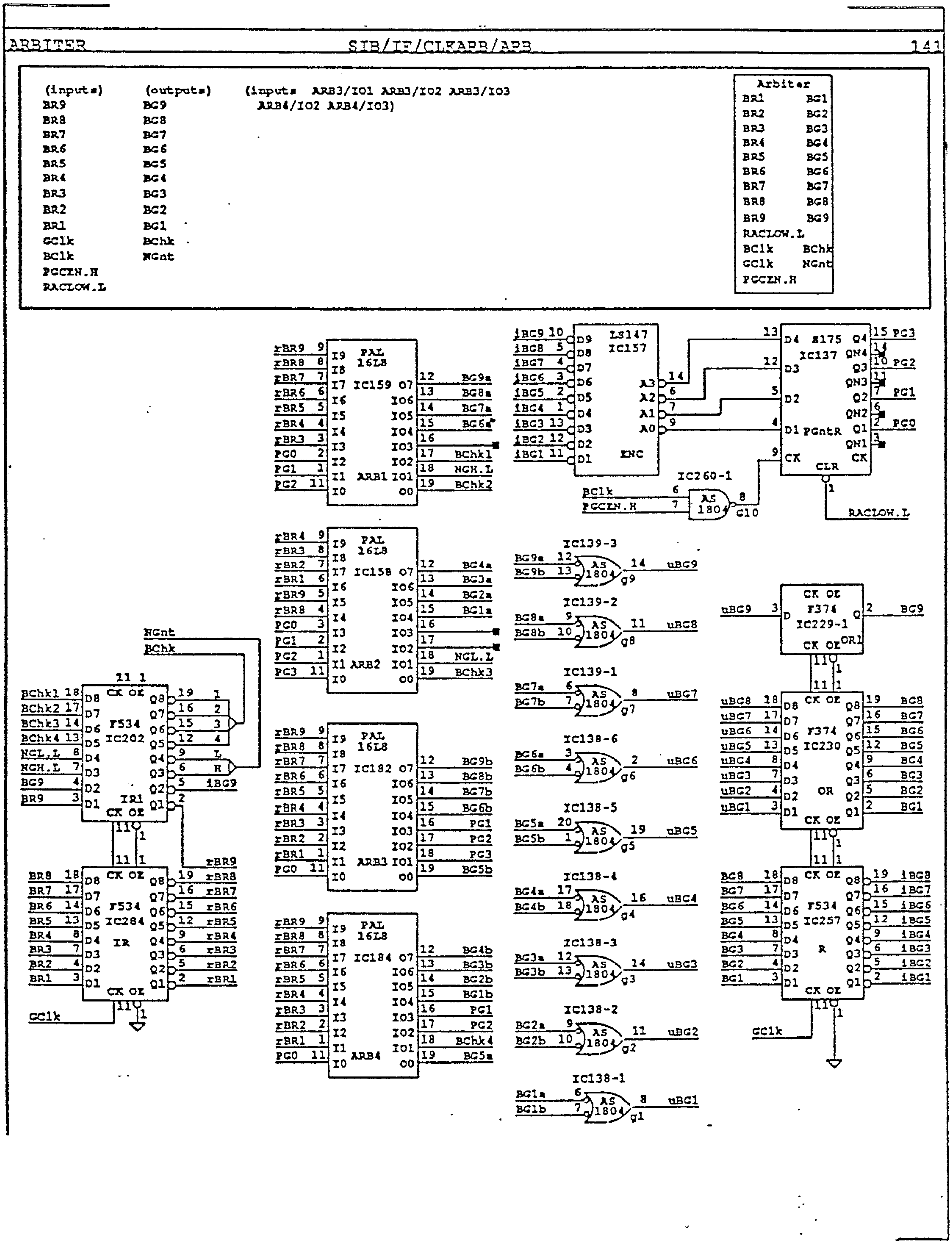
ARBITER
SIB/IF/CLKARB/ARB
141
(inputs) BR9 BR8 BR7 BR6 BR5 BR4 BR3 BR2 BR1 GClk BClk PGCIN.H RACLOW.L
(outputs) BG9 BG8 BG7 BG6 BG5 BG4 BG3 BG2 BG1 BChk NGnt
(inputs ARB3/IO1 ARB3/IO2 ARB3/IO3
ARB4/IO2 ARB4/IO3)
Arbiter
PAL 16L8 IC159 ARB1
PAL 16L8 IC158 ARB2
PAL 16L8 IC182 ARB3
PAL 16L8 IC184 ARB4
LS147 IC157 ENC
S175 IC137 PGntR
IC260-1
F534 IC202 IR1
F534 IC284 IR
F374 IC229-1
F374 IC230 OR
F534 IC257 R

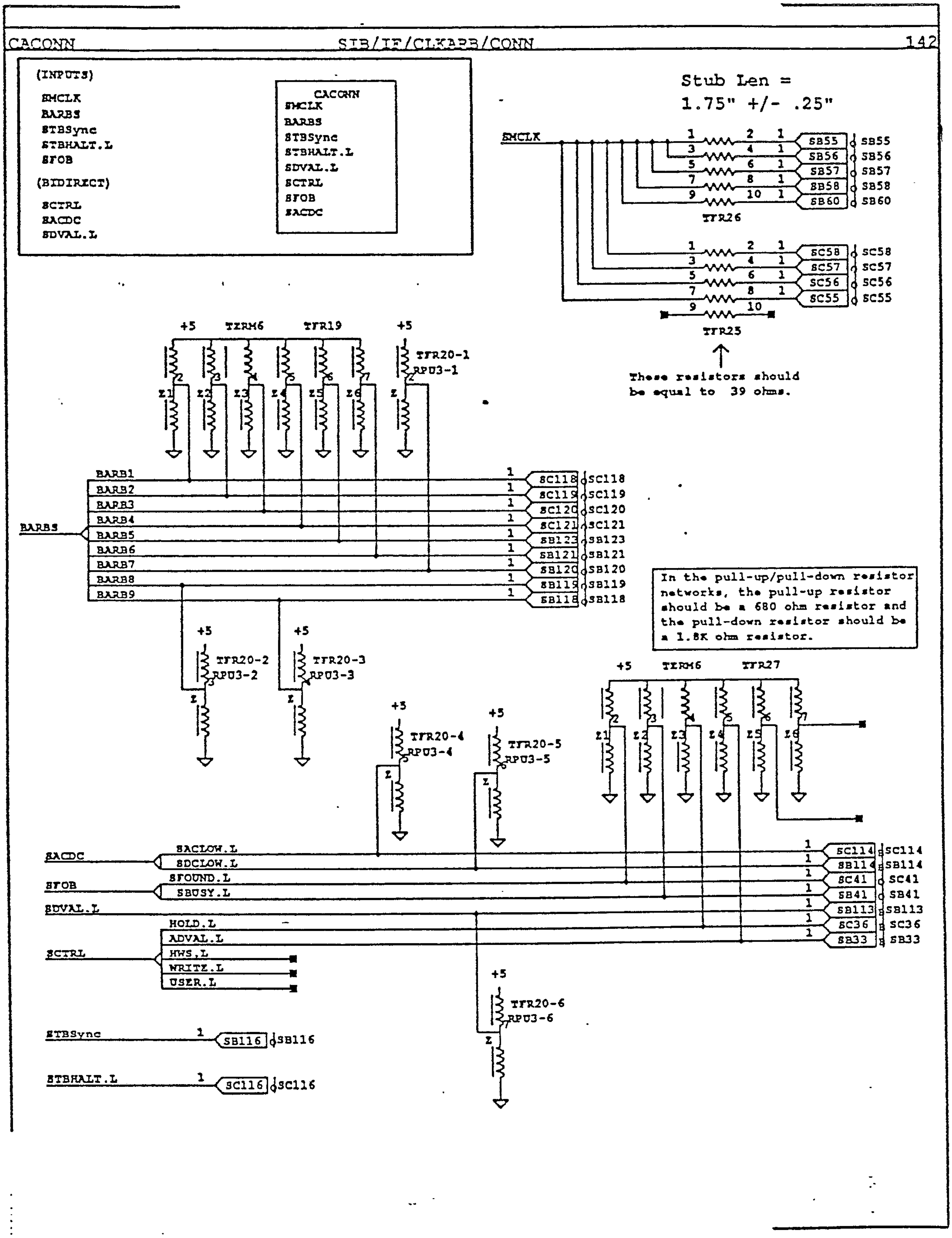
CACONN
SIB/IF/CLKARB/CONN
142
(INPUTS)
SMCLK
BARBS
STBSync
STBHALT.L
SFOB
(BIDIRECT)
SCTRL
SACDC
SDVAL.L
CACONN
Stub Len =
1.75" +/- .25"
TFR26
TFR25
These resistors should be equal to 39 ohms.
TERM6
TFR19
TFR20-1
RPU3-1
BARB1
BARB2
BARB3
BARB4
BARB5
BARB6
BARB7
BARB8
BARB9
In the pull-up/pull-down resistor networks, the pull-up resistor should be a 680 ohm resistor and the pull-down resistor should be a 1.8K ohm resistor.
TFR20-2
RPU3-2
TFR20-3
RPU3-3
TFR20-4
RPU3-4
TFR20-5
RPU3-5
TFR27
SACLOW.L
SDCLOW.L
SFOUND.L
SBUSY.L
HOLD.L
ADVAL.L
HWS.L
WRITE.L
USER.L
TFR20-6
RPU3-6
SB116
SC116

| (inputs) | (outputs) |
|---|---|
| GClk | PGCEN.H |
| CCTRL | BGOE2.H |
| NGnt | BGOE1.H |
| BChk | TBSYNC.H |
| RDCLOW.L | TBHALT.L |
| RACLOW.L | |

ArbCtl

| | |
|---|---|
| CCTRL | PGCEN.H |
| GClk | BGOE2.H |
| NGnt | BGOE1.H |
| BChk | TBSYNC.H |
| RDCLOW.L | TBHALT.L |
| RACLOW.L | |

TBSYNC.H is asserted in SIB cell 0 unless RACLOW.L.
BGOE1.H or BGOE2.H is asserted in SIB cell 3 unless hold is asserted. or RDCLOW.L is asserted.
PGCEN.H is asserted in SIB cell 4 unless hold is asserted or no grant has been issued or RDCLOW.L is asserted.
TBHALT.L is asserted in SIB cell 4 whenever the bugcheck condition is detected and is held asserted until RDCLOW.L is asserted.

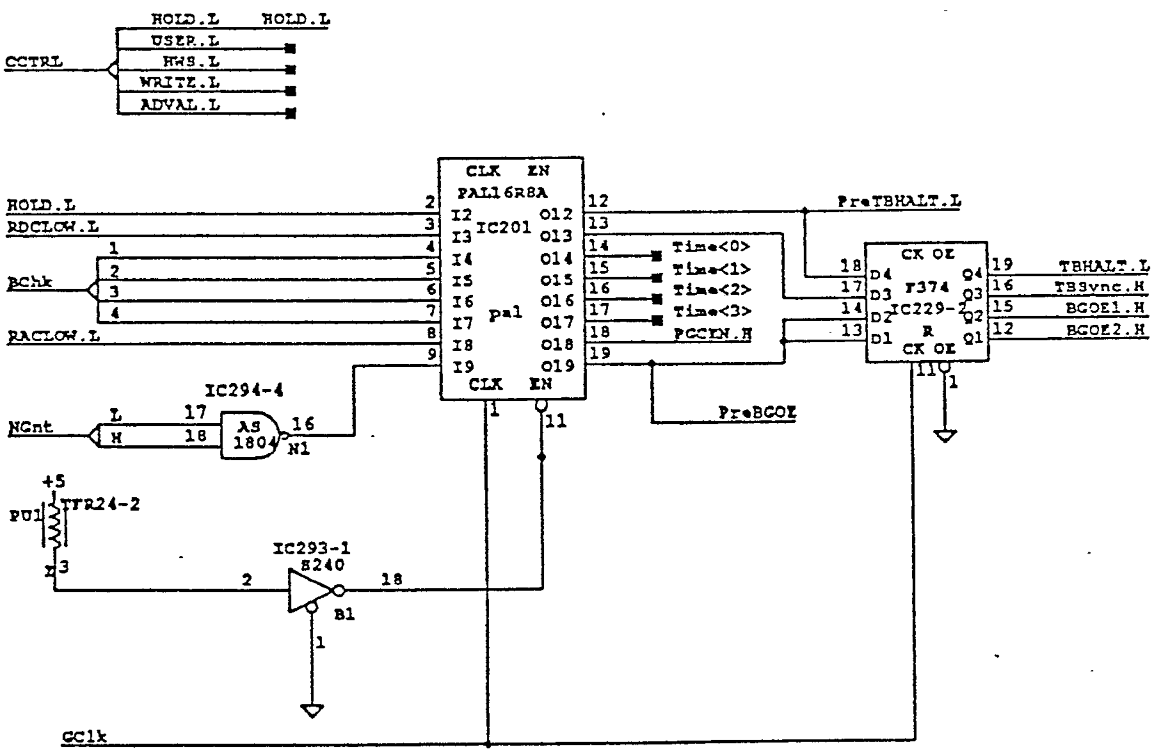

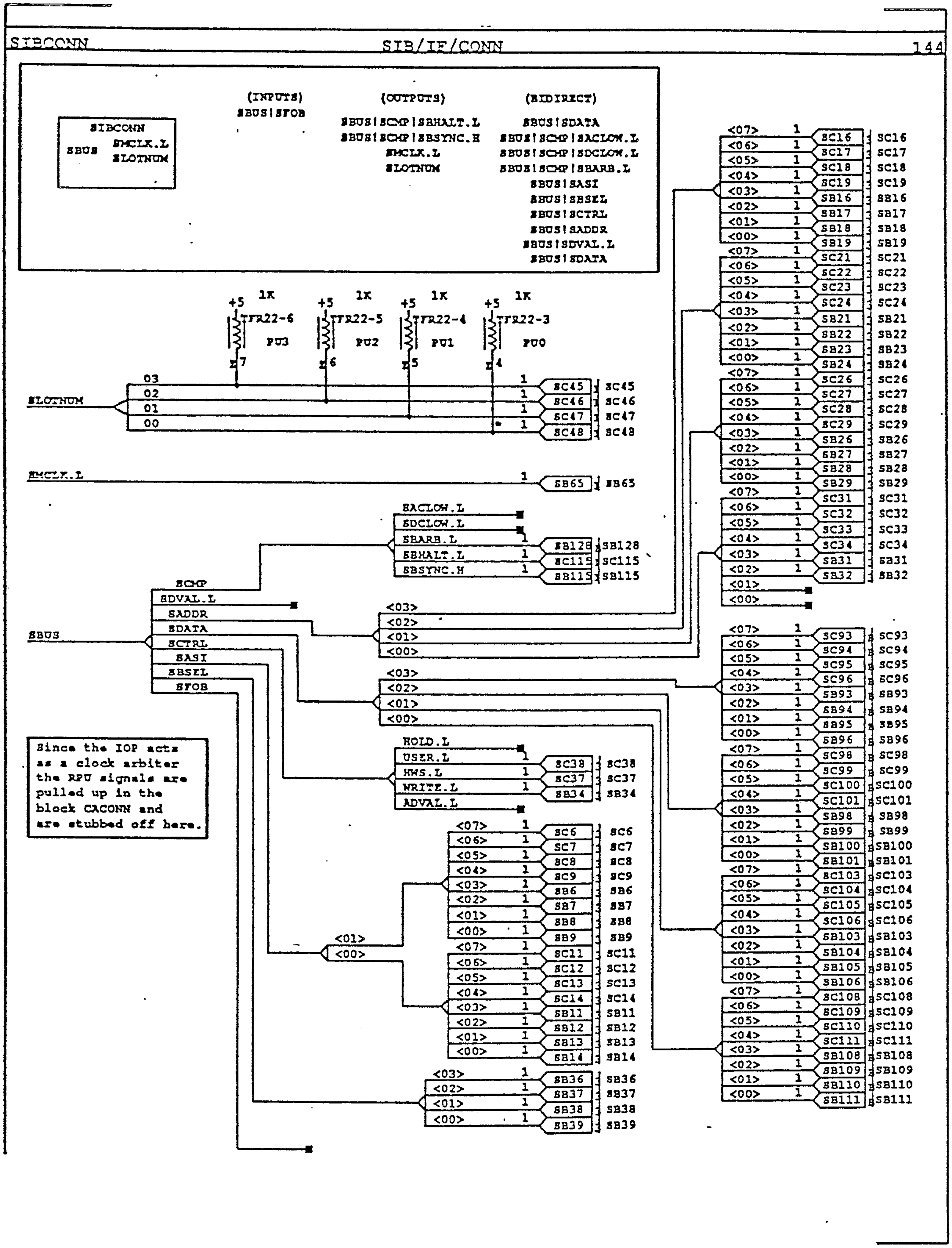

SIBCONN
SIB/IF/CONN
144
(INPUTS)
SBUS|SFOB
(OUTPUTS)
SBUS|SCMP|SBHALT.L
SBUS|SCMP|SBSYNC.H
SMCLK.L
SLOTNUM
(BIDIRECT)
SBUS|SDATA
SBUS|SCMP|SACLOW.L
SBUS|SCMP|SDCLOW.L
SBUS|SCMP|SBARB.L
SBUS|SASI
SBUS|SBSEL
SBUS|SCTRL
SBUS|SADDR
SBUS|SDVAL.L
SBUS|SDATA
SIBCONN
SBUS
SMCLK.L
SLOTNUM
+5
1K
TFR22-6
TFR22-5
TFR22-4
TFR22-3
PU3
PU2
PU1
PU0
SLOTNUM
SMCLK.L
SACLOW.L
SDCLOW.L
SBARB.L
SBHALT.L
SBSYNC.H
SCMP
SDVAL.L
SADDR
SDATA
SCTRL
SASI
SBSEL
SFOB
SBUS
HOLD.L
USER.L
HWS.L
WRITE.L
ADVAL.L
Since the IOP acts as a clock arbiter the RPU signals are pulled up in the block CACONN and are stubbed off here.

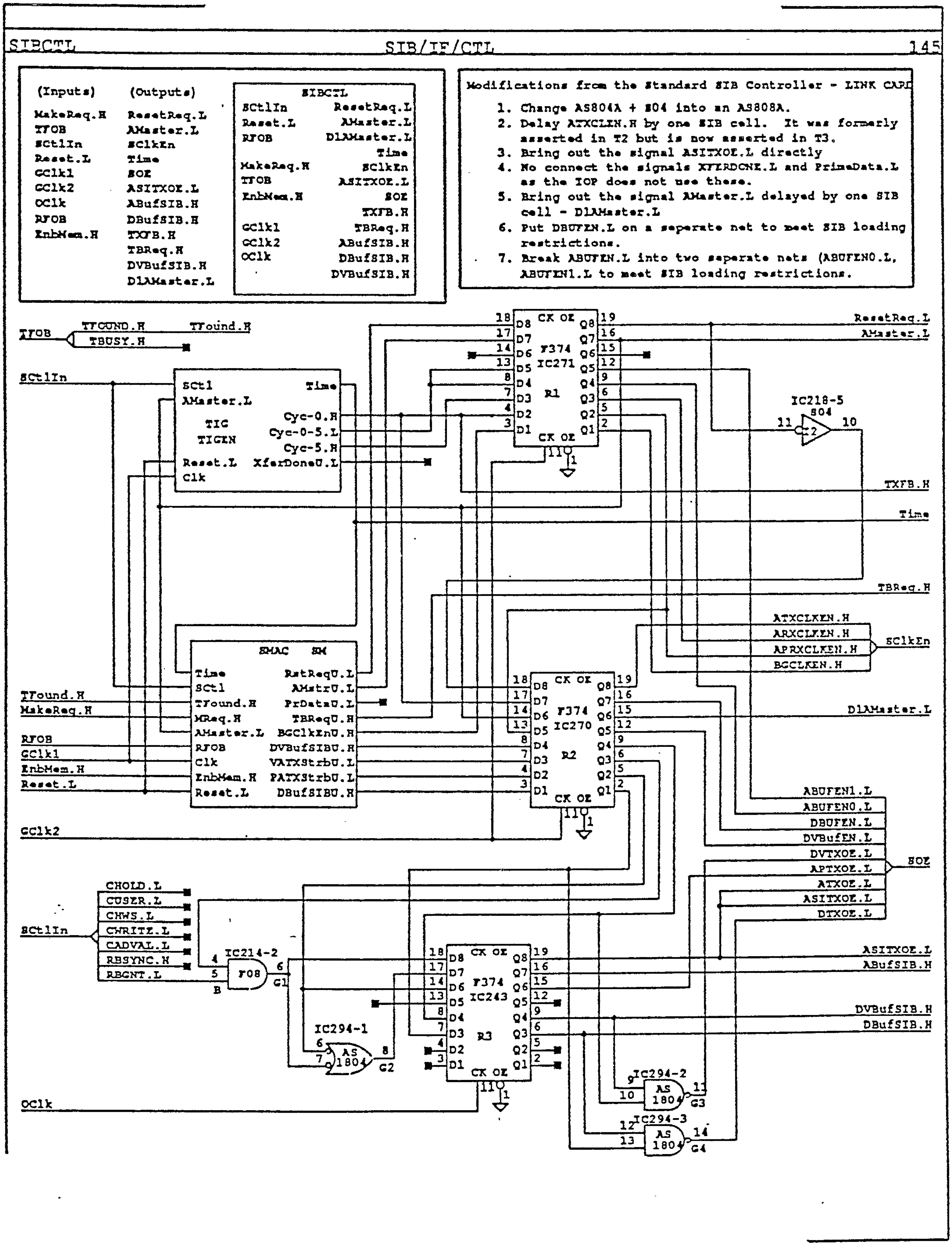
SIBCTL
SIB/IF/CTL
145
(Inputs)
MakeReq.H
TFOB
SCtlIn
Reset.L
GClk1
GClk2
OClk
RFOB
EnbMem.H
(Outputs)
ResetReq.L
AMaster.L
SClkEn
Time
SOE
ASITXOE.L
ABufSIB.H
DBufSIB.H
TXFB.H
TBReq.H
DVBufSIB.H
D1AMaster.L
Modifications from the Standard SIB Controller - LINK CARD
1. Change AS804A + S04 into an AS808A.
2. Delay ATXCLEN.H by one SIB cell. It was formerly asserted in T2 but is now asserted in T3.
3. Bring out the signal ASITXOE.L directly
4. No connect the signals XFERDONE.L and PrimeData.L as the IOP does not use these.
5. Bring out the signal AMaster.L delayed by one SIB cell - D1AMaster.L
6. Put DBUFEN.L on a seperate net to meet SIB loading restrictions.
7. Break ABUFEN.L into two seperate nets (ABUFEN0.L, ABUFEN1.L to meet SIB loading restrictions.
TFound.H
TBUSY.H
TIC
TIGEN
F374 IC271 R1
IC218-5 S04
SMAC SM
F374 IC270 R2
ATXCLKEN.H
ARXCLKEN.H
APRXCLKEN.H
BGCLKEN.H
ABUFEN1.L
ABUFEN0.L
DBUFEN.L
DVBufEN.L
DVTXOE.L
APTXOE.L
ATXOE.L
ASITXOE.L
DTXOE.L
CHOLD.L
CUSER.L
CHWS.L
CWRITE.L
CADVAL.L
RBSYNC.H
RBGNT.L
IC214-2 F08
IC294-1 AS 1804
F374 IC243 R3
IC294-2 AS 1804
IC294-3 AS 1804

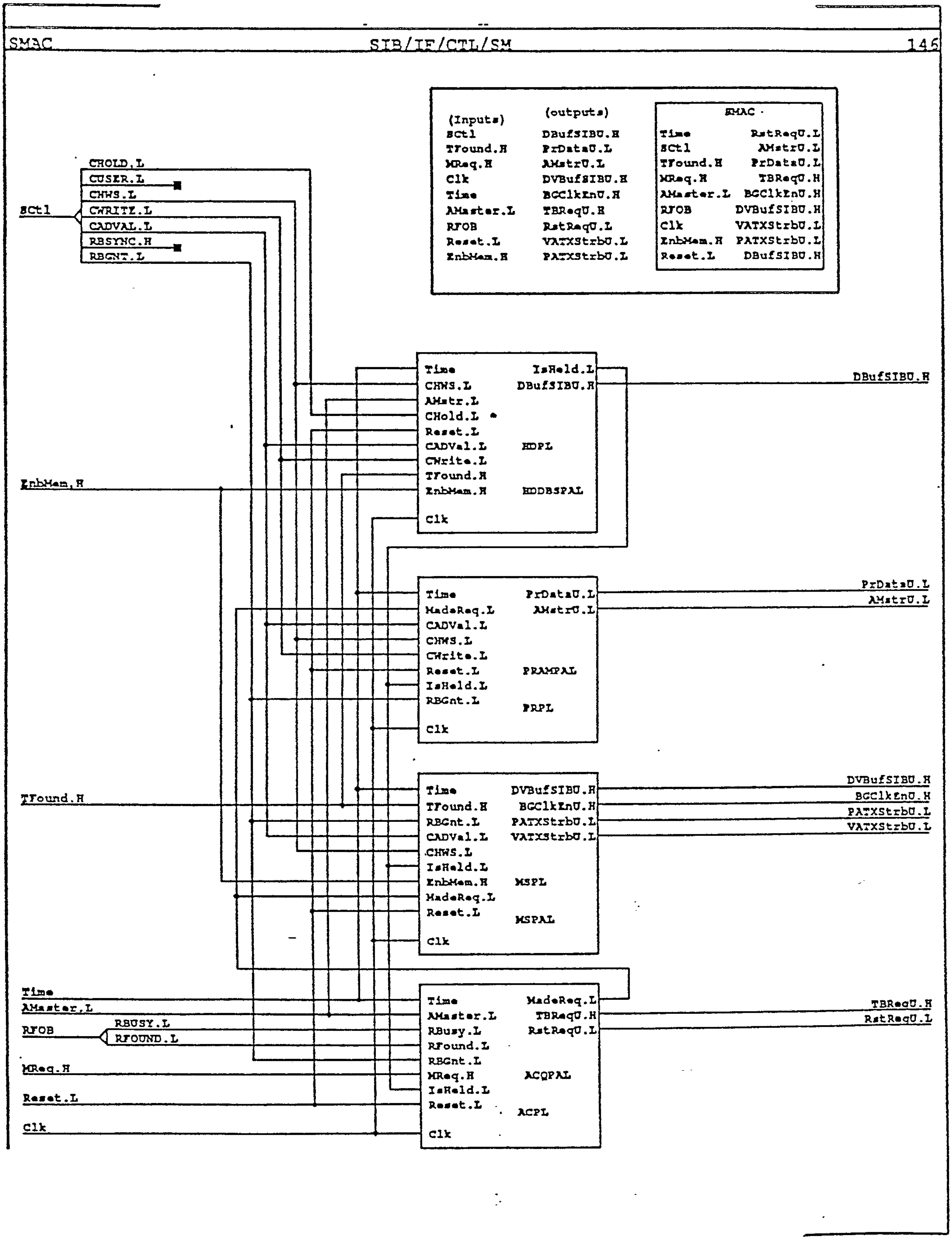
SMAC
SIB/IF/CTL/SM
146
(Inputs)
SCtl
TFound.H
MReq.H
Clk
Time
AMaster.L
RFOB
Reset.L
EnbMem.H
(outputs)
DBufSIBU.H
PrDataU.L
AMstrU.L
DVBufSIBU.H
BGClkEnU.H
TBReqU.H
RstReqU.L
VATXStrbU.L
PATXStrbU.L
SMAC
CHOLD.L
CUSER.L
CHWS.L
CWRITE.L
CADVAL.L
RBSYNC.H
RBGNT.L
HDPL
HDDBSPAL
PRAMPAL
PRPL
MSPL
MSPAL
ACQPAL
ACPL
RBUSY.L
RFOUND.L
Time
CHWS.L
AMstr.L
CHold.L
Reset.L
CADVal.L
CWrite.L
TFound.H
EnbMem.H
Clk
IsHeld.L
DBufSIBU.H
MadeReq.L
RBGnt.L
RBusy.L
RFound.L
MReq.H
AMaster.L
TBReqU.H
RstReqU.L
PrDataU.L
AMstrU.L
DVBufSIBU.H
BGClkEnU.H
PATXStrbU.L
VATXStrbU.L

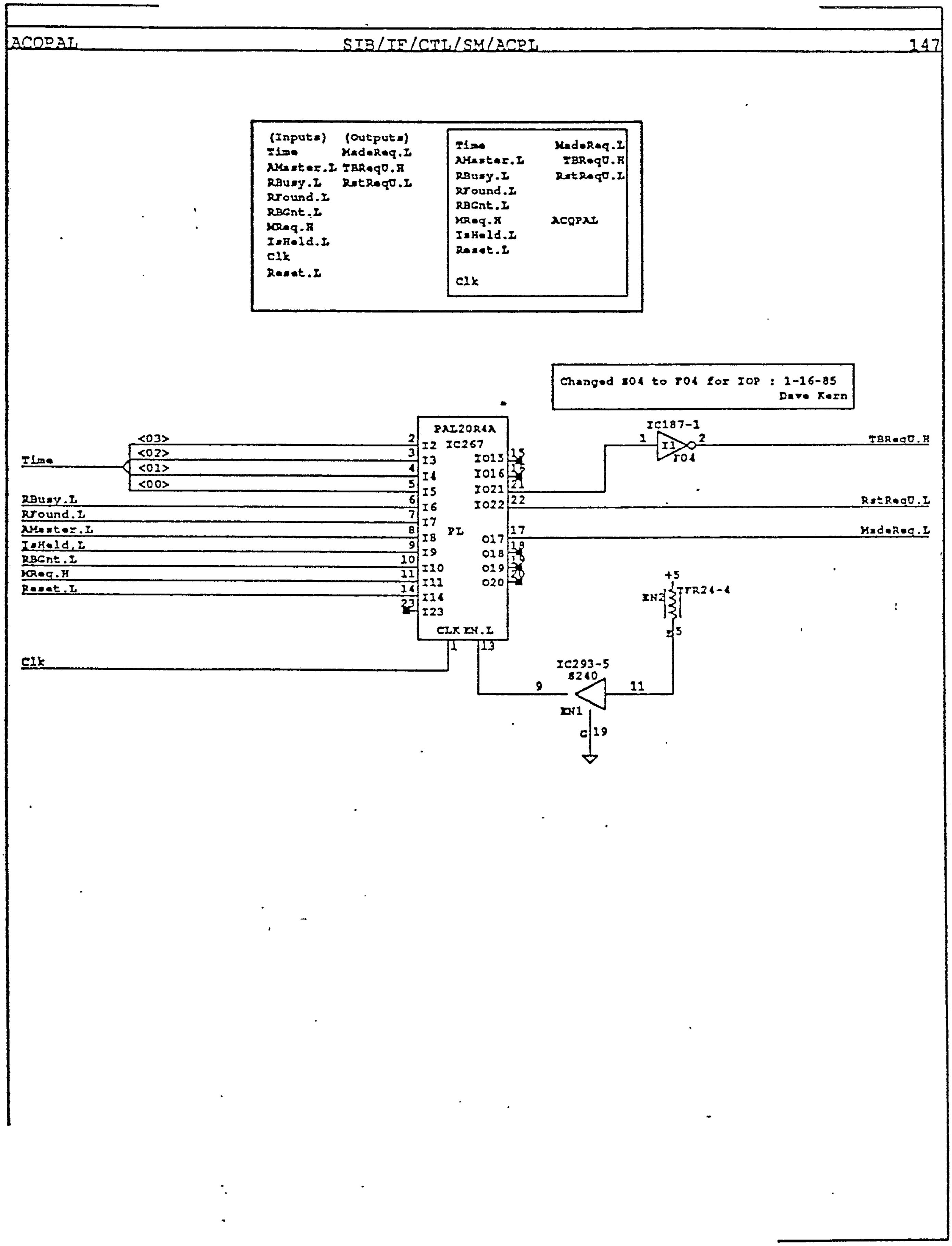
ACQPAL
SIB/IF/CTL/SM/ACPL
147
(Inputs) (Outputs)
Time MadeReq.L
AMaster.L TBReqU.H
RBusy.L RstReqU.L
RFound.L
RBCnt.L
MReq.H
IsHeld.L
Clk
Reset.L
ACQPAL
Changed S04 to F04 for IOP : 1-16-85
Dave Kern
PAL20R4A
IC267
PL
IC187-1
F04
TBReqU.H
RstReqU.L
MadeReq.L
Time
<03>
<02>
<01>
<00>
Clk
+5
TFR24-4
IC293-5
S240
EN1
EN2
CLK EN.L

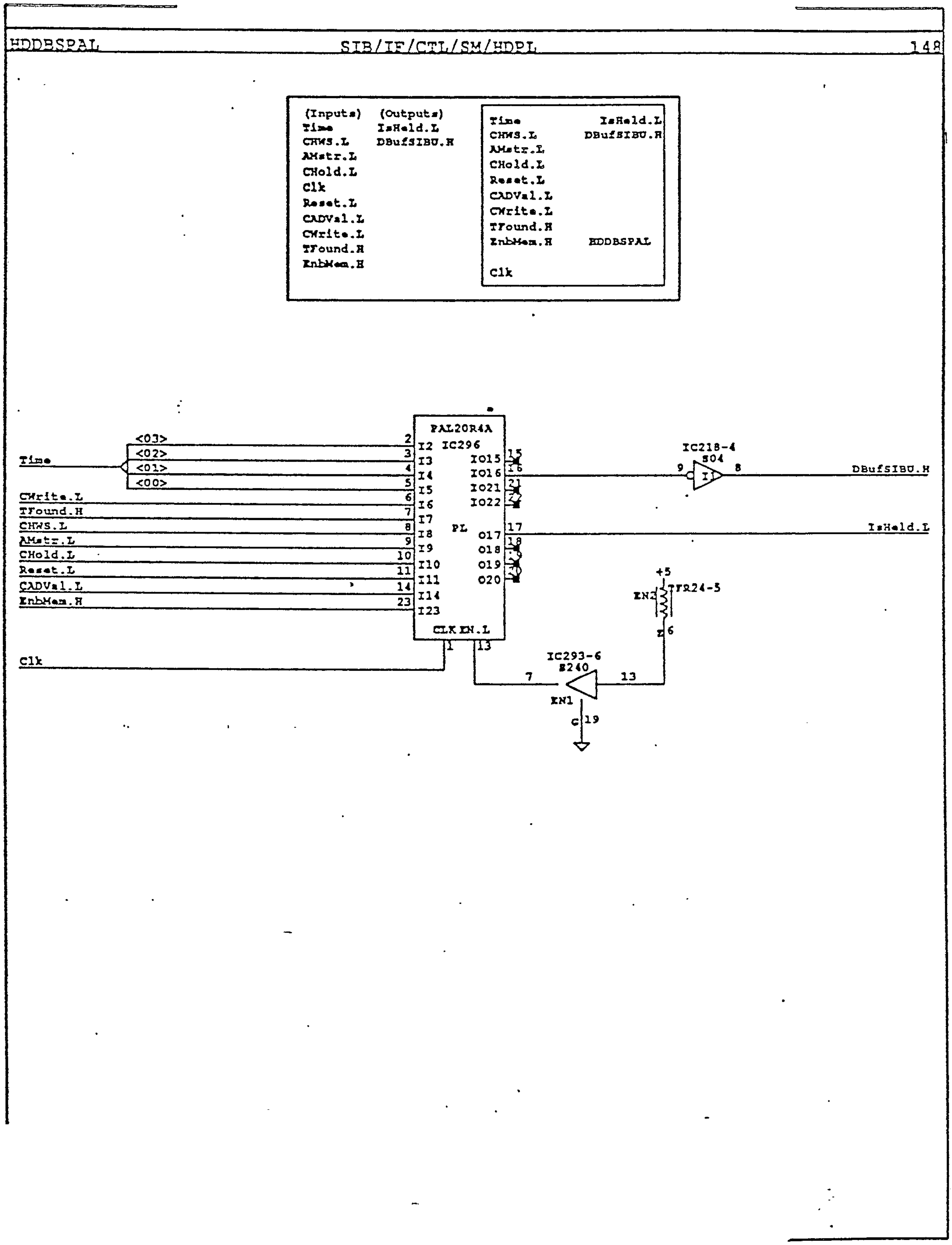
HDDBSPAL
SIB/IF/CTL/SM/HDPL
148
(Inputs) (Outputs)
Time IsHeld.L
CHWS.L DBufSIBU.H
AMstr.L
CHold.L
Clk
Reset.L
CADVal.L
CWrite.L
TFound.H
EnbMem.H
HDDBSPAL
PAL20R4A
IC296
PL
IC218-4
S04
IC293-6
S240
TR24-5
+5
EN1
EN2
DBufSIBU.H
IsHeld.L
<03>
<02>
<01>
<00>
CLK EN.L

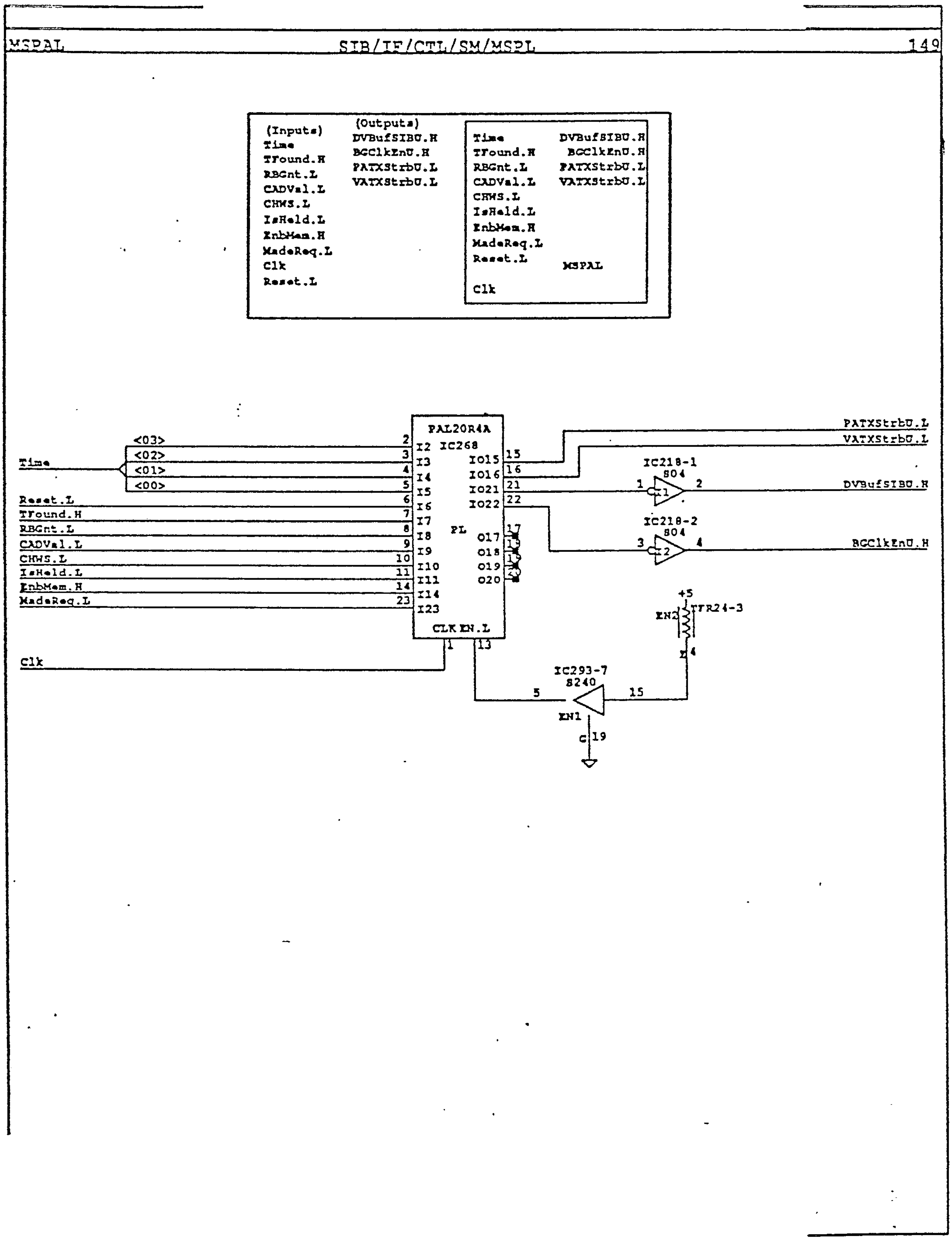
MSPAL
SIB/IF/CTL/SM/MSPL
149
(Inputs)
Time
TFound.H
RBGnt.L
CADVal.L
CHWS.L
IsHeld.L
EnbMem.H
MadeReq.L
Clk
Reset.L
(Outputs)
DVBufSIBU.H
BGClkEnU.H
PATXStrbU.L
VATXStrbU.L
MSPAL
PAL20R4A
IC268
PL
CLK EN.L
I2 I3 I4 I5 I6 I7 I8 I9 I10 I11 I14 I23
IO15 IO16 IO21 IO22
O17 O18 O19 O20
<03>
<02>
<01>
<00>
IC218-1
804
IC218-2
804
IC293-7
8240
EN1
EN2
+5
TR24-3
PATXStrbU.L
VATXStrbU.L
DVBufSIBU.H
BGClkEnU.H

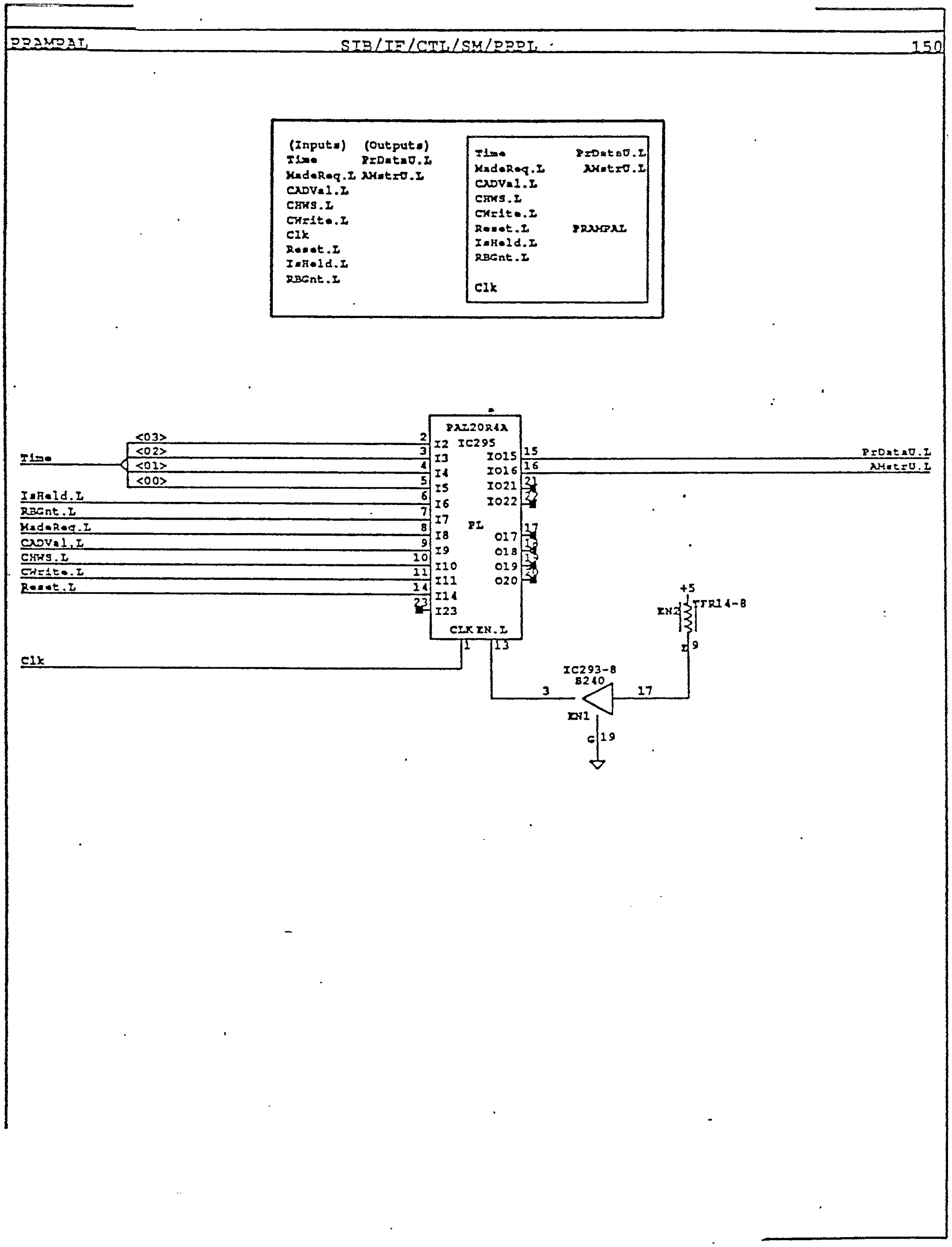
PRAMPAL
SIB/IF/CTL/SM/PRPL
150
(Inputs) (Outputs)
Time PrDataU.L
MadeReq.L AMstrU.L
CADVal.L
CHWS.L
CWrite.L
Clk
Reset.L
IsHeld.L
RBGnt.L
PRAMPAL
PAL20R4A
IC295
PL
CLK EN.L
IC293-8
8240
EN1
TTR14-8
+5
Time
IsHeld.L
RBGnt.L
MadeReq.L
CADVal.L
CHWS.L
CWrite.L
Reset.L
Clk
PrDataU.L
AMstrU.L

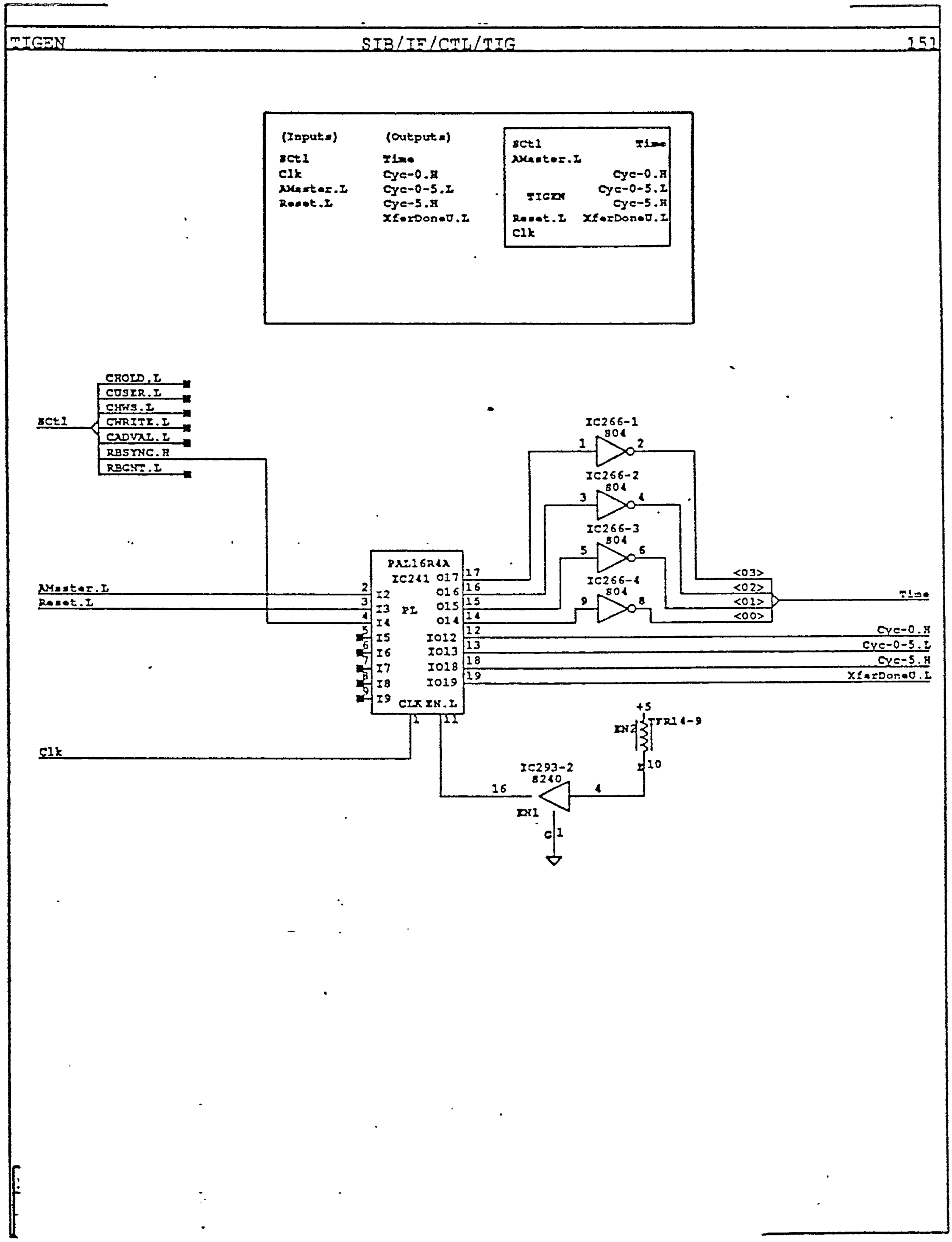
TIGEN
SIB/IF/CTL/TIG
151
(Inputs)
SCtl
Clk
AMaster.L
Reset.L
(Outputs)
Time
Cyc-0.H
Cyc-0-5.L
Cyc-5.H
XferDoneU.L
TIGEN
CHOLD.L
CUSER.L
CHWS.L
CWRITE.L
CADVAL.L
RBSYNC.H
RBCNT.L
PAL16R4A
IC241
PL
IC266-1
IC266-2
IC266-3
IC266-4
S04
IC293-2
S240
TPR14-9
+5
EN1
EN2
CLK
EN.L
Cyc-0.H
Cyc-0-5.L
Cyc-5.H
XferDoneU.L
Clk

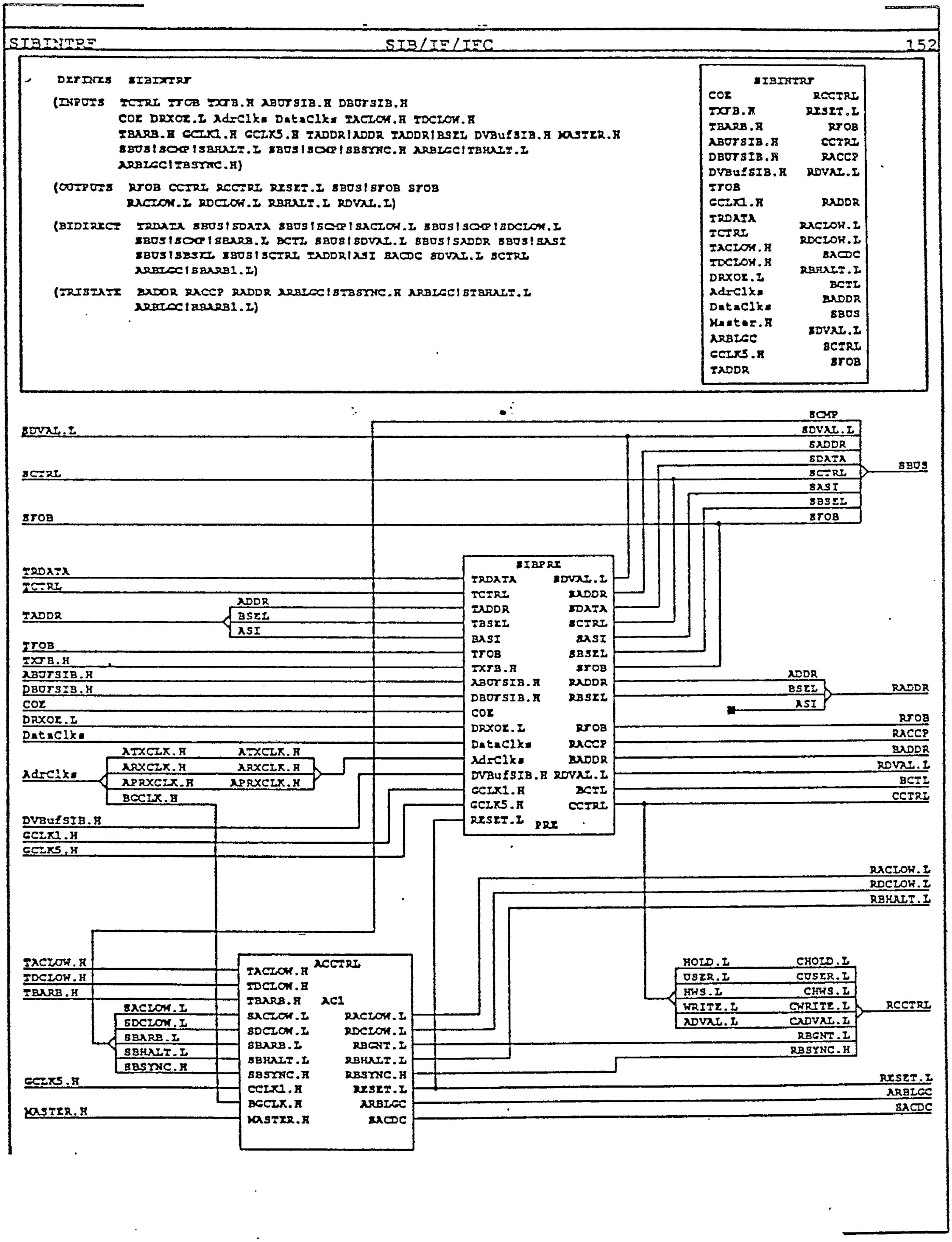
SIBINTRF
SIB/IF/IFC
152
DEFINES SIBINTRF
(INPUTS TCTRL TFOB TXFB.H ABUFSIB.H DBUFSIB.H
COE DRXOE.L AdrClks DataClks TACLOW.H TDCLOW.H
TBARB.H GCLK1.H GCLK5.H TADDR!ADDR TADDR!BSEL DVBufSIB.H MASTER.H
SBUS!SCMP!SBHALT.L SBUS!SCMP!SBSYNC.H ARBLGC!TBHALT.L
ARBLGC!TBSYNC.H)
(OUTPUTS RFOB CCTRL RCCTRL RESET.L SBUS!SFOB SFOB
RACLOW.L RDCLOW.L RBHALT.L RDVAL.L)
(BIDIRECT TRDATA SBUS!SDATA SBUS!SCMP!SACLOW.L SBUS!SCMP!SDCLOW.L
SBUS!SCMP!SBARB.L BCTL SBUS!SDVAL.L SBUS!SADDR SBUS!SASI
SBUS!SBSEL SBUS!SCTRL TADDR!ASI SACDC SDVAL.L SCTRL
ARBLGC!SBARB1.L)
(TRISTATE BADDR RACCP RADDR ARBLGC!STBSYNC.H ARBLGC!STBHALT.L
ARBLGC!BBARB1.L)
SIBPRE
PRE
ACCTRL
AC1

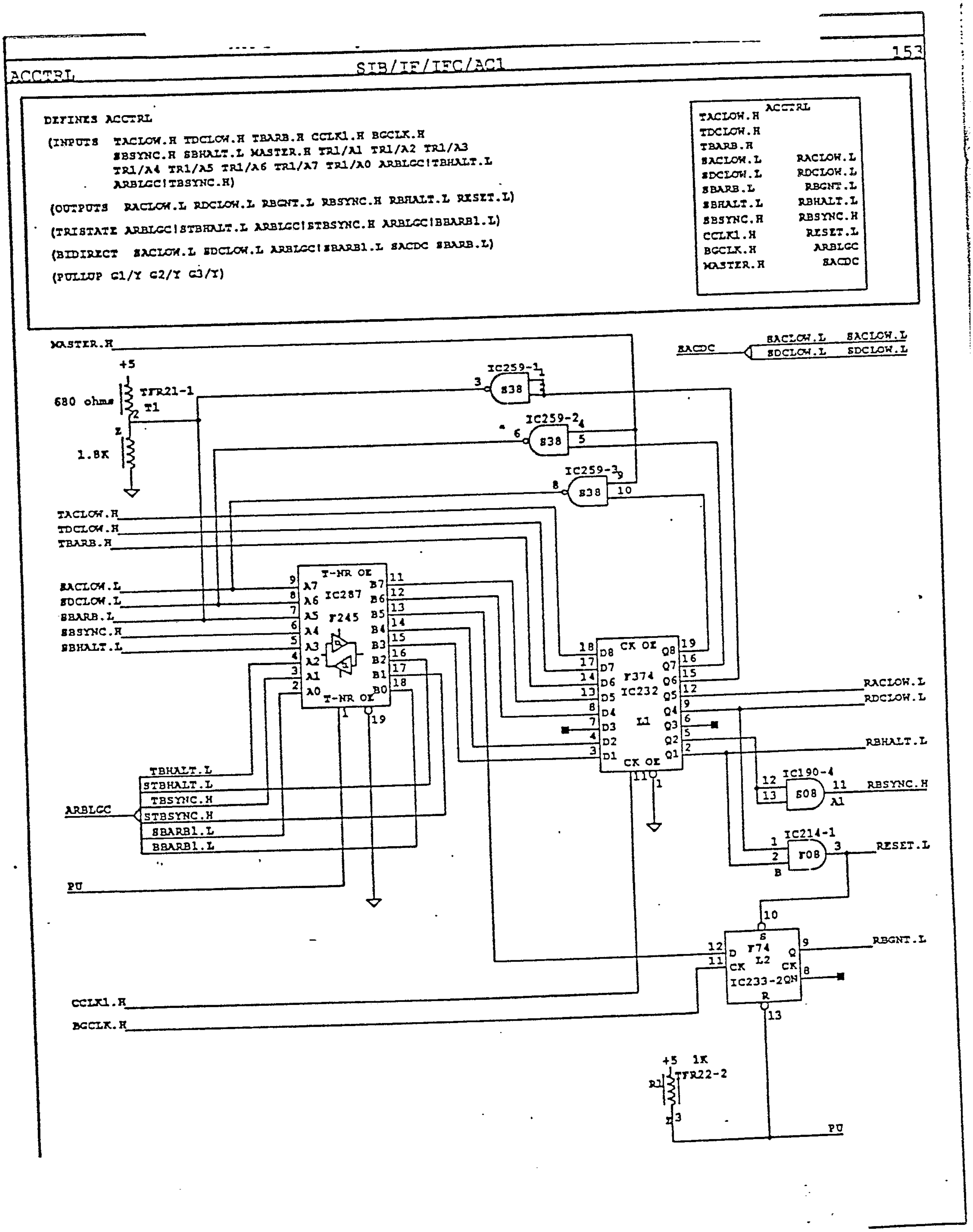
153
ACCTRL
SIB/IF/IFC/AC1
DEFINES ACCTRL
(INPUTS TACLOW.H TDCLOW.H TBARB.H CCLK1.H BGCLK.H
SBSYNC.H SBHALT.L MASTER.H TR1/A1 TR1/A2 TR1/A3
TR1/A4 TR1/A5 TR1/A6 TR1/A7 TR1/A0 ARBLGC|TBHALT.L
ARBLGC|TBSYNC.H)
(OUTPUTS RACLOW.L RDCLOW.L RBGNT.L RBSYNC.H RBHALT.L RESET.L)
(TRISTATE ARBLGC|STBHALT.L ARBLGC|STBSYNC.H ARBLGC|BBARB1.L)
(BIDIRECT SACLOW.L SDCLOW.L ARBLGC|SBARB1.L SACDC SBARB.L)
(PULLUP G1/Y G2/Y G3/Y)
ACCTRL
TACLOW.H
TDCLOW.H
TBARB.H
SACLOW.L RACLOW.L
SDCLOW.L RDCLOW.L
SBARB.L RBGNT.L
SBHALT.L RBHALT.L
SBSYNC.H RBSYNC.H
CCLK1.H RESET.L
BGCLK.H ARBLGC
MASTER.H SACDC
MASTER.H
+5
680 ohms
TFR21-1
T1
1.8K
IC259-1
S38
IC259-2
S38
IC259-3
S38
SACDC
SACLOW.L SACLOW.L
SDCLOW.L SDCLOW.L
TACLOW.H
TDCLOW.H
TBARB.H
SACLOW.L
SDCLOW.L
SBARB.L
SBSYNC.H
SBHALT.L
T-HR OE
IC287
F245
T-HR OE
CK OE
F374
IC232
L1
CK OE
RACLOW.L
RDCLOW.L
RBHALT.L
IC190-4
S08
A1
RBSYNC.H
IC214-1
F08
B
RESET.L
TBHALT.L
STBHALT.L
TBSYNC.H
ARBLGC
STBSYNC.H
SBARB1.L
BBARB1.L
PU
F74
L2
IC233-2QN
RBGNT.L
CCLK1.H
BGCLK.H
+5 1K
R1
TFR22-2
PU

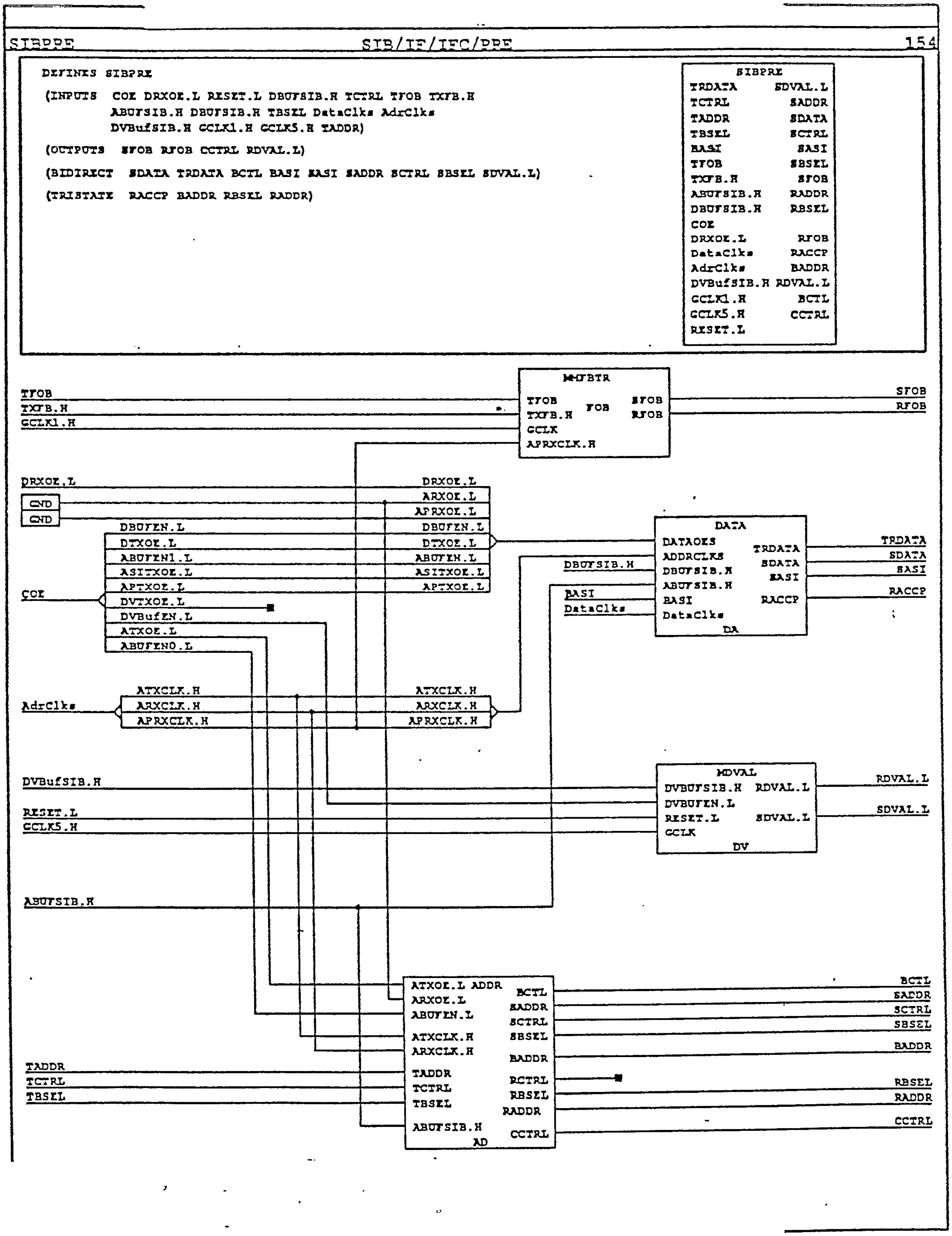

SIBPRE
SIB/IF/IFC/PRE
154
DEFINES SIBPRE
(INPUTS COE DRXOE.L RESET.L DBUFSIB.H TCTRL TFOB TXFB.H
ABUFSIB.H DBUFSIB.H TBSEL DataClks AdrClks
DVBufSIB.H GCLK1.H GCLK5.H TADDR)
(OUTPUTS SFOB RFOB CCTRL RDVAL.L)
(BIDIRECT SDATA TRDATA BCTL BASI SASI SADDR SCTRL SBSEL SDVAL.L)
(TRISTATE RACCP BADDR RBSEL RADDR)
SIBPRE
TRDATA SDVAL.L
TCTRL SADDR
TADDR SDATA
TBSEL SCTRL
BASI SASI
TFOB SBSEL
TXFB.H SFOB
ABUFSIB.H RADDR
DBUFSIB.H RBSEL
COE
DRXOE.L RFOB
DataClks RACCP
AdrClks BADDR
DVBufSIB.H RDVAL.L
GCLK1.H BCTL
GCLK5.H CCTRL
RESET.L
TFOB
TXFB.H
GCLK1.H
MUFBTR
TFOB
TXFB.H
GCLK
APRXCLK.H
FOB
SFOB
RFOB
SFOB
RFOB
DRXOE.L
GND
GND
DBUFEN.L
DTXOE.L
ABUFEN1.L
ASITXOE.L
APTXOE.L
COE
DVTXOE.L
DVBufEN.L
ATXOE.L
ABUFEN0.L
DRXOE.L
ARXOE.L
APRXOE.L
DBUFEN.L
DTXOE.L
ABUFEN.L
ASITXOE.L
APTXOE.L
DATA
DATAOES
ADDRCLKS
DBUFSIB.H
ABUFSIB.H
BASI
DataClks
TRDATA
SDATA
SASI
RACCP
DA
DBUFSIB.H
BASI
DataClks
TRDATA
SDATA
BASI
RACCP
AdrClks
ATXCLK.H
ARXCLK.H
APRXCLK.H
ATXCLK.H
ARXCLK.H
APRXCLK.H
DVBufSIB.H
RESET.L
GCLK5.H
MDVAL
DVBUFSIB.H
DVBUFEN.L
RESET.L
GCLK
RDVAL.L
SDVAL.L
DV
RDVAL.L
SDVAL.L
ABUFSIB.H
TADDR
TCTRL
TBSEL
ATXOE.L ADDR
ARXOE.L
ABUFEN.L
ATXCLK.H
ARXCLK.H
TADDR
TCTRL
TBSEL
ABUFSIB.H
BCTL
SADDR
SCTRL
SBSEL
BADDR
RCTRL
RBSEL
RADDR
CCTRL
AD
BCTL
SADDR
SCTRL
SBSEL
BADDR
RBSEL
RADDR
CCTRL

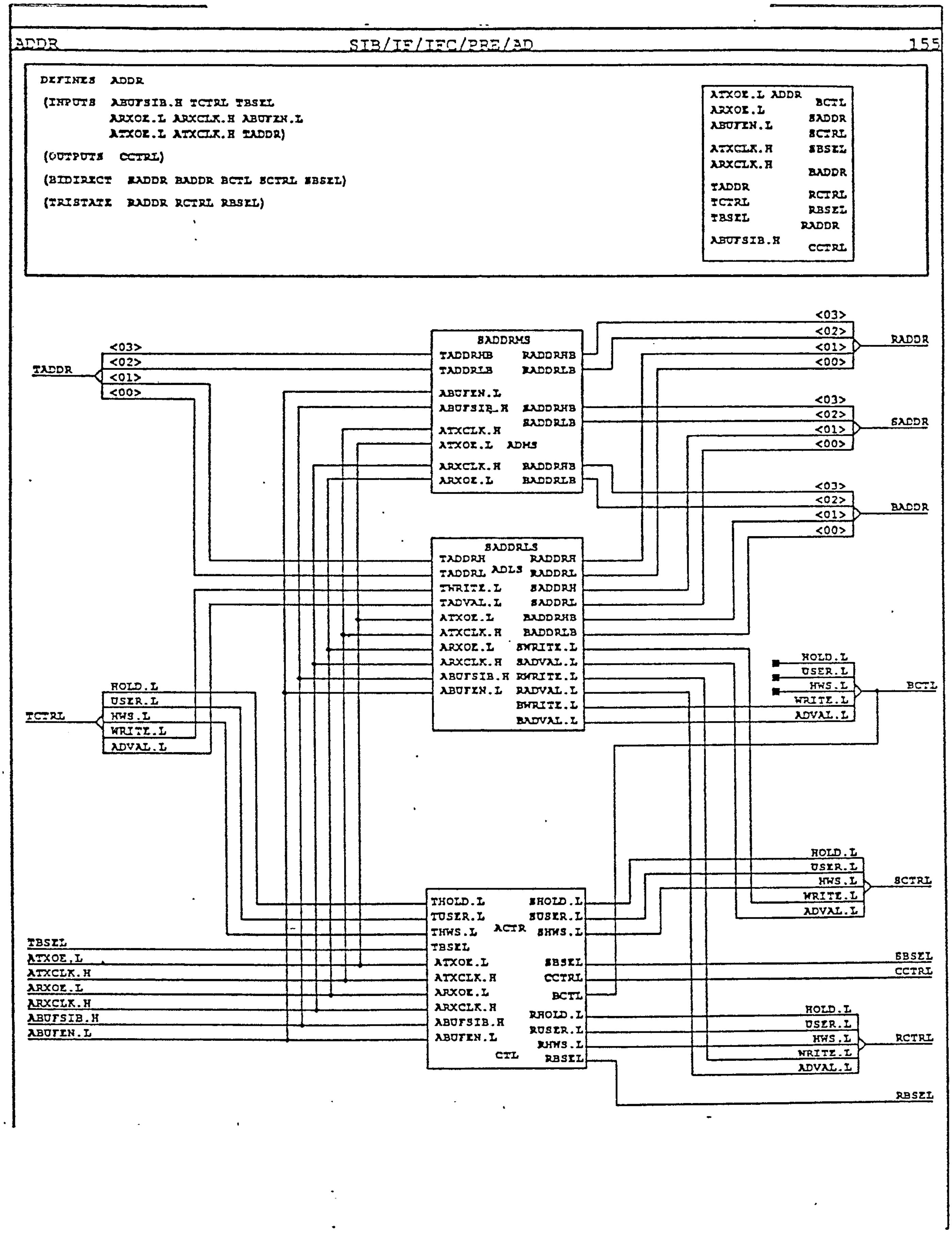
ADDR
SIB/IF/IFC/PRE/AD
155
DEFINES ADDR
(INPUTS ABUFSIB.H TCTRL TBSEL
ARXOE.L ARXCLK.H ABUFEN.L
ATXOE.L ATXCLK.H TADDR)
(OUTPUTS CCTRL)
(BIDIRECT SADDR BADDR BCTL SCTRL SBSEL)
(TRISTATE RADDR RCTRL RBSEL)
BADDRMS
ADMS
SADDRLS
ADLS
ACTR
CTL
TADDR
TCTRL
TBSEL
ATXOE.L
ATXCLK.H
ARXOE.L
ARXCLK.H
ABUFSIB.H
ABUFEN.L
RADDR
SADDR
BADDR
BCTL
SCTRL
SBSEL
CCTRL
RCTRL
RBSEL

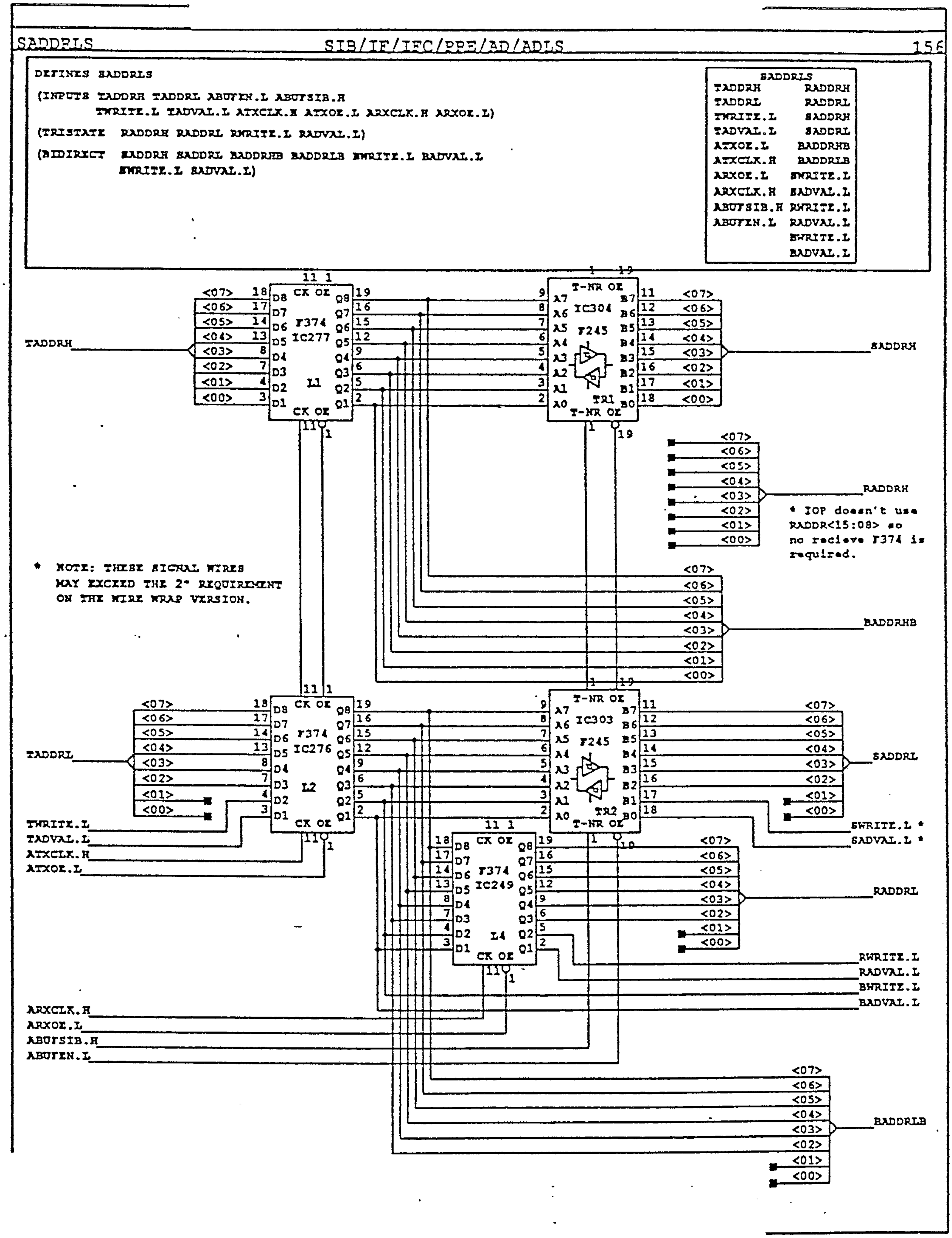

SADDRLS
SIB/IF/IFC/PPE/AD/ADLS
156
DEFINES SADDRLS
(INPUTS TADDRH TADDRL ABUFEN.L ABUFSIB.H
TWRITE.L TADVAL.L ATXCLK.H ATXOE.L ARXCLK.H ARXOE.L)
(TRISTATE RADDRH RADDRL RWRITE.L RADVAL.L)
(BIDIRECT SADDRH SADDRL BADDRHB BADDRLB BWRITE.L BADVAL.L
SWRITE.L SADVAL.L)
SADDRLS
TADDRH RADDRH
TADDRL RADDRL
TWRITE.L SADDRH
TADVAL.L SADDRL
ATXOE.L BADDRHB
ATXCLK.H BADDRLB
ARXOE.L SWRITE.L
ARXCLK.H SADVAL.L
ABUFSIB.H RWRITE.L
ABUFEN.L RADVAL.L
BWRITE.L
BADVAL.L
TADDRH
F374
IC277
L1
IC304
F245
TR1
SADDRH
RADDRH
* IOP doesn't use RADDR<15:08> so no recieve F374 is required.
* NOTE: THESE SIGNAL WIRES MAY EXCEED THE 2" REQUIREMENT ON THE WIRE WRAP VERSION.
BADDRHB
TADDRL
F374
IC276
L2
IC303
F245
TR2
SADDRL
TWRITE.L
TADVAL.L
ATXCLK.H
ATXOE.L
SWRITE.L *
SADVAL.L *
F374
IC249
L4
RADDRL
RWRITE.L
RADVAL.L
BWRITE.L
BADVAL.L
ARXCLK.H
ARXOE.L
ABUFSIB.H
ABUFEN.L
BADDRLB

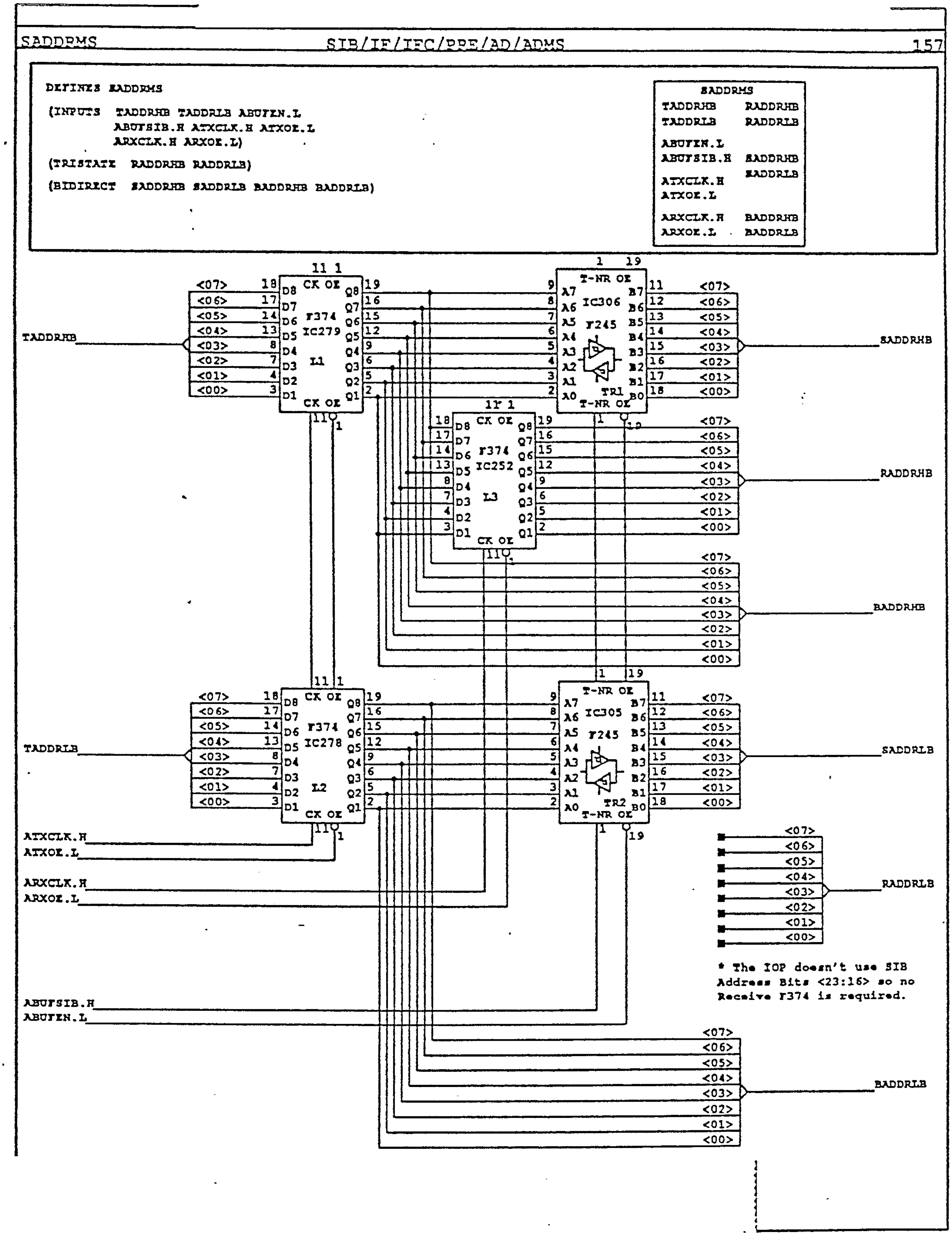
SADDRMS
SIB/IF/IFC/PPE/AD/ADMS
157
DEFINES SADDRMS
(INPUTS TADDRHB TADDRLB ABUFEN.L
ABUFSIB.H ATXCLK.H ATXOE.L
ARXCLK.H ARXOE.L)
(TRISTATE RADDRHB RADDRLB)
(BIDIRECT SADDRHB SADDRLB BADDRHB BADDRLB)
SADDRMS
TADDRHB RADDRHB
TADDRLB RADDRLB
ABUFEN.L
ABUFSIB.H SADDRHB
SADDRLB
ATXCLK.H
ATXOE.L
ARXCLK.H BADDRHB
ARXOE.L BADDRLB
TADDRHB
F374
IC279
L1
T-NR OE
IC306
F245
TR1
SADDRHB
F374
IC252
L3
RADDRHB
BADDRHB
TADDRLB
F374
IC278
L2
IC305
F245
TR2
SADDRLB
ATXCLK.H
ATXOE.L
ARXCLK.H
ARXOE.L
RADDRLB
* The IOP doesn't use SIB Address Bits <23:16> so no Receive F374 is required.
ABUFSIB.H
ABUFEN.L
BADDRLB

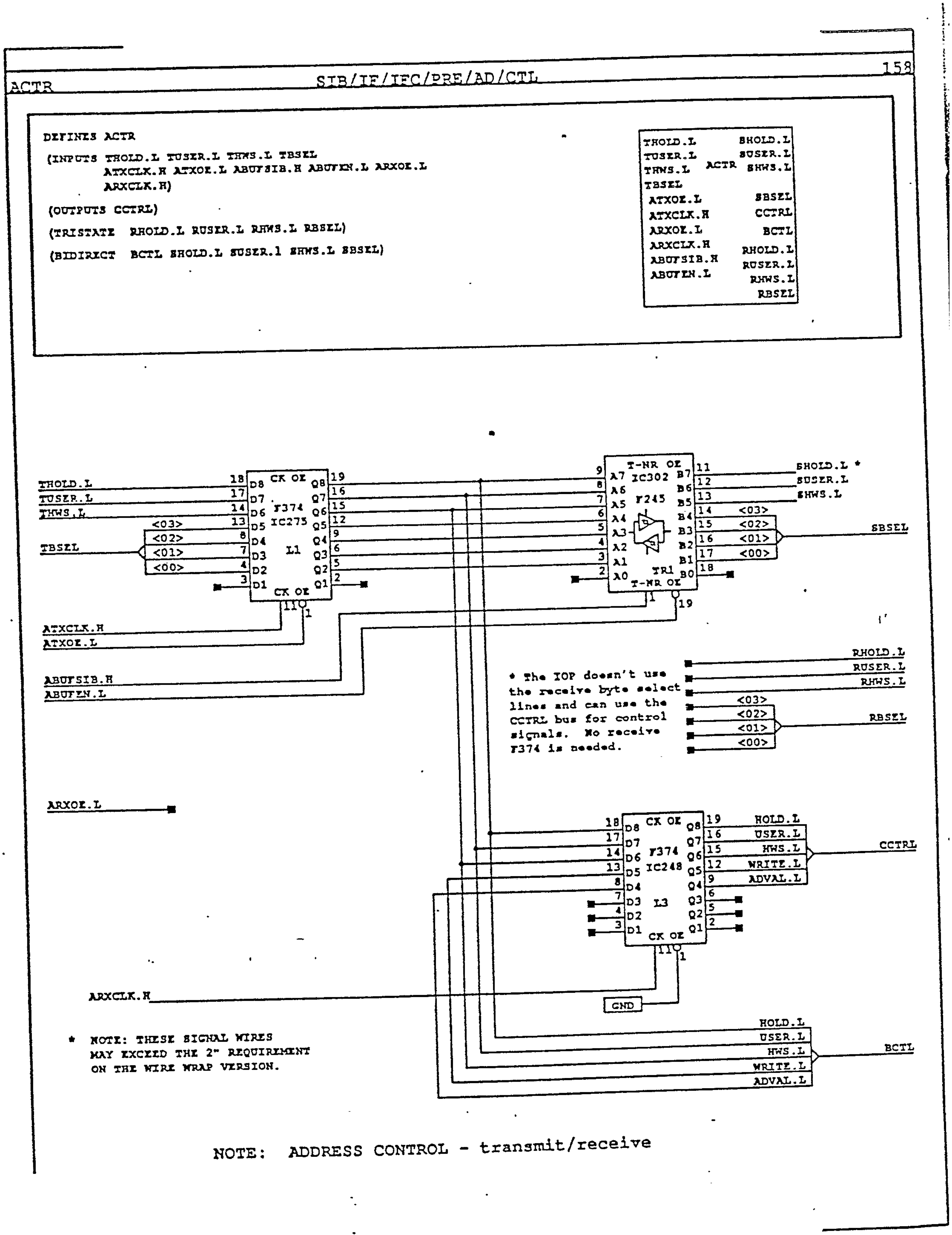


NOTE: ADDRESS CONTROL - transmit/receive

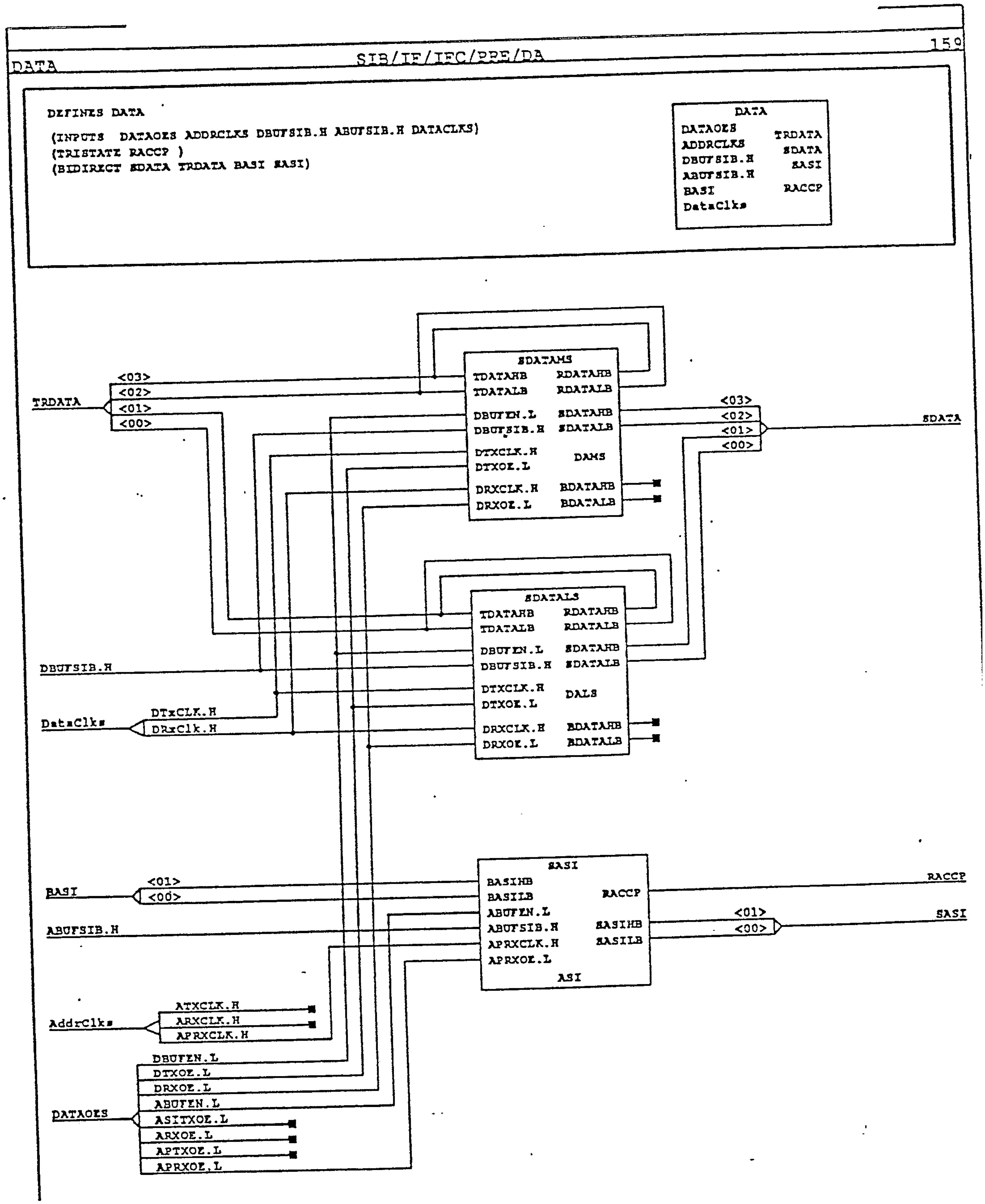

SIB/IF/IFC/PRE/DA
159
DATA
DEFINES DATA
(INPUTS DATAOES ADDRCLKS DBUFSIB.H ABUFSIB.H DATACLKS)
(TRISTATE RACCP )
(BIDIRECT SDATA TRDATA BASI SASI)
DATA
DATAOES
ADDRCLKS
DBUFSIB.H
ABUFSIB.H
BASI
DataClks
TRDATA
SDATA
SASI
RACCP
SDATAMS
TDATAHB
TDATALB
DBUFEN.L
DBUFSIB.H
DTXCLK.H
DTXOE.L
DRXCLK.H
DRXOE.L
RDATAHB
RDATALB
SDATAHB
SDATALB
DAMS
BDATAHB
BDATALB
SDATALS
DALS
TRDATA
<03>
<02>
<01>
<00>
SDATA
DBUFSIB.H
DataClks
DTxCLK.H
DRxClk.H
SASI
BASIHB
BASILB
ABUFEN.L
ABUFSIB.H
APRXCLK.H
APRXOE.L
RACCP
SASIHB
SASILB
ASI
BASI
ABUFSIB.H
AddrClks
ATXCLK.H
ARXCLK.H
APRXCLK.H
DATAOES
DBUFEN.L
DTXOE.L
DRXOE.L
ABUFEN.L
ASITXOE.L
ARXOE.L
APTXOE.L
APRXOE.L

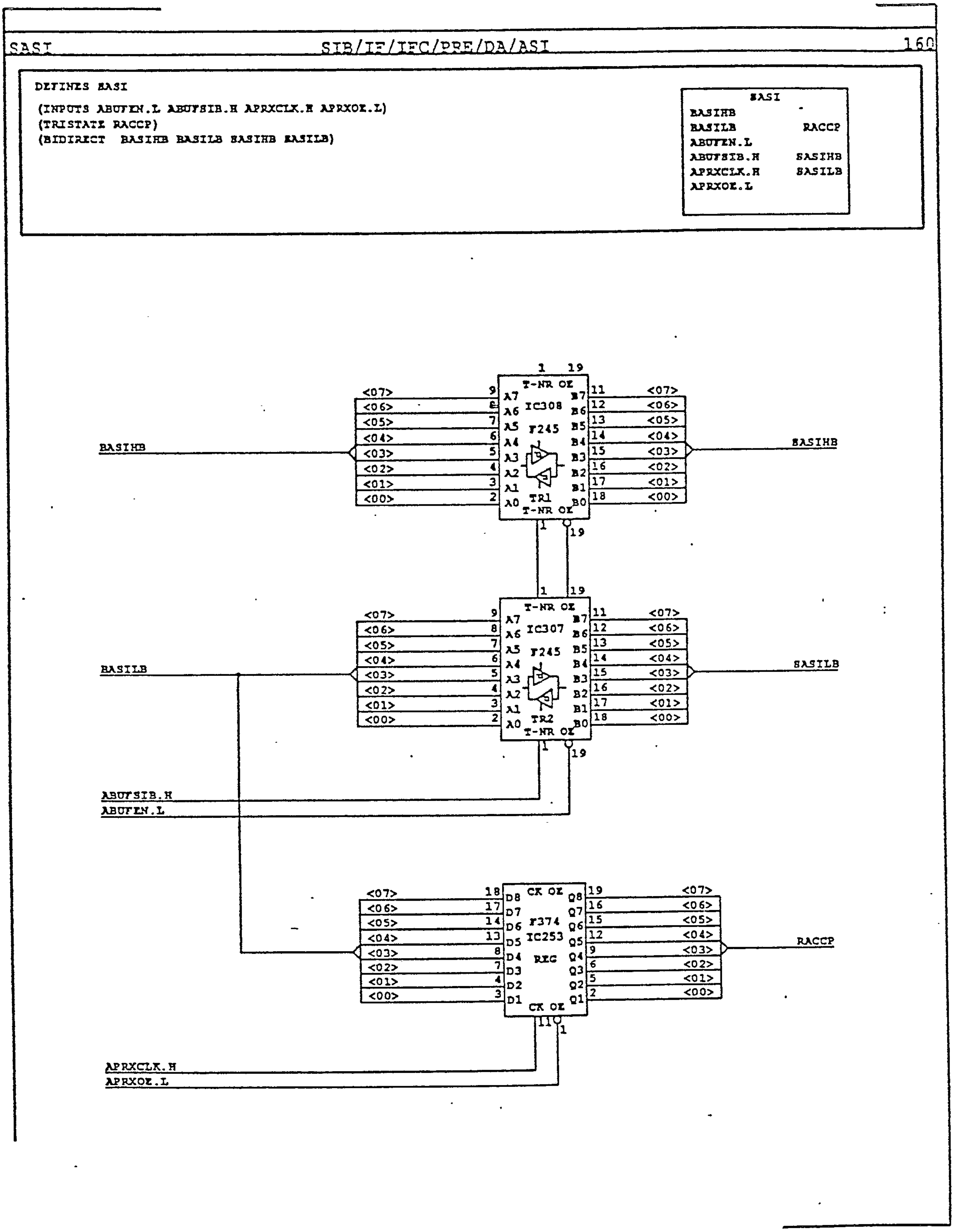
SASI
SIB/IF/IFC/PRE/DA/ASI
160
DEFINES BASI
(INPUTS ABUFEN.L ABUFSIB.H APRXCLK.H APRXOE.L)
(TRISTATE RACCP)
(BIDIRECT BASIHB BASILB BASIHB BASILB)
BASI
BASIHB
BASILB
RACCP
ABUFEN.L
ABUFSIB.H
BASIHB
APRXCLK.H
BASILB
APRXOE.L
T-NR OE
IC308
F245
TR1
IC307
TR2
BASIHB
BASILB
ABUFSIB.H
ABUFEN.L
CK OE
F374
IC253
REG
RACCP
APRXCLK.H
APRXOE.L

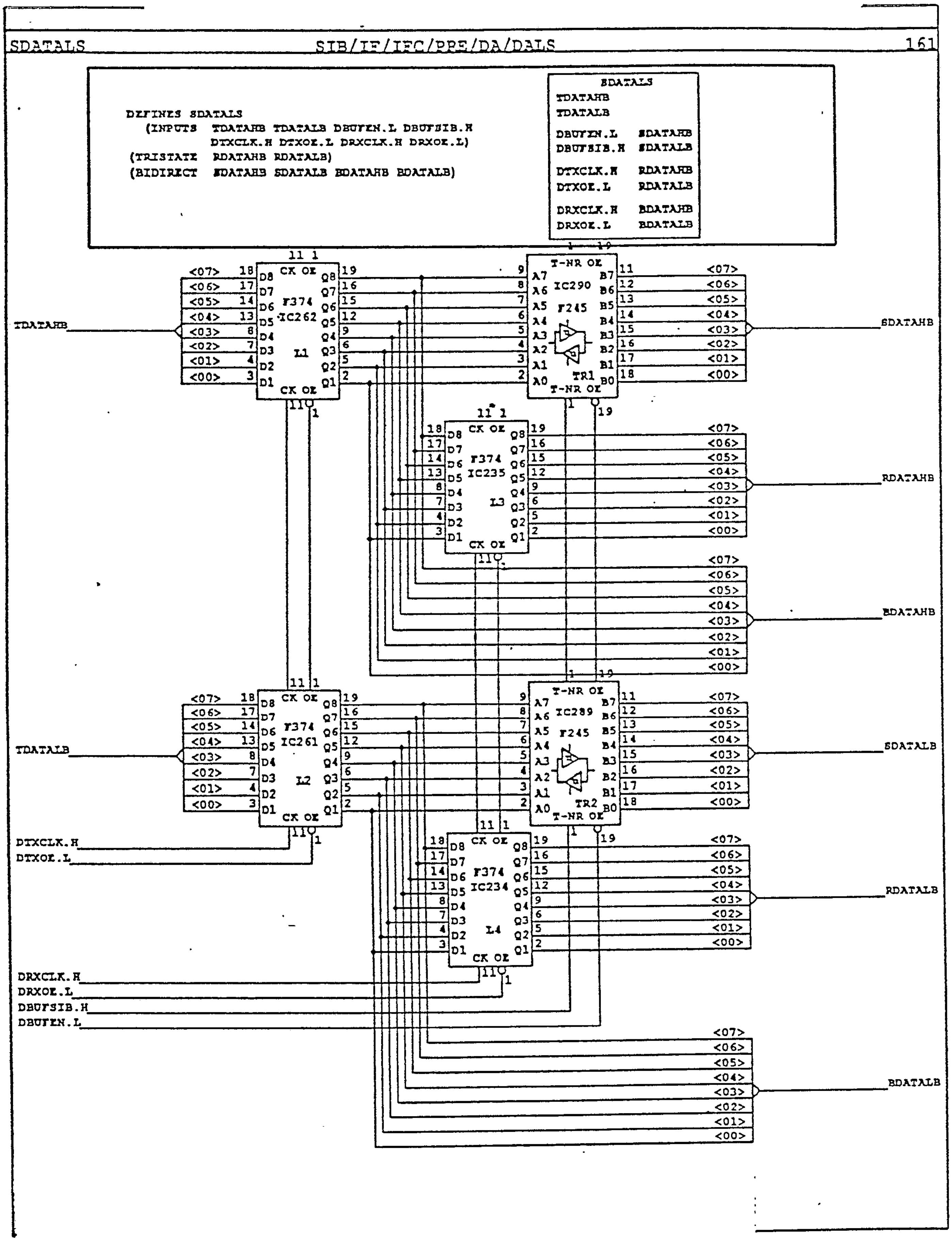
SDATALS
SIB/IF/IFC/PPE/DA/DALS
161
DEFINES SDATALS
(INPUTS TDATAHB TDATALB DBUFEN.L DBUFSIB.H
DTXCLK.H DTXOE.L DRXCLK.H DRXOE.L)
(TRISTATE RDATAHB RDATALB)
(BIDIRECT SDATAHB SDATALB BDATAHB BDATALB)
SDATALS
TDATAHB
TDATALB
DBUFEN.L SDATAHB
DBUFSIB.H SDATALB
DTXCLK.H RDATAHB
DTXOE.L RDATALB
DRXCLK.H BDATAHB
DRXOE.L BDATALB
F374 IC262 L1
F245 IC290 TR1
F374 IC235 L3
F374 IC261 L2
F245 IC289 TR2
F374 IC234 L4
TDATAHB
SDATAHB
RDATAHB
BDATAHB
TDATALB
SDATALB
RDATALB
BDATALB
DTXCLK.H
DTXOE.L
DRXCLK.H
DRXOE.L
DBUFSIB.H
DBUFEN.L

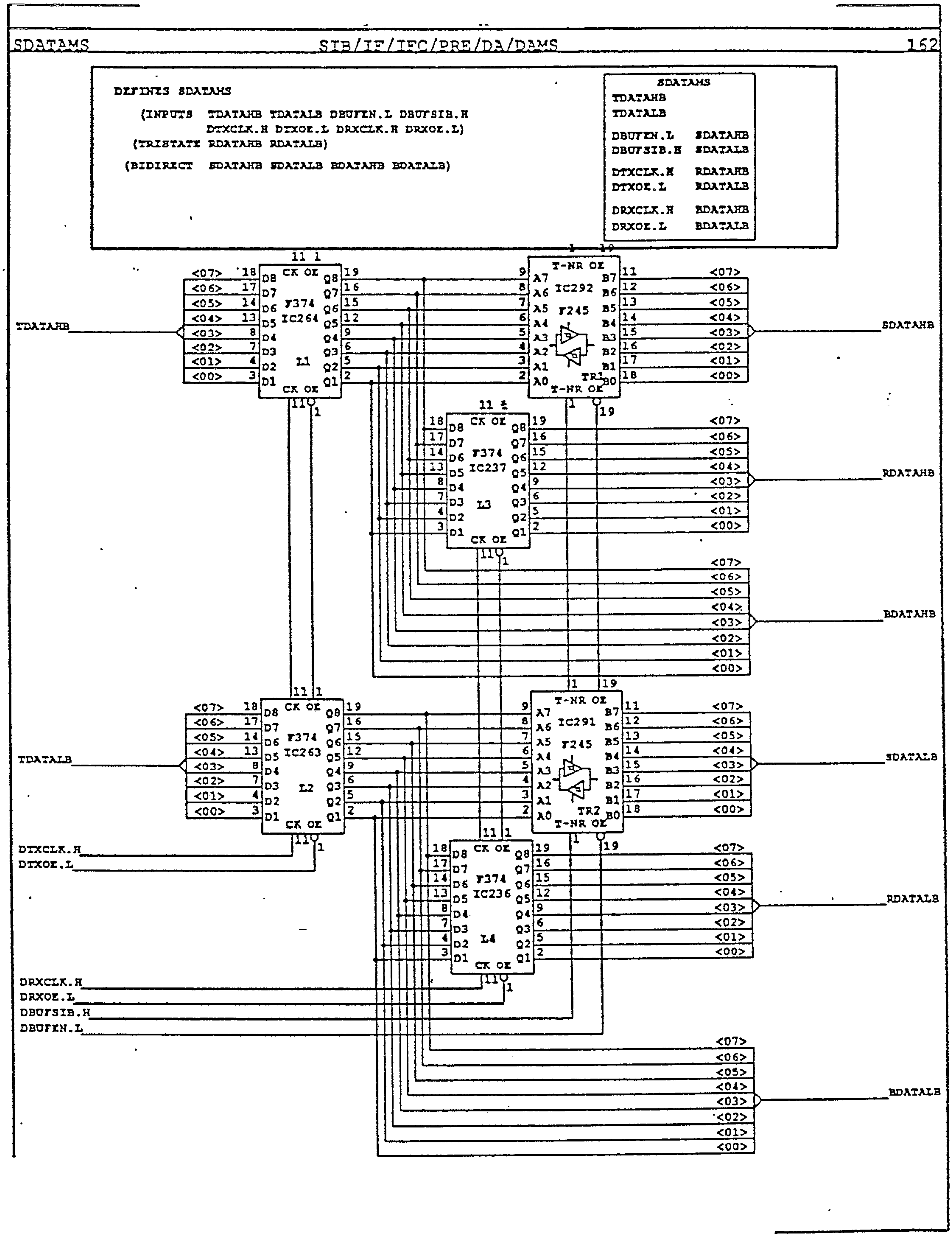
SDATAMS
SIB/IF/IFC/PRE/DA/DAMS
162
DEFINES SDATAMS
(INPUTS TDATAHB TDATALB DBUFEN.L DBUFSIB.H
DTXCLK.H DTXOE.L DRXCLK.H DRXOE.L)
(TRISTATE RDATAHB RDATALB)
(BIDIRECT SDATAHB SDATALB BDATAHB BDATALB)
SDATAMS
TDATAHB
TDATALB
DBUFEN.L SDATAHB
DBUFSIB.H SDATALB
DTXCLK.H RDATAHB
DTXOE.L RDATALB
DRXCLK.H BDATAHB
DRXOE.L BDATALB
F374
IC264
L1
IC292
F245
TR1
F374
IC237
L3
F374
IC263
L2
IC291
F245
TR2
F374
IC236
L4
TDATAHB
SDATAHB
RDATAHB
BDATAHB
TDATALB
SDATALB
RDATALB
BDATALB
DTXCLK.H
DTXOE.L
DRXCLK.H
DRXOE.L
DBUFSIB.H
DBUFEN.L

DEFINES MDVAL

(INPUTS GCLK DVBUFSIB.H DVBUFEN.L RESET.L)
(OUTPUTS RDVAL.L)
(BIDIRECT SDVAL.L)

MDVAL
DVBUFSIB.H RDVAL.L
DVBUFEN.L
RESET.L SDVAL.L
GCLK

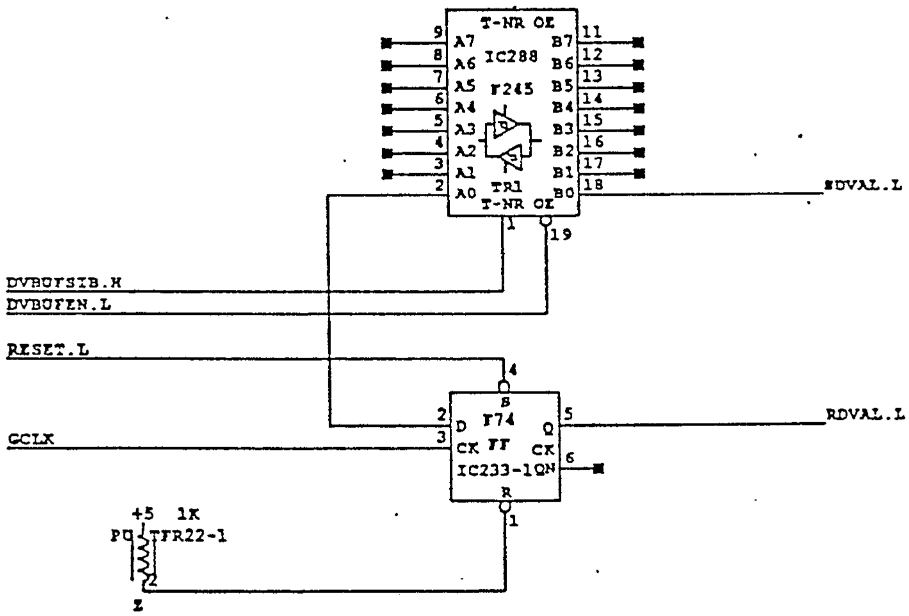


NOTE: SDVAL - Receive Only ( Non Memory Modules )

DEFINES MMFBTR
(INPUTS TFOB TXFB.H APRXCLK.H GCLK)
(OUTPUTS SFOB RFOB)
(PULLUP SFOB|SBUSY.L SFOB|SFOUND.L FBT/SBUSY.L FBT/SFOUND.L)

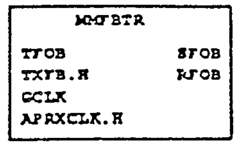


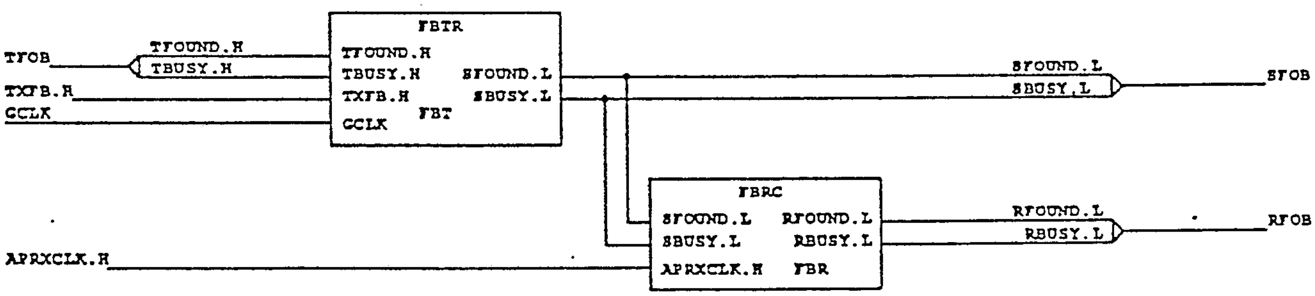


NOTE: FOUND/BUSY TRANSMIT/RECEIVE for PAGER/MASTER MODULE.

DEFINES FBRC
(INPUTS SFOUND.L SBUSY.L APRXCLK.H)
(OUTPUTS RFOUND.L RBUSY.L)

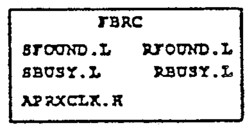


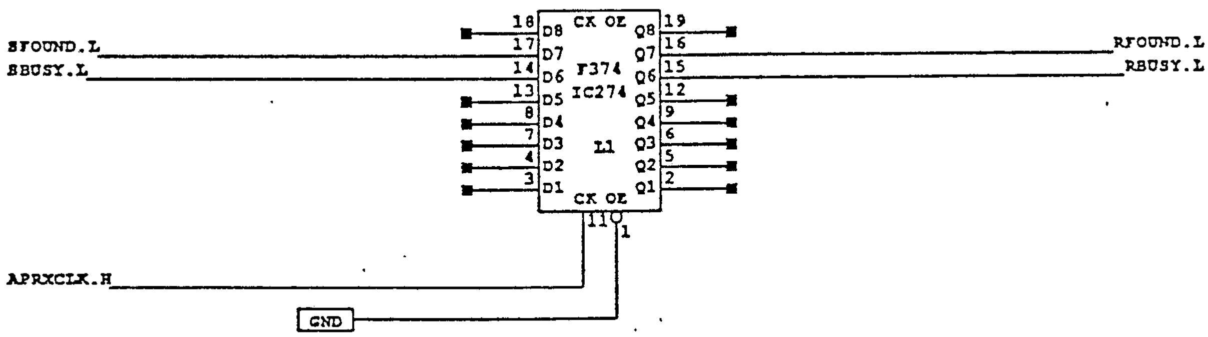

DEFINES FBTR
(INPUTS TFOUND.H TBUSY.H TXFB.H GCLK)
(OUTPUTS SFOUND.L SBUSY.L)
(OPENCOLLECTOR SFOUND.L SBUSY.L)
(PULLUP G1/Y G2/Y)

| FBTR | |
|---|---|
| TFOUND.H | |
| TBUSY.H | SFOUND.L |
| TXFB.H | SBUSY.L |
| GCLK | |

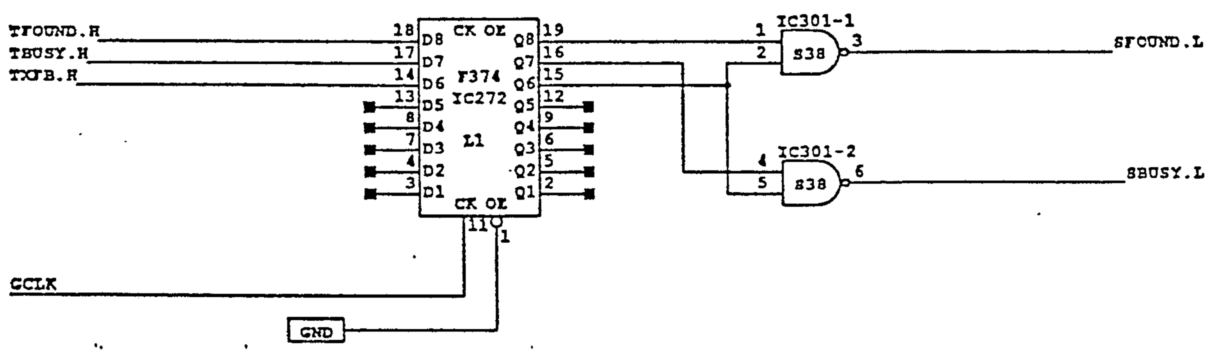

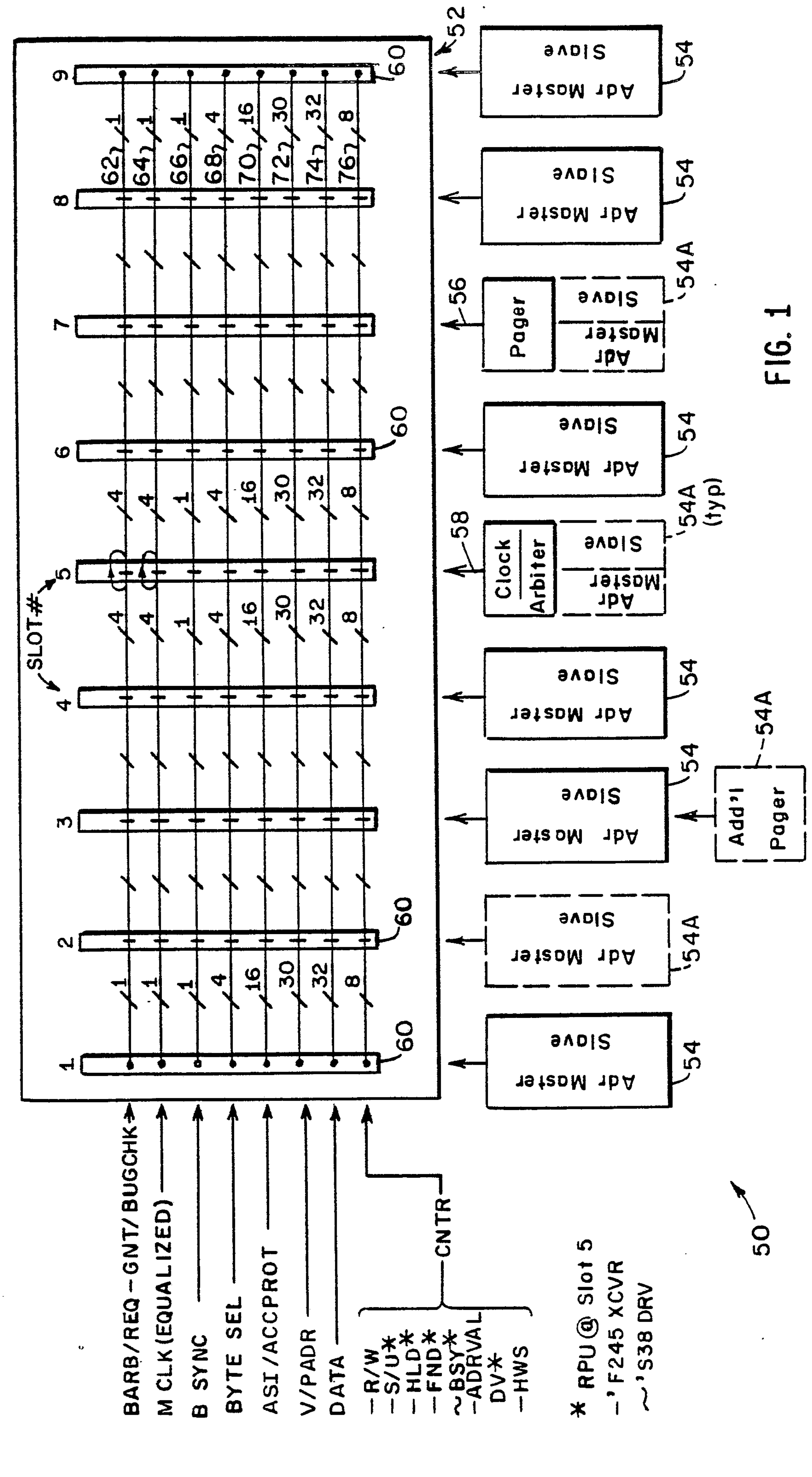

SLOT #
1
2
3
4
5
6
7
8
9
60
52
62
64
66
68
70
72
74
76
Adr Master
Slave
54
54A
54A (typ)
Pager
56
Clock
Arbiter
58
Add'l Pager
BARB/REQ—GNT/BUGCHK
M CLK (EQUALIZED)
B SYNC
BYTE SEL
ASI/ACCPROT
V/PADR
DATA
CNTR
—R/W
—S/U*
—HLD*
—FND*
~BSY*
—ADRVAL
DV*
—HWS
* RPU @ Slot 5
—'F245 XCVR
~'S38 DRV
50


FIG. 1

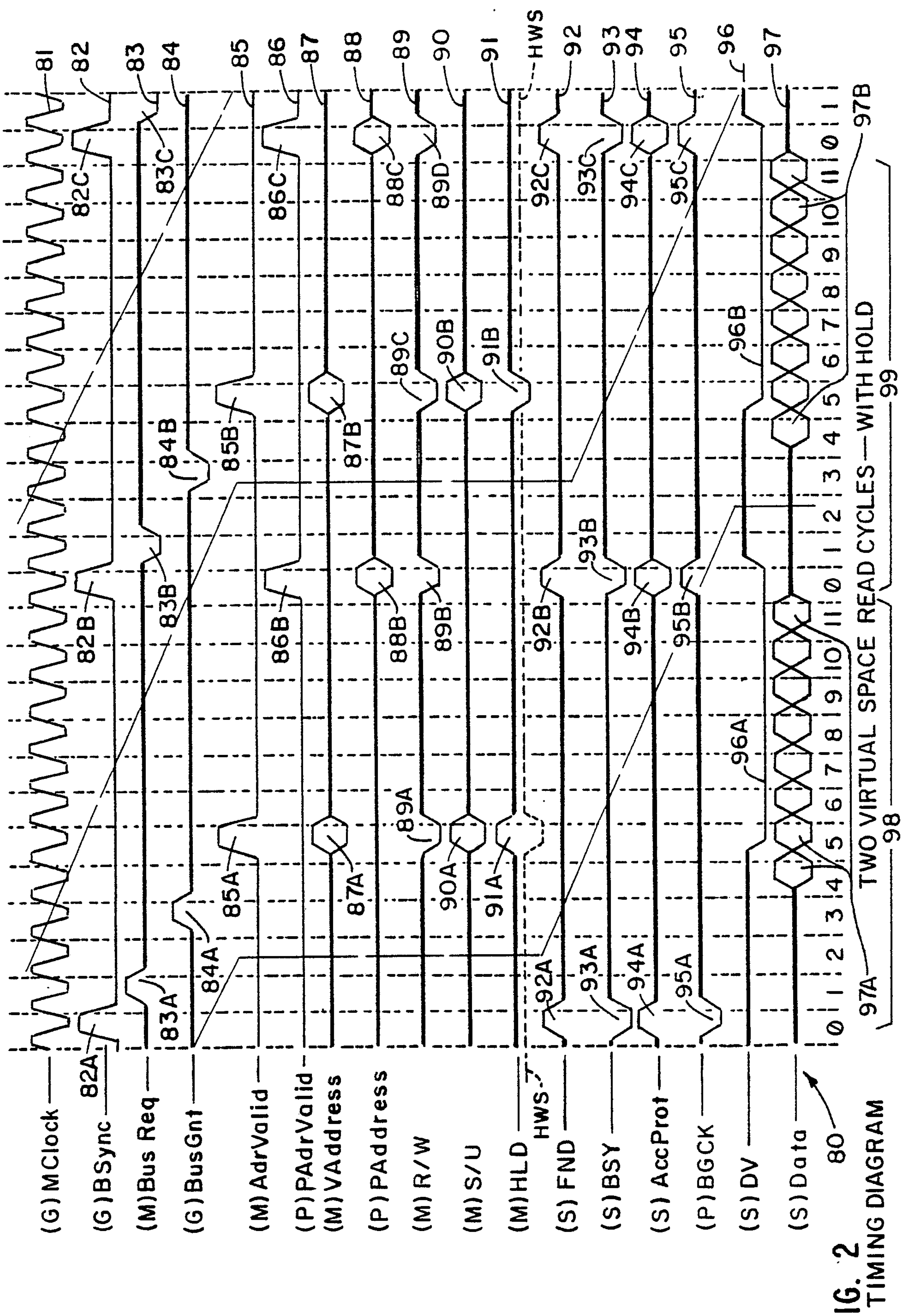


FIG. 2
SIB TIMING DIAGRAM

FIG. 3
FRAME 1 CELL 1

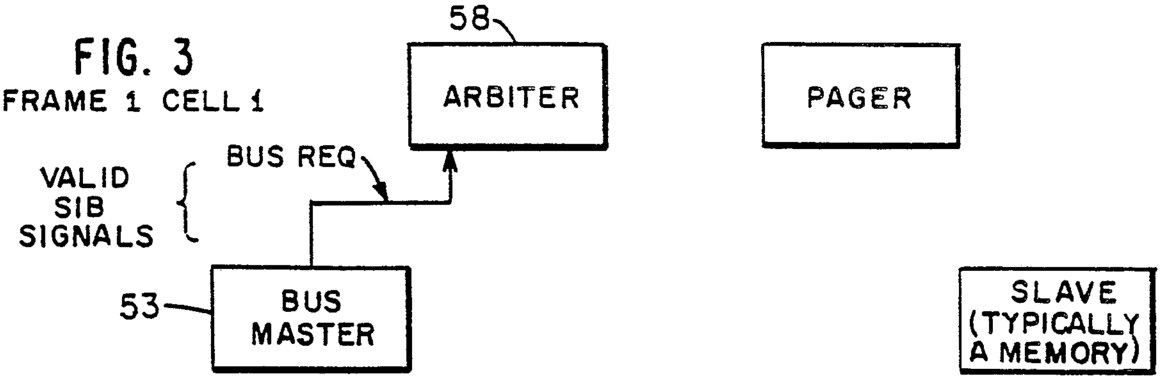


FIG. 4
FRAME 1 CELL 3

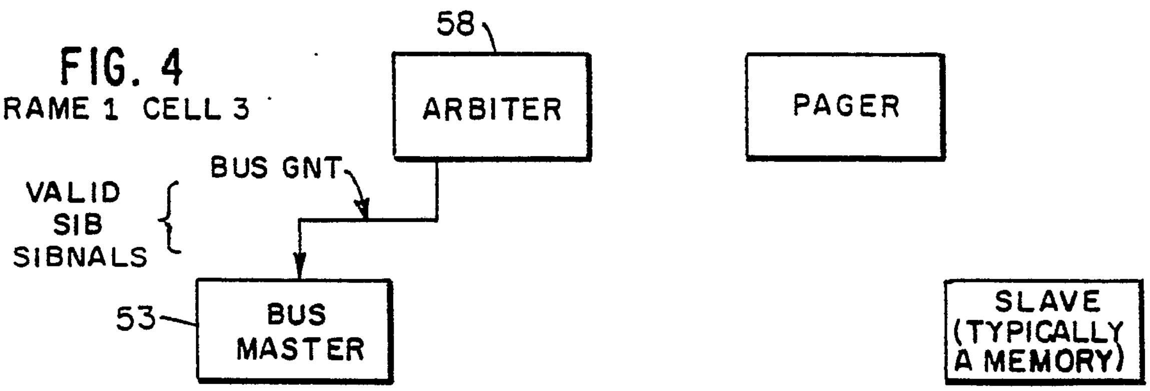


FIG. 5
FRAME 1 CELL 5

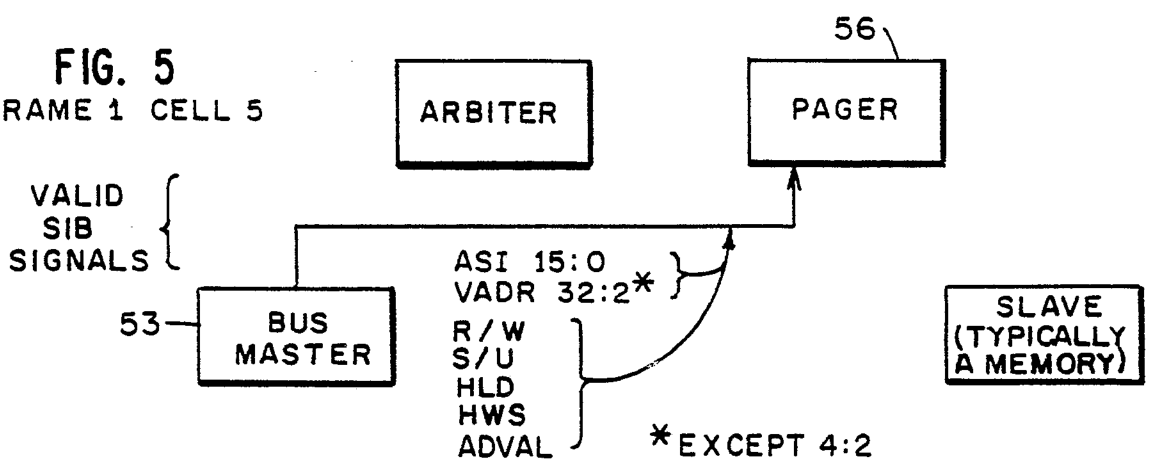


FIG. 6
FRAME 2 CELL Ø

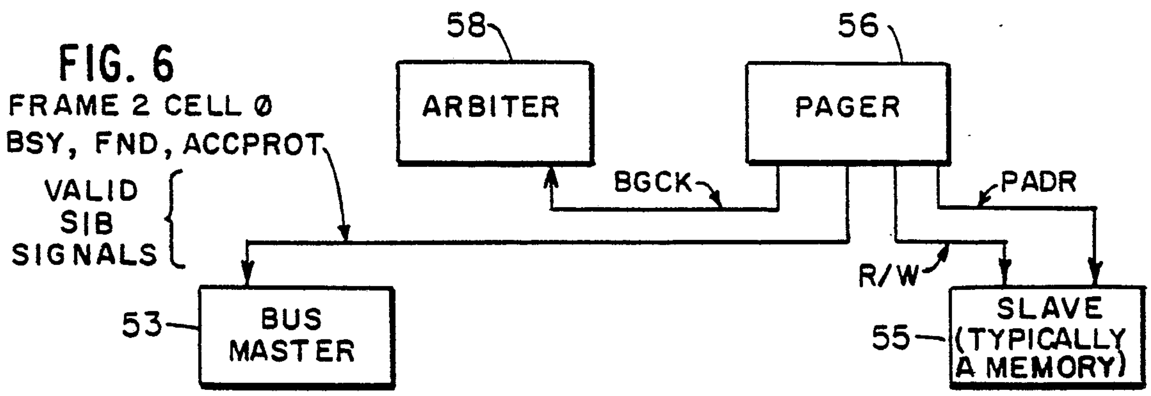

FIG. 7

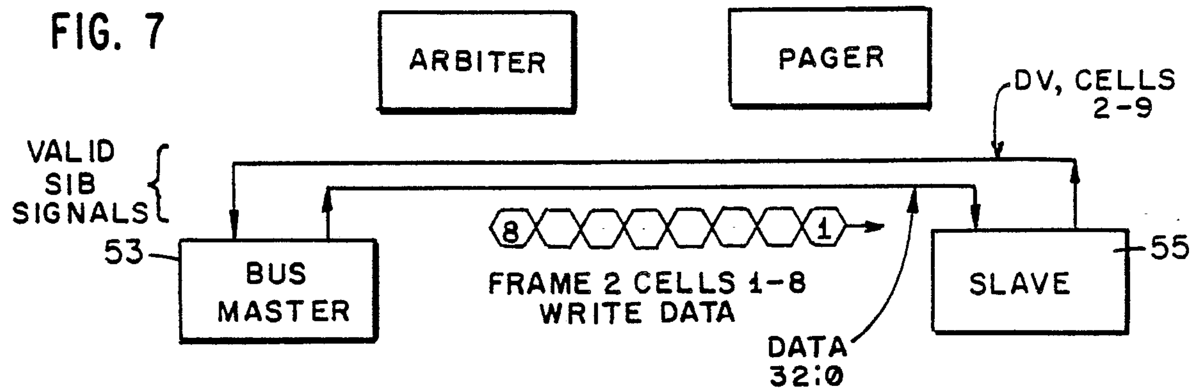


FIG. 8

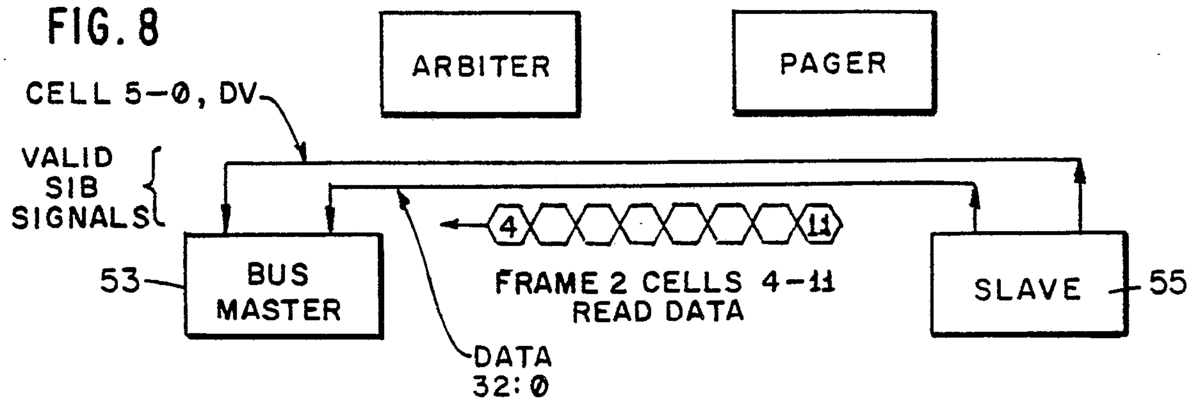


FIG. 9

FRAME 1 CELL 5

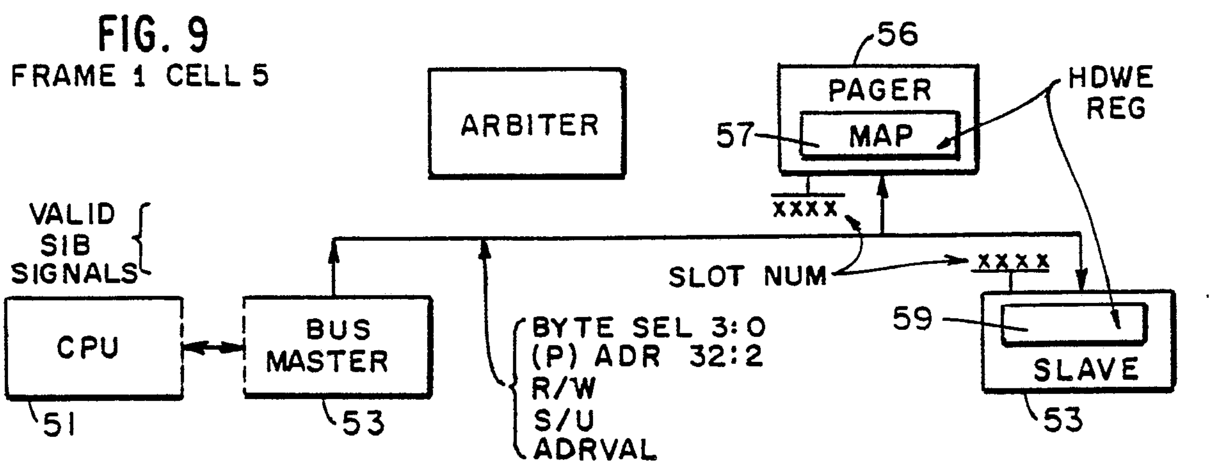


FIG. 10

HWS
FRAME 2 CELL 1: WRITE
FRAME 2 CELL 4: READ

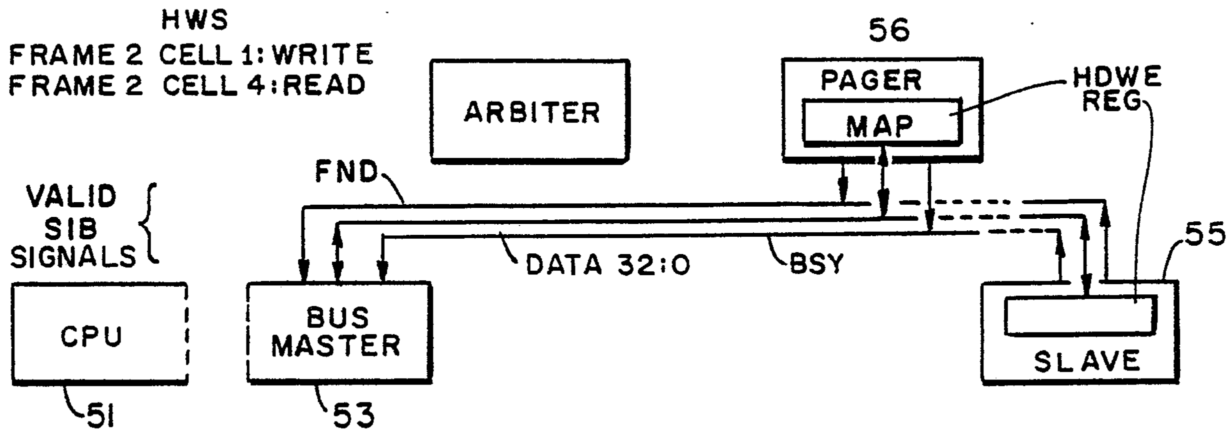

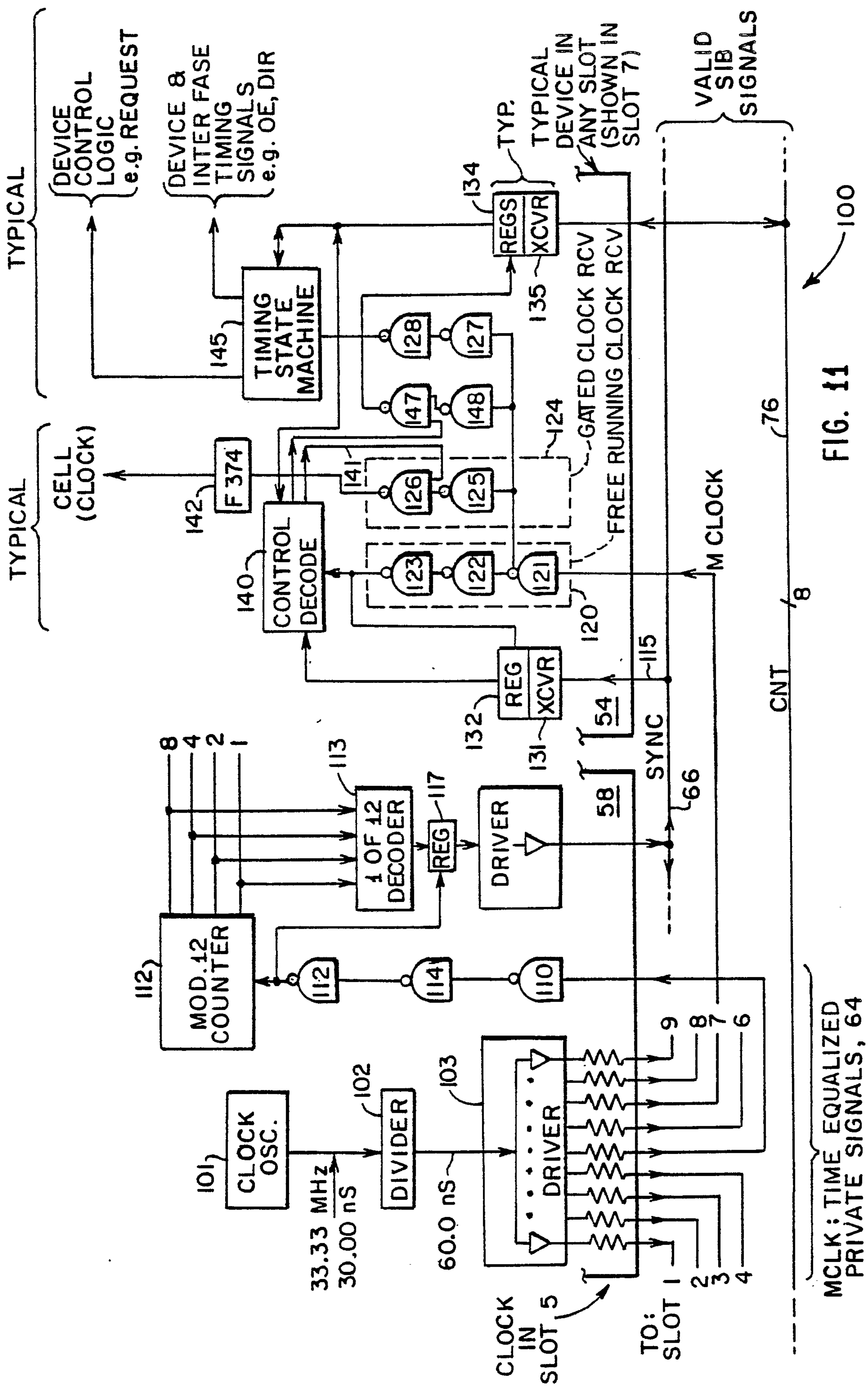
CLOCK OSC.
101
33.33 MHz
30.00 nS
DIVIDER
102
60.0 nS
DRIVER
103
CLOCK IN SLOT 5
TO: SLOT 1
2
3
4
6
7
8
9
MCLK: TIME EQUALIZED PRIVATE SIGNALS, 64
MOD. 12 COUNTER
112
110
114
1 OF 12 DECODER
113
REG
117
DRIVER
8
4
2
1
58
66
SYNC
131
XCVR
REG
132
54
115
CNT
8
M CLOCK
76
100
120
121
122
123
FREE RUNNING CLOCK RCV
124
125
126
GATED CLOCK RCV
141
CONTROL DECODE
140
F 374
142
CELL (CLOCK)
TYPICAL
147
148
128
127
TIMING STATE MACHINE
145
REGS
XCVR
134
135
TYP.
TYPICAL DEVICE IN ANY SLOT (SHOWN IN SLOT 7)
VALID SIB SIGNALS
DEVICE CONTROL LOGIC e.g. REQUEST
DEVICE & INTER FASE TIMING SIGNALS e.g. OE, DIR
TYPICAL

FIG. 11

TRANSFER CONTROLS SIGNALS

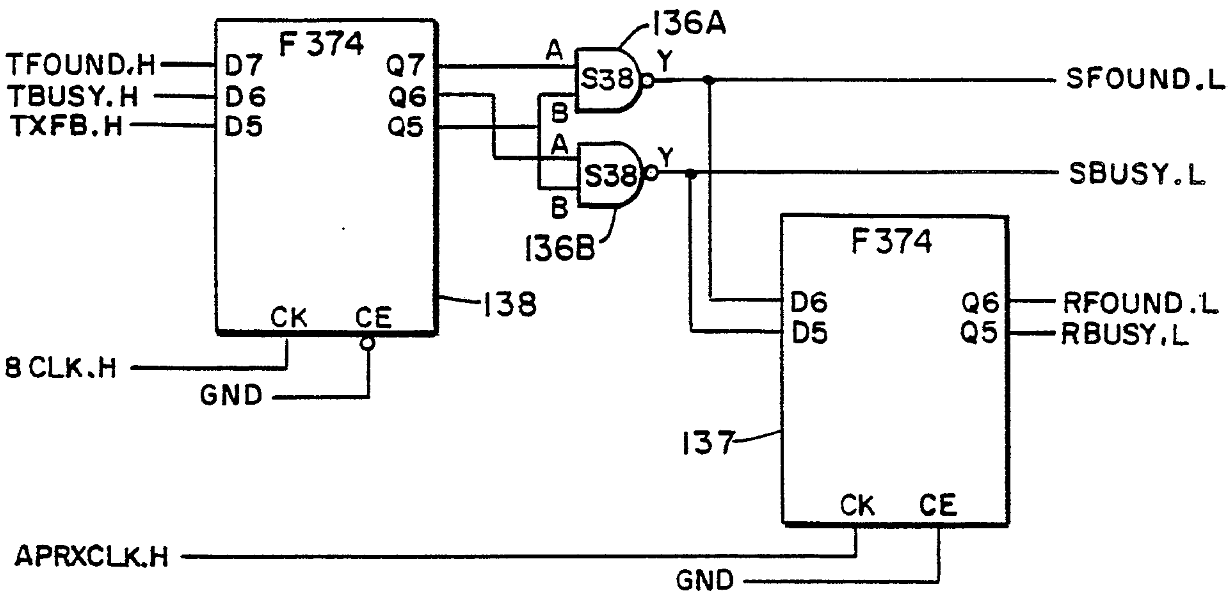


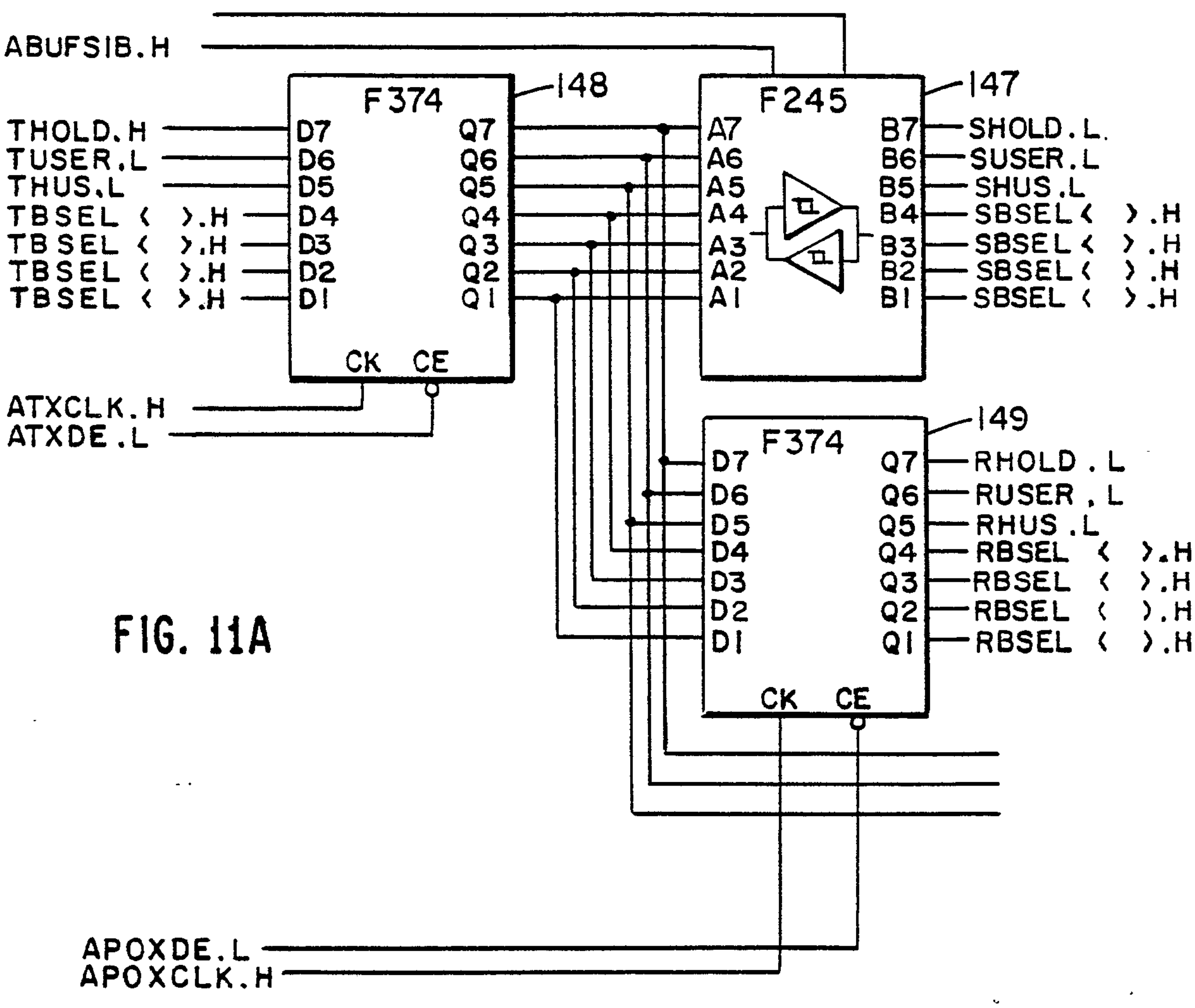


FIG. 11A

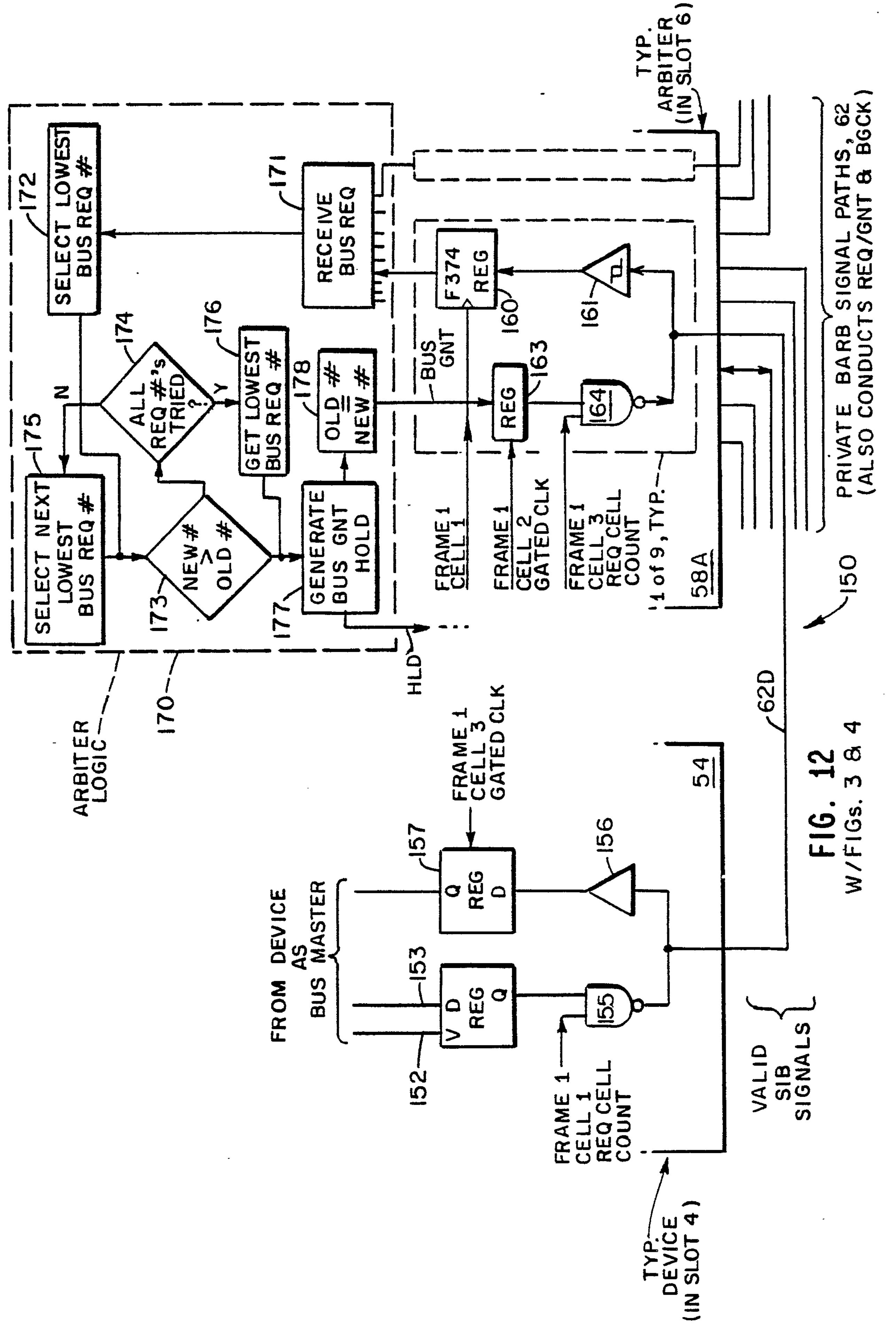


FIG. 12
W/FIGs. 3 & 4

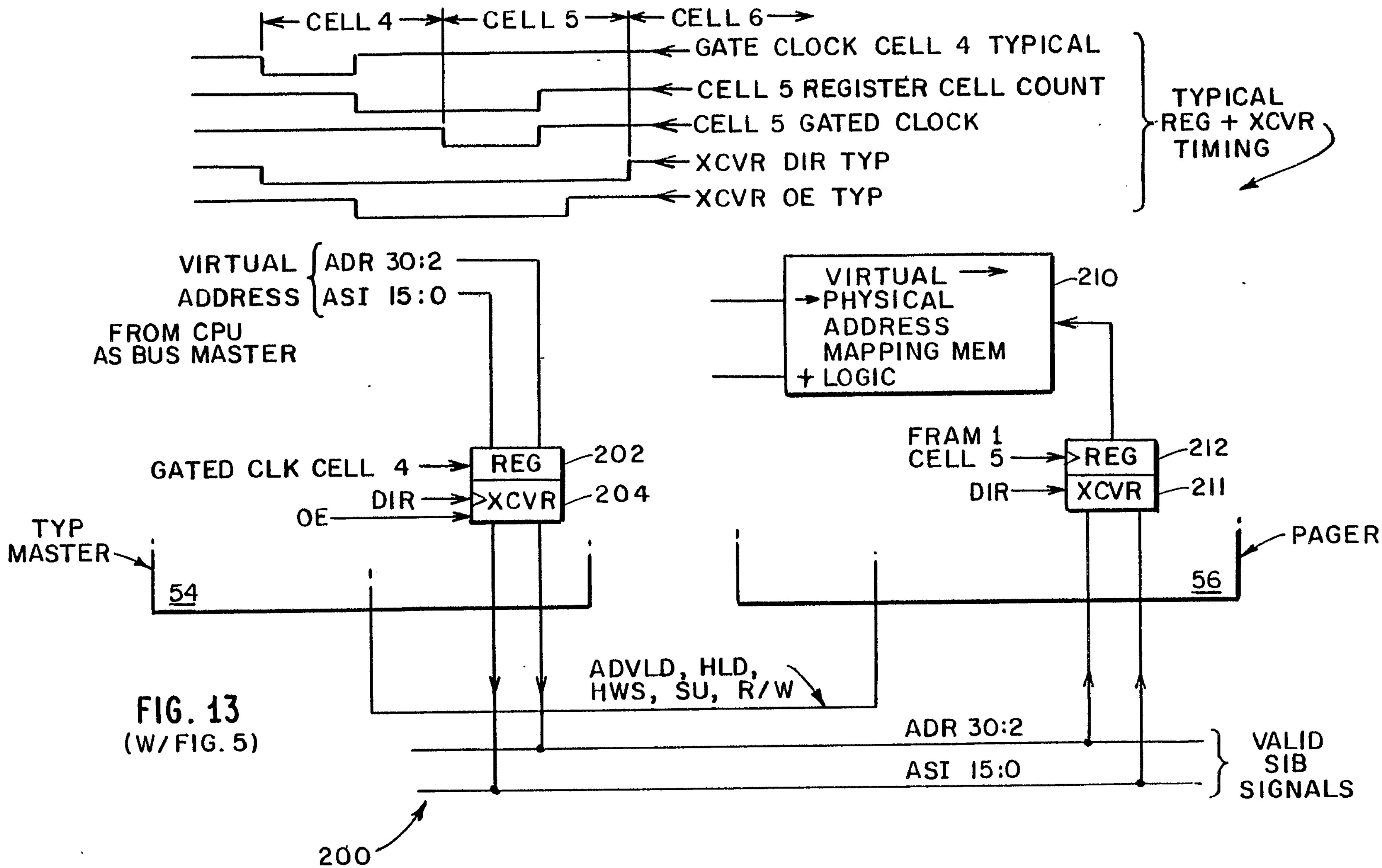
CELL 4
CELL 5
CELL 6
GATE CLOCK CELL 4 TYPICAL
CELL 5 REGISTER CELL COUNT
CELL 5 GATED CLOCK
XCVR DIR TYP
XCVR OE TYP
TYPICAL REG + XCVR TIMING
VIRTUAL ADDRESS
ADR 30:2
ASI 15:0
FROM CPU AS BUS MASTER
VIRTUAL → PHYSICAL ADDRESS MAPPING MEM + LOGIC
210
GATED CLK CELL 4
DIR
OE
REG
XCVR
202
204
FRAM 1 CELL 5
DIR
REG
XCVR
212
211
TYP MASTER
54
56
PAGER
ADVLD, HLD, HWS, SU, R/W
ADR 30:2
ASI 15:0
VALID SIB SIGNALS
200

FIG. 13
(W/FIG. 5)

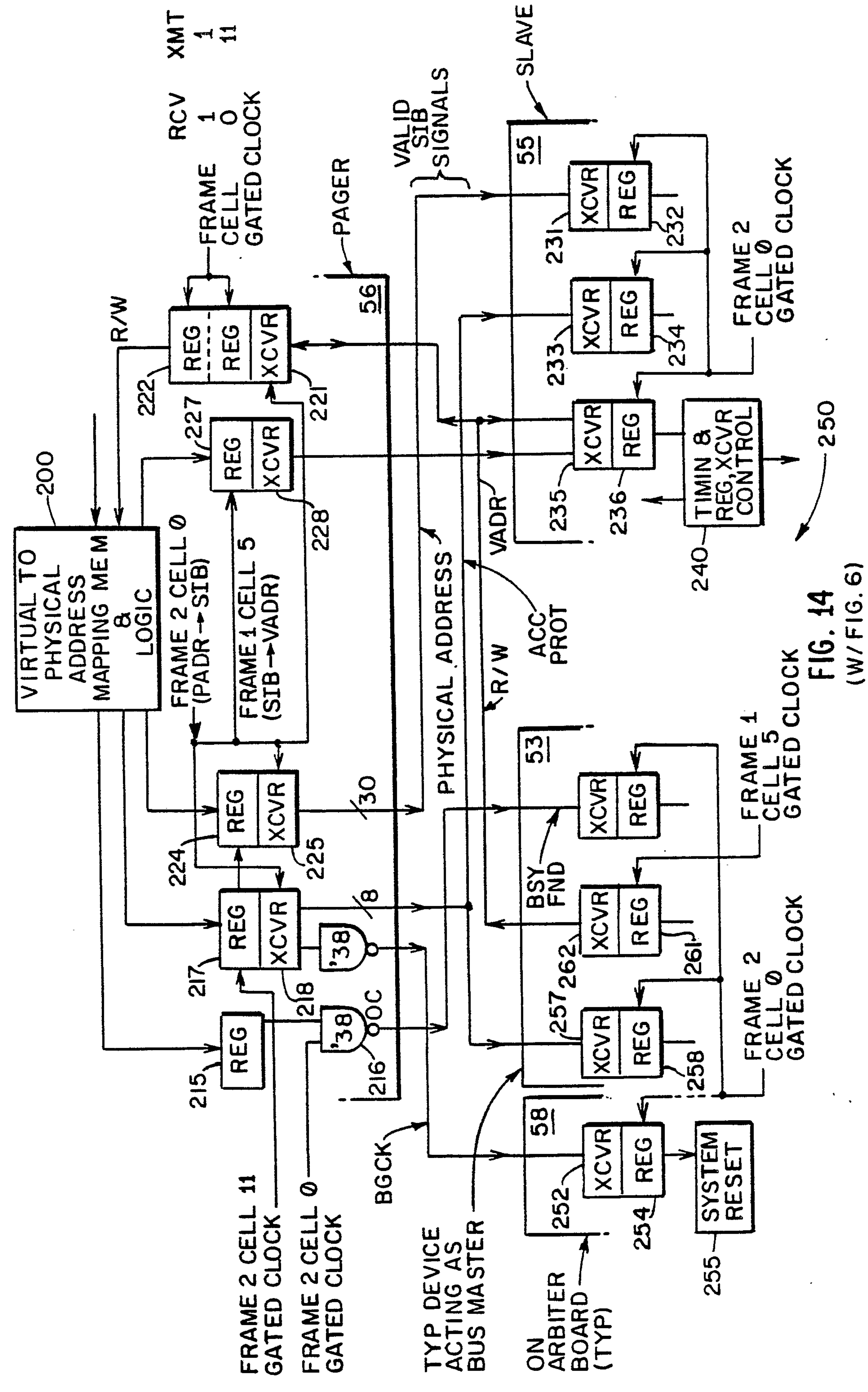

VIRTUAL TO PHYSICAL ADDRESS MAPPING MEM & LOGIC
200
RCV 1 0 XMT 1 11
FRAME CELL GATED CLOCK
R/W
REG
REG
XCVR
222
221
227
REG XCVR
228
PAGER
56
VALID SIB SIGNALS
SLAVE
55
XCVR REG
231
232
XCVR REG
233
234
XCVR REG
235
236
TIMIN & REG, XCVR CONTROL
240
250
FRAME 2 CELL Ø GATED CLOCK
FRAME 2 CELL Ø (PADR→SIB)
FRAME 1 CELL 5 (SIB→VADR)
PHYSICAL ADDRESS
VADR
ACC PROT
R/W
REG XCVR
224
225
30
REG XCVR
217
218
8
'38
'38 OC
REG
215
216
53
FRAME 1 CELL 5 GATED CLOCK
XCVR REG
BSY FND
XCVR REG
262
261
XCVR REG
257
258
FRAME 2 CELL Ø GATED CLOCK
58
XCVR REG
252
254
SYSTEM RESET
255
FRAME 2 CELL 11 GATED CLOCK
FRAME 2 CELL Ø GATED CLOCK
BGCK
TYP DEVICE ACTING AS BUS MASTER
ON ARBITER BOARD (TYP)


FIG. 14
(W/FIG. 6)

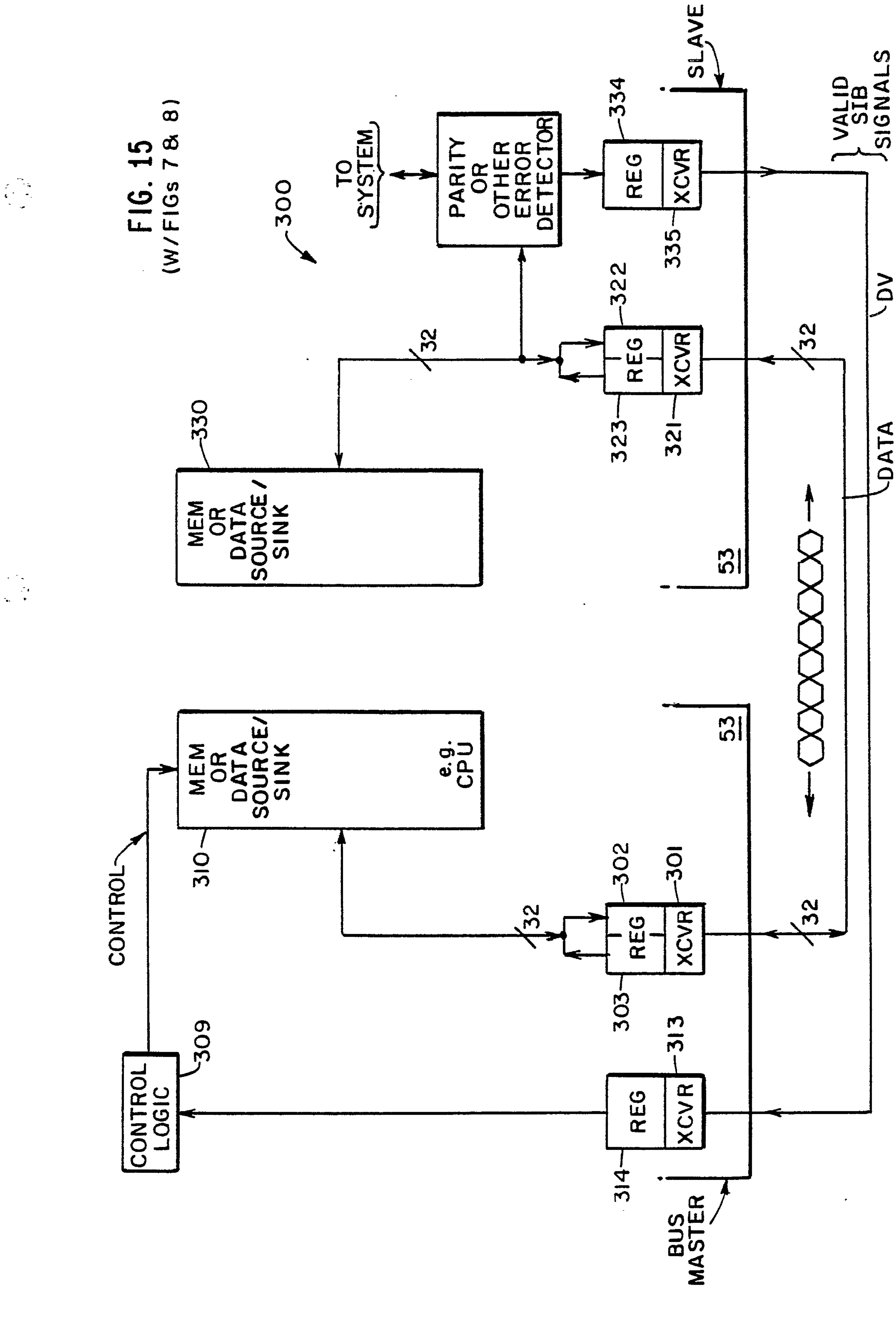


FIG. 15
(W/FIGs 7 & 8)

FIG. 16
(W/FIGs 9 & 10)

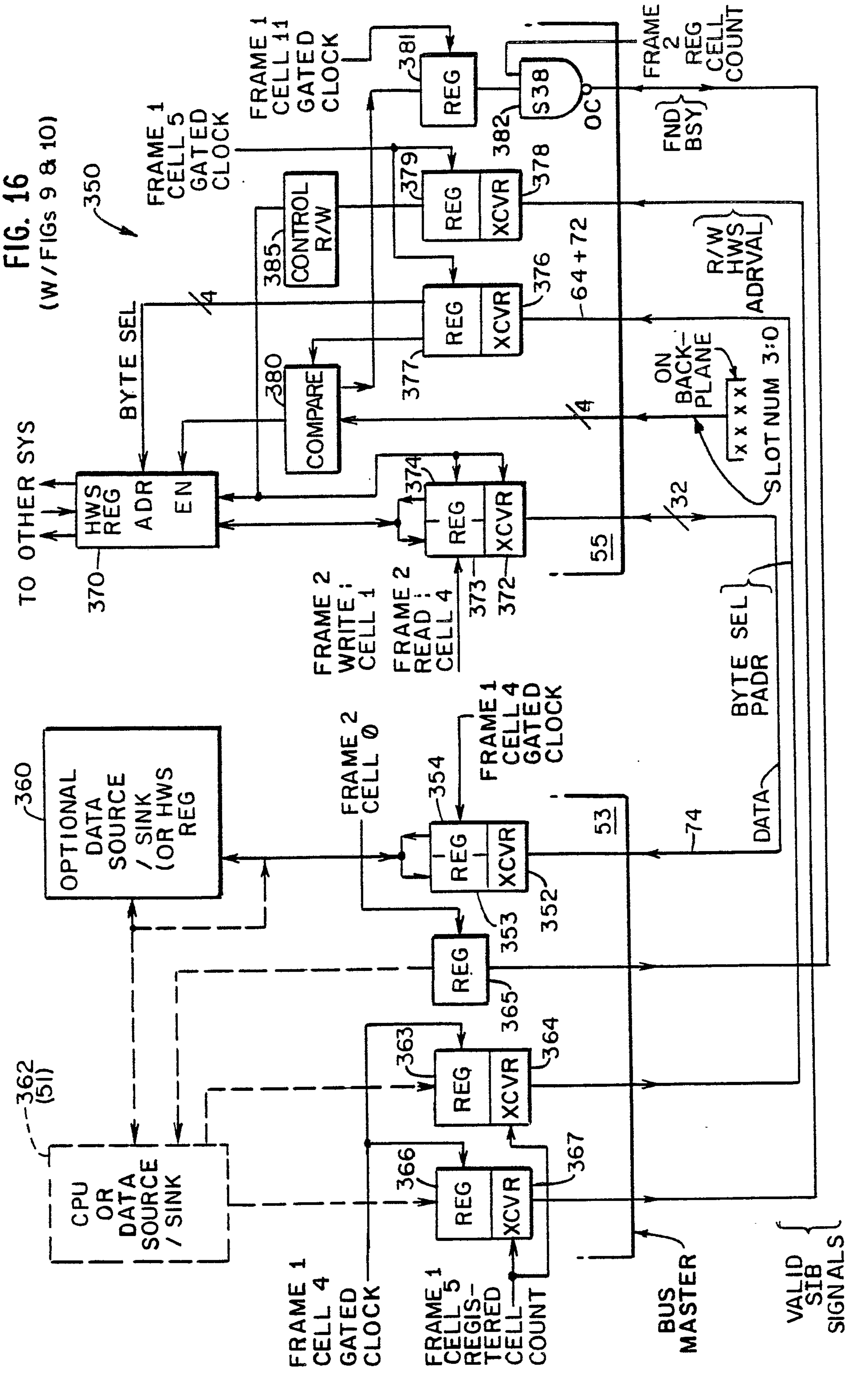

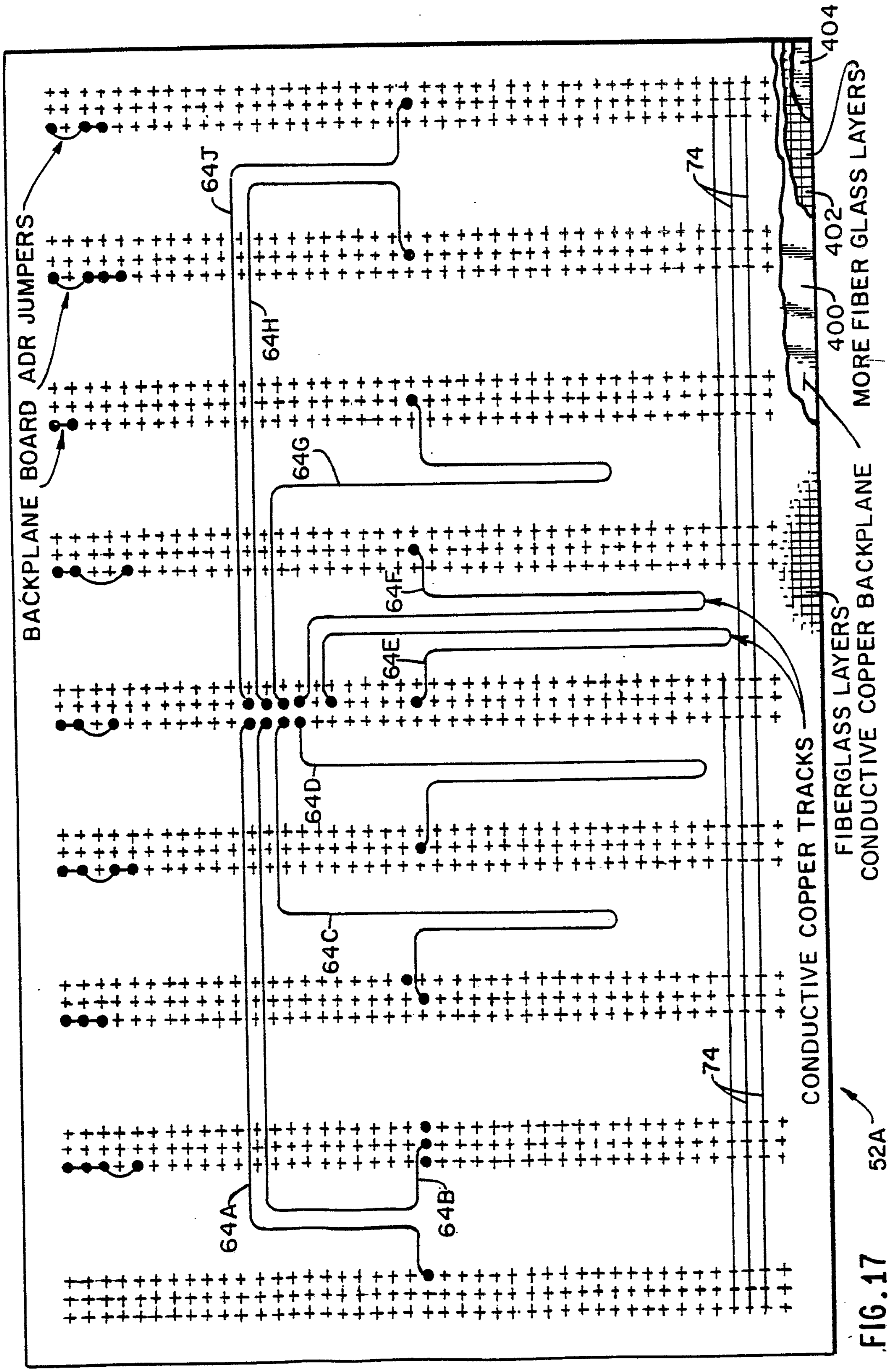
BACKPLANE BOARD ADR JUMPERS
64J
64H
64G
64F
64E
64D
64C
64B
64A
74
74
404
402
400
MORE FIBER GLASS LAYERS
CONDUCTIVE COPPER BACKPLANE
FIBERGLASS LAYERS
CONDUCTIVE COPPER TRACKS
52A

FIG. 17